(19) **Europäisches Patentamt / European Patent Office / Office européen des brevets**

(11) **EP 4 668 393 A1**

(12) **EUROPEAN PATENT APPLICATION**
published in accordance with Art. 153(4) EPC

(43) Date of publication:
**24.12.2025 Bulletin 2025/52**

(21) Application number: **24756993.2**

(22) Date of filing: **16.02.2024**

(51) International Patent Classification (IPC):
*H01M 10/052* (2010.01)     *H01G 11/06* (2013.01)
*H01G 11/08* (2013.01)     *H01G 11/22* (2013.01)
*H01G 11/24* (2013.01)     *H01G 11/26* (2013.01)
*H01G 11/30* (2013.01)     *H01G 11/32* (2013.01)
*H01G 11/42* (2013.01)     *H01G 11/46* (2013.01)
*H01G 11/50* (2013.01)     *H01G 11/68* (2013.01)
*H01M 4/133* (2010.01)     *H01M 4/136* (2010.01)
*H01M 4/36* (2006.01)     *H01M 4/38* (2006.01)
*H01M 4/58* (2010.01)     *H01M 4/62* (2006.01)
*H01M 10/0566* (2010.01)     *H01M 10/058* (2010.01)

(52) Cooperative Patent Classification (CPC):
**H01G 11/06; H01G 11/08; H01G 11/22;
H01G 11/24; H01G 11/26; H01G 11/30;
H01G 11/32; H01G 11/42; H01G 11/46;
H01G 11/50; H01G 11/68; H01M 4/133;
H01M 4/136; H01M 4/36; H01M 4/38;**     (Cont.)

(86) International application number:
**PCT/JP2024/005542**

(87) International publication number:
**WO 2024/172154 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **16.02.2023   JP 2023022538
17.02.2023   JP 2023023607
17.02.2023   JP 2023023750
20.02.2023   JP 2023024515
14.03.2023   JP 2023039941**

(71) Applicant: **Asahi Kasei Kabushiki Kaisha
Tokyo 1000006 (JP)**

(72) Inventors:
• **HIRAKAWA, Yuichiro
Tokyo 100-0006 (JP)**
• **UMETSU, Kazuteru
Tokyo 100-0006 (JP)**
• **MATOBA, Fumitoshi
Tokyo 100-0006 (JP)**
• **TAKEDA, Kozo
Tokyo 100-0006 (JP)**
• **MIEDA, Shunsuke
Tokyo 100-0006 (JP)**
• **TAKADA, Kazuaki
Tokyo 100-0006 (JP)**
• **UMEMOTO, Hiroki
Tokyo 100-0006 (JP)**

(74) Representative: **dompatent
Partnerschaft von
Patentanwälten und Rechtsanwälten mbB
Deichmannhaus am Dom
Bahnhofsvorplatz 1
50667 Köln (DE)**

(54) **NONAQUEOUS LITHIUM POWER STORAGE ELEMENT**

(57)     The present disclosure provides a nonaqueous lithium power storage element in which the positive electrode active substance layer contains lithium iron phosphate and a carbon material containing activated carbon as the positive electrode active substance. When the content of carbon material in the positive electrode active substance layer is $X_1$ (mass%) and the lithium iron phosphate content is $X_2$ (mass%), the lithium iron phosphate mass ratio $(X_2/(X_1+X_2))$ is 0.40 to 0.85. The total pore volume of the positive electrode active substance layer is

0.29 cc/g to 0.70 cc/g, the void diameter D25 of the positive electrode active substance layer is 0.34 $\mu$m to 0.64 $\mu$m, the void diameter D75 of the positive electrode active substance layer is 0.10 $\mu$m to 0.20 $\mu$m, and the difference between the void diameter D25 and the void diameter D75 (D25-D75) is 0.20 $\mu$m to 0.45 $\mu$m.

(52) Cooperative Patent Classification (CPC): (Cont.)
**H01M 4/58; H01M 4/62; H01M 10/052;**
**H01M 10/0566; H01M 10/058;** Y02E 60/10

**Description**

FIELD

The present disclosure relates to a nonaqueous lithium power storage element and the like. The present international application claims priority based on Japanese Patent Application No. 2023-023607 filed on February 17, 2023, Japanese Patent Application No. 2023-039941 filled on March 14, 2023, Japanese Patent Application No. 2023-023750 filled on February 17, 2023, Japanese Patent Application No. 2023-024515 filled on February 20, 2023, and Japanese Patent Application No. 2023-022538 filled on February 16, 2023, the entirety of which is incorporated herein by reference.

BACKGROUND

In recent years, from the standpoint of effective energy utilization aimed at global environmental conservation and resource saving, a great deal of attention is being directed to, for example, power smoothing systems and nighttime power storage systems for wind power generation, household distributed power storage systems based on photovoltaic power generation technologies, and power storage systems for electric vehicles.

A first requirement for batteries used in these power storage systems is that the batteries have a high energy density. As a promising candidate for a high-energy-density battery that can meet such a demand, lithium ion secondary batteries are being actively developed. A second requirement is that the batteries have high output characteristics. For example, in a combination of a high-efficiency engine and a power storage system (e.g., a hybrid electric vehicle) or a combination of a fuel cell and a power storage system (e.g., a fuel cell electric vehicle), a power storage system that exerts high output discharge characteristics during acceleration is required. Currently, electric double layer capacitors, lithium ion capacitors, and the like are being developed as high-output power storage devices. These requirements are being studied from various angles, and the background technologies thereof are described below.

< Background Art 1>

Among lithium ion capacitors, those using activated carbon as a positive electrode active material have an output characteristic of about 20 kW/L. Such lithium ion capacitors not only have high output characteristics but also exhibit high durability (cycle characteristics and high-temperature storage characteristics) and, therefore, have been considered as optimal devices in the above-described fields where high output is required. However, since their energy densities are merely about 20 Wh/L, a further increase in the capacity, i.e., an improvement in the energy density, is necessary.

Studies aimed at improving the output have been conducted for lithium ion secondary batteries as well. For example, lithium ion secondary batteries that can achieve a high output exceeding 3 kW/L at a depth of discharge (i.e., a ratio (%) of the amount of discharge with respect to the discharge capacity of a power storage element) of 50% have been developed. However, these lithium ion secondary batteries have an energy density of 100 Wh/L or less, and are designed in a manner that high capacity characteristics, which are the greatest feature of lithium ion secondary batteries, are deliberately suppressed. In addition, their durability (cycle characteristics and high-temperature storage characteristics) is inferior to that of a lithium ion capacitor; therefore, in order to provide practical durability, such lithium ion secondary batteries are used in a range of the depth of charge that is narrower than 0 to 100%. Since the capacity of a lithium ion secondary battery that can be actually used is even smaller, studies aimed at further improving the durability are being actively conducted.

Various studies have been conducted for further increasing the capacity and the energy density of the above-described lithium ion capacitors and, for example, technologies using a combination of activated carbon and lithium iron phosphate as a positive electrode active material have been disclosed (PTLs 1 to 3).

PTL 1 aims to provide a nonaqueous lithium power storage element which has a high capacity and a low resistance and in which the decomposition of a lithium compound in a positive electrode precursor is facilitated, and discloses a nonaqueous lithium power storage element that comprises a positive electrode containing activated carbon and lithium iron phosphate ($LiFePO_4$) as positive electrode active materials.

PTL 2 aims to provide a power storage device in which deterioration of the electrical characteristics is limited, and discloses a capacitor positive electrode in which a positive electrode active material layer arranged on one side of the positive electrode contains activated carbon, and a positive electrode active material layer arranged on the other side contains lithium iron phosphate.

PTL 3 aims to provide a long-life high-capacity lithium ion capacitor, and discloses a lithium ion capacitor that comprises a positive electrode containing activated carbon and lithium iron phosphate ($LiFePO_4$) as positive electrode active materials.

< Background Art 2>

As the above-described high-output power storage devices, for example, electric double layer capacitors and nickel-metal hydride batteries have been developed.

Among electric double layer capacitors, those using activated carbon in their electrodes have an output characteristic of about 0.5 to 1 kW/L. Such electric double layer capacitors not only have high output characteristics but also exhibit high durability (cycle characteristics and high-temperature storage characteristics) and therefore, have been considered as optimal devices in the above-described fields where high output is required. However, since their energy densities are merely about 1 to 5 Wh/L, a further improvement in energy density is necessary.

On the other hand, nickel-metal hydride batteries that are commonly used in hybrid electric vehicles at present exhibit a high output equivalent to that of an electric double layer capacitor, and have an energy density of about 160 Wh/L. Still, it is demanded to not only further increase the energy density and the output characteristics but also improve the durability (particularly, high-temperature stability), and studies have been actively conducted for this purpose.

As described above, there is a strong demand for practical application of a power storage element having a combination of high energy density, high output characteristics, and high durability. However, since the existing power storage elements described above each have drawbacks and advantages, a novel power storage element that satisfies these technical requirements is desired. As a promising candidate, power storage elements referred to as "lithium ion capacitors" have been drawing attention and are being actively developed. Lithium ion capacitors are one type of power storage element that uses a nonaqueous electrolytic solution containing a lithium salt (hereinafter, also referred to as "nonaqueous lithium power storage element"), in which charging and discharging are performed by means of non-Faraday reaction at a positive electrode that is induced by adsorption and desorption of anions at about 3 V or more as in an electric double layer capacitor, and Faraday reaction at a negative electrode that is induced by occlusion and release of lithium ions as in a lithium ion secondary battery.

Summarizing the electrode materials commonly used in the above-described power storage elements and their characteristics, generally, when a material such as activated carbon is used in the electrodes and charging and discharging are performed by means of adsorption and desorption of ions (non-Faraday reaction) on the activated carbon surface, high output and high durability can be obtained; however, the energy density is low (e.g., 1-fold). Meanwhile, when an oxide or a carbon material is used in the electrodes and charging and discharging are performed by means of Faraday reaction, the energy density is high (e.g., 10-fold of non-Faraday reaction using activated carbon); however, there are problems in terms of durability and output characteristics.

As for a combination of these electrode materials, an electric double layer capacitor is characterized by using activated carbon (1-fold energy density) in the positive electrode and the negative electrode and being charged and discharged by means of non-Faraday reaction at both the positive electrode and the negative electrode; therefore, it exhibits high output and high durability, but has a low energy density (1-fold at positive electrode $\times$ 1-fold at negative electrode = 1).

A lithium ion secondary battery is characterized by using a lithium-transition metal oxide (10-fold energy density) in the positive electrode and a carbon material (10-fold energy density) in the negative electrode and being charged and discharged by means of Faraday reaction at both the positive electrode and the negative electrode; therefore, it exhibits a high energy density (10-fold at positive electrode $\times$ 10-fold at negative electrode = 100), but has problems in terms of output characteristics and durability. Further, in order to satisfy the high durability required for hybrid electric vehicles, the depth of discharge needs to be limited, and a lithium ion secondary battery can thus utilize only 10 to 50% of its energy.

A lithium ion capacitor is characterized by using activated carbon (1-fold energy density) in the positive electrode and a carbon material (10-fold energy density) in the negative electrode and being charged and discharged by means of non-Faraday reaction at the positive electrode and Faraday reaction at the negative electrode; therefore, it is an asymmetric capacitor having the characteristics of both an electric double layer capacitor and a lithium ion secondary battery. Such a lithium ion capacity is characterized in that it exhibits a high energy density (1-fold at positive electrode $\times$ 10-fold at negative electrode = 10) while having high output and high durability, and that its depth of discharge does not need to be limited as in the case of a lithium ion secondary battery.

The structural features of electric double layer capacitors, lithium ion capacitors, and lithium ion secondary batteries have been described above, and various studies are still being conducted for a further increase in the energy density of lithium ion capacitors and secondary batteries (PTLs 1, 3, and 4).

PTL 3 discloses a long-life high-capacity lithium ion capacitor using activated carbon and lithium iron phosphate as positive electrode active materials.

PTL 1 discloses a high-capacity low-resistance positive electrode precursor containing all of a carbon material, a lithium-transition metal oxide, and an alkali metal compound, in which pre-doping of a negative electrode can be performed in a short time by facilitating the decomposition of the alkali metal compound.

PTL 4 discloses a nonaqueous electrolyte secondary battery having a high energy density and excellent cycle characteristics, in which two kinds of positive electrode active materials different in particle size are used.

< Background Art 3>

A third requirement is that the batteries can be used stably for an extended period. For example, in a combination of a high-efficiency engine and a power storage system (e.g., a hybrid electric vehicle) or a combination of a fuel cell and a power storage system (e.g., a fuel cell electric vehicle), a power storage system that exerts excellent output characteristics (low resistance), high-temperature durability, and vibration resistance is required. Particularly, as electric vehicles become more widespread worldwide in response to the demands from a society aiming for carbon neutrality, electric vehicles are expected to be increasingly used for, for example, off-road travel on undeveloped road and travel in areas of harsh climate conditions such as tropical regions, and it is thus expected that more stringent high-temperature durability and vibration resistance be required than before.

Further, currently, electric double layer capacitors, lithium ion capacitors, and the like are being developed as high-output high-durability power storage devices. Activated carbon is used as an active material of both the positive and negative electrodes in electric double layer capacitors, while activated carbon is used as an active material of the positive electrode in lithium ion capacitors, and these capacitors are charged and discharged by adsorption and desorption of ions (non-Faraday reaction) on the activated carbon surface to exert high output (low resistance) performance and high durability; therefore, conventionally, when activated carbon is used as an active material, an aluminum foil coated with a conductive undercoat layer (hereinafter, referred to as "anchor foil"), or an etched foil, an expanded foil, a punched foil or the like obtained by micro-machining an aluminum surface, is mainly used as a power collector (PTLs 5 and 6).

Various studies have been conducted for increasing the output and the durability of the above-described capacitors that use activated carbon electrodes. For example, PTL 7 discloses a technology for improving the output performance by an addition of carbon nanotubes. PTL 8 discloses a technology for improving the vibration resistance by supporting each member housed in a metal case with an insulating resin. PTL 9 discloses a technology for improving the input-output characteristics and the durability by reducing the amount of aggregates on an activate carbon electrode.

< Background Art 4>

Moreover, in the development for increased output, PTL 10 discloses a technology for pre-doping a negative electrode by incorporating an alkali metal compound into a positive electrode precursor, as well as a technology for improving the cycle durability at room temperature. PTL 11 discloses a technology for facilitating the decomposition of an alkali metal compound in a positive electrode precursor and pre-doping of a negative electrode by compression and heating, as well as a technology for improving the cycle durability at high temperatures.

< Background Art 5>

As a positive electrode active material containing iron as a main component, lithium iron phosphate ($LiFePO_4$: hereinafter, may be abbreviated as "LFP") is widely used. Lithium iron phosphate used as a positive electrode active material is characterized by having a high thermal stability; however, it has a property that causes not only a sharp voltage increase in the final stage of charging but also a sudden potential change in the final stage of discharging. PTL 1 discloses a technology that attempts to control an increase in the voltage of a battery to be gradual by incorporating a positive electrode active material that has a charge-discharge capacity at a higher voltage than lithium iron phosphate.

Lithium iron phosphate has a lower constant voltage region (hereinafter, may be referred to as "plateau") as compared to the above-described ternary positive electrode active material, and is thus likely to have a relatively low energy density. In view of this, PTL 13 discloses a technology that attempts to raise the plateau by partially substituting iron contained in lithium iron phosphate with manganese, and thereby increasing the energy density of a lithium iron secondary battery. Meanwhile, PTL 14 discloses a technology that attempts to increase the energy density of a lithium iron secondary battery by oxidatively decomposing a lithium compound such as lithium carbonate contained in a positive electrode and pre-doping a negative electrode with the thus generated lithium ions. Further, PTL 15 discloses a technology that attempts to improve the large-current discharge characteristics of a lithium iron secondary battery by using a positive electrode active material obtained by mixing lithium iron phosphate and electrolytic manganese dioxide.

[CITATION LIST]

[PATENT LITERATURE]

[PTL 1] WO 2019/098197
[PTL 2] Japanese Unexamined Patent Publication (Kokai) No. 2009-141181

[PTL 3] Japanese Unexamined Patent Publication (Kokai) No. 2012-89825
[PTL 4] Japanese Unexamined Patent Publication (Kokai) No. 2007-335318
[PTL 5] Japanese Unexamined Patent Publication (Kokai) No. S57-84120
[PTL 6] Japanese Unexamined Patent Publication (Kokai) No. H11-283871
[PTL 7] WO 2021/066174
[PTL 8] Japanese Unexamined Patent Publication (Kokai) No. 2012-104571
[PTL 9] Japanese Unexamined Patent Publication (Kokai) No. 2020-140889
[PTL 10] WO 2017/126693
[PTL 11] Japanese Unexamined Patent Publication (Kokai) No. 2020-167343
[PTL 12] WO 2011/096469
[PTL 13] Japanese Unexamined Patent Publication (Kokai) No. 2008-243662
[PTL 14] WO 2017/126682
[PTL 15] Japanese Unexamined Patent Publication (Kokai) No. 2009-170106

[NON-PATENT LITERATURE]

[NPL 1] E.P. Barrett, L.G. Joyner, and P. Halenda, "The Determination of Pore Volume and Area Distributions in Porous Substances", J. Am. Chem. Soc., (1951), 73, pp.373-380
[NPL 2] B.C. Lippens, and J.H. de Boer, "Studies on pore Systems in Catalysis V. The t Method", J. Catalysis, (1965), 4, pp.319-323
[NPL 3] R.S. Mikhail, S. Brunauer, and E.E. Bodor, "Investigations of a Complete Pore Structure Analysis", J. Colloid Interface Sci., (1968), 26, pp.45-53

SUMMARY

[TECHNICAL PROBLEM]

An object of the present disclosure is to provide a positive electrode precursor, a negative electrode, and a power storage element and the like using the same, which can improve one or more of the problems in the below-described first to fifth embodiments. Additional problems and effects of the present disclosure will be presented below and in the section of DESCRIPTION OF EMBODIMENTS.

In a first embodiment, the present disclosure aims to provide a nonaqueous lithium power storage element and the like that are excellent in low-temperature output density, inhibition of micro-short circuit during a low-temperature cycle test, and high-power cycle durability at low to high temperatures.

In a second embodiment, the present disclosure aims to provide: a positive electrode precursor that has a high capacity and a low resistance and is capable of pre-doping a negative electrode in a short time; and a nonaqueous lithium power storage element and the like using the same.

In a third embodiment, the present disclosure aims to provide a power storage element and the like that have a low resistance and are excellent in vibration resistance and high-temperature durability.

In a fourth embodiment, the present disclosure can provide a nonaqueous lithium power storage element and the like that inhibit a micro-short circuit in the pre-doping step, have a low internal resistance, and exhibit excellent cycle durability over a wide temperature range. Further, the present disclosure aims to provide a negative electrode for the production of the same.

In a fifth embodiment, the present disclosure aims to provide a nonaqueous lithium power storage element and the like excellent in discharge capacity per unit voltage in a low-voltage range as well as energy density, in which an increase in resistance under a high-temperature environment can be inhibited.

[SOLUTION TO PROBLEM]

<First Embodiment>

Examples of the first embodiment of the present disclosure are described in the following [1] to [8].

[1] A nonaqueous lithium power storage element, comprising a positive electrode that comprises a positive electrode active material layer arranged on a positive electrode power collector; a negative electrode that comprises a negative electrode active material layer arranged on a negative electrode power collector; a separator; and a lithium ion-containing nonaqueous electrolytic solution,

wherein the positive electrode active material layer contains an activated carbon-containing carbon material and lithium iron phosphate as positive electrode active materials,

when the content of the carbon material and that of lithium iron phosphate in the positive electrode active material layer are defined as $X_1$ (wt.%) and $X_2$ (wt.%), respectively, a weight ratio of lithium iron phosphate ($X_2/(X_1 + X_2)$) is 0.40 to 0.85,

the positive electrode active material layer has a total pore volume of 0.29 cc/g to 0.70 cc/g based on the weight of the positive electrode active material layer,

the positive electrode active material layer has a void diameter D25 of 0.34 $\mu$m to 0.64 $\mu$m as determined by mercury porosimetry,

the positive electrode active material layer has a void diameter D75 of 0.10 $\mu$m to 0.20 $\mu$m as determined by mercury porosimetry, and

a difference between the void diameters D25 and D75 (D25 - D75) is 0.20 $\mu$m to 0.45 $\mu$m.

[2] The nonaqueous lithium power storage element according to [1], wherein the weight ratio of lithium iron phosphate is 0.70 to 0.80.

[3] The nonaqueous lithium power storage element according to [1] or [2], wherein the total pore volume of the positive electrode active material layer is 0.31 cc/g to 0.50 cc/g.

[4] The nonaqueous lithium power storage element according to any one of [1] to [3], wherein the void diameter D25 of the positive electrode active material layer is 0.36 $\mu$m to 0.52 $\mu$m.

[5] The nonaqueous lithium power storage element according to any one of [1] to [4], wherein the positive electrode active material layer contains 0.01 wt.% to 5.0 wt.% of lithium carbonate based on a total weight of the positive electrode active material layer.

[6] The nonaqueous lithium power storage element according to any one of [1] to [5], wherein the positive electrode active material layer has a volume resistivity of 1.5 $\Omega$cm to 8.0 $\Omega$cm.

[7] The nonaqueous lithium power storage element according to any one of [1] to [6], wherein the surface of the positive electrode active material layer has a frequency of 1,000-$\mu$m$^2$ to 10,000-$\mu$m$^2$ aggregates of 0.5 aggregates/cm$^2$ or less.

[8] The nonaqueous lithium power storage element according to any one of [1] to [7], wherein, when a value determined by constant-current discharging the nonaqueous lithium power storage element at 18 A and 5°C from 4.0 V to 2.8 V, subsequently pausing the discharge, and dividing the voltage change ($\Delta$V) at 10 seconds after the pause by 18 A is defined as 5°C 10-second current pause resistance $R_1$ ($\Omega$), and a value determined by performing the same procedure at 25°C is defined as 25°C 10-second current pause resistance $R_2$ ($\Omega$), a ratio ($R_1/R_2$) of the 5°C 10-second current pause resistance $R_1$ ($\Omega$) with respect to the 25°C 10-second current pause resistance $R_2$ ($\Omega$) is 1.05 to 1.90.

<Second Embodiment>

Examples of the second embodiment of the present disclosure are described below.

[1] A positive electrode precursor, comprising a positive electrode power collector; and a positive electrode active material layer arranged on the positive electrode power collector,

wherein the positive electrode active material layer contains a carbon material containing at least activated carbon, a lithium-transition metal oxide, and an alkali metal compound,

a weight ratio $A_1$ of the carbon material in the positive electrode active material layer is 38 wt.% to 60 wt.%,

a weight ratio $A_2$ of the lithium-transition metal oxide in the positive electrode active material layer is 15 wt.% to 45 wt.%,

$A_1 + A_2$ is 74 wt.% to 93 wt.%,

$A_2/A_1$ is 0.30 to 1.20,

the lithium-transition metal oxide has a specific surface area B of 7.5 m$^2$/g to 11.0 m$^2$/g as measured by the BET method, and

when $D_{10}$ and $D_{90}$ of the lithium-transition metal oxide are defined as $C_1$ and $C_2$, respectively, $C_2/C_1$ is 10 to 25.

[2] The positive electrode precursor according to [1], wherein the alkali metal compound is lithium carbonate, and the lithium-transition metal oxide is an olivine-based compound.

[3] The positive electrode precursor according to [1] or [2], wherein the lithium-transition metal oxide is lithium iron phosphate.

[4] A nonaqueous lithium power storage element, comprising a positive electrode that comprises a positive electrode power collector and a positive electrode active material layer arranged on the positive electrode power collector; a negative electrode; a separator; and a lithium ion-containing nonaqueous electrolytic solution,

wherein the positive electrode active material layer contains a carbon material containing at least activated carbon, a lithium-transition metal oxide, and an alkali metal compound,
a weight ratio $X_1$ of the carbon material in the positive electrode active material layer is 43 wt.% to 74 wt.%,
a weight ratio $X_2$ of the lithium-transition metal oxide in the positive electrode active material layer is 23 wt.% to 55 wt.%,
$X_2/X_1$ is 0.30 to 1.20,
$X_1 + X_2$ is 92.5 wt.% to 99.3 wt.%,
the lithium-transition metal oxide has a specific surface area Y of 7.5 $m^2$/g to 11.0 $m^2$/g as measured by the BET method, and
when $D_{10}$ and $D_{90}$ of the lithium-transition metal oxide are defined as $Z_1$ and $Z_2$, respectively, $Z_2/Z_1$ is 10 to 25.

[5] The nonaqueous lithium power storage element according to [4], wherein the alkali metal compound is lithium carbonate, and the lithium-transition metal oxide is lithium iron phosphate.
[6] A power storage module comprising the nonaqueous lithium power storage element according to [4] or [5], which power storage module is at least one selected from the group consisting of power regeneration assist systems, power load leveling systems, uninterruptible power supply systems, contactless power supply systems, energy harvesting systems, power storage systems, photovoltaic power generation/storage systems, electric power steering systems, emergency power supply systems, in-wheel motor systems, idling stop systems, electric vehicles, plug-in hybrid vehicles, hybrid vehicles, electric motorcycles, quick-charging systems, and smart grid systems.
[7] A power storage system, in which the nonaqueous lithium power storage element according to [4] or [5] is connected in series or in parallel with a lead-acid battery, a nickel-metal hydride battery, a lithium ion secondary battery, a sodium ion secondary battery, a zinc ion secondary battery, a fluoride ion secondary battery, or a fuel cell.

<Third Embodiment>

Examples of the third embodiment of the present disclosure are described below.

[1] A power storage element, comprising a positive electrode that comprises a positive electrode active material layer arranged on a positive electrode power collector; a negative electrode that comprises a negative electrode active material layer arranged on a negative electrode power collector; a separator; and an electrolytic solution,

wherein the positive electrode power collector is a non-porous aluminum foil,
the positive electrode power collector has no undercoat layer thereon, and the positive electrode active material layer is directly formed on the positive electrode power collector,
the positive electrode active material layer contains activated carbon as a positive electrode active material,
the positive electrode taken out by disassembling the power storage element has an interfacial resistance of 0.05 $\Omega cm^2$ to 5.00 $\Omega cm^2$ between the positive electrode active material layer and the positive electrode power collector, and
the surface of the positive electrode taken out by disassembling the power storage element has a frequency of 1,000-$\mu m^2$ to 10,000-$\mu m^2$ aggregates of 0.5 aggregates/$cm^2$ or less.

[2] The power storage element according to [1], wherein the negative electrode active material layer is doped with lithium ions, and the electrolytic solution is a lithium ion-containing nonaqueous electrolytic solution.
[3] The power storage element according to [1] or [2], wherein the positive electrode active material layer contains a lithium-transition metal oxide as a positive electrode active material.
[4] The power storage element according to [3], wherein the lithium-transition metal oxide is represented by the following formula:

$Li_xNi_aCo_bAl_{(1-a-b)}O_2$ {wherein, x satisfies $0 \leq x \leq 1$, and a and b satisfy $0.2 < a < 0.97$ and $0.2 < b < 0.97$, respectively},
$Li_xNi_cCo_dMn_{(1-c-d)}O_2$ {wherein, x satisfies $0 \leq x \leq 1$, and c and d satisfy $0.2 < c < 0.97$ and $0.2 < d < 0.97$, respectively},
$Li_xCoO_2$ {wherein, x satisfies $0 \leq x \leq 1$},
$Li_xMn_2O_4$ {wherein, x satisfies $0 \leq x \leq 1$},

$Li_xFePO_4$ {wherein, x satisfies $0 \leq x \leq 1$},
$Li_xMnPO_4$ {wherein, x satisfies $0 \leq x \leq 1$}, or
$Li_zV_2(PO_4)_3$ {wherein, z satisfies $0 \leq z \leq 3$}.

[5] The power storage element according to [3] or [4], wherein the lithium-transition metal oxide is lithium iron phosphate.

[6] The power storage element according to any one of [3] to [5], wherein the lithium-transition metal oxide is lithium iron phosphate, and a ratio of the 3.4-3.0 V capacity (mAh) with respect to the 4.0-2.0 V capacity (mAh) of the power storage element is 25 to 82%.

[7] The power storage element according to any one of [3] to [5], wherein the lithium-transition metal oxide is lithium iron phosphate, and the ratio of the 3.4-3.0 V capacity (mAh) with respect to the 4.0-2.0 V capacity (mAh) of the power storage element is 50 to 70%.

[8] The power storage element according to any one of [1] to [7], wherein, when the interfacial resistance between the positive electrode active material layer and the positive electrode power collector of the positive electrode is defined as A [$\Omega cm^2$] and the concentration of lithium fluoride contained in the negative electrode with respect to the weight of the negative electrode active material layer is defined as B [mmol/g], A/B is 0.02 to 250.

[9] The power storage element according to any one of [1] to [7], wherein, when the interfacial resistance between the positive electrode active material layer and the positive electrode power collector of the positive electrode is defined as A [$\Omega cm^2$] and the concentration of lithium fluoride contained in the negative electrode with respect to the weight of the negative electrode active material layer is defined as B [mmol/g], A/B is 0.07 to 5.5.

[10] The power storage element according to any one of [1] to [9], wherein the positive electrode contains 0.01 to 5.0 wt.% of lithium carbonate.

[11] The power storage element according to [1], wherein the negative electrode active material layer contains activated carbon, and the negative electrode taken out by disassembling the power storage element has an interfacial resistance of 0.05 $\Omega cm^2$ to 5.00 $\Omega cm^2$ between the negative electrode active material layer and the negative electrode power collector.

<Fourth Embodiment>

Examples of the fourth embodiment of the present disclosure are described below.

[1] A negative electrode, comprising a negative electrode power collector; and a negative electrode active material layer containing a negative electrode active material, which is composed of a graphite and capable of occluding and releasing lithium ions, on one or both sides of the negative electrode power collector,
wherein the negative electrode satisfies all of the following (1) to (4):

(1) a material constituting the negative electrode active material layer has an average thickness of 0.2 $\mu$m to 1.0 $\mu$m;
(2) the negative electrode active material layer has a void diameter of 0.15 $\mu$m to 0.70 $\mu$m;
(3) the negative electrode active material layer has a specific surface area of 8 $m^2$/g to 40 $m^2$/g as calculated based on the weight of the negative electrode active material layer; and
(4) the surface of the negative electrode has an aggregate frequency of 0 aggregates/$cm^2$ to 1.0 aggregates/$cm^2$.

[2] The negative electrode according to [1], wherein, when the average thickness of the material constituting the negative electrode active material layer is defined as t ($\mu$m) and the void diameter of the negative electrode active material layer is defined as p ($\mu$m), $1.0 \leq (1.35 - p)/t \leq 2.8$ is satisfied.

[3] The negative electrode according to [1] or [2], wherein the negative electrode active material layer has a void volume of 0.5 $cm^3$/g to 1.2 $cm^3$/g.

[4] The negative electrode according to any one of [1] to [3], wherein the average thickness of the material constituting the negative electrode active material layer is 0.3 $\mu$m to 0.8 $\mu$m.

[5] The negative electrode according to any one of [1] to [4], wherein the void diameter of the negative electrode active material layer is 0.20 $\mu$m to 0.60 $\mu$m.

[6] The negative electrode according to any one of [1] to [5], wherein the specific surface area of the negative electrode active material layer is 12 $m^2$/g to 30 $m^2$/g as calculated based on the weight of the negative electrode active material layer.

[7] The negative electrode according to any one of [1] to [6], wherein the aggregate frequency of the surface of the negative electrode is 0.2 aggregates/$cm^2$ or less.

[8] The negative electrode according to any one of [1] to [7], wherein the void volume of the negative electrode active material layer is 0.6 cm$^3$/g to 1.1 cm$^3$/g.

[9] A nonaqueous lithium power storage element, in which the negative electrode according to any one of [1] to [8], a positive electrode, a separator, and a lithium ion-containing nonaqueous electrolytic solution are housed in a casing.

<Fifth Embodiment>

Examples of the fifth embodiment of the present disclosure are described below.

[1] A nonaqueous lithium power storage element, comprising a positive electrode; a negative electrode; and a lithium ion-containing nonaqueous electrolytic solution,

wherein the positive electrode comprises a positive electrode power collector, and a positive electrode active material layer provided on one or both sides of the positive electrode power collector,

the positive electrode active material layer contains a positive electrode active material and a transition metal oxide represented by $MO_2$ {wherein, M represents at least one selected from the group consisting of Co, Ni, and Mn},

the positive electrode active material contains a compound represented by $Li_xMn_{(1-y)}Fe_yPO_4$ {wherein, x satisfies $0 \leq x \leq 1$, and y satisfies $0 < y \leq 1$},

the negative electrode comprises a negative electrode power collector, and a negative electrode active material layer provided on one or both sides of the negative electrode power collector, and when the discharge capacity per unit area of the positive electrode is defined as A1 (mAh/cm$^2$) and the charge capacity per unit area of the negative electrode is defined as B1 (mAh/cm$^2$), $0.71 \leq A1/B1 \leq 0.96$ is satisfied.

[2] The nonaqueous lithium power storage element according to [1], wherein the positive electrode active material layer further contains activated carbon.

[3] The nonaqueous lithium power storage element according to [1] or [2], wherein the negative electrode active material layer contains a carbon material as a negative electrode active material in a ratio of 50 parts by weight to 98 parts by weight based on a total weight of the negative electrode active material layer.

[4] The nonaqueous lithium power storage element according to any one of [1] to [3], wherein the negative electrode active material layer contains, as a negative electrode active material, at least one selected from the group consisting of silicon, silicon compounds, tin, and tin compounds in a ratio of 5 parts by weight to 30 parts by weight based on a total weight of the negative electrode active material layer.

[5] The nonaqueous lithium power storage element according to any one of [1] to [4], wherein the ratio of $MO_2$ contained in the positive electrode is 1 part by weight to 20 parts by weight based on a total weight of the positive electrode active material layer.

[6] The nonaqueous lithium power storage element according to any one of [1] to [5], wherein the negative electrode active material layer contains a carbon material as a first negative electrode active material in a ratio of 50 parts by weight to 95 parts by weight, and at least one of silicon or a silicon compound as a second negative electrode active material in a ratio of 5 parts by weight to 30 parts by weight, based on a total weight of the negative electrode active material layer.

[7] A power storage module, comprising the nonaqueous lithium power storage element according to any one of [1] to [6].

[8] The power storage module according to [7], which is integrated into at least one system selected from the group consisting of power regeneration assist systems, power load leveling systems, uninterruptible power supply systems, contactless power supply systems, energy harvesting systems, electric vehicles, plug-in hybrid vehicles, hybrid vehicles, electric motorcycles, and quick-charging systems.

[9] A nonaqueous lithium power storage element precursor, comprising a positive electrode precursor; a negative electrode precursor; and a lithium ion-containing nonaqueous electrolytic solution,

wherein the positive electrode precursor comprises a positive electrode power collector, and a positive electrode active material layer provided on one or both sides of the positive electrode power collector,

the positive electrode active material layer contains a positive electrode active material and a lithium compound composite,

the positive electrode active material contains a compound represented by $Li_xMn_{(1-y)}Fe_yPO_4$ {wherein, x satisfies $0 \leq x \leq 1$, and y satisfies $0 < y \leq 1$},

the lithium compound composite is a composite of a lithium compound and a transition metal oxide represented by $MO_2$ {wherein, M represents one selected from the group consisting of Co, Ni, and Mn},

the negative electrode precursor comprises a negative electrode power collector, and a negative electrode active material layer provided on one or both sides of the negative electrode power collector, and

when the charge capacity per unit area of the positive electrode precursor is defined as A2 ($mAh/cm^2$), the discharge capacity per unit area of the positive electrode precursor is defined as A3 ($mAh/cm^2$), and the charge capacity per unit area of the negative electrode precursor is defined as B2 ($mAh/cm^2$), $0.65 \leq A3/A2 \leq 0.93$ and $1.03 \leq B2/A3 \leq 1.26$ are satisfied.

[10] A method of producing a nonaqueous lithium power storage element, the method comprising the pre-doping step of applying a voltage of 4.2 V or more to the nonaqueous lithium power storage element precursor according to [9] at a temperature of 20°C to 60°C to decompose the lithium compound.

<Combinations of First to Fifth Embodiments>

Combinations of the first to the fifth embodiments of the present disclosure are exemplified in the following [1] to [22].

[1] A nonaqueous lithium power storage element, comprising a positive electrode that comprises a positive electrode active material layer arranged on a positive electrode power collector; a negative electrode that comprises a negative electrode active material layer arranged on a negative electrode power collector; a separator; and a lithium ion-containing nonaqueous electrolytic solution,

wherein the positive electrode active material layer contains an activated carbon-containing carbon material and lithium iron phosphate as positive electrode active materials,

when the content of the carbon material and that of lithium iron phosphate in the positive electrode active material layer are defined as $X_1$ (wt.%) and $X_2$ (wt.%), respectively, a weight ratio of lithium iron phosphate ($X_2/(X_1 + X_2)$) is 0.40 to 0.85,

the positive electrode active material layer has a total pore volume of 0.29 cc/g to 0.70 cc/g based on the weight of the positive electrode active material layer,

the positive electrode active material layer has a void diameter D25 of 0.34 $\mu$m to 0.64 $\mu$m as determined by mercury porosimetry,

the positive electrode active material layer has a void diameter D75 of 0.10 $\mu$m to 0.20 $\mu$m as determined by mercury porosimetry, and

a difference (D25 - D75) between the void diameters D25 and D75 is 0.20 $\mu$m to 0.45 $\mu$m.

[2] The nonaqueous lithium power storage element according to [1], wherein the positive electrode active material layer contains 0.01 wt.% to 5.0 wt.% of lithium carbonate based on a total weight of the positive electrode active material layer.

[3] The nonaqueous lithium power storage element according to [2], wherein the positive electrode active material layer has a volume resistivity of 1.5 $\Omega$cm to 8.0 $\Omega$cm.

[4] The nonaqueous lithium power storage element according to [2], wherein the surface of the positive electrode active material layer has a frequency of 1,000-$\mu m^2$ to 10,000-$\mu m^2$ aggregates of 0.5 aggregates/$cm^2$ or less.

[5] A positive electrode precursor used for the power storage element according [1], the positive electrode precursor comprising a positive electrode power collector; and a positive electrode active material layer arranged on the positive electrode power collector,

wherein the positive electrode active material layer contains a carbon material containing at least activated carbon, a lithium-transition metal oxide, and an alkali metal compound,

a weight ratio $A_1$ of the carbon material in the positive electrode active material layer is 38 wt.% to 60 wt.%,

a weight ratio $A_2$ of the lithium-transition metal oxide in the positive electrode active material layer is 15 wt.% to 45 wt.%,

$A_1 + A_2$ is 74 wt.% to 93 wt.%,

$A_2/A_1$ is 0.30 to 1.20,

the lithium-transition metal oxide has a specific surface area B of 7.5 $m^2/g$ to 11.0 $m^2/g$ as measured by the BET method, and

when $D_{10}$ and $D_{90}$ of the lithium-transition metal oxide are defined as $C_1$ and $C_2$, respectively, $C_2/C_1$ is 10 to 25.

[6] The positive electrode precursor according to [5], wherein the alkali metal compound is lithium carbonate, and the lithium-transition metal oxide is lithium iron phosphate.

[7] The nonaqueous lithium power storage element according to [1], comprising a positive electrode that comprises a positive electrode power collector and a positive electrode active material layer arranged on the positive electrode power collector; a negative electrode; a separator; and a lithium ion-containing nonaqueous electrolytic solution,

wherein the positive electrode active material layer contains a carbon material containing at least activated carbon, a lithium-transition metal oxide, and an alkali metal compound,
a weight ratio $X_1$ of the carbon material in the positive electrode active material layer is 43 wt.% to 74 wt.%,
a weight ratio $X_2$ of the lithium-transition metal oxide in the positive electrode active material layer is 23 wt.% to 55 wt.%,
$X_2/X_1$ is 0.30 to 1.20,
$X_1 + X_2$ is 92.5 wt.% to 99.3 wt.%,
the lithium-transition metal oxide has a specific surface area Y of 7.5 $m^2$/g to 11.0 $m^2$/g as measured by the BET method, and
when $D_{10}$ and $D_{90}$ of the lithium-transition metal oxide are defined as $Z_1$ and $Z_2$, respectively,
$Z_2/Z_1$ is 10 to 25.

[8] The nonaqueous lithium power storage element according to [7], wherein the alkali metal compound is lithium carbonate, and the lithium-transition metal oxide is lithium iron phosphate.
[9] The nonaqueous lithium power storage element according to [1], comprising a positive electrode that comprises a positive electrode active material layer arranged on a positive electrode power collector; a negative electrode that comprises a negative electrode active material layer arranged on a negative electrode power collector; a separator; and an electrolytic solution,

wherein the positive electrode power collector is a non-porous aluminum foil,
the positive electrode power collector has no undercoat layer thereon, and the positive electrode active material layer is directly formed on the positive electrode power collector,
the positive electrode active material layer contains activated carbon as a positive electrode active material,
the positive electrode taken out by disassembling the power storage element has an interfacial resistance of 0.05 $\Omega cm^2$ to 5.00 $\Omega cm^2$ between the positive electrode active material layer and the positive electrode power collector, and
the surface of the positive electrode taken out by disassembling the power storage element has a frequency of 1,000-$\mu m^2$ to 10,000-$\mu m^2$ aggregates of 0.5 aggregates/$cm^2$ or less.

[10] The nonaqueous lithium power storage element according to [9], wherein the positive electrode active material layer contains a lithium-transition metal oxide as a positive electrode active material, and
the lithium-transition metal oxide is represented by the following formula:

$Li_xNi_aCo_bAl_{(1-a-b)}O_2$ {wherein, x satisfies $0 \leq x \leq 1$, and a and b satisfy $0.2 < a < 0.97$ and $0.2 < b < 0.97$, respectively},
$Li_xNi_cCo_dMn_{(1-c-d)}O_2$ {wherein, x satisfies $0 \leq x \leq 1$, and c and d satisfy $0.2 < c < 0.97$ and $0.2 < d < 0.97$, respectively},
$Li_xCoO_2$ {wherein, x satisfies $0 \leq x \leq 1$},
$Li_xMn_2O4$ {wherein, x satisfies $0 \leq x \leq 1$},
$Li_xFePO_4$ {wherein, x satisfies $0 \leq x \leq 1$},
$Li_xMnPO_4$ {wherein, x satisfies $0 \leq x \leq 1$}, or
$Li_zV_2(PO_4)_3$ {wherein, z satisfies $0 \leq z \leq 3$}.

[11] The nonaqueous lithium power storage element according to [9] or [10], wherein the positive electrode active material layer contains a lithium-transition metal oxide as a positive electrode active material, and the lithium-transition metal oxide is lithium iron phosphate.
[12] The nonaqueous lithium power storage element according to [11], wherein the lithium-transition metal oxide is lithium iron phosphate, and a ratio of the 3.4-3.0 V capacity (mAh) with respect to the 4.0-2.0 V capacity (mAh) of the nonaqueous lithium power storage element is 25 to 82%.
[13] The nonaqueous lithium power storage element according to [9] or [10], wherein, when the interfacial resistance between the positive electrode active material layer and the positive electrode power collector of the positive electrode is defined as A [$\Omega cm^2$] and the concentration of lithium fluoride contained in the negative electrode with respect to the weight of the negative electrode active material layer is defined as B [mmol/g], A/B is 0.02 to 250.
[14] A negative electrode used for the nonaqueous lithium power storage element according to [1], the negative electrode comprising a negative electrode power collector; and a negative electrode active material layer containing a negative electrode active material, which is composed of a graphite and capable of occluding and releasing lithium ions, on one or both sides of the negative electrode power collector,
wherein the negative electrode satisfies all of the following (1) to (4):

(1) a material constituting the negative electrode active material layer has an average thickness of 0.2 $\mu$m to 1.0 $\mu$m;
(2) the negative electrode active material layer has a void diameter of 0.15 $\mu$m to 0.70 $\mu$m;
(3) the negative electrode active material layer has a specific surface area of 8 $m^2$/g to 40 $m^2$/g as calculated based on the weight of the negative electrode active material layer; and
(4) the surface of the negative electrode has an aggregate frequency of 0 aggregates/$cm^2$ to 1.0 aggregates/$cm^2$.

[15] The negative electrode according to [14], wherein, when the average thickness of the material constituting the negative electrode active material layer is defined as t ($\mu$m) and the void diameter of the negative electrode active material layer is defined as p ($\mu$m), $1.0 \leq (1.35 - p)/t \leq 2.8$ is satisfied.

[16] The negative electrode according to [14] or [15], wherein the negative electrode active material layer has a void volume of 0.5 $cm^3$/g to 1.2 $cm^3$/g.

[17] The negative electrode according to [14] or [15], wherein the specific surface area of the negative electrode active material layer is 12 $m^2$/g to 30 $m^2$/g as calculated based on the weight of the negative electrode active material layer.

[18] The nonaqueous lithium power storage element according to [1], comprising a positive electrode; a negative electrode; and a lithium ion-containing nonaqueous electrolytic solution,

wherein the positive electrode comprises a positive electrode power collector, and a positive electrode active material layer provided on one or both sides of the positive electrode power collector,
the positive electrode active material layer contains a positive electrode active material and a transition metal oxide represented by $MO_2$ {wherein, M represents at least one selected from the group consisting of Co, Ni, and Mn},
the positive electrode active material contains a compound represented by $Li_xMn_{(1-y)}Fe_yPO_4$ {wherein, x satisfies $0 \leq x \leq 1$, and y satisfies $0 < y \leq 1$},
the negative electrode comprises a negative electrode power collector, and a negative electrode active material layer provided on one or both sides of the negative electrode power collector, and when the discharge capacity per unit area of the positive electrode is defined as A1 (mAh/$cm^2$) and the charge capacity per unit area of the negative electrode is defined as B1 (mAh/$cm^2$), $0.71 \leq A1/B1 \leq 0.96$ is satisfied.

[19] The nonaqueous lithium power storage element according to [18], wherein the positive electrode active material layer further contains activated carbon.

[20] The nonaqueous lithium power storage element according to [18] or [19], wherein the negative electrode active material layer contains, as a negative electrode active material, at least one selected from the group consisting of silicon, silicon compounds, tin, and tin compounds in a ratio of 5 parts by weight to 30 parts by weight based on a total weight of the negative electrode active material layer.

[21] The nonaqueous lithium power storage element according to [18] or [19], wherein the negative electrode active material layer contains a carbon material as a first negative electrode active material in a ratio of 50 parts by weight to 95 parts by weight, and at least one of silicon or a silicon compound as a second negative electrode active material in a ratio of 5 parts by weight to 30 parts by weight, based on a total weight of the negative electrode active material layer.

[22] A nonaqueous lithium power storage element precursor used for the nonaqueous lithium power storage element according to [1], the nonaqueous lithium power storage element precursor comprising a positive electrode precursor; a negative electrode precursor; and a lithium ion-containing nonaqueous electrolytic solution,

wherein the positive electrode precursor comprises a positive electrode power collector, and a positive electrode active material layer provided on one or both sides of the positive electrode power collector,
the positive electrode active material layer contains a positive electrode active material and a lithium compound composite,
the positive electrode active material contains a compound represented by $Li_xMn_{(1-y)}Fe_yPO_4$ {wherein, x satisfies $0 \leq x \leq 1$, and y satisfies $0 < y \leq 1$},
the lithium compound composite is a composite of a lithium compound and a transition metal oxide represented by $MO_2$ {wherein, M represents one selected from the group consisting of Co, Ni, and Mn},
the negative electrode precursor comprises a negative electrode power collector, and a negative electrode active material layer provided on one or both sides of the negative electrode power collector, and
when the charge capacity per unit area of the positive electrode precursor is defined as A2 (mAh/$cm^2$), the

discharge capacity per unit area of the positive electrode precursor is defined as A3 (mAh/cm$^2$), and the charge capacity per unit area of the negative electrode precursor is defined as B2 (mAh/cm$^2$), $0.65 \leq A3/A2 \leq 0.93$ and $1.03 \leq B2/A3 \leq 1.26$ are satisfied.

[ADVANTAGEIOUS EFFECTS OF INVENTION]

According to the present disclosure, a positive electrode precursor, a negative electrode, and a power storage element and the like using the same, which can improve one or more of the problems in the below-described first to fifth embodiments, are provided.

According to the first embodiment of the present disclosure, a nonaqueous lithium power storage element and the like that are excellent in low-temperature output density, inhibition of micro-short circuit during a low-temperature cycle test, and high-power cycle durability at low to high temperatures, can be provided.

According to the second embodiment of the present disclosure, a positive electrode precursor that has a high capacity and a low resistance and is capable of pre-doping a negative electrode in a short time, and a nonaqueous lithium power storage element and the like using the same can be provided.

According to the third embodiment of the present disclosure, a power storage element and the like that have a low resistance and are excellent in vibration resistance and high-temperature durability can be provided.

According to the fourth embodiment of the present disclosure, a nonaqueous lithium power storage element and the like that inhibit a micro-short circuit in the pre-doping step, have a low internal resistance, and exhibit excellent cycle durability over a wide temperature range can be provided. Further, a negative electrode for the production of the same can be provided.

According to the fifth embodiment of the present disclosure, a nonaqueous lithium power storage element and the like excellent in discharge capacity per unit voltage in a low-voltage range as well as energy density, in which an increase in resistance under a high-temperature environment can be inhibited, can be provided.

DESCRIPTION OF EMBODIMENTS

Examples of the embodiments of the present disclosure will now be described in detail; however, the present disclosure is not limited to the below-described embodiments. In the present disclosure, an upper limit value and a lower limit value of each numerical range may be combined as desired to constitute an arbitrary numerical range.

<<Summary of Present Disclosure>>

In the present disclosure, in order to improve one or more characteristics that are required for a power storage element, the below-described approaches based on the first to the fifth embodiments were adopted toward the configurations of the respective members constituting a power storage element. It is noted here that, since the first to the fifth embodiments all relate to the configurations of the respective members constituting a power storage element, these configurations can be combined as desired.

<First Embodiment>

In the first embodiment, the weight ratio, the pore volume, and the void diameter of the positive electrode active material layer containing activated carbon and an alkali-transition metal oxide (particularly iron phosphate oxide) are adjusted to be in specific ranges. By this, although the inclusion of lithium iron phosphate is likely to have a drawback in terms of the low-temperature characteristics, not only the low-temperature output density can be improved but also a micro-short circuit during a low-temperature cycle test can be inhibited. In addition, the high-power cycle durability can be improved over a wide temperature range from low to high temperatures. This enables, for example, the shipment of the nonaqueous lithium power storage element with the same electrode and cell specifications from tropical to cold regions, which also leads to an improvement in productivity. This is believed to be mainly because the charge-discharge reactions in the electrodes proceed more uniformly, so that deterioration and micro-short circuit caused by uneven charge-discharge reactions are inhibited. Conventionally, in those cases where a positive electrode active material layer contains activated carbon and lithium iron phosphate, there was no example that focused on the inhibition of deterioration and micro-short circuit caused by uneven charge-discharge reactions in electrodes, and it is thus unexpected that the first embodiment leads to improvements in low-temperature output density, micro-short circuit during a low-temperature cycle test, and high-power cycle durability in a wide temperature range.

<Second Embodiment>

In the second embodiment, the composition ratio of the positive electrode active material layer that contains activated carbon, a lithium-transition metal oxide, and an alkali metal compound, as well as the specific surface area of the lithium-transition metal compound and the particle size of the lithium-transition metal oxide are adjusted to be in specific ranges. This enables the provision of a positive electrode precursor that has a high capacity and a low resistance and is capable of pre-doping a negative electrode in a short time, and a nonaqueous lithium power storage element and the like using the same. Conventionally, with regard to a positive electrode precursor that contains an activated carbon-containing carbon material, a lithium-transition metal oxide, and an alkali metal compound, there was no idea of facilitating the decomposition of the alkali metal compound to provide a positive electrode precursor capable of pre-doping a negative electrode in a short time and, in fact, there was no disclosure of such a technology. It is thus unexpected that this configuration makes it possible to perform pre-doping in a short time.

<Third Embodiment>

In the third embodiment, by using a non-porous positive electrode power collector having no undercoat layer, the interfacial resistance between the positive electrode active material layer and the positive electrode power collector as well as the frequency of aggregates on the positive electrode surface are adjusted to be in specific ranges. This enables the provision of a power storage element and the like that have a low resistance and are excellent in vibration resistance and high-temperature durability. Conventionally, the purposes of using an aluminum foil on which an undercoat layer has been formed or a special processing (e.g., conductive undercoating, etching, expanding, or punching) has been performed are believed to be: to enhance the electrical contact between the interface of a collector foil and a composite layer, and thereby bringing out the high output performance of an activated carbon electrode; and to maintain the electrical contact between a positive electrode power collector and a positive electrode active material layer even after long-term use, and thereby maintaining the high durability of the activated carbon electrode. However, conventionally, there was no technology that simultaneously improves the low resistance characteristics, the vibration resistance, and the high temperature durability in a power storage element that comprises an activated carbon electrode using an aluminum foil without any special processing as a power collector. Further, the use of a special aluminum foil leads to an increase in the complexity of the power collector production process and an increase in the cost of a power storage element. In this respect, the present inventors for the first time focused on achieving satisfactory low resistance, high-temperature durability, and vibration resistance without using a special aluminum foil.

<Fourth Embodiment>

In the fourth embodiment, the average thickness of the material constituting the negative electrode active material layer, the void diameter and the specific surface area of the negative electrode active material layer, and the frequency of aggregates on the negative electrode surface are adjusted to be in specific ranges. This enables the provision of a negative electrode with which a nonaqueous lithium power storage element and the like that inhibit a micro-short circuit in the pre-doping step, have a low internal resistance, and exhibit excellent cycle durability over a wide temperature range can be provided. The present inventors discovered that conventional nonaqueous lithium power storage elements aimed for an increased output lack in practicality and that, more specifically, there is room for improvement in terms of the micro-short circuiting in the pre-doping step, the internal resistance, and the cycle durability in a wide temperature range. The present inventors for the first time focused on improving these characteristics by the above-described configuration of the negative electrode.

<Fifth Embodiment>

In the fifth embodiment, the positive electrode active material layer contains a transition metal oxide and a positive electrode active material containing lithium manganese iron phosphate (LMFP) and/or lithium iron phosphate (LFP), and the ratio between the discharge capacity of the positive electrode and the charge capacity of the negative electrode is adjusted to be in a specific range. This enables the provision of a nonaqueous lithium power storage element and the like, excellent in discharge capacity per unit voltage in a low-voltage range as well as energy density, in which an increase in resistance under a high-temperature environment can be inhibited. Although technologies aimed at improving the battery characteristics have been disclosed, it is indispensable for the safe use of a lithium ion secondary battery to accurately understand the amount of electricity that can be discharged from and/or charged to the lithium ion secondary battery. Therefore, a technology for accurately estimating the state of charge (hereinafter, may be abbreviated as "SOC") is desired and, as a technology for estimating the SOC, the "OCV method" that measures the open circuit voltage (hereinafter, may be abbreviated as "OCV") of a lithium ion secondary battery and determines the SOC based on the correlation between the SOC and the OCV is generally employed. However, in a lithium ion secondary battery that contains lithium manganese iron phosphate (hereinafter, may be abbreviated as "LMFP"), lithium iron phosphate, or the like as a positive electrode active material, it is difficult to estimate the SOC by the OCV method because, for example, the plateau voltage is flat, and a change in voltage relative to a change in SOC in the final stage of discharging is steep. Further, a sharp voltage drop relative to a change in SOC in the final stage of discharging can lead to a large error in the SOC estimation and, for example, when an electronic device incorporating such a lithium ion secondary battery is used, it may lead to a situation where the battery of the device runs out without the user noticing. In view of this, the present inventors for the first time focused on inhibiting a sudden voltage drop in the final stage of discharging and thereby improving the accuracy of the SOC estimation by the OCV method.

<<Nonaqueous Lithium Power Storage Element>>

In the present disclosure, the term "nonaqueous lithium power storage element" (hereinafter, also simply referred to as "power storage element") encompasses electric double layer capacitors (e.g., lithium ion capacitors), lithium ion secondary batteries, and the like. Generally, a nonaqueous lithium power storage element comprises a positive electrode, a negative electrode, a separator, and an electrolytic solution as main constituents. As the electrolytic solution, a lithium ion-containing organic solvent (hereinafter, also referred to as "nonaqueous electrolytic solution" is used. Further, an electric double layer capacitor comprises a positive electrode containing activated carbon, a negative electrode containing activated carbon, a separator, and an electrolytic solution as main constituents. The members constituting these power storage elements are described below.

<Positive Electrode>

A positive electrode precursor and a positive electrode have a positive electrode power collector and a positive electrode active material layer that is arranged thereon (more particularly, provided on one or both sides thereof) and contains a positive electrode active material. The positive electrode active material layer preferably contains an activated carbon-containing carbon material and lithium iron phosphate. The positive electrode active material layer may be directly formed on the positive electrode power collector, or may be formed on an undercoat layer provided on the positive electrode power collector. As described below, it is preferred to pre-dope a negative electrode with lithium ions during the power storage element assembly process and, as a pre-doping method, after assembling the power storage element using a positive electrode precursor containing an alkali metal compound, a negative electrode, a separator, a casing, and a nonaqueous electrolytic solution, it is preferred to apply a voltage between the positive electrode precursor and the negative electrode. The alkali metal compound may be contained in any form in the positive electrode precursor. For example, the alkali metal compound may exist between the positive electrode power collector and the positive electrode active material layer, or may exist on the surface of the positive electrode active material layer. The alkali metal compound is preferably contained in the positive electrode active material layer formed on the positive electrode power collector of the positive electrode precursor. In the present disclosure, a positive electrode prior to the lithium doping step is defined as "positive electrode precursor", while a positive electrode after the lithium doping step is defined as "positive electrode".

(Positive Electrode Active Material Layer)

The positive electrode active material layer preferably contains an activated carbon-containing carbon material, a lithium-transition metal oxide, and the like as positive electrode active materials. If necessary, the positive electrode active material layer may also contain optional components, such as a conductive filler, a binder, a dispersion stabilizer, and a pH modifier. Further, a lithium compound other than the positive electrode active materials is preferably contained inside the positive electrode active material layer of the positive electrode precursor, or on the surface of the positive electrode active material layer of the positive electrode precursor. When a lithium compound different from the positive electrode active materials is contained in the positive electrode precursor, the lithium compound serves as a dopant source of lithium ions in the pre-doping step, so that the negative electrode can be pre-doped with lithium ions. A portion of the lithium compound may remain inside the positive electrode active material layer of the positive electrode, or on the surface of the positive electrode active material layer of the positive electrode.

• Positive Electrode Active Materials

The positive electrode active materials include an activated carbon-containing carbon material and a lithium-transition metal oxide such as lithium iron phosphate. The positive electrode active materials may also include, for example, one or more kinds of carbon materials in addition to activated carbon. As the carbon materials, carbon nanotubes, conductive polymers, or porous carbon materials are preferably used, and activated carbon is more preferably used. In the positive electrode active materials, a mixture of one or more kinds of carbon materials may be used.

•• Activated Carbon

The type and the raw material of the activated carbon are not particularly limited; however, in order to achieve both high input-output characteristics and high energy density, it is preferred to optimally control the pores of the activated carbon. Specifically, when the amount of mesopores derived from pores having a diameter of 20 Å to 500 Å, which is calculated by the BJH method, is defined as $V_1$ (cc/g), and the amount of micropores derived from pores having a diameter of less than 20 Å, which is calculated by the MP method, is defined as $V_2$ (cc/g): (1) in order to obtain high input-output characteristics, an activated carbon that satisfies $0.3 < V_1 \leq 0.8$ and $0.5 \leq V_2 \leq 1.0$ and has a specific surface area of 1,500 $m^2/g$ to 3,000 $m^2/g$ as measured by the BET method (this activated carbon is hereinafter also referred to as "activated carbon 1") is preferred; and (2) in order to obtain high energy density, an activated carbon that satisfies $0.8 < V_1 \leq 2.5$ and $0.8 < V_2 \leq 3.0$ and has a specific surface area of 2,300 $m^2/g$ to 4,000 $m^2/g$ as measured by the BET method (this activated carbon is hereinafter also referred to as "activated carbon 2") is preferred.

The BET specific surface area, the amount of mesopores, the amount of micropores, and the average pore size of the positive electrode active material are values determined by the below-described respective methods. A sample is vacuum-dried at 200°C for a whole day and night, and the adsorption-desorption isotherm is measured using nitrogen as an adsorbate. Using the thus obtained isotherm of the adsorption side, the BET specific surface area is calculated by the multipoint or single-point BET method, and the amount of mesopores and the amount of micropores are calculated by the BJH method and the MP method, respectively. The BJH method, which is a calculation method generally used for analysis of mesopores, was proposed by Barrett, Joyner, Halenda et al. (NPL 1). The MP method is a method for determining the micropore amount, the micropore area, and the micropore distribution using the "t-plot method" (NPL 2), and was devised by R. S. Mikhair, Brunauer, and Bodor (NPL 3). The "average pore size" refers to a value obtained by dividing the total pore volume per weight of the sample, which is determined by measuring the equilibrium adsorption amount of nitrogen gas under each relative pressure at the liquid nitrogen temperature, by the above-described BET specific surface area. It is noted here that, other than the case where $V_1$ is the upper limit value and $V_2$ is the lower limit value, the combination of the upper limit value and the lower limit value is arbitrary. The above (1) activated carbon 1 and the above (2) activated carbon 2 will now be described individually.

••• Activated Carbon 1

From the standpoint of enhancing the input-output characteristics when the positive electrode material is incorporated into the power storage element, the amount of mesopores $V_1$ of the activated carbon 1 is preferably more than 0.3 cc/g. From the standpoint of inhibiting a decrease in the bulk density of the positive electrode, $V_1$ is preferably 0.8 cc/g or less. $V_1$ is more preferably 0.35 cc/g to 0.7 cc/g, still more preferably 0.4 cc/g to 0.6 cc/g.

In order to increase the specific surface area of the activated carbon and increase the capacity, the amount of micropores $V_2$ of the activated carbon 1 is preferably 0.5 cc/g or more. From the standpoint of reducing the bulk of the activated carbon to increase the density as an electrode and the capacity per unit volume, $V_2$ is preferably 1.0 cc/g or less. $V_2$ is more preferably 0.6 cc/g to 1.0 cc/g, still more preferably 0.8 cc/g to 1.0 cc/g.

A ratio ($V_1/V_2$) of the amount of mesopores $V_1$ with respect to the amount of micropores $V_2$ is preferably in a range of $0.3 \leq V_1/V_2 \leq 0.9$. In other words, from the standpoint of increasing the ratio of the amount of mesopores with respect to the amount of micropores to such an extent that deterioration of the output characteristics can be inhibited while maintaining a high capacity, the ratio $V_1/V_2$ is preferably 0.3 or higher. On the other hand, from the standpoint of increasing the ratio of the amount of micropores with respect to the amount of mesopores to such an extent that a decrease in capacity can be inhibited while maintaining high output characteristics, the ratio $V_1/V_2$ is preferably 0.9 or lower. The ratio $V_1/V_2$ is more preferably in a range of $0.4 \leq V_1/V_2 \leq 0.7$, still more preferably in a range of $0.55 \leq V_1/V_2 \leq 0.7$.

From the standpoint of maximizing the output of the resulting power storage element, the average pore size of the activated carbon 1 is preferably 17 Å or more, more preferably 18 Å or more, still more preferably 20 Å or more. From the standpoint of maximizing the capacity, the average pore size of the activated carbon 1 is preferably 25 Å or less. The BET specific surface area of the activated carbon 1 is preferably 1,500 $m^2/g$ to 3,000 $m^2/g$, more preferably 1,500 $m^2/g$ to 2,500 $m^2/g$. When the BET specific surface area is 1,500 $m^2/g$ or more, a favorable energy density is likely to be obtained, while when the BET specific surface area is 3,000 $m^2/g$ or less, since it is not necessary to add a large amount of a binder to maintain the strength of the electrode, the performance per electrode volume is improved.

The activated carbon 1 having the above-described characteristics can be obtained, for example, using the below-described raw materials and processing methods. A carbon source used as a raw material of the activated carbon 1 is not particularly limited. Examples thereof include: plant-based raw materials, such as wood, wood flour, coconut shells, pulp production by-products, bagasse, and blackstrap molasses; fossil-based raw materials, such as peat, lignite, brown coal, bituminous coal, anthracite, petroleum distillation residue components, petroleum pitch, coke, and coal tar; various synthetic resins, such as phenol resins, vinyl chloride resins, vinyl acetate resins, melamine resins, urea resins, resorcinol resins, celluloid, epoxy resins, polyurethane resins, polyester resins, and polyamide resins; synthetic rubbers, such as polybutylene, polybutadiene, polychloroprene; and other synthetic woods, synthetic pulps, and carbonized products thereof. Among these raw materials, from the standpoint of mass production and cost, plant-based raw materials such as coconut shells and wood flour, and carbonized products thereof are preferred, and carbonized coconut shells are particularly preferred.

As a method of carbonizing and activating these raw materials into the activated carbon 1, for example, any known method such as a fixed bed method, a moving bed method, a fluidized bed method, a slurry method, or a rotary kiln method may be employed.

One example of a method of carbonizing the raw materials is a method comprising calcinating the raw materials at about 400 to 700°C (preferably 450 to 600°C) for about 30 minutes to 10 hours using an inert gas such as nitrogen, carbon dioxide, helium, argon, xenon, neon, carbon monoxide, or combustion exhaust gas, or a mixed gas containing these inert gases as a main component along with other gas.

As a method of activating the carbonized product obtained by the above-described carbonization method, a gas activation method comprising calcinating the carbonized product using an activation gas such as water vapor, carbon dioxide, or oxygen is preferably employed. Particularly, a method using water vapor or carbon dioxide as the activation gas is preferred. In this activation method, it is preferred to activate the obtained carbonized product by heating it to a temperature to 800 to 1,000°C over a period of 3 to 12 hours (preferably 5 to 11 hours, still more preferably 6 to 10 hours) while supplying the activation gas at a rate of 0.5 to 3.0 kg/h (preferably 0.7 to 2.0 kg/h).

Further, primary activation of the above-described carbonized product may be performed in advance prior to the activation treatment. In this primary activation, a gas activation method comprising calcinating a carbon material at a temperature of lower than 900°C using an activation gas such as water vapor, carbon dioxide, or oxygen can be preferably employed.

The activated carbon 1 can be produced by appropriately combining the calcination temperature and the calcination time in the above-described carbonization method with the activation gas supply rate, the heating rate, and the maximum activation temperature in the activation method.

The average particle size of the activated carbon 1 is preferably 2 to 20 $\mu$m. When the average particle size is 2 $\mu$m or more, since the active material layer has a high density, the capacity per electrode volume tends to be high. A small average particle size may lead to a drawback of low durability; however, such a drawback is unlikely to occur as long as the average particle size is 2 $\mu$m or more. Meanwhile, when the average particle size is 20 $\mu$m or less, the power storage element tends to be suitable for fast charging and discharging. The average particle size of the activated carbon 1 is more preferably 2 to 15 $\mu$m, still more preferably 3 to 10 $\mu$m.

••• Activated Carbon 2

From the standpoint of enhancing the output characteristics when the positive electrode material is incorporated into the power storage element, the amount of mesopores $V_1$ of the activated carbon 2 is preferably more than 0.8 cc/g. From the standpoint of inhibiting a decrease in the capacity of the power storage element, $V_1$ is preferably 2.5 cc/g or less. $V_1$ is more preferably 1.00 cc/g to 2.0 cc/g, still more preferably 1.2 cc/g to 1.8 cc/g.

In order to increase the specific surface area of the activated carbon and increase the capacity, the amount of micropores $V_2$ of the activated carbon 2 is preferably more than 0.8 cc/g. From the standpoint of increasing the density of the activated carbon as an electrode to increase the capacity per unit volume, $V_2$ is preferably 3.0 cc/g or less. $V_2$ is more preferably more than 1.0 cc/g but 2.5 cc/g or less, still more preferably 1.5 cc/g to 2.5 cc/g.

The activated carbon 2 having the above-described amount of mesopores and amount of micropores has a higher BET specific surface area than an activated carbon used for conventional electric double layer capacitors or lithium ion capacitors. The specific value of the BET specific surface area of the activated carbon 2 is preferably 2,300 m$^2$/g to 4,000 m$^2$/g, more preferably 3,000 m$^2$/g to 4,000 m$^2$/g, still more preferably 3,200 m$^2$/g to 3,800 m$^2$/g. When the BET specific surface area is 2,300 m$^2$/g or more, a favorable energy density is likely to be obtained, while when the BET specific surface area is 4,000 m$^2$/g or less, since it is not necessary to add a large amount of a binder to maintain the strength of the electrode, the performance per electrode volume is improved.

The activated carbon 2 having the above-described characteristics can be obtained, for example, using the below-described raw materials and processing methods. A carbonaceous material used as a raw material of the activated carbon 2 is not particularly limited as long as it is a carbon source usually used as a raw material of activated carbon, and examples thereof include: plant-based raw materials, such as wood, wood flour, and coconut shells; fossil-based raw materials, such as petroleum pitch and coke; and various synthetic resins, such as phenol resins, furan resins, vinyl chloride resins, vinyl acetate resins, melamine resins, urea resins, and resorcinol resins. Among these raw materials, phenol resins and furan resins are particularly preferred since they are suitable for the production of activated carbon having a high specific surface area.

Examples of a method of carbonizing the raw materials or a method of heating in an activation treatment include known methods, such as a fixed bed method, a moving bed method, a fluidized bed method, a slurry method, and a rotary kiln method. The atmosphere used during the heating is an inert gas such as nitrogen, carbon dioxide, helium, or argon, or a mixed gas containing these inert gases as a main component along with other gas. The carbonization temperature is about 400 to 700°C, and a method comprising calcinating the raw materials for about 0.5 to 10 hours is generally employed.

Examples of a method of activating the resulting carbonized product include a gas activation method comprising calcinating the carbonized product using an activation gas such as water vapor, carbon dioxide, or oxygen, and an alkali metal activation method of mixing the carbonized product with a lithium compound and subsequently performing a heat treatment; however, the alkali metal activation method is preferred for the production of activated carbon having a high specific surface area. In this activation method, for example, the carbonized product is mixed with an alkali metal compound such as KOH or NaOH in a weight ratio of 1:1 or higher (the amount of the alkali metal compound is equal to or more than the amount of the carbonized product), and the resultant is subsequently heated in an inert gas atmosphere at 600 to 900°C for 0.5 to 5 hours, after which the alkali metal compound is removed by washing with an acid and water, and this is followed by drying.

In order to increase the amount of micropores without increasing the amount of mesopores, a larger amount of the carbonized product may be mixed with KOH at the time of the activation. In order to increase both the amount of micropores and the amount of mesopores, KOH may be used in a larger amount. Further, in order to mainly increase the amount of mesopores, it is preferred to perform steam activation after the alkali activation treatment.

The average particle size of the activated carbon 2 is preferably 2 $\mu$m to 20 $\mu$m, more preferably 3 $\mu$m to 10 $\mu$m.

••• Use of Activated Carbon

The activated carbons 1 and 2 may each be one kind of activated carbon, or may be a mixture of two or more kinds of activated carbons, and the mixture as a whole may exhibit the above-described respective property values. Either one of the activated carbons 1 and 2 may be selected to be used, or a mixture of the activated carbons 1 and 2 may be used. The positive electrode active material may also contain a material other than the activated carbons 1 and 2 (e.g., activated carbon that does not have the above-described specific $V_1$ and/or $V_2$, or a material other than activated carbon (e.g., a conductive polymer)).

In the exemplified aspect, when the content of the activated carbon 1, the content of the activated carbon 2, or a total content of the activated carbons 1 and 2 in the positive electrode active material layer of the positive electrode precursor, i.e., the weight ratio of the carbon material in the positive electrode active material layer, is defined as $A_1$, $A_1$ is 38 wt.% to 60 wt.%, preferably 40 wt.% to 60 wt.%, more preferably 45 wt.% to 60 wt.%. When $A_1$ is 38 wt.% or more, since the contact area between the carbon material having a high electric conductivity and the alkali metal compound is increased, the oxidation reaction of the alkali metal compound is facilitated in the pre-doping step, so that the pre-doping can be performed in a short time. When $A_1$ is 60 wt.% or less, the bulk density of the positive electrode active material layer is increased, so that the capacity can be increased.

When the content of the activated carbon 1, the content of the activated carbon 2, or a total content of the activated carbons 1 and 2 in the positive electrode active material layer of the positive electrode, i.e., the weight ratio of the carbon material in the positive electrode active material layer, is defined as $X_1$, $X_1$ is preferably 43 wt.% to 74 wt.%. When $X_1$ is 43 wt.% or more, the area for adsorption and desorption of ions during charging and discharging is large, so that the resistance can be reduced. When $X_1$ is 74 wt.% or less, the capacity can be increased.

•• Lithium-Transition Metal Oxide

The positive electrode active material layer may contain, as a positive electrode active material, one or more kinds of lithium-transition metal oxides. The lithium-transition metal oxides include transition metal oxides capable of occluding and releasing lithium. A transition metal oxide used as the positive electrode active material is not particularly limited. Examples of the transition metal oxide include oxides containing at least one element selected from the group consisting of cobalt (Co), nickel (Ni), manganese (Mn), iron (Fe), vanadium (V), titanium (Ti), and chromium (Cr). Needless to say, examples of the transition metal oxide are not limited thereto.

By incorporating a lithium-transition metal oxide as a positive electrode active material, the adhesion between the positive electrode power collector and the positive electrode active material layer at their interface can be further strengthened, and low resistance performance can be provided even after vibration conditions. The lithium-transition metal oxide is preferably a transition metal oxide represented by any of the below-described formulae, more preferably lithium iron phosphate.

Specific examples of the transition metal oxide include compounds represented by the following formulae:

$Li_xCoO_2$ {wherein, x satisfies $0 \leq x \leq 1$},

$Li_xNiO_2$ {wherein, x satisfies $0 \leq x \leq 1$},

$Li_xNi_yM_{(1-y)}O_2$ {wherein, M represents at least one element selected from the group consisting of Co, Mn, Al, Fe, Mg, and Ti; x satisfies $0 \leq x \leq 1$; and y satisfies $0.2 < y < 0.97$},

$Li_xNi_{1/3}Co_{1/3}Mn_{1/3}O_2$ {wherein, x satisfies $0 \leq x \leq 1$},

$Li_xMnO_2$ {wherein, x satisfies $0 \leq x \leq 1$},

$\alpha\text{-}Li_xFeO_2$ {wherein, x satisfies $0 \leq x \leq 1$},

$Li_xVO_2$ {wherein, x satisfies $0 \leq x \leq 1$},

$Li_xCrO_2$ {wherein, x satisfies $0 \leq x \leq 1$},

$Li_xFePO_4$ {wherein, x satisfies $0 \leq x \leq 1$},

$Li_xMnPO_4$ {wherein, x satisfies $0 \leq x \leq 1$},

$Li_zV_2(PO_4)_3$ {wherein, z satisfies $0 \leq z \leq 3$},

$Li_xMn_2O_4$ {wherein, x satisfies $0 \leq x \leq 1$},

$Li_xM_yMn_{(2-y)}O_4$ {wherein, M represents at least one element selected from the group consisting of Co, Mn, Al, Fe, Mg, and Ti; x satisfies $0 \leq x \leq 1$; and y satisfies $0.05 < y < 0.97$},

$Li_xNi_aCo_bAl_{(1-a-b)}O_2$ {wherein, x satisfies $0 \leq x \leq 1$, and a and b satisfy $0.05 < a < 0.97$ and $0.2 < b < 0.97$, respectively},

$Li_xNi_cCo_dMn_{(1-c-d)}O_2$ {wherein, x satisfies $0 \leq x \leq 1$, and c and d satisfy $0.05 < c < 0.97$ and $0.05 < d < 0.97$, respectively},

$Li_xMn_eFe_{(1-e)}PO_4$ {wherein, x satisfies $0 \leq x \leq 1$, and e satisfies $0.05 < e < 0.97$}, and

$Li_xMn_{(1-y)}Fe_yPO_4$ {wherein, x satisfies $0 \leq x \leq 1$, and y satisfies $0 < y \leq 1$}.

Thereamong, from the standpoint of high capacity, low resistance, cycle characteristics, decomposition of the alkali metal compound, and inhibition of the loss of the positive electrode active material during pre-doping, a compound represented by the above formula $Li_xNi_aCo_bA1_{(1-a-b)}O_2$, $Li_xNi_cCo_dMn_{(1-c-d)}O_2$, $Li_xCoO_2$, $Li_xMn_2O_4$, $Li_xFePO_4$, $Li_xMnPO_4$, $Li_xMn_eFe_{(1-e)}PO_4$, or $Li_zV_2(PO_4)_3$ is preferred.

When an alkali metal compound different from the positive electrode active material is contained in the positive electrode precursor, the alkali metal compound serves as a dopant source of an alkali metal in pre-doping, so that the negative electrode can be pre-doped with the alkali metal; therefore, even if the transition metal compound does not contain lithium ions in advance (i.e., even if x = 0 or z = 0 in the above-described formula), the nonaqueous lithium power storage element can be electrochemically charged and discharged.

The lithium-transition metal oxide preferably has an average particle size of 0.1 to 20 $\mu$m. When the average particle size is 0.1 $\mu$m or more, since the active material layer has a high density, the capacity per electrode volume tends to be high. A small average particle size may lead to a drawback of low durability; however, as long as the average particle size is 0.1 $\mu$m or more, such a drawback is unlikely to occur, i.e., the durability of the nonaqueous lithium power storage element is likely to be ensured. When the average particle size is 20 $\mu$m or less, the nonaqueous lithium power storage element tends to be suitable for fast charging and discharging. The average particle size of the lithium-transition metal oxide is more preferably 0.5 to 15 $\mu$m, still more preferably 1 to 10 $\mu$m.

Further, the average particle size of the lithium-transition metal oxide is preferably smaller than the average particle size of the above-described carbon material. When the average particle size of the lithium-transition metal oxide is small, the lithium-transition metal oxide can be arranged in voids formed by the carbon material having a large average particle size, so that the resistance can be reduced.

With regard to the structure of the lithium-transition metal oxide, from the standpoint of high capacity, low resistance, cycle characteristics, decomposition of the alkali metal compound, inhibition of the deterioration of the capacity of the lithium-transition metal oxide, and inhibition of the loss of the positive electrode active material during pre-doping, the lithium-transition metal oxide is preferably at least one selected from the group consisting of layered compounds, spinel-based compounds, and olivine-based compounds, more preferably an olivine-based compound, still more preferably lithium iron phosphate. When a lithium compound different from the positive electrode active material is contained in the positive electrode precursor, the lithium compound serves as a dopant source of lithium ions in pre-doping, so that the negative electrode can be pre-doped with lithium ions.

••• Lithium Iron Phosphate

The lithium-transition metal oxide is preferably lithium iron phosphate ($LiFePO_4$). By further incorporating lithium iron phosphate as a positive electrode active material in addition to the activated carbon-containing carbon material, high capacity characteristics can be provided in addition to the high output characteristics attributed to the carbon material. In other words, a power storage device that has not only high output characteristics as in an electric double layer capacitor or a lithium ion capacitor but also high capacity characteristics as in a lithium ion secondary battery can be provided.

The lithium iron phosphate preferably has an average particle size of 0.1 to 20 $\mu$m. When the average particle size of the lithium iron phosphate is 0.1 $\mu$m or more, the active material layer has a high density; therefore, the capacity per electrode volume tends to be high, and the durability of the nonaqueous lithium power storage element is likely to be ensured. When the average particle size of the lithium iron phosphate is 20 $\mu$m or less, the nonaqueous lithium power storage element tends to be suitable for fast charging and discharging. The average particle size of the lithium iron phosphate is more preferably 0.5 to 15 $\mu$m, still more preferably 1 to 10 $\mu$m. The average particle size of the lithium iron phosphate is preferably smaller than the average particle size of the above-described carbon material. When the average particle size of the lithium iron phosphate is small, the lithium iron phosphate can be arranged in voids formed by the carbon material having a large average particle size, so that the resistance can be reduced.

Further, when the positive electrode active material layer contains lithium iron phosphate as the lithium-transition metal oxide, the surface of the lithium iron phosphate is desirably coated with carbon from the standpoint of reducing the resistance. When the positive electrode active material layer contains lithium iron phosphate as the lithium-transition metal oxide, the ratio of the discharge capacity (mAh) from 3.4 V to 3.0 V with respect to the discharge capacity (mAh) from 4.0 V to 2.0 V at 1 C-rate of the nonaqueous lithium power storage element is preferably adjusted to be 25% to 82%, more preferably 50% to 70%. These upper and lower limits can be combined arbitrarily. When the above-described ratio is 25% to 82%, not only the internal resistance at the completion of a cell can be reduced and the initial low resistance can be maintained even in the use under a vibration environment, but also the generation of gas in a high-temperature environment can be inhibited. The principle of these effects is not necessarily clear; however, it is presumed as follows.

When the ratio of the 3.4-3.0 V capacity (mAh) with respect to the 4.0-2.0 V capacity (mAh) of the power storage element is 25% or higher, the ratio of rigid lithium iron phosphate is higher than that of activated carbon; therefore, an aluminum oxide layer on the surface of aluminum is destroyed and conduction with aluminum is likely to be established, so that the internal resistance at the completion of a cell can be reduced, and the initial low resistance can be maintained even after the use in a vibration environment. Further, since the amount of activated carbon is small in the positive electrode active material layer, the generation of gas caused by solvent oxidation reaction on the positive electrode activated carbon that occurs at a high temperature can be inhibited.

When the ratio of the 3.4-3.0 V capacity (mAh) with respect to the 4.0-2.0 V capacity (mAh) of the power storage element is 82% or lower, a conductive network between lithium iron phosphate particles is formed via activated carbon having a high electric conductivity; therefore, the internal resistance at the completion of a cell can be reduced, and the initial low resistance can be maintained even after the use in a vibration environment. Further, since a certain amount of activated carbon exists in the positive electrode active material, a protective film is generated on the surface of lithium iron phosphate by reaction between the functional groups of activated carbon and the solvent of the electrolytic solution, so that the generation of gas caused by solvent oxidation reaction on lithium iron phosphate can be inhibited.

••• Weight ratio of Lithium Iron Phosphate

When the content of the carbon material and that of lithium iron phosphate in the positive electrode active material layer are defined as $X_1$ (wt.%) and $X_2$ (wt.%), respectively, a lower limit value of the weight ratio of lithium iron phosphate ($X_2/(X_1 + X_2)$) is preferably 0.40 or higher, more preferably 0.70 or higher. An upper limit value of the weight ratio of lithium iron phosphate is preferably 0.85 or lower, more preferably 0.80 or lower.

When the weight ratio of lithium iron phosphate is 0.40 or higher, the electrode density is increased because of the presence of a sufficient amount of lithium iron phosphate, so that the low-temperature output density per volume is improved. In addition, since the electrode density is increased and the electrode thickness is reduced, the diffusion paths of electrolyte ions are shortened and the reactions during low-temperature charging and discharging proceed uniformly, as a result of which the low-temperature cycle durability is improved, and a post-cycle micro-short circuit can be inhibited. Further, since the ratio of activated carbon is low, electrolytic solution decomposition side reactions originating from the functional groups of activated carbon at a high temperature are inhibited, as a result of which the high-temperature cycle durability is improved. When the weight ratio of lithium iron phosphate is 0.95 or lower, the ratio of the activated carbon-containing carbon material having favorable low-temperature input-output characteristics is increased, as a result of which the low-temperature output density per volume is improved. In addition, since the ratio of the activated carbon-containing carbon material having favorable low-temperature input-output characteristics is increased, the low-temperature cycle durability can be improved, and a micro-short circuit after a low-temperature cycle test can be inhibited as well. Further, in a high-rate cycle, the load is concentrated on the activated carbon-containing carbon material rather than on lithium iron phosphate; however, since the activated carbon-containing carbon material is contained in a sufficient amount, concentration of current on the activated carbon particles during a high-temperature cycle is alleviated. As a result, electrolytic solution decomposition side reactions originating from the functional groups of activated carbon at a high temperature are inhibited, and the high-temperature cycle durability is improved.

As a method of controlling the weight ratio of lithium iron phosphate, for example, the composition of the activated carbon-containing carbon material and lithium iron phosphate is adjusted at the time of producing a positive electrode coating liquid.

By incorporating a lithium-transition metal oxide containing a lithium iron phosphate compound into the positive electrode active material, the adhesion between the positive electrode power collector and the positive electrode active material layer at their interface can be further strengthened, and low resistance performance can be provided even after vibration conditions. As the lithium-transition metal oxide, any of known materials used in lithium ion batteries can be used. In the positive electrode active material, a mixture of one or more kinds of lithium-transition metal oxides may be used as well. The lithium-transition metal oxide is preferably a compound represented by the below-described formula and/or lithium iron phosphate.

••• Use of LFP and/or LMFP in Combination with Activated Carbon

By using lithium iron phosphate (LFP) and/or lithium manganese iron phosphate (LMFP), which are represented by $Li_xMn_{(1-y)}Fe_yPO_4$ { wherein, x satisfies $0 \leq x \leq 1$, and y satisfies $0 < y \leq 1$}, in combination with an activated carbon, the output characteristics of the positive electrode can be improved in some cases. Further, in an activated, the SOC and the voltage are in a proportional relationship. Therefore, by using an activated in combination, a sudden voltage drop in the final stage of discharging of the nonaqueous lithium power storage element is likely to be inhibited. In addition, in a voltage range excluding the plateau region of LFP and/or LMFP, it is possible to estimate the SOC from the cell voltage of the nonaqueous lithium power storage element.

••• BET Specific Surface Area of Lithium-Transition Metal Oxide

When the BET specific surface area of the lithium-transition metal oxide in the positive electrode precursor and the BET specific surface area of the lithium-transition metal oxide in the positive electrode are defined as B and Y, respectively, the specific surface area B or Y is preferably $7.5 \, m^2/g$ to $11.0 \, m^2/g$, more preferably $7.5 \, m^2/g$ to $10 \, m^2/g$. When the specific surface area B or Y is $7.5 \, m^2/g$ or more, since the contact area between the lithium-transition metal oxide and the carbon material is increased, the resistance can be reduced. When the specific surface area B or Y is $11.0 \, m^2/g$ or less, since the amount of the carbon material required for maintaining the conductivity of the lithium-transition metal oxide can be reduced, the contact between the carbon material having conductivity and the alkali metal compound can be maintained in a favorable manner. Therefore, the oxidation reaction of the alkali metal compound is facilitated in the pre-doping step, so that the pre-doping can be performed in a short time.

When $D_{10} \, (\mu m)$ and $D_{90} \, (\mu m)$ of the lithium-transition metal oxide in the positive electrode precursor are defined as $C_1$ and $C_2$, respectively, and $D_{10} \, (\mu m)$ and $D_{90} \, (\mu m)$ of the lithium-transition metal oxide in the positive electrode are defined as $Z_1$ and $Z_2$, respectively, $C_2/C_1$ or $Z_2/Z_1$ is preferably 10 to 25, more preferably 10 to 23, still more preferably 10 to 20. When $C_2/C_1$ or $Z_2/Z_1$ is 10 or more, since the contact between lithium-transition metal oxide particles is improved, the amount of the carbon material required for maintaining the electron conductivity between lithium-transition metal oxide particles is reduced. Therefore, the ratio of the lithium-transition metal oxide in the positive electrode active material layer can be increased, so that the capacity can be increased. When $C_2/C_1$ or $Z_2/Z_1$ is 25 or less, the nonaqueous lithium power storage element tends to be suitable for fast charging and discharging.

The lithium-transition metal oxide preferably has an average particle size of 0.1 to 20 $\mu m$. When the average particle size is 0.1 $\mu m$ or more, since the active material layer has a high density, the capacity per electrode volume tends to be high. A small average particle size may lead to a drawback of low durability; however, as long as the average particle size is 0.1 $\mu m$ or more, such a drawback is unlikely to occur. When the average particle size is 20 $\mu m$ or less, the nonaqueous lithium power storage element tends to be suitable for fast charging and discharging. The average particle size of the lithium-transition metal oxide is more preferably 0.5 to 15 $\mu m$, still more preferably 1 to 10 $\mu m$.

Further, the average particle size of the lithium-transition metal oxide is preferably smaller than the average particle size of the above-described activated carbon. When the average particle size of the lithium-transition metal oxide is small, the lithium-transition metal oxide can be arranged in voids formed by the activated carbon having a large average particle size, so that the resistance can be reduced.

It is noted here that $D_{10}$, $D_{90}$, and the average particle size are the volume-based 10% particle size, 90% particle size, and 50% particle size that are measured by a laser diffraction method (ISO13320:2009), respectively.

••• Use of Lithium-Transition Metal Oxide

The lithium-transition metal oxide may be of a single kind, or may be a mixture of two or more kinds of materials, and the mixture as a whole may exhibit the above-described respective property values.

The positive electrode active material may also contain a material other than the above-described lithium-transition metal oxide (e.g., a conductive polymer). In the exemplified aspect, when the content of the lithium-transition metal oxide in the positive electrode active material layer of the positive electrode precursor is defined as $A_2$, $A_2$ is preferably 15 wt.% to 45 wt.%, more preferably 20 wt.% to 45 wt.%. When $A_2$ is 15 wt.% or more, the bulk density of the positive electrode active material layer is increased, so that the capacity can be increased. When $A_2$ is 45 wt.% or less, since the contact area between the carbon material having a high electric conductivity and the alkali metal compound is increased, the oxidation reaction of the alkali metal compound is facilitated in the pre-doping step, so that the pre-doping can be performed in a short time.

Further, when the content of the lithium-transition metal oxide in the positive electrode active material layer of the positive electrode is defined as $X_2$, $X_2$ is preferably 23 wt.% to 55 wt.%. When $X_2$ is 23 wt.% or more, the capacity can be increased. When $X_2$ is 55 wt.% or less, the area for adsorption and desorption of ions is large, so that the resistance can be reduced.

••• Weight ratio of Lithium-Transition Metal Oxide

A ratio $A_2/A_1$ between the weight ratio $A_2$ of the lithium-transition metal oxide and the weight ratio $A_1$ of the carbon material in the positive electrode precursor is preferably 0.30 to 1.20, more preferably 0.40 to 1.20, still more preferably 0.40 to 1.15. When the ratio $A_2/A_1$ is 0.30 or higher, the bulk density of the positive electrode active material layer is increased, so that the capacity can be increased. When the ratio $A_2/A_1$ is 1.20 or lower, not only the resistance can be reduced because of an increase in the electron conduction between activated carbon particles, but also the decomposition of the alkali metal compound can be facilitated because of an increase in the contact area between the activated carbon and the alkali metal compound. Further, $A_1 + A_2$ is preferably 74 wt.% to 93 wt.%, more preferably 75 wt.% to 90 wt.%, still more preferably 77 wt.% to 90 wt.%. When $A_1 + A_2$ is 74 wt.% or more, the ratio of the active materials in the positive electrode precursor is increased; therefore, not only the capacity can be increased by the lithium-transition metal oxide contained in a sufficient amount, but also the resistance can be reduced by the activated carbon contained in a sufficient amount. When $A_1 + A_2$ is 93 wt.% or less, since the positive electrode precursor can contain a sufficient amount of the alkali metal compound, the negative electrode can be pre-doped with a sufficient amount of alkali metal ions, so that the capacity of the nonaqueous lithium power storage element can be increased.

Moreover, a ratio $X_2/X_1$ between the weight ratio $X_2$ of the lithium-transition metal oxide and the weight ratio $X_1$ of the carbon material in the positive electrode is preferably 0.30 to 1.20. When the ratio $X_2/X_1$ is 0.30 or higher, the bulk density of the positive electrode active material layer is increased, so that the capacity can be increased. When the ratio $X_2/X_1$ is 1.20 or lower, since the conductivity between carbon material particles is increased, the resistance can be reduced. Further, $X_1 + X_2$ is preferably 92.5 wt.% to 99.3 wt.%. When $X_1 + X_2$ is 92.5 wt.% or more, since the active materials exist in a sufficient amount in the positive electrode, the nonaqueous lithium power storage element can have an increased capacity and a reduced resistance. When $X_1 + X_2$ is 99.3 wt.% or less, the nonaqueous lithium power storage element can be provided with high electrode strength and excellent durability.

•• Average Particle Size of Positive Electrode Active Material

The positive electrode active material preferably has an average particle size of 0.5 to 20 μm. When the average particle size of the positive electrode active material is 1 μm or more, since the active material layer has a high density, the capacity per electrode volume tends to be high. A small average particle size of the positive electrode active material may lead to low durability; however, as long as the average particle size is 1 μm or more, the durability is unlikely to be low. When the average particle size of the positive electrode active material is 20 μm or less, the nonaqueous lithium power storage element tends to be suitable for fast charging and discharging. The average particle size of the positive electrode active material is more preferably 1 to 15 μm, still more preferably 2 to 10 μm.

The average particle size of the positive electrode active material refers to the particle size at a point of 50% on a cumulative curve obtained by measuring the particle size distribution using a particle size distribution analyzer, taking the total volume as 100% (i.e., 50% diameter (median diameter). The average particle size can be measured using a commercially available laser-diffraction particle size distribution analyzer.

•• Content Ratio of Positive Electrode Active Material

The content ratio of the positive electrode active material in the positive electrode active material layer is preferably 50 parts by weight to 97 parts by weight, based on a total weight of the positive electrode active material layer. A lower limit of the content ratio of the positive electrode active material is more preferably 60 parts by weight or more, still more preferably 70 parts by weight or more. An upper limit of the content ratio of the positive electrode active material is more preferably 97 parts by weight or less. When the content ratio of the positive electrode active material in the positive electrode active material layer is 50 parts by weight to 97 parts by weight, preferred charge-discharge characteristics are exerted.

• Alkali Metal Compound

It is preferred that the positive electrode active material layer in the positive electrode precursor contain an alkali metal compound, preferably a lithium compound. The positive electrode active material layer of the positive electrode after the doping step may also contain the alkali metal compound. The lithium compound is not particularly limited as long as it can be decomposed at the positive electrode during the below-described lithium doping to release lithium ions. The lithium compound is preferably, for example, at least one selected from the group consisting of lithium carbonate, lithium oxide, lithium hydroxide, lithium fluoride, lithium chloride, lithium bromide, lithium iodide, lithium nitride, lithium oxalate, and lithium acetate. Thereamong, lithium carbonate, lithium oxide, and lithium hydroxide are more suitable, and lithium carbonate is more preferred since it can be handled in air and has low hygroscopicity. Such a lithium compound not only is decomposed by application of voltage thereto and functions as a dopant source for doping lithium into the negative electrode, but also forms holes in the positive electrode active material layer; therefore, it enables the formation of a positive electrode that is excellent in retention of the electrolytic solution and ion conductivity.

A variety of methods can be employed for micronization of the lithium compound. For example, a pulverizer such as a ball mill, a bead mill, a ring mill, a jet mill, or a rod mill may be used. The lithium compound preferably has an average particle size of 0.1 $\mu$m to 10 $\mu$m. When the average particle size is 0.1 $\mu$m or more, the lithium compound has excellent dispersibility in the positive electrode precursor. When the average particle size is 10 $\mu$m or less, since the surface area of the lithium compound is increased, the decomposition reaction proceeds efficiently. Further, the average particle size of the lithium compound is preferably smaller than the average particle size of the above-described carbon material. When the average particle size of the lithium compound is smaller than the average particle size of the carbon material, the electron conductivity of the positive electrode active material layer is improved, which can contribute to a reduction in the resistance of an electrode body or power storage element.

The positive electrode active material in the positive electrode precursor preferably contains two kinds of lithium compounds different in average particle size. For example, the positive electrode active material in the positive electrode precursor preferably contains a first lithium compound having an average particle size of more than 1 $\mu$m but 10 $\mu$m or less, and a second lithium compound having an average particle size of 0.1 $\mu$m to 1 $\mu$m. By incorporating two kinds of lithium compounds different in average particle size and adjusting their average particle sizes and compositions, the void diameter of the positive electrode active material layer can be appropriately adjusted.

The positive electrode precursor and the positive electrode coating liquid may contain one kind of alkali metal compound, or may contain two or more kinds of alkali metal compounds. The positive electrode precursor and the positive electrode coating liquid are satisfactory as long as they contain at least one alkali metal compound, and may contain one or more kinds of oxides such as $M_2O$, hydroxides such as MOH, halides such as MF and MCl, and carboxylates such as RCOOM (wherein, R represents H, an alkyl group, or an aryl group), in which M is at least one selected from lithium (Li), sodium (Na), potassium (K), rubidium (Rb), and cesium (Cs). The alkali metal compound may contain at least one alkaline earth metal carbonate selected from the group consisting of $BeCO_3$, $MgCO_3$, $CaCO_3$, $SrCO_3$, and $BaCO_3$, alkaline earth metal oxide, alkaline earth metal hydroxide, alkaline earth metal halide, or alkaline earth metal carboxylate.

•• Weight ratio of Alkali Metal Compound

A weight ratio $A_3$ of the alkali metal compound contained in the positive electrode active material layer of the positive electrode precursor is preferably 10 wt.% to 30 wt.%. When $A_3$ is 10 wt.% or more, the negative electrode can be pre-doped with a sufficient amount of alkali metal ions, so that the capacity of the nonaqueous lithium power storage element can be increased. When $A_3$ is 30 wt.% or less, since the electron conduction in the positive electrode precursor can be improved, the alkali metal compound can be efficiently decomposed.

Further, a weight ratio $X_3$ of the alkali metal compound contained in the positive electrode active material layer of the positive electrode is preferably 0.6 wt.% to 7.5 wt.%. When $X_3$ is 0.6 wt.% or more, fluorine ions generated in a high-load charge-discharge cycle can be adsorbed, so that the high-load charge-discharge cycle characteristics are improved. When $X_3$ is 7.5 wt.% or less, the generation of gas caused by decomposition of the alkali metal compound can be inhibited, so that the high-load charge-discharge cycle characteristics are improved.

When the positive electrode precursor contains two or more of the above-described alkali metal compounds or an alkaline earth metal compound in addition to the alkali metal compound, the positive electrode precursor is preferably prepared such that the total amount of the alkali metal compounds and the alkaline earth metal compound is 10 wt.% to 30 wt.% in the positive electrode active material layer per side of the positive electrode precursor.

When the positive electrode coating liquid contains two or more of the above-described alkali metal compounds or an alkaline earth metal compound in addition to the alkali metal compound, the positive electrode coating liquid is preferably prepared such that the total amount of the alkali metal compounds and the alkaline earth metal compound is 10 wt.% to 30 wt.% with respect to a total solid content in the positive electrode coating liquid.

When the positive electrode contains two or more of the above-described alkali metal compounds or an alkaline earth metal compound in addition to the alkali metal compound, the alkali metal compounds and the alkaline earth metal compound are preferably contained in a total amount of 0.6 wt.% to 7.5 wt.% in the positive electrode active material layer per side of the positive electrode.

The weight ratio of the lithium compound, preferably lithium carbonate, contained in the positive electrode precursor is preferably 5 wt.% to 40 wt.%. When the weight ratio of the lithium compound is 5 wt.% or more, the negative electrode can be pre-doped with a sufficient amount of lithium ions, so that the capacity of the nonaqueous lithium power storage element can be increased. When the weight ratio of the lithium compound is 40 wt.% or less, since the electron conduction in the positive electrode precursor can be improved, the lithium compound can be efficiently decomposed.

The content of the lithium compound, preferably lithium carbonate, in the positive electrode active material layer of the positive electrode is preferably 0.01 wt.% to 5.0 wt.% based on a total weight of the positive electrode active material layer. When the content of the lithium compound is 0.01 wt.% or more, an acid such as HF generated by decomposition of an electrolyte salt in a high-temperature high-voltage environment can be captured, so that the generation of gas caused by decomposition of the solvent of the electrolytic solution in a high-temperature environment can be inhibited. In addition, since rigid lithium carbonate destroys an aluminum oxide layer on the surface of aluminum and bites into aluminum, it is believed that high interfacial vibration resistance can be obtained and the initial low resistance can be maintained even after the use in a vibration environment. When the content of the lithium compound is 5.0 wt.% or less, the generation of gas caused by oxidative decomposition of the lithium compound in a high-temperature environment can be inhibited. Since the lithium compound is unlikely to hinder the conductive network of activated carbon, the internal resistance at the completion of a cell can be reduced, and it is believed that the initial low resistance can be maintained even after the use in a vibration environment. The content of lithium carbonate in the positive electrode active material layer can be adjusted by modifying the amount of lithium carbonate added to the positive electrode precursor, the pre-doping temperature condition, and the like. The amount of lithium carbonate in the positive electrode active material layer can be quantified by the below-described method of quantifying lithium carbonate in the positive electrode.

•• Improvement of High-Load Charge-Discharge Characteristics by Alkali Metal Compound

When the nonaqueous lithium power storage element is charged and discharged, alkali metal ions and anions in the electrolytic solution move in association with the charging and discharging and react with the active material. In this process, the activation energy of the intercalation of ions into the active material and that of the deintercalation of ions are different from each other. Therefore, particularly when the charging-discharging load is high, the ions cannot follow the changes in charging and discharging, and are accumulated in the active material. As a result, the electrolyte concentration in the bulk electrolytic solution decreases, and the resistance of the nonaqueous lithium power storage element thus increases.

However, when an alkali metal compound is contained in the positive electrode precursor, by oxidative decomposition of the alkali metal compound, not only alkali metal ions for pre-doping of the negative electrode are released, but also favorable holes capable of retaining the electrolytic solution are formed inside the positive electrode. During charging and discharging, the positive electrode having such holes is supplied with ions as needed from the electrolytic solution in the holes formed in the vicinity of the active material; therefore, it is believed that the high-load charge-discharge cycle characteristics are improved.

The alkali metal compound contained in the positive electrode precursor is oxidatively decomposed to release alkali metal ions by applying thereto a high voltage upon the formation of the nonaqueous lithium power storage element, and pre-doping proceeds as a result of reduction at the negative electrode. Accordingly, the pre-doping step can be performed in a short time by facilitating the oxidation reaction. In order to facilitate the oxidation reaction, it is important to ensure electron conduction by bringing the alkali metal compound, which is an insulator, into contact with the positive electrode active material, and to allow the cations released by the reaction to disperse in the electrolytic solution. Therefore, it is important to moderately cover the surface of the positive electrode active material with the alkali metal compound.

A variety of methods can be employed for micronization of the alkali metal compound and the alkaline earth metal compound. For example, a pulverizer such as a ball mill, a bead mill, a ring mill, a jet mill, or a rod mill may be used.

The above-described alkali metal element and alkaline earth metal element can be quantified by, for example, ICP-AES, atomic absorption spectrometry, fluorescent X-ray analysis, neutron activation analysis, or ICP-MS.

•• Average Particle Size of Alkali Metal Compound

The alkali metal compound preferably has an average particle size of 0.1 $\mu$m to 10 $\mu$m. When the average particle size is 0.1 $\mu$m or more, the alkali metal compound has excellent dispersibility in the positive electrode precursor. When the average particle size is 10 $\mu$m or less, since the surface area of the alkali metal compound is increased, the decomposition reaction proceeds efficiently.

Further, the average particle size of the alkali metal compound is preferably smaller than the average particle size of the above-described carbon material. When the average particle size of the alkali metal compound is smaller than the average particle size of the carbon material, the electron conductivity of the positive electrode active material layer is improved, which can contribute to a reduction in the resistance of an electrode body or power storage element.

A method of measuring the average particle size of the alkali metal compound in the positive electrode precursor is not particularly limited, and the average particle size can be calculated from SEM and SEM-EDX images of a cross section of the positive electrode. As a method of forming the cross section of the positive electrode, BIB processing, in which an Ar beam is irradiated to the positive electrode from above to produce a smooth cross section along the edge of a shielding plate placed directly above a sample, may be employed. The above description provides the optimum conditions when extending the positive electrode active material from lithium iron phosphate to lithium-transition metal oxides.

• Transition Metal Oxide As Decomposition Catalyst

When LFP and/or LMFP represented by $Li_xMn_{(1-y)}Fe_yPO_4$ {wherein, x satisfies $0 \leq x \leq 1$, and y satisfies $0 < y \leq 1$} are used as the positive electrode active materials, since these positive electrode active materials have low electron conductivity, simple mixing of the positive electrode active materials with a lithium compound is unlikely to allow the oxidative decomposition of the lithium compound to proceed in the positive electrode precursor and, therefore, pre-doping of the negative electrode precursor hardly proceeds. Thus, the positive electrode active material layer preferably further contains the below-described transition metal oxide represented by $MO_2$. It is believed that the transition metal oxide represented by $MO_2$ functions as a decomposition catalyst for the lithium compound to facilitate the oxidative decomposition reaction of the lithium compound, enabling to efficiently perform the pre-doping of the negative electrode precursor. The transition metal oxide represented by $MO_2$ may be in the form of a composite of the lithium compound and the transition metal oxide represented by $MO_2$ { wherein, M represents one selected from the group consisting of Co, Ni, and Mn} (this composite is hereinafter referred to as "lithium compound composite"). The mixing ratio of the lithium compound in the lithium compound composite is preferably 25 parts by weight to 85 parts by weight based on a total weight of the lithium compound composite. When the mixing ratio of the lithium compound is 25 parts by weight or more, the mixing ratio of the lithium compound composite in the positive electrode precursor can be reduced, so that the energy density is likely to be increased. When the mixing ratio of the lithium compound is 85 parts by weight or less, the decomposition of the lithium compound can be performed under relatively mild conditions.

The mixing ratio of the lithium compound composite contained in the positive electrode precursor is preferably 5 parts by weight to 25 parts by weight based on a total weight of the positive electrode active material layer and, particularly, an upper limit thereof is preferably less than 25 parts by weight. When the mixing ratio of the lithium compound composite is 5 parts by weight or more, the below-described charge capacity A2 (mAh/cm$^2$) per unit area of the positive electrode precursor is likely to be increased, so that a sudden voltage fluctuation in the final stage of discharging of the nonaqueous lithium power storage element is likely to be inhibited. When the mixing ratio of the lithium compound composite is 25 parts by weight or less (preferably less than 25 parts by weight), since the weight ratio of the positive electrode active material is increased, an increase in the energy density is likely to be realized.

The above-described transition metal oxide represented by $MO_2$ {wherein, M represents at least one selected from the group consisting of Co, Ni, and Mn} that is contained in the positive electrode active material layer of the positive electrode may be $MO_2$ that is left in the positive electrode as a result of decomposition of the lithium compound from the lithium compound composite in positive electrode precursor. When the nonaqueous lithium power storage element is stored in a high-temperature environment, a solid electrolyte interface (hereinafter, may be abbreviated as "SEI") is formed on the positive electrode due to decomposition reaction of the electrolytic solution. This SEI inhibits the reaction between the positive electrode active material and lithium ions, and the growth of the SEI is thus accompanied by an increase in the resistance. Accordingly, when the positive electrode active material layer contains a transition metal oxide represented by $MO_2$, $MO_2$ acts a decomposition catalyst for the SEI, and an increase in the resistance in a high-temperature environment is inhibited. The mixing ratio of $MO_2$ contained in the positive electrode is preferably 1 part by weight to 20 parts by weight based on a total weight of the positive electrode active material layer. When the mixing ratio of $MO_2$ is 1 part by weight or more, an increase in the resistance in a high-temperature environment is likely to be inhibited. When the mixing ratio of $MO_2$ is 20 parts by weight or less, an increase in the energy density is likely to be realized. The transition metal oxide contained in the positive electrode active material layer may be of a single kind, or may be a combination of two or more kinds.

• Other Components of Positive Electrode Active Material Layer

If necessary, the positive electrode active material layer of the positive electrode precursor may also contain optional components, such as a conductive filler, a binder, a dispersion stabilizer, and a pH modifier, in addition to the positive electrode active material and the lithium compound. Examples of the conductive filler include conductive carbonaceous materials having a higher conductivity than the positive electrode active material. The conductive filler is preferably, for example, carbon black, vapor-grown carbon fibers, graphite, flake graphite, carbon nanotubes, graphene, or a mixture thereof. The amount of the conductive filler to be mixed in the positive electrode active material layer of the positive electrode precursor is in a range of preferably 0 to 20 parts by weight, more preferably 1 to 15 parts by weight, with respect to 100 parts by weight of the positive electrode active material. From the standpoint of obtaining high input, the conductive filler is preferably mixed. Meanwhile, when the conductive filler is mixed in an amount of 20 parts by weight or less, since the content ratio of the positive electrode active material in the positive electrode active material layer is increased, the energy density per volume of the positive electrode active material layer is improved, which is preferred. The amount of the conductive filler to be used is preferably 0 wt.% to 3.0 wt.% with respect to 100 wt.% of the positive electrode active material. When the amount of the conductive filler is 3.0 wt.% or less, the content ratio of the positive electrode active material in the positive electrode active material layer is increased, so that the capacity can be increased.

The binder is not particularly limited and, for example, PVdF (polyvinylidene fluoride), PTFE (polytetrafluoroethylene), a polyimide, an acrylic latex, a styrene-butadiene copolymer, a fluororubber, or an acrylic copolymer can be used. The amount of the binder to be used is preferably 1 part by weight to 30 parts by weight, more preferably 3 parts by weight to 27 parts by weight, still more preferably 5 parts by weight to 25 parts by weight, with respect to 100 parts by weight of the positive electrode active material. When the amount of the binder is 1 part by weight or more, the electrode strength is improved. Meanwhile, when the amount of the binder is 30 parts by weight or less, the migration and diffusion of ions in and out of the positive electrode active material are not hindered, so that the input-output characteristics are improved.

The dispersion stabilizer is not particularly limited and, for example, PVP (polyvinylpyrrolidone) or PVA (polyvinyl alcohol) can be used. The amount of the dispersion stabilizer to be used is preferably 0 parts by weight to 10 parts by weight with respect to 100 parts by weight of the positive electrode active material. When the amount of the dispersion stabilizer is 10 parts by weight or less, the migration and diffusion of ions in and out of the positive electrode active material are not hindered, so that the input-output characteristics are improved.

The dispersant is not particularly limited and, for example, at least one selected from the group consisting of carboxymethylcellulose, methylcellulose, ethylcellulose, cellulose acetate phthalate, hydroxymethylcellulose, hydroxypropylmethylcellulose, hydroxyethylmethylcellulose, hydroxypropylmethylcellulose phthalate, polyvinylpyrrolidone, polyvinyl alcohol, and polyvinyl acetal, can be used. The amount of the dispersant to be used is preferably 0 parts by weight to 10 parts by weight, more preferably greater than 0 parts by weight but 10 parts by weight or less, with respect to 100 parts by weight of the positive electrode active material. When the amount of the dispersant is 10 parts by weight or less, the migration and diffusion of ions in and out of the positive electrode active material are not hindered, so that the input-output characteristics are improved.

As a dispersion solvent of the positive electrode coating liquid, for example, water, N-methyl-2-pyrrolidone, or a mixture thereof can be used.

When an organic solvent other than water is used as the dispersion solvent of the coating liquid, the amount of water contained in the dispersion solvent is preferably 0 wt.% to 10 wt.%. When the amount of water is 0 wt.% or more (particularly when the amount of water exceeds 0 wt.%), a trace amount of the alkali metal compound is dissolved; therefore, the contact of the positive electrode active material and a conductive material with the alkali metal compound is enhanced, so that pre-doping is facilitated. When the amount of water is 10 wt.% or less, since the basicity of the coating liquid is not excessively high, modification of the binder can be inhibited. One example of a method of reducing the amount of contained water to 10 wt.% or less is a method of adding a dehydrating agent such as magnesium sulfate or zeolite. When water is used as the solvent for the coating liquid, an addition of a lithium compound can make the coating liquid alkaline; therefore, a pH modifier may be added to the coating liquid if necessary. Examples of the pH modifier include, but are not particularly limited to: hydrogen halides, such as hydrogen fluoride, hydrogen chloride, and hydrogen bromide; halogen oxoacids, such as hypochlorous acid, chlorous acid, and chloric acid; carboxylic acids, such as formic acid, acetic acid, citric acid, oxalic acid, lactic acid, maleic acid, and fumaric acid; sulfonic acids, such as methanesulfonic acid, benzenesulfonic acid, and p-toluenesulfonic acid; and acids, such as nitric acid, sulfuric acid, phosphoric acid, boric acid, and carbon dioxide.

• Total Pore Volume of Positive Electrode Active Material Layer

A lower limit value of the total pore volume of the positive electrode active material layer based on the weight of the positive electrode active material layer is preferably 0.29 cc/g or more, more preferably 0.31 cc/g or more. An upper limit value of the total pore volume is preferably 0.70 cc/g or less, more preferably 0.50 cc/g or less.

When the total pore volume is 0.29 cc/g or more, since the electrolytic solution is sufficiently retained in the positive electrode active material layer, excellent electrolyte ion diffusion is obtained, and the output at low temperatures is improved. In addition, since the reactions during low-temperature charging and discharging proceed uniformly, the low-temperature cycle durability is improved, and a post-cycle micro-short circuit can be inhibited. Further, the electrolytic solution is sufficiently retained inside the electrode; therefore, the charge-discharge reactions proceed uniformly during a high-temperature charge-discharge cycle while local electrolyte decomposition reaction hardly proceeds, so that the durability is improved. When the total pore volume is 0.70 cc/g or less, voids do not exist more than necessary in the positive electrode active material layer, and the density of the active material is sufficient; therefore, a high low-temperature input-output density per volume can be obtained. In addition, since the density of the active material is sufficient and there is sufficient contact between active material particles, the reactions during low-temperature charging and discharging proceed uniformly in the active material layer, as a result of which the low-temperature cycle durability is improved, and a post-cycle micro-short circuit can be inhibited. Further, the amount of the electrolytic solution retained inside the electrode is not more than necessary; therefore, the electrolytic solution decomposition reaction hardly proceeds during a high-temperature charge-discharge cycle, so that the durability is improved. The total pore volume of the positive electrode active material layer can be determined by the below-described mercury porosimetry.

As a method of controlling the total pore volume of the positive electrode active material layer, the total pore volume can be adjusted by adjusting the amount of lithium carbonate to be mixed into the positive electrode active material layer and decomposing the lithium carbonate in the pre-doping step. However, in a system in which the weight ratio of lithium iron phosphate in the positive electrode active material layer is high as in the present disclosure, an activated carbon and a conductive material tend to aggregate due to cross-linking of the binder and a thickener by $Fe^{3+}$ generated from lithium iron phosphate that is placed in an alkaline environment attributed to a lithium compound such as lithium carbonate during the production of the positive electrode coating liquid. As a result, the decomposition reaction of lithium carbonate in the pre-doping hardly proceeds, making it difficult to generate holes inside the positive electrode active material layer. Therefore, as a method of controlling the total pore volume of the positive electrode active material layer, it is preferred to, for example, inhibit the aggregation of the activated carbon and the conductive material in the positive electrode under an alkaline environment by controlling the temperature during dispersion of the positive electrode coating liquid. It was discovered that this allows the decomposition reaction of lithium carbonate to sufficiently proceed and generate holes even when the ratio of lithium iron phosphate is high, and the total pore volume can thereby be controlled.

• Void Diameter of Positive Electrode Active Material Layer

The void diameters D25 and D75 of the positive electrode active material layer can be determined by the below-described mercury porosimetry of the positive electrode. A lower limit value of the void diameter D25 of the positive electrode active material layer is preferably 0.34 $\mu$m or more, more preferably 0.36 $\mu$m or more. An upper limit value of the pore diameter D25 of the positive electrode active material layer is preferably 0.64 $\mu$m or less, more preferably 0.52 $\mu$m or less. A lower limit value of the void diameter D75 of the positive electrode active material layer is 0.10 $\mu$m or more. An upper limit value of the pore diameter D75 of the positive electrode active material layer is 0.20 $\mu$m or less. A lower limit value of the difference (D25 - D75) between the void diameters D25 and D75 is 0.20 $\mu$m or more. An upper limit value of D25 - D75 is 0.45 $\mu$m or less.

With regard to lithium iron phosphate that has a high capacity density, in order to sufficiently bring out its charge-discharge performance, particularly low-temperature input-output and cycle durability, it is desired to retain the electrolytic solution in voids of large diameter. On the other hand, with regard to activated carbon in which adsorption and desorption of ions occur on the surface of fine pores, in order to sufficiently bring out its charge-discharge performance, particularly low-temperature input-output and cycle durability, it is desired to retain the electrolytic solution in voids of small diameter. When D25, D75, and D25 - D75 satisfy the above-described respective ranges, a good balance is maintained between the voids of large diameter and the voids of small diameter; therefore, not only the low-temperature input-output and the cycle durability of the positive electrode formed of a mixture of lithium iron phosphate and activated carbon are improved but also the micro-short circuit rate after a low-temperature cycle can be reduced, which is preferred.

As a method of controlling the void diameter of the positive electrode active material layer, for example, the void diameter is adjusted by mixing lithium carbonate having plural particle sizes into the positive electrode active material layer and decomposing the lithium carbonate in the pre-doping step. However, in a system in which the weight ratio of lithium iron phosphate in the positive electrode active material layer is high as in the present disclosure, an activated carbon and a conductive material tend to aggregate due to cross-linking of the binder and a thickener by $Fe^{3+}$ generated from lithium iron phosphate that is placed in an alkaline environment attributed to a lithium compound such as lithium carbonate during the production of the positive electrode coating liquid. As a result, the decomposition reaction of lithium carbonate in the pre-doping hardly proceeds, making it difficult to generate holes inside the positive electrode active material layer. Therefore, as a method of controlling the void diameter of the positive electrode active material layer, it is preferred to, for example, inhibit the aggregation of the activated carbon and the conductive material in the positive electrode under an alkaline environment by controlling the temperature during dispersion of the positive electrode coating liquid. It was discovered that this allows the decomposition reaction of lithium carbonate to sufficiently proceed and generate holes even when the ratio of lithium iron phosphate is high, and the void diameter can thereby be adjusted.

• Volume Resistivity of Positive Electrode Active Material Layer

The positive electrode active material layer in the positive electrode preferably has a volume resistivity of 1.5 $\Omega$cm to 8.0 $\Omega$cm. When the volume resistivity of the positive electrode active material layer is 1.5 $\Omega$cm or more, a moderate amount of the binder exists in the positive electrode active material layer and the positive electrode active material layer thus has a sufficient strength; therefore, the positive electrode active material layer does not peel off even if expansion or contraction thereof occurs due to intercalation/deintercalation of lithium into/from the negative electrode or temporary precipitation/disappearance of lithium during a low-temperature charge-discharge cycle, so that the micro-short circuit rate after a low-temperature cycle can be reduced. When the volume resistivity of the positive electrode active material layer is 8.0 $\Omega$cm or less, the electric conductivity in the active material layer is sufficient; therefore, the charge-discharge reactions proceed uniformly in the positive electrode active material layer during a charge-discharge cycle, and precipitation of lithium at a low temperature caused by a local overvoltage increase can be inhibited, so that the post-cycle micro-short circuit rate can be reduced.

As a method of controlling the volume resistivity of the positive electrode active material layer is not particularly limited and, for example, the volume resistivity can be adjusted by modifying the weight ratio of lithium iron phosphate; however, in a system in which the weight ratio of lithium iron phosphate in the positive electrode active material layer is high as in the present disclosure, lithium iron phosphate tends to aggregate due to cross-linking of the binder and a thickener by $Fe^{3+}$ generated from lithium iron phosphate that is placed in an alkaline environment attributed to a lithium compound such as lithium carbonate in the produced positive electrode coating liquid. This consequently makes it difficult to construct a sufficient conductive network. As a method of controlling the volume resistivity of the positive electrode active material layer, it is preferred to, for example, inhibit the aggregation of lithium iron phosphate in the positive electrode under an alkaline environment by controlling the temperature during storage of the positive electrode coating liquid. It was discovered that this can form a conductive network and control the volume resistivity even when the ratio of lithium iron phosphate is high. A method of measuring the volume resistivity of the positive electrode active material layer will be described below.

• Thickness of Positive Electrode Active Material Layer

The positive electrode active material layer preferably has a thickness of 40 $\mu$m to 200 $\mu$m per side of the positive electrode power collector. The thickness of the positive electrode active material layer per side is more preferably 50 $\mu$m to 150 $\mu$m, still more preferably 60 $\mu$m to 130 $\mu$m. When this thickness is 40 $\mu$m or more, the charge-discharge capacity is improved. On the other hand, when this thickness is 200 $\mu$m or less, the ion diffusion resistance in the electrode can be kept low. Therefore, not only sufficient output characteristics can be obtained but also the cell volume can be reduced, so that the energy density can be increased. It is noted here that, when the power collector has through-holes or irregularities, the thickness of the positive electrode active material layer refers to an average value of the thickness per side of the power collector in those parts that do not have the through-holes or irregularities.

• Bulk Density of Positive Electrode Active Material Layer

The positive electrode active material layer has a bulk density of preferably 1.0 g/cm$^3$ or higher, more preferably 1.2 g/cm$^3$ to 4.5 g/cm$^3$. When the bulk density of the positive electrode active material layer is 1.2 g/cm$^3$ or higher, a high energy density is likely to be exerted; therefore, a size reduction of the power storage element can be easily achieved. When the bulk density of the positive electrode active material layer is 4.5 g/cm$^3$ or lower, the electrolytic solution is sufficiently diffused in the holes of the positive electrode active material layer, so that high output characteristics are likely to be obtained.

• Peel Strength of Positive Electrode Active Material Layer

The positive electrode active material layer of the positive electrode precursor preferably has a peel strength of 0.02 N/cm to 3.00 N/cm. When the peel strength is 0.02 N/cm or more, the loss of the positive electrode active material layer due to the generation of gas in the pre-doping step is suppressed, so that a micro-short circuit can be inhibited. When the peel strength is 3.00 N/cm or less, since this means the absence of excess binder or the like in the positive electrode active material layer, the diffusibility of the electrolytic solution is improved, so that the resistance can be reduced. The peel strength of the positive electrode active material layer is preferably 0.02 N/cm to 2.40 N/cm.

(Positive Electrode Power collector)

The material constituting the positive electrode power collector is not particularly limited as long as it has a high electron conductivity and does not deteriorate due to elution into the electrolytic solution, reaction with an electrolyte or ion, or the like; however, it is preferably a metal foil. As the positive electrode power collector, an aluminum foil is more preferred since it is unlikely to deteriorate due to elution into the electrolytic solution, reaction with an electrolyte or ion, or the like. The aluminum foil is preferably a non-porous aluminum foil, more preferably a smooth aluminum foil. The term "smooth" used herein means that a surface processing for the formation of irregularities, through-holes, or the like (e.g., embossing, etching, blasting, laser processing, expansion, or punching) has not been performed.

The metal foil may be an ordinary metal foil without irregularities or through-holes, or may be a metal foil having irregularities formed by embossing, chemical etching, electrolytic deposition, blasting, or the like, or a metal foil having through-holes, such as an expanded metal foil, a punched metal foil, or an etched foil. From the standpoint of the below-described pre-doping treatment, the metal foil is more preferably a non-porous aluminum foil, and the aluminum foil particularly preferably has a roughened surface.

The thickness of the positive electrode power collector is not particularly limited as long as the shape and the strength of the positive electrode can be sufficiently maintained, and it is, for example, preferably 1 to 100 $\mu$m.

The surface of the metal foil is preferably provided with an undercoat layer that contains a conductive material such as graphite, flake graphite, carbon nanotubes, graphene, Ketjen black, acetylene black, or vapor-grown carbon fibers (this undercoat layer is hereinafter also referred to as "anchor layer" or "conductive coating layer"). By providing such an undercoat layer, the electric conductivity between the positive electrode power collector and the positive electrode active material layer is improved, so that the resistance can be reduced. The thickness of the undercoat layer is preferably 0.1 $\mu$m to 5 $\mu$m per side of the positive electrode power collector.

(Interfacial Resistance Between Positive Electrode Active Material Layer and Positive Electrode Power collector of Positive Electrode)

It is also preferred that the positive electrode power collector have no undercoat layer thereon, and that the positive electrode active material layer be directly formed on the positive electrode power collector. In this case, the interfacial resistance between the positive electrode active material layer and the positive electrode power collector of the positive electrode is preferably 0.05 $\Omega$cm$^2$ to 5.00 $\Omega$cm$^2$, more preferably 0.08 $\Omega$cm$^2$ to 0.11 $\Omega$cm$^2$. These upper and lower limits can be combined arbitrarily. As described above, the positive electrode is a positive electrode after the completion of a cell; therefore, the above-described interfacial resistance can be obtained for the positive electrode taken out by disassembling the power storage element. When the interfacial resistance is 0.05 $\Omega$cm$^2$ to 5.00 $\Omega$cm$^2$, not only the internal resistance at the completion of a cell can be reduced, and a micro-short circuit can be inhibited and the initial low resistance can be maintained even in the use under a vibration environment, but also the generation of gas in a high-temperature environment can be inhibited. More specifically, for example, it is expected that: an increase in the internal resistance due to defective contact between the aluminum foil and the positive electrode active material layer at their interface is inhibited; an increase in the resistance under vibration conditions of a vehicle or the like running on rough road is inhibited; and the generation of gas under high-temperature conditions of a vehicle-mounted device, an ESS (Energy Storage System), or the like in tropical region is inhibited. Further, the absence of an undercoat layer is also advantageous in that it simplifies the power collector production process and reduces the cost of the power storage element. The principle of the effect is unclear, but is speculated as follows. The principle of these effects is not clear; however, it is presumed as follows.

When the interfacial resistance between the positive electrode active material layer and the positive electrode power collector of the positive electrode is 5.00 $\Omega$cm$^2$ or less, since the positive electrode active material layer and the positive electrode power collector have a sufficiently large number of contact points therebetween, the internal resistance at the completion of a cell can be reduced. In addition, even in a vibration environment, interfacial delamination between the positive electrode active material layer and the positive electrode power collector is inhibited, and the vibration resistance is improved, so that a micro-short circuit and an increase in the resistance that are caused by peeling of the active material during vibration can be inhibited. Further, interfacial delamination can also be inhibited against a change in the volume of the positive electrode power collector aluminum foil in a high temperature environment; therefore, for example, the decomposition reaction of the solvent of the electrolytic solution, which is induced by exposure of the active interface of activated carbon that is the positive electrode active material, can be reduced, so that the generation of gas can be inhibited.

When the interfacial resistance between the positive electrode active material layer and the positive electrode power collector of the positive electrode is 0.05 $\Omega$cm$^2$ or more, since the positive electrode active material layer and the positive electrode power collector can be sufficiently bonded by the binder of the positive electrode active material layer, the internal resistance at the completion of a cell can be reduced. In addition, even in a vibration environment, interfacial delamination between the positive electrode active material layer and the positive electrode power collector is inhibited, and the vibration resistance is improved, so that a micro-short circuit and an increase in the resistance that are caused by peeling of the active material during vibration can be inhibited. Further, interfacial delamination can also be inhibited against a change in the volume of the positive electrode power collector aluminum foil in a high temperature environment; therefore, for example, the decomposition reaction of the solvent of the electrolytic solution, which is induced by exposure of the active interface of activated carbon that is the positive electrode active material, can be reduced, so that the generation of gas can be inhibited.

A method of controlling the interfacial resistance will now be described. When a smooth aluminum foil is used as the positive electrode power collector, peeling is more likely to occur at the interface between the aluminum foil and the active material layer, as compared to a case where an aluminum foil on which a surface processing for the formation of irregularities, through-holes, or the like (e.g., embossing, etching, blasting, laser processing, expansion, or punching) has been performed is used. Such interfacial delamination occurs in the assembly, injection, and lithium doping steps (in the case of a nonaqueous lithium power storage element) after the completion of the electrode (e.g., after coating, or after pressing when pressing is performed), and the interfacial resistance cannot be controlled upon the completion of a cell. In view of this, the present inventors discovered a method of controlling the interfacial resistance between the positive electrode active material layer and the positive electrode power collector of the positive electrode after the completion of a cell to be 0.05 $\Omega cm^2$ to 5.00 $\Omega cm^2$ by reducing the decompression rate in a high-vacuum state during impregnation. The details thereof will be described below in the sections relating to the respective steps.

When the positive electrode active material layer is provided on both sides of the positive electrode power collector, the interfacial resistance may be in the above-described range on at least one side of the positive electrode active material layer, and it is more preferred that the interfacial resistance be in the above-described range on both sides of the positive electrode active material layers.

(Frequency of Aggregates on Positive Electrode Surface)

On the surface of the positive electrode, the frequency of 1,000-$\mu m^2$ to 10,000-$\mu m^2$ aggregates is preferably 1.5 aggregates/$cm^2$ or less, more preferably 1.0 aggregates/$cm^2$ or less, still more preferably 0.8 aggregates/$cm^2$ or less, yet still more preferably 0.5 aggregates/$cm^2$ or less, particularly preferably 0.15 aggregates/$cm^2$ or less. When the frequency of 1,000-$\mu m^2$ to 10,000-$\mu m^2$ aggregates on the positive electrode surface is 1.5 aggregates/$cm^2$ or less, since the distance between the positive electrode and the negative electrode is uniform, the occurrence of micro-short circuit, which is caused by precipitation of lithium on the negative electrode surface during a low-temperature charge-discharge cycle due to uneven charge-discharge reactions, can be inhibited, which is preferred. A lower limit value of the frequency of aggregates is not particularly limited, and may be 0 aggregates/$cm^2$ or more, for example, more than 0 aggregates/$cm^2$ .

Further, when the above-described frequency of aggregates is 0.5 aggregates/$cm^2$ or less, not only the internal resistance at the completion of a cell can be reduced, and a micro-short circuit can be inhibited and the initial low resistance can be maintained even in the use under a vibration environment, but also the generation of gas in a high-temperature environment can be inhibited. The principle of these effects is not clear; however, it is presumed as follows. In other words, when the frequency of 1,000-$\mu m^2$ to 10,000-$\mu m^2$ aggregates on the positive electrode surface is 0.5 aggregates/$cm^2$ or less, the distance between the positive electrode and the negative electrode is uniform, so that the ion transport resistance of the electrolytic solution can be reduced, and the internal resistance at the completion of a cell can be reduced. In addition, interfacial delamination between the positive electrode active material layer and the positive electrode power collector, which is caused by the generation of cracks in the positive electrode active material layer originating from aggregates in a vibration environment, is inhibited, and the vibration resistance is improved, so that a micro-short circuit and an increase in the resistance that are caused by peeling of the active material during vibration can be inhibited. Moreover, interfacial delamination between the positive electrode active material layer and the positive electrode power collector, which is caused by the generation of cracks in the positive electrode active material layer originating from aggregates, can also be inhibited against a change in the volume of the positive electrode power collector aluminum foil in a high temperature environment; therefore, for example, the decomposition reaction of the solvent of the electrolytic solution, which is induced by exposure of the active interface of activated carbon that is the positive electrode active material, can be reduced, so that the generation of gas can be inhibited.

A method of controlling aggregates is not particularly limited; however, in a system in which the weight ratio of lithium iron phosphate in the positive electrode active material layer is high, lithium iron phosphate tends to aggregate due to cross-linking of the binder and a thickener by $Fe^{3+}$ generated from lithium iron phosphate that is placed in an alkaline environment attributed to a lithium compound such as lithium carbonate in the produced positive electrode coating liquid. As a method of controlling aggregates, it is preferred to, for example, inhibit the aggregation of lithium iron phosphate in the positive electrode under an alkaline environment by controlling the temperature during storage of the positive electrode coating liquid. Further, depending on the conditions for the production of the positive electrode coating liquid, the generation of aggregates on the positive electrode surface can be inhibited by reducing the amount of trace gas that is generated in the positive electrode coating liquid containing activated carbon and causes the generation of aggregates. It is noted here that the frequency of aggregates on the positive electrode surface can be measured for the positive electrode taken out by disassembling the completed power storage element. A method of measuring the frequency of aggregates on the positive electrode surface will be described below.

<Negative Electrode>

The negative electrode comprises a negative electrode power collector, and a negative electrode active material layer provided on one or both sides thereof.

In an electric double layer capacitor, a positive electrode and a negative electrode may be the same; therefore, as the materials constituting the negative electrode of the electric double layer capacitor of the present disclosure, the same material composition as that of the above-described positive electrode can be used, and the negative electrode may contain activated carbon.

(Negative Electrode Active Material Layer)

The negative electrode active material layer contains a negative electrode active material capable of occluding and releasing lithium ions, as well as a graphite. In addition thereto, if necessary, the negative electrode active material layer may also contain optional components, such as a conductive filler, a binder, and a dispersion stabilizer. Specific examples thereof include carbon materials, titanium oxide, silicon, silicon oxide, silicon alloys, silicon compounds, tin, and tin compounds. The content ratio of a carbon material is preferably 50 wt.% or more, more preferably 70 wt.% or more, with respect to a total amount of the negative electrode active material. The content ratio of the carbon material may be 100 wt.%; however, from the standpoint of favorably obtaining the effects exerted by the use of other materials in combination, the content ratio of the carbon material is, for example, preferably 90 wt.% or less, and may be 80 wt.% or less. These upper and lower limits of the range of the content ratio of the carbon material can be combined arbitrarily.

• Negative Electrode Active Material

As the negative electrode active material, a substance capable of occluding and releasing lithium ions can be used. Specific examples thereof include carbon materials, titanium oxide, silicon, silicon oxide, silicon alloys, silicon compounds, tin, and tin compounds. The content ratio of a carbon material is preferably 50 wt.% or more, more preferably 70 wt.% or more, with respect to a total amount of the negative electrode active material. The content ratio of the carbon material may be 100 wt.%; however, from the standpoint of favorably obtaining the effects exerted by the use of other materials in combination, the content ratio of the carbon material is, for example, preferably 90 wt.% or less, and may be 80 wt.% or less. These upper and lower limits of the range of the content ratio of the carbon material can be combined arbitrarily.

•• Carbon Material

Examples of the carbon material include: non-graphitizable carbon materials; easily graphitizable carbon materials; carbon black; carbon nanoparticles; activated carbon; artificial graphite; natural graphite; graphitized mesophase carbon microspheres; graphite whiskers; amorphous carbonaceous materials, such as polyacene-based materials; carbonaceous materials obtained by heat treatment of carbon precursors, such as petroleum-based pitch, coal-based pitch, mesocarbon microbeads, coke, and synthetic resins (e.g., phenol resins); thermal decomposition products of furfuryl alcohol resins or novolac resins; fullerenes; carbon nanohorns; and composite carbon materials thereof.

A composite carbon material has a BET specific surface area of preferably 100 $m^2$/g to 350 $m^2$/g, more preferably 150 $m^2$/g to 300 $m^2$/g. When the BET specific surface area is 100 $m^2$/g or more, since the pre-doping amount of alkali metal ions can be sufficiently increased, the thickness of the negative electrode active material layer can be reduced. Further, when the BET specific surface area is 350 $m^2$/g or less, excellent coatability of the negative electrode active material layer is obtained.

When constant-current charging is performed to a voltage value of 0.01 V with a current value of 0.5 mA/$cm^2$ at a measurement temperature of 25°C using lithium metal as a counter electrode and constant-voltage charging is subsequently performed to a current value of 0.01 mA/$cm^2$, the composite carbon material has an initial charge capacity of preferably 300 mAh/g to 1,600 mAh/g, more preferably 400 mAh/g to 1,500 mAh/g, still more preferably 500 mAh/g to 1,450 mAh/g, per unit weight of the composite carbon material. When the initial charge capacity is 300 mAh/g or more, the pre-doping amount of alkali metal ions can be sufficiently increased, so that high output characteristics can be obtained even with a reduction in the thickness of the negative electrode active material layer. Further, when the initial charge capacity is 1,600 mAh/g or less, the swelling and shrinkage of the composite carbon material during doping and dedoping of the composite carbon material with alkali metal ions are reduced, so that the strength of the negative electrode is maintained.

From the standpoint of obtaining a favorable internal resistance value, the negative electrode active material is particularly preferably a composite porous material that satisfies the following conditions (1) and (2):

(1) the amount of mesopores (the amount of pores having a diameter of 2 nm to 50 nm) $Vm_1$ ($cm^3$/g), which is determined by the above-described BJH method, satisfies the condition of $0.01 \leq Vm_1 < 0.10$; and
(2) the amount of micropores (the amount of pores having a diameter of less than 2 nm) $Vm_2$ ($cm^3$/g), which is

determined the above-described MP method, satisfies the condition of $0.01 \leq Vm_2 < 0.30$.

•• Particle Size of Negative Electrode Active Material

The negative electrode active material is preferably in the form of particles. The particle size of the aforementioned silicon, silicon oxide, silicon alloys, silicon compounds, tin, and tin compounds is preferably 0.1 $\mu$m to 30 $\mu$m. When this particle size is 0.1 $\mu$m or more, since the contact area with the electrolytic solution is increased, the resistance of the nonaqueous lithium power storage element can be reduced. Further, when the particle size is 30 $\mu$m or less, the swelling and shrinkage of the negative electrode that are caused by doping and dedoping of the negative electrode with lithium ions associated with charging and discharging are reduced, so that the strength of the negative electrode is maintained.

The aforementioned silicon, silicon oxide, silicon alloys, silicon compounds, tin, and tin compounds can be made into fine particles by pulverization using a classifier-equipped jet mill, a stirring-type ball mill, or the like. A pulverizer is provided with a centrifugal classifier, and fine particles pulverized in an inert gas environment of nitrogen, argon, or the like can be collected by a cyclone or a dust collector.

•• Content Ratio of Negative Electrode Active Material

The content ratio of the negative electrode active material in the negative electrode active material layer of the negative electrode precursor is preferably 70 wt.% or more, more preferably 80 wt.% or more, based on a total weight of the negative electrode active material layer.

•• Use of Graphite

The negative electrode active material may contain a graphite, and this graphite is preferably artificial graphite or natural graphite. The content ratio of the graphite is preferably 50 wt.% (e.g., 50.0 wt.%) or more, more preferably 70 wt.% (e.g., 70.0 wt.%) or more, with respect to a total amount of the negative electrode active material. The content ratio of the carbon material may be 100 wt.% (e.g., 100.0 wt.%). From the standpoint of favorably obtaining the effects exerted by the use of other materials in combination, the content ratio of the graphite is, for example, preferably 92 wt.% (e.g., 92.0 wt.%) or less. These upper and lower limits of the range of the content ratio of the graphite can be combined arbitrarily.

The graphite is preferably in the form of particles. The average particle size thereof is preferably 1.0 $\mu$m to 9.0 $\mu$m, more preferably 1.5 $\mu$m to 7.0 $\mu$m, particularly preferably 2.0 $\mu$m to 5.0 $\mu$m. When the average particle size is 1.0 $\mu$m or more, the bulk density of the graphite made into an electrode is increased, so that a sufficient energy density is likely to be exerted. When the particle size is 9.0 $\mu$m or less, the particle surface area per weight is increased, so that the contact area between the electrolytic solution and the graphite surface is likely to be increased. This can lead to a reduction in the reaction resistance of intercalation and deintercalation of lithium ions; therefore, the resistance of the nonaqueous lithium power storage element is likely to be reduced.

The graphite preferably has a specific surface area of 10 m$^2$/g to 45 m$^2$/g (e.g., 10.0 m$^2$/g to 45.0 m$^2$/g). When the specific surface area is 10 m$^2$/g or more, the contact area between the electrolytic solution and the graphite surface is likely to be increased. This can lead to a reduction in the reaction resistance of intercalation and deintercalation of lithium ions; therefore, the resistance of the nonaqueous lithium power storage element is likely to be reduced. When the specific surface area is 45 m$^2$/g or less, the contact area with the electrolytic solution can be reduced, so that the generation of a coating film caused by decomposition of the electrolytic solution during long-term use is likely to be inhibited.

The negative electrode active material may also contain a substance capable of occluding and releasing lithium ions in addition to the graphite, and specific examples thereof include carbon materials other than graphite, titanium oxide, silicon, silicon oxide, silicon alloys, silicon compounds, tin, and tin compounds. Examples of the carbon materials other than graphite include: non-graphitizable carbon materials; easily graphitizable carbon materials; carbon black; carbon nanoparticles; activated carbon; graphitized mesophase carbon microspheres; graphite whiskers; amorphous carbonaceous materials, such as polyacene-based materials; carbonaceous materials obtained by heat treatment of carbon precursors, such as petroleum-based pitch, coal-based pitch, mesocarbon microbeads, coke, and synthetic resins (e.g., phenol resins); thermal decomposition products of furfuryl alcohol resins or novolac resins; fullerenes; carbon nanohorns; and composite carbon materials thereof. The aforementioned silicon, silicon oxide, silicon alloys, silicon compounds, tin, and tin compounds can be made into fine particles by pulverization using a classifier-equipped jet mill, a stirring-type ball mill, or the like. A pulverizer is provided with a centrifugal classifier, and fine particles pulverized in an inert gas environment of nitrogen, argon, or the like can be collected by a cyclone or a dust collector.

The content ratio of the negative electrode active material in the negative electrode active material layer of the negative electrode precursor is preferably 70 wt.% or more, more preferably 80 wt.% or more, based on a total weight of the negative electrode active material layer.

•• Use of Carbon Material in Combination with Alloy-Based Active Material

The negative electrode active material may contain a carbon material as a first negative electrode active material, and at least one selected from the group consisting of silicon, silicon compounds, tin, and tin compounds as a second negative electrode active material. The second negative electrode active material can form an alloy with lithium. Accordingly, the second negative electrode active material is hereinafter also referred to as "alloy-based active material".

The negative electrode active material preferably contains a carbon material as the first negative electrode active material. The carbon material is, for example, an amorphous or microcrystalline carbon material, a nanocarbon, or a crystalline carbon material. Examples of the amorphous or microcrystalline carbon material include non-graphitizable carbon materials and easily graphitizable carbon materials; examples of the nanocarbon include carbon nanoparticles, fullerenes, and graphene; and examples of the crystalline carbon material include graphite, such as artificial graphite, natural graphite, graphitized mesophase carbon microspheres, graphite whiskers, and composite carbon materials thereof. Among these carbon materials, graphite is preferred from the standpoint of increasing the capacity of the nonaqueous lithium power storage element, and one or more selected from artificial graphite, natural graphite, graphitized mesophase carbon microspheres, graphite whiskers, and composite carbon materials thereof are preferably used.

The negative electrode active material preferably further contains at least one selected from the group consisting of silicon, silicon compounds, tin, and tin compounds as the second negative electrode active material. Particularly, the negative electrode active material preferably contains at least one of silicon or a silicon compound as the second negative electrode active material. Especially, the silicon compound is preferably silicon oxide, and more preferably $SiO_x$ {wherein, x satisfies $0.01 \leq x \leq 2$}. As a tin compound, tin oxide is preferred, and tin dioxide ($SnO_2$) is more preferred. The second negative electrode active material may be in the form of a composite material formed with carbon or a carbonaceous material.

An alloy-based material, which is the second negative electrode active material, allows the charge-discharge reactions of lithium ions to proceed in a higher potential side and with more gradual potential fluctuations as compared to, for example, the graphite used as the first negative electrode active material. The voltage of the nonaqueous lithium power storage element appears as a difference between the positive electrode potential and the negative electrode potential; therefore, by incorporating an alloy-based active material having gradual potential fluctuations as the negative electrode active material, voltage fluctuations in the final stage of discharging of the nonaqueous lithium power storage element are likely to be made more gradual.

•• Usage Ratio of Carbon Material and Alloy-Based Active Material

The ratio of the first negative electrode active material is preferably 50 parts by weight to 99 parts by weight, more preferably 50 parts by weight to 98 parts by weight, still more preferably 60 parts by weight to 98 parts by weight, yet still more preferably 65 parts by weight to 95 parts by weight, based on a total weight of the negative electrode active material layer. From the standpoint of increasing the capacity of the nonaqueous lithium power storage element, it is particularly preferred to use a graphite as the first negative electrode active material, and to control the concentration of the graphite contained in the negative electrode active material layer to be the above-described ratio based on a total weight of the negative electrode active material layer. The ratio of the second negative electrode active material is preferably 1 part by weight to 50 parts by weight, more preferably 2 parts by weight to 50 parts by weight, still more preferably 5 parts by weight to 30 parts by weight, based on a total weight of the negative electrode active material layer. When the second negative electrode active material is in the form of a composite material of an alloy-based material and carbon or a carbonaceous material, the ratio of the second negative electrode active material is calculated based on the weight excluding the carbon or carbonaceous material.

It is preferred that the first negative electrode active material be contained in the above-described ratio (e.g., 50 parts by weight to 95 parts by weight) and the second negative electrode active material be contained in the above-described ratio (e.g., 1 part by weight to 30 parts by weight), based on a total weight of the negative electrode active material layer. When the ratio of the second negative electrode active material is 1 part by weight or higher, the negative electrode is likely to be reduced in thickness, as a result of which the energy density of the nonaqueous lithium power storage element is likely to be increased. In addition, a sudden voltage drop in the final stage of discharging of the nonaqueous lithium power storage element is likely to be inhibited. When the ratio of the second negative electrode active material is 30 parts by weight or lower, the irreversible capacity of the negative electrode in the initial charging and discharging can be reduced; therefore, the amount of the lithium compound to be contained in the positive electrode precursor can be reduced. As a result, the energy density of the nonaqueous lithium power storage element is likely to be increased.

In the present embodiment, a total content ratio of the first and the second negative electrode active materials in the negative electrode active material layer of the negative electrode is preferably 70 parts by weight or more, more preferably 80 parts by weight or more, based on a total weight of the negative electrode active material layer.

•• Average Particle Size of Negative Electrode Active Material

The negative electrode active material preferably has an average particle size of 1 to 20 $\mu$m, and a lower limit value thereof is more preferably 2 $\mu$m or more, still more preferably 3 $\mu$m or more, while an upper limit value thereof is more preferably 18 $\mu$m or less, still more preferably 15 $\mu$m or less. When the average particle size is 1 $\mu$m or more, since the contact area with the nonaqueous electrolytic solution is increased, the resistance of the nonaqueous lithium power storage element is likely to be reduced. When the average particle size of the negative electrode active material is 20 $\mu$m or less, since the negative electrode active material layer is likely to be reduced in thickness, the energy density of the nonaqueous lithium power storage element is likely to be improved. The average particle size of the negative electrode active material can be measured in the same manner as that of the positive electrode active material.

The average particle size of the negative electrode active material can be adjusted by pulverization using a classifier-equipped wet or dry jet mill, a stirring-type ball mill, or the like. A pulverizer is provided with a centrifugal classifier, and fine particles pulverized in an inert gas environment of nitrogen, argon, or the like can be collected by a cyclone or a dust collector.

•• Other Components of Negative Electrode Active Material Layer

If necessary, the negative electrode active material layer may also contain optional components, such as a binder, a conductive filler, and a dispersion stabilizer, in addition to the negative electrode active material.

Examples of the conductive filler include acetylene black, Ketjen black, and vapor-grown carbon fibers. The amount of the conductive filler is preferably more than 0 parts by weight but 30 parts by weight or less, more preferably more than 0 parts by weight but 20 parts by weight or less, still more preferably more than 0 parts by weight but 15 parts by weight or less, with respect to 100 parts by weight of the negative electrode active material.

As the binder, for example, polyvinylidene fluoride (PVdF), polytetrafluoroethylene (PTFE), a fluororubber, a styrene-butadiene rubber, an acrylic latex, or an acrylic copolymer can be used. The amount of the binder to be used in the negative electrode active material layer is in a range of preferably 0 to 10 parts by weight, more preferably 1 to 7 parts by weight, with respect to 100 parts by weight of the negative electrode active material. When the amount of the binder is more than 10 parts by weight, the active material surface of the negative electrode (precursor) is excessively covered with the binder, as a result of which the ion diffusion resistance inside the pores of the active material is increased. When the amount of the binder is 10 parts by weight or less, the active material surface of the negative electrode (precursor) is likely to be prevented from being excessively covered with the binder; therefore, an increase in the ion diffusion resistance inside the pores of the active material is likely to be inhibited.

Examples of the binder include those exemplified above and, for example, PVdF (polyvinylidene fluoride), PTFE (polytetrafluoroethylene), a polyimide, a latex, a styrene-butadiene copolymer, a fluororubber, an acrylic copolymer, polyacrylic, or polyglutamic acid can be used. The amount of the binder is preferably 1 part by weight to 20 parts by weight, more preferably 2 parts by weight to 15 parts by weight, still more preferably 3 parts by weight to 10 parts by weight, with respect to 100 parts by weight of the negative electrode active material. When the amount of the binder is 1 part by weight or more, a sufficient electrode strength is likely to be exerted. When the amount of the binder is 20 parts by weight or less, the migration of lithium ions in and out of the negative electrode active material is hardly hindered, so that high input-output characteristics are likely to be exerted.

As the dispersion stabilizer, for example, PVP (polyvinylpyrrolidone), PVA (polyvinyl alcohol), or a cellulose derivative can be used. The amount of the binder is preferably 0 parts by weight to 10 parts by weight with respect to 100 parts by weight of the negative electrode active material. When the amount of the dispersion stabilizer is 10 parts by weight or less, the migration of lithium ions in and out of the negative electrode active material is hardly hindered, so that high input-output characteristics are likely to be exerted.

The conductive filler is preferably composed of a conductive carbonaceous material having a higher conductivity than the negative electrode active material. As such a conductive filler, for example, carbon black, vapor-grown carbon fibers, graphite, carbon nanotubes, or a mixture thereof is preferred.

The amount of the conductive filler to be mixed in the negative electrode active material layer is preferably 20 parts by weight or less, more preferably in a range of 1 to 15 parts by weight, with respect to 100 parts by weight of the negative electrode active material. From the standpoint of obtaining high input, the conductive filler is preferably mixed into the negative electrode active material layer; however, when the mixed amount exceeds 20 wt.%, the content of the negative electrode active material in the negative electrode active material layer tends to be reduced. On the other hand, when the mixed amount is 20 parts by weight or less, since the content of the negative electrode active material in the negative electrode active material layer is increased, the energy density per volume is improved, which is preferred.

The amount of the conductive filler to be mixed in the negative electrode active material layer is preferably 1 to 20 wt.%, more preferably 5 to 16 wt.%, based on the whole negative electrode active material layer. From the standpoint of obtaining high input, the conductive filler is preferably mixed into the negative electrode active material layer. When the mixed amount is 20 parts by weight or less, since the content of the negative electrode active material in the negative electrode active material layer is increased, a reduction in the energy density per volume is likely to be inhibited. The amount of voids in the negative electrode can be increased with the amount of added conductive filler.

The dispersant is not particularly limited and, for example, at least one selected from the group consisting of carboxymethylcellulose, methylcellulose, ethylcellulose, cellulose acetate phthalate, hydroxymethylcellulose, hydroxypropylmethylcellulose, hydroxyethylmethylcellulose, hydroxypropylmethylcellulose phthalate, polyvinylpyrrolidone, polyvinyl alcohol, and polyvinyl acetal can be used. The dispersant is particularly preferably carboxymethylcellulose.

• Thickness of Negative Electrode Active Material Layer

The material constituting the negative electrode active material layer has an average thickness of preferably 0.2 $\mu$m to 1.0 $\mu$m (e.g., 0.20 $\mu$m to 1.00 $\mu$m), more preferably 0.3 $\mu$m to 0.8 $\mu$m (e.g., 0.30 $\mu$m to 0.80 $\mu$m). When the average thickness of the material constituting the negative electrode active material layer is 0.2 $\mu$m or more, since the number of negative electrode material particles per weight is small, the diffusion paths of the electrolytic solution are not complex. Therefore, even if doping is performed at room temperature and a high rate, doping of the negative electrode proceeds uniformly, and a micro-short circuit caused by a precipitate or the like thus hardly occurs. As a result, the load on the production equipment can be reduced. In addition, since the diffusion resistance component of the internal resistance is reduced, the internal resistance can be reduced. Further, even if charge-discharge cycles are repeated at a low temperature, precipitation and the like are unlikely to occur; therefore, deterioration of the capacity can be inhibited. Moreover, when the average thickness of the material constituting the negative electrode active material layer is 0.2 $\mu$m or more, the surface area of the negative electrode material particles per weight is reduced, so that the contact area with the solvent of the electrolytic solution can be reduced. Therefore, a decrease in the amount of cyclable lithium caused by the decomposition reaction of the solvent of the electrolytic solution and the formation of a coating film at a high temperature can be inhibited. As a result, even if charge-discharge cycles are repeated at a high temperature, deterioration of the capacity can be reduced.

When the average thickness of the material constituting the negative electrode active material layer is 1.0 $\mu$m or less, since the particle surface area per weight of the negative electrode material is sufficient, the reaction area for intercalation and deintercalation of Li ions can be sufficiently ensured. Therefore, even if doping is performed at room temperature and a high rate, doping of the negative electrode proceeds uniformly, and a micro-short circuit caused by a precipitate or the like thus hardly occurs. As a result, the load on the production equipment can be reduced. In addition, since the reaction resistance component of the internal resistance is reduced, the internal resistance can be reduced. On another front, even if charge-discharge cycles are repeated at a low temperature, precipitation and the like are unlikely to occur; therefore, deterioration of the capacity can be inhibited. Further, when the average thickness of the material constituting the negative electrode active material layer is 1.0 $\mu$m or less, since the particle size of the negative electrode material is small, reaction unevenness during charge-discharge cycles is unlikely to occur and, in this case, a decrease in the amount of cyclable lithium, which is caused by the decomposition reaction of the solvent of the electrolytic solution and the formation of a coating film due to local concentration of current, can be inhibited. As a result, even if charge-discharge cycles are repeated at a high temperature, deterioration of the capacity can be reduced.

The average thickness of the material constituting the negative electrode active material layer can be controlled by, for example, adjusting the particle size of the graphite functioning as the negative electrode active material or the composition of the negative electrode active material layer. The average thickness of the material constituting the negative electrode active material layer can be determined by the below-described local thickness analysis using a cross-sectional SEM.

• Void Diameter of Negative Electrode Active Material Layer

The negative electrode has a void diameter of preferably 0.15 $\mu$m to 0.7 $\mu$m (e.g., 0.15 $\mu$m to 0.70 $\mu$m), more preferably 0.15 $\mu$m to 0.68 $\mu$m, or 0.2 $\mu$m to 0.6 $\mu$m (e.g., 0.20 $\mu$m to 0.60 $\mu$m). When the void diameter of the negative electrode is 0.15 $\mu$m or more, voids of a size sufficient for the diffusion of the electrolytic solution are ensured. Therefore, even if doping is performed at room temperature and a high rate, doping of the negative electrode proceeds uniformly and, in this case, a micro-short circuit caused by a precipitate or the like hardly occurs. As a result, the load on the production equipment can be reduced. In addition, since the diffusion resistance component of the internal resistance is reduced, the internal resistance can be reduced. On another front, even if charge-discharge cycles are repeated at a low temperature, precipitation and the like are unlikely to occur; therefore, deterioration of the capacity can be inhibited. Further, when the void diameter of the negative electrode is 0.15 $\mu$m or more, since the electrolytic solution is easily diffused in the negative electrode active material layer, reaction unevenness during charge-discharge cycles is unlikely to occur. In this case, a decrease in the amount of cyclable lithium, which is caused by the decomposition reaction of the solvent of the electrolytic solution and the formation of a coating film due to local concentration of current, can be inhibited. As a result, even if charge-discharge cycles are repeated at a high temperature, deterioration of the capacity can be reduced.

When the void diameter of the negative electrode is 0.7 $\mu$m or less, the electrolytic solution is not retained more than necessary in the voids of the negative electrode active material layer. Therefore, the generation of gas caused by decomposition of the solvent is unlikely to occur. In this case, even if doping is performed at room temperature and a high rate, doping of the negative electrode proceeds uniformly, and a micro-short circuit, which is caused by a precipitate or the like generated by local concentration of current, thus hardly occurs. As a result, the load on the production equipment can be reduced. Further, when the void diameter of the negative electrode is 0.7 $\mu$m or less, contact points between active material particles are sufficiently ensured, and conductive paths are sufficiently formed. Therefore, the bulk resistance component of the internal resistance is reduced, so that the internal resistance can be reduced. Moreover, when the void diameter of the negative electrode is 0.7 $\mu$m or less, the electrolytic solution is not retained more than necessary in the voids of the negative electrode active material layer. Therefore, a decrease in the amount of cyclable lithium caused by the decomposition reaction of the solvent of the electrolytic solution and the formation of a coating film can be inhibited. As a result, even if charge-discharge cycles are repeated in a wide temperature range from low to high temperatures, deterioration of the capacity can be reduced. The void diameter of the negative electrode can be controlled by, for example, adjusting the solid content ratio of a negative electrode coating liquid. The void diameter of the negative electrode can be determined by the below-described mode diameter analysis in mercury porosimetry of the negative electrode.

• Void Volume of Negative Electrode Active Material Layer

The negative electrode has a void volume of preferably 0.5 cm$^3$/g to 1.2 cm$^3$/g (e.g., 0.50 cm$^3$/g to 1.20 cm$^3$/g), more preferably 0.6 cm$^3$/g to 1.1 cm$^3$/g (e.g., 0.60 cm$^3$/g to 1.10 cm$^3$/g), based on the weight of the negative electrode active material layer. The void volume of the negative electrode may be 0.3 cm$^3$/g or more; however, when it is 0.5 cm$^3$/g or more, the electrolytic solution is sufficiently retained in the voids of the negative electrode active material layer. Therefore, the diffusion resistance component of the internal resistance can be reduced, which is preferred. When the void volume of the negative electrode is 1.2 cm$^3$/g or less, conductive paths are sufficiently formed between negative electrode active material particles. Therefore, the bulk resistance component of the internal resistance can be reduced, which is preferred. The void volume of the negative electrode can be controlled by, for example, adjusting the amount of the conductive filler at the time of producing a negative electrode coating liquid. The void volume of the negative electrode can be determined by the below-described total pore volume analysis in mercury porosimetry of the negative electrode.

• Relationship Between Thickness of Negative Electrode Active Material Layer and Mode Diameter of Voids of Negative Electrode Active Material Layer

In cross-sectional SEM of the negative electrode, when the average local thickness of a material is defined as t ($\mu$m) and the mode diameter measured using a mercury porosimeter (the void diameter of the negative electrode active material layer) is defined as p ($\mu$m), the negative electrode preferably satisfies $1.0 \leq (1.35 - p)/t \leq 2.8$. The lower limit "1.0" is, for example, "1.00", and the upper limit "2.8" is, for example, "2.80". When the material thickness of the negative electrode is small, since the negative electrode is likely to be stuck due to a high density, there may be a case where it is difficult to fully utilize the surface of the material. Therefore, from the standpoint of the diffusion of the electrolytic solution, it is preferred to ensure a larger void size as the material thickness gets smaller. When the value of (1.35 - p)/t is 2.8 or less, since an appropriate void size of the electrode is ensured in accordance with the material thickness, the diffusion of the electrolytic solution is hardly hindered. Therefore, precipitation of Li is unlikely to occur even with repeated charging and discharging. Accordingly, deactivation of Li can be inhibited, as a result of which deterioration of the capacity particularly in a high-temperature charge-discharge cycle is likely to be inhibited.

As described above, a small material thickness of the negative electrode makes it difficult to fully utilize the surface of the material. Therefore, even if the voids are large and a large amount of the electrolytic solution is retained therein, the decomposition reaction of the electrolytic solution at the negative electrode can be inhibited. When the value of (1.35 - p)/t is 1.0 or more, since the void size of the electrode is not larger than necessary relative to the material thickness, the negative electrode tends not to retain the electrolytic solution more than necessary. Therefore, deterioration of the capacity caused by the decomposition reaction of the solvent of the electrolytic solution and a decrease in the amount of cyclable lithium caused by the formation of a coating film, particularly during high-temperature charge-discharge cycles, are likely to be inhibited. As a result, deterioration of the capacity is likely to be reduced. In the present disclosure, the value of (1.35 - p)/t is obtained by a material local thickness analysis in cross-sectional SEM of the negative electrode, and mercury porosimetry.

• Specific Surface Area of Negative Electrode Active Material Layer

The negative electrode active material layer has a specific surface area of preferably 8 m$^2$/g to 40 m$^2$/g (e.g., 8.0

$m^2/g$ to 40.0 $m^2/g$), more preferably 12 $m^2/g$ to 30 $m^2/g$ (e.g., 12.0 $m^2/g$ to 30.0 $m^2/g$), based on the weight of the negative electrode active material layer. When the specific surface area of the negative electrode active material layer is 8 $m^2/g$ or more, the reaction area for intercalation and deintercalation of Li ions can be sufficiently ensured. Therefore, even if doping is performed at room temperature and a high rate, doping of the negative electrode proceeds uniformly, and a micro-short circuit caused by a precipitate or the like thus hardly occurs. In this case, the load on the production equipment can be reduced. In addition, since the reaction resistance component of the internal resistance is reduced, the internal resistance can be reduced. On another front, even if charge-discharge cycles are repeated at a low temperature, precipitation and the like are unlikely to occur, so that deterioration of the capacity can be inhibited. Further, the reaction area for intercalation and deintercalation of Li ions is sufficiently ensured. Therefore, reaction unevenness during charge-discharge cycles is unlikely to occur and, in this case, a decrease in the amount of cyclable lithium, which is caused by the decomposition reaction of the solvent of the electrolytic solution and the formation of a coating film due to local concentration of current, can be inhibited. As a result, even if charge-discharge cycles are repeated at a high temperature, deterioration of the capacity can be reduced.

When the specific surface area of the negative electrode active material layer is 40 $m^2/g$ or less, the contact area between the solvent of the electrolytic solution and the negative electrode active material is reduced. Therefore, the generation of gas caused by decomposition reaction of the solvent of the electrolytic solution can be inhibited. In this case, since doping of the negative electrode proceeds uniformly, a micro-short circuit caused by a precipitate or the like hardly occurs. Therefore, doping can be performed at room temperature and at a high rate. In this case, the load on the production equipment can be reduced. Further, when the specific surface area of the negative electrode active material layer is 40 $m^2/g$ or less, the contact area between the solvent of the electrolytic solution and the negative electrode active material is reduced. Therefore, the amount of a coating film generated by decomposition of the electrolytic solution can be reduced. As a result, the internal resistance can be reduced. When the specific surface area of the negative electrode active material layer is 40 $m^2/g$ or less, the contact area between the solvent of the electrolytic solution and the negative electrode active material is reduced. Therefore, a decrease in the amount of cyclable lithium caused by the decomposition reaction of the solvent of the electrolytic solution and the formation of a coating film can be inhibited. In this case, even if charge-discharge cycles are repeated in a wide temperature range from low to high temperatures, deterioration of the capacity can be reduced.

The specific surface area of the negative electrode active material layer can be controlled by, for example, adjusting the specific surface area of the material to be used, or the negative electrode coating liquid. The specific surface area of the negative electrode active material layer can be measured by the below-described nitrogen gas adsorption method for the negative electrode active material layer.

• Thickness of Negative Electrode Active Material Layer

The negative electrode active material layer preferably has a thickness of 5 $\mu$m to 100 $\mu$m per side of the negative electrode power collector. A lower limit of the thickness of the negative electrode active material layer is more preferably 7 $\mu$m or more, still more preferably 10 $\mu$m or more. An upper limit of the thickness of the negative electrode active material layer is more preferably 80 $\mu$m or less, still more preferably 60 $\mu$m or less. When the thickness of the negative electrode active material layer is 5 $\mu$m or more, streaks and the like are unlikely to be generated at the time of coating the negative electrode active material layer; therefore, excellent coatability is likely to be obtained. When the thickness of the negative electrode active material layer is 100 $\mu$m or less, a high energy density is likely to be exerted by a reduction in cell volume. It is noted here that, when the negative electrode power collector has through-holes and/or irregularities, the thickness of the negative electrode active material layer refers to an average value of the thickness of the negative electrode active material layer per side of the negative electrode power collector in those parts that do not have the through-holes and/or irregularities.

• Bulk Density of Negative Electrode Active Material Layer

The negative electrode active material layer has a bulk density of preferably 0.50 $g/cm^3$ to 3.00 $g/cm^3$, more preferably 0.60 $g/cm^3$ to 2.50 $g/cm^3$, still more preferably 0.70 $g/cm^3$ to 2.00 $g/cm^3$. When the bulk density of the negative electrode active material layer is 0.50 $g/cm^3$ or higher, not only a sufficient strength is likely to be maintained, but also a conductivity between negative electrode active material particles is likely to be exerted. When the bulk density of the negative electrode active material layer is 3.00 $g/cm^3$ or lower, holes allowing sufficient diffusion of ions are likely to be ensured in the positive electrode active material layer.

(Negative Electrode Power collector)

The material constituting the negative electrode power collector is preferably a metal foil that has a high electron conductivity and does not deteriorate due to elution into the electrolytic solution, reaction with an electrolyte or ion, or the like. Examples of such a metal foil include, but not particularly limited to, an aluminum foil, a copper foil, a nickel foil, and a stainless steel foil. A copper foil is preferred as the negative electrode power collector. The metal foil may be an ordinary metal foil without irregularities or through-holes, or may be a metal foil having irregularities formed by embossing, chemical etching, electrolytic deposition, blasting, or the like, or a metal foil having through-holes, such as an expanded metal foil, a punched metal foil, or an etched foil. The negative electrode power collector is preferably a non-porous copper foil. It is more preferred that the positive electrode power collector be a non-porous aluminum foil and the negative electrode power collector be a non-porous copper foil.

The thickness of the negative electrode power collector is not particularly limited as long as the shape and the strength of the negative electrode can be sufficiently maintained, and it is, for example, preferably 1 to 100 $\mu$m.

The thickness of the negative electrode active material layer is preferably 10 $\mu$m to 100 $\mu$m per side, more preferably 10 $\mu$m to 70 $\mu$m per side, still more preferably 20 $\mu$m to 60 $\mu$m. When this thickness is 10 $\mu$m or more, the charge-discharge capacity is improved. On the other hand, when this thickness is 70 $\mu$m or less, the cell volume can be reduced, so that the energy density can be increased. Therefore, not only sufficient output characteristics can be obtained but also the cell volume can be reduced, so that the energy density can be increased. When the power collector has holes, the thickness of the negative electrode active material layer refers to an average value of the thickness per side of the power collector in those parts that do not have the holes.

(Relationship Between Lithium Fluoride in Negative Electrode Active Material Layer and Interfacial Resistance of Positive Electrode)

In the nonaqueous lithium power storage element, when the interfacial resistance between the positive electrode active material layer and the positive electrode power collector is defined as A [$\Omega cm^2$] and the concentration of lithium fluoride contained in the negative electrode with respect to the weight of the negative electrode active material layer is defined as B [mmol/g], A/B is preferably in a range of 0.02 to 250, more preferably 0.04 to 250, still more preferably 0.07 to 5.5. When A/B is 0.02 to 250, the internal resistance at the completion of a cell can be reduced, and the generation of gas in a high-temperature environment can be inhibited. The principle of these effects is not clear; however, it is presumed as follows.

When A/B is 0.02 to 250, the interfacial resistance component of the positive electrode and the resistance component attributed to lithium fluoride of the negative electrode are well-balanced, so that the internal resistance at the completion of a cell can be reduced. When A/B is 0.02 or more, since a large amount of lithium fluoride exists on the negative electrode, reductive decomposition of the electrolytic solution on the negative electrode under a high temperature condition is inhibited, so that the amount of gas can be reduced. When A/B is 250 or less, since the amount of lithium fluoride on the negative electrode is small, by-products generated by oxidative decomposition reaction of the electrolytic solution on the activated carbon surface that is exposed due to micro-peeling of the positive electrode power collector and the positive electrode active material layer, which is caused by expansion of aluminum under a high-temperature condition, can be trapped on the negative electrode, so that the generation or the amount of gas can be suppressed.

Examples of a method for incorporating lithium fluoride into the negative electrode active material layer include: a method of mixing the above-described lithium fluoride source or the below-described fluorine-containing compound into the negative electrode active material layer; a method of allowing the above-described lithium fluoride source or the below-described fluorine-containing compound to adsorb to the negative electrode active material layer; and a method of electrochemically depositing lithium fluoride on the negative electrode active material layer. Particularly, it is preferred to employ a method in which a material that can be decomposed to generate lithium fluoride is incorporated into a nonaqueous electrolytic solution in advance, and the decomposition reaction of the lithium compound of the positive electrode precursor induced by application of a voltage is utilized in the step of producing the power storage element to deposit the compound in the negative electrode active material layer, and the amount of lithium fluoride can be adjusted based on the applied voltage and the like.

Examples of the material that generates lithium fluoride include fluorine-containing compounds. Thereamong, from the standpoint of generating lithium fluoride through efficient decomposition without causing deterioration of properties, it is preferred to use a fluorine-containing electrolyte salt such as $(LiN(SO_2F)_2)$, $LiN(SO_2CF_3)_2$, $LiN(SO_2C_2F_5)_2$, $LiN(SO_2CF_3)(SO_2C_2F_5)$, $LiN(SO_2CF_3)(SO_2C_2F_4H)$, $LiC(SO_2F)_3$, $LiC(SO_2CF_3)_3$, $LiC(SO_2C_2F_5)_3$, $LiCF_3SO_3$, $LiC_4F_9SO_3$, $LiPF_6$, or $LiBF_4$ and, particularly, $LiPF_6$ and $LiBF_4$ are more preferred, and $LiPF_6$ is most preferred.

(Interfacial Resistance of Negative Electrode For Electric Double Layer Capacitor)

When the power storage element according to the present disclosure is an electric double layer capacitor, it is preferred that the negative electrode active material layer contain the above-described activated carbon, and that the interfacial resistance between the negative electrode active material layer and the negative electrode power collector of the negative electrode be 0.05 $\Omega$cm$^2$ to 5.00 $\Omega$cm$^2$, preferably in a range of 0.06 to 4.94 $\Omega$cm$^2$. It is noted here that the interfacial resistance may be obtained for the negative electrode taken out by disassembling the electric double layer capacitor after a cell is completed. When the interfacial resistance of the negative electrode is in the above-described numerical range, the electric double layer capacitor tends to have all of low resistance performance, vibration resistance, and high temperature durability.

(Frequency of Aggregates on Negative Electrode Surface)

On the surface of the negative electrode, the frequency of 20,000-$\mu$m$^2$ or larger aggregates is preferably 1 aggregate/cm$^2$ or less (e.g., 1.00 aggregates/cm$^2$ or less), more preferably 0.2 aggregates/cm$^2$ or less (0.20 aggregates/cm$^2$ or less). The frequency of 20,000-$\mu$m$^2$ or larger aggregates on the negative electrode surface may be 0 aggregates/cm$^2$ or more (e.g., 0.00 aggregates/cm$^2$ or more).

When the frequency of 20,000-$\mu$m$^2$ or larger aggregates on the negative electrode surface is 1 aggregate/cm$^2$ or less, the amount of irregularities on the negative electrode surface is sufficiently small. Therefore, when doping is performed at room temperature and a high rate, local concentration of current in the aggregates does not occur, so that doping of the negative electrode proceeds uniformly. In this case, a micro-short circuit caused by a precipitate or the like hardly occurs. Therefore, the load on the production equipment can be reduced. In addition, since local concentration of current in the aggregates hardly occurs, the entire negative electrode can be used uniformly, so that the internal resistance can be reduced. When the frequency of 20,000-$\mu$m$^2$ or larger aggregates on the negative electrode surface is 1 aggregate/cm$^2$ or less, the amount of irregularities on the negative electrode surface is sufficiently small. Therefore, even if charge-discharge cycles are repeated at a low temperature, precipitation is unlikely to occur on the aggregates. As a result, deterioration of the capacity can be inhibited. When the frequency of 20,000-$\mu$m$^2$ or larger aggregates on the negative electrode surface is 1 aggregate/cm$^2$ or less, the amount of irregularities on the negative electrode surface is sufficiently small. Therefore, reaction unevenness during charge-discharge cycles is unlikely to occur. In this case, a decrease in the amount of cyclable lithium, which is caused by the decomposition reaction of the solvent of the electrolytic solution and the formation of a coating film due to local concentration of current, can be inhibited. As a result, even if charge-discharge cycles are repeated at a high temperature, deterioration of the capacity can be reduced.

The negative electrode material has an average thickness of 0.2 $\mu$m to 1.0 $\mu$m, and the negative electrode active material layer has a specific surface area of 8 m$^2$/g to 40 m$^2$/g. In order to produce a negative electrode having such small material thickness and large specific surface area, it is preferred to use a graphite having an average particle size of preferably 9 $\mu$m or less and a specific surface area of preferably 10 m$^2$/g or more. However, it is believed that the use of such a graphite having a small particle size and a large specific surface area can lead to re-aggregation of the graphite in the negative electrode coating liquid during storage, and this can make it difficult to stably maintain a dispersion state and cause the generation of aggregates on the surface of the negative electrode after coating. In view of this, the present inventors discovered that the frequency of 20,000-$\mu$m$^2$ or larger aggregates on the negative electrode surface can be controlled by adjusting the storage temperature of the negative electrode coating liquid after the production thereof until coating. This enables the production of a negative electrode whose surface has a frequency of 20,000-$\mu$m$^2$ or larger aggregates of 1 aggregate/cm$^2$ or less, even with the use of a graphite having a small particle size and a large specific surface area. The frequency of 20,000-$\mu$m$^2$ or larger aggregates on the negative electrode surface can be measured by the method described below in the section of <Measurement of Frequency of Aggregates on Negative Electrode Surface>.

The negative electrode particularly preferably satisfies all of the following (1) to (4): (1) the negative electrode material has an average thickness of 0.2 $\mu$m to 1.0 $\mu$m; (2) the negative electrode active material layer has a void diameter (void mode diameter) of 0.15 $\mu$m to 0.7 $\mu$m; (3) the negative electrode active material layer has a specific surface area of 8 m$^2$/g to 40 m$^2$/g; and (4) the surface of the negative electrode has a frequency of 20,000-$\mu$m$^2$ or larger aggregates of 0 aggregates/cm$^2$ to 1 aggregate/cm$^2$. When these conditions are satisfied, a negative electrode in which not only the micro-short circuit rate in pre-doping performed at room temperature and a high rate is reduced and the internal resistance is further reduced, but also the cycle durability over a wide temperature range from low to high temperatures can be further improved, can be provided.

According to the above-described embodiments, the following can be achieved: first, the production equipment cost of a charge-discharge device and an incubator is reduced and, in the pre-doping step performed at room temperature and a high rate for improving the production takt, pre-doping is realized with a high yield by minimizing the occurrence of micro-short circuit; secondly, a nonaqueous lithium power storage element having a low internal resistance is realized; and, thirdly, shipment of a nonaqueous lithium power storage element is made possible with the same electrode and cell specifications from tropical to cold regions, whereby not only the productivity is improved but also the cycle durability over a wide temperature range from low to high temperatures is enhanced.

<Separator>

The positive electrode precursor and the negative electrode are laminated or wound via a separator to form an electrode laminate having the positive electrode precursor, the negative electrode, and the separator. As the separator, for example, a polyethylene or polypropylene microporous membrane used in nonaqueous lithium power storage elements, or a cellulose nonwoven paper used in electric double layer capacitors can be used. A film formed of organic or inorganic fine particles may be laminated on one or both sides of the separator. Further, organic or inorganic fine particles may be contained inside the separator.

The separator preferably has a thickness of 5 $\mu$m to 35 $\mu$m. By controlling the thickness of the separator to be 5 $\mu$m or more, self-discharge caused by internal micro-short circuit tends to be reduced, which is preferred. Meanwhile, by controlling the thickness of the separator to be 35 $\mu$m or less, the output characteristics of the power storage element tend to be improved, which is also preferred.

The film formed of organic or inorganic fine particles preferably has a thickness of 1 $\mu$m to 10 $\mu$m. By controlling this thickness to be 1 $\mu$m or more, self-discharge caused by internal micro-short circuit tends to be reduced, which is preferred. Meanwhile, by controlling this thickness to be 10 $\mu$m or less, the output characteristics of the power storage element tend to be improved, which is also preferred.

The separator may contain an organic polymer that is swollen by permeation of the nonaqueous electrolytic solution thereto, or an organic polymer may be used singly as an alternative to the separator. The organic polymer is preferably, for example, one which has good affinity with the nonaqueous electrolytic solution and is gelled when swollen by permeation of the electrolytic solution thereto. As the organic polymer, for example, any of polyethylene oxide, polyacrylonitrile, polyvinylidene fluoride, polymethyl methacrylate, and a mixture thereof can be preferably used since these materials are likely to exhibit high lithium ion conductivity when gelled.

The organic polymer can contain the electrolytic solution inside. In this case, an effect of preventing the outflow of the electrolytic solution from the nonaqueous lithium power storage element to the outside is obtained in the event of damage to a casing, which is preferred from a safety standpoint.

<Casing>

As the casing, a metal can, a laminated film, or the like can be used. The metal can is preferably made of aluminum. The shape of the metal can may be, for example, prismatic, round, or cylindrical. As the laminated film, a film obtained by laminating a metal foil and a resin film is preferred, and one example thereof is a film having a three-layer configuration consisting of an outer resin film, a metal foil, an inner resin film. The outer resin film is for preventing the metal foil from being damaged by contact or the like, and a resin such as nylon or polyester can be suitably used. The metal foil is for preventing permeation of moisture and gas, and a foil made of copper, aluminum, stainless steel, or the like can suitably be used. The inner resin film is for not only protecting the metal foil from the electrolytic solution stored inside but also for providing a melt seal at the time of heat-sealing the casing, and a polyolefin, an acid-modified polyolefin, or the like can be suitably used.

<Electrolytic solution>

As the electrolytic solution of the nonaqueous lithium power storage element, any electrolytic solution generally used in lithium ion secondary batteries or lithium ion capacitors can be used. The nonaqueous electrolytic solution preferably contains 0.5 mol/L or more of a lithium salt as an electrolyte, based on a total amount of the nonaqueous electrolytic solution. As this electrolyte lithium salt, any electrolyte generally used in nonaqueous lithium power storage elements can be used. Examples of a fluorine atom-containing lithium salt include $LiBF_4$, $LiPF_6$, $LiPO_2F_2$, LiFSI (= $LiN(SO_2F)_2$), LiTFSI (= $LiN(SO_2CF_3)_2$), $LiN(SO_2C_2F_5)_2$, $LiN(SO_2CF_3)(SO_2C_2F_5)$, $LiN(SO_2CF_3)(SO_2C_2F_4H)$, $LiC(SO_2F)_3$, $LiC(SO_2CF_3)_3$, $LiC(SO_2C_2F_5)_3$, $LiCF_3SO_3$, and $LiC_4F_9SO_3$. Examples of a fluorine atom-free lithium salt include $LiCiO_4$. These electrolytes may be used singly, or in combination of two or more thereof as a mixture. The nonaqueous electrolytic solution of the present embodiment may contain alkali metal ions, such as sodium ions or potassium ions, in addition to lithium ions. Further, examples of an organic solvent include cyclic carbonates typified by ethylene carbonate and propylene carbonate, and linear carbonates typified by dimethyl carbonate, diethyl carbonate, and ethyl methyl carbonate. These organic solvents may be used singly, or in combination of two or more thereof in any ratio as a mixture.

The electrolyte lithium salt concentration in the electrolytic solution is preferably in a range of 0.5 to 2.0 mol/L. When the electrolyte salt concentration is 0.5 mol/L or higher, anions exist in a sufficient amount, so that the capacity of the nonaqueous lithium power storage element is maintained. Meanwhile, when the electrolyte salt concentration is 2.0 mol/L or lower, the salt is sufficiently dissolved in the electrolytic solution, so that the electrolytic solution maintains appropriate viscosity and conductivity.

The nonaqueous electrolytic solution of the present embodiment preferably contains a cyclic carbonate and/or a linear carbonate as a nonaqueous solvent(s) (organic solvent(s)). These solvents may be used singly, or in combination of two or more thereof in any ratio as a mixture. The nonaqueous electrolytic solution may contain a cyclic carbonate and a linear carbonate from the standpoint of dissolving the lithium salt at the desired concentration and exhibiting high ion conductivity. Examples of the cyclic carbonate include alkylene carbonate compounds typified by ethylene carbonate, propylene carbonate, and butylene carbonate. These alkylene carbonate compounds are typically unsubstituted. Examples of the linear carbonate include dialkyl carbonate compounds typified by dimethyl carbonate, diethyl carbonate, methyl ethyl carbonate, dipropyl carbonate, and dibutyl carbonate. These dialkyl carbonate compounds are typically unsubstituted, and one or more selected from dimethyl carbonate, ethyl methyl carbonate, and diethyl carbonate are preferred.

A total content of the cyclic carbonate and the linear carbonate is preferably 50 parts by weight or more, more preferably 65 parts by weight or more, but preferably 95 parts by weight or less, more preferably 90 parts by weight or less, based on a total weight of the nonaqueous electrolytic solution. When the total content of the cyclic carbonate and the linear carbonate is 50 parts by weight or more, an alkali metal salt can be easily dissolved at the desired concentration, so that high ion conductivity is likely to be exerted. When the total content of the cyclic carbonate and the linear carbonate is 95 parts by weight or less, it is easy to further incorporate the below-described additives into the electrolytic solution. The ratio of the cyclic carbonate and the linear carbonate is preferably 15 to 50 parts by weight, more preferably 20 to 45 parts by weight, particularly preferably 25 to 40 parts by weight, in terms of the weight ratio of the cyclic carbonate with respect to a total weight of both carbonates.

As an electrolyte salt containing alkali metal ions that dissolves in the above-described nonaqueous solvent, for example, $MFSI$, $MBF_4$, or $MPF_6$, wherein M is Li, Na, K, Rb or Cs, can be used. The nonaqueous electrolytic solution of the present embodiment may contain at least one kind of alkali metal ion, and may contain two or more kinds of alkali metal salts, or an alkali metal salt and an alkaline earth metal salt selected from a beryllium salt, a magnesium salt, a calcium salt, a strontium salt, and a barium salt. When the nonaqueous electrolytic solution contains two or more kinds of alkali metal salts, an increase in viscosity at low temperatures can be inhibited because of the presence of cations having different Stokes radii in the nonaqueous electrolytic solution; therefore, the low-temperature characteristics of the nonaqueous lithium power storage element are improved. When the nonaqueous electrolytic solution contains an alkaline earth metal ion other than the above-described alkali metal ions, the capacity of the nonaqueous lithium power storage element can be increased since beryllium ion, magnesium ion, calcium ion, strontium ion, and barium ion are divalent cations.

A method of incorporating the above-described two or more kinds of alkali metal salts into the nonaqueous electrolytic solution or a method of incorporating an alkali metal salt and an alkaline earth metal salt into the nonaqueous electrolytic solution is not particularly limited, and alkali metal salts formed of two or more kinds of alkali metal ions may be dissolved in advance in the nonaqueous electrolytic solution, or the alkali metal salt and the alkaline earth metal salt may be dissolved in the nonaqueous electrolytic solution. Further, for example, a method of incorporating one or more of the following compounds into the positive electrode precursor, and decomposing the compounds in below-described pre-doping step may be employed: carbonates such as $M_2CO_3$, oxides such as $M_2O$, hydroxides such as MOH, halides such as MF and MCl, and carboxylates such as RCOOM (wherein, R represents H, an alkyl group, or an aryl group), in which M is at least one selected from Na, K, Rb, and Cs; alkaline earth metal carbonates selected from $BeCO_3$, $MgCO_3$, $CaCO_3$, $SrCO_3$, and $BaCO_3$; alkaline earth metal oxides; alkaline earth metal hydroxides; alkaline earth metal halides; and alkaline earth metal carboxylates.

The electrolyte lithium salt concentration in the electrolytic solution is preferably in a range of 0.5 to 2.0 mol/L. When the electrolyte salt concentration is 0.5 mol/L or higher, anions exist in a sufficient amount, so that the capacity of the nonaqueous lithium power storage element is maintained. Meanwhile, when the electrolyte salt concentration is 2.0 mol/L or lower, the salt is sufficiently dissolved in the electrolytic solution, so that the electrolytic solution maintains appropriate viscosity and conductivity.

When the nonaqueous electrolytic solution contains two or more kinds of alkali metal salts, or an alkali metal salt and an alkaline earth metal salt, a total concentration of these salts is preferably 0.5 mol/L or higher, more preferably in a range of 0.5 to 2.0 mol/L.

(Electrolytic solution of Electric Double Layer Capacitor)

As an electrolytic solution of an electric double layer capacitor, any electrolytic solution generally used in electric double layer capacitors can be used. For example, one obtained by dissolving an electrolyte in an organic solvent is used. As the electrolyte, it is preferred to use, for example, an ammonium salt such as a quaternary ammonium salt (e.g., tetraethylammonium tetrafluoroborate or triethylmonomethylammonium tetrafluoroborate), an amine salt, or an amidine salt. These electrolytes may be used singly, or in combination of two or more thereof. As the organic solvent, any known solvent can be used, and examples thereof include propylene carbonate, ethylene carbonate, dimethyl carbonate, methyl ethyl carbonate, diethyl carbonate, $\gamma$-butyrolactone, acetonitrile, propionitrile, and methoxyacetonitrile, among which propylene carbonate is particularly preferably used. These solvents may be used singly, or in combination of two or more thereof in any ratio as a mixture.

<Various Properties of Nonaqueous Lithium Power Storage Element>

(Current Pause Resistance)

In the nonaqueous lithium power storage element, a ratio ($R_1/R_2$) of the 5°C 10-second current pause resistance $R_1$ ($\Omega$) with respect to the 25°C 10-second current pause resistance $R_2$ ($\Omega$) (hereinafter, referred to as "current pause resistance ratio") is preferably 1.05 to 1.90. It is noted here that the "5°C 10-second current pause resistance $R_1$ ($\Omega$)" is a value determined by constant-current discharging the nonaqueous lithium power storage element at 18 A and 5°C from 4.0 V to 2.8 V, subsequently pausing the discharge, and dividing the voltage change ($\Delta V$) at 10 seconds after the pause by 18 A, while the "25°C 10-second current pause resistance $R_2$ ($\Omega$)" is a value determined by performing the same procedure at 25°C. When the current pause resistance ratio is in this range, lithium iron phosphate and activated carbon can both contribute to low-temperature charging and discharging; therefore, precipitation of lithium on the negative electrode side caused by uneven load can be inhibited. As a result, the micro-short circuit rate after a low-temperature constant-power cycle test can be reduced, which is preferred.

In a system in which the weight ratio of lithium iron phosphate in the positive electrode active material layer is high, aggregation of lithium iron phosphate occurs due to cross-linking of the binder and a thickener by $Fe^{3+}$ generated from lithium iron phosphate that is placed in an alkaline environment attributed to lithium carbonate in the produced positive electrode coating liquid. As a result, the current pause resistance ratio tends to be increased. A method of controlling the current pause resistance ratio is not particularly limited; however, it is preferred to, for example, inhibit the aggregation of lithium iron phosphate in the positive electrode under an alkaline environment by controlling the temperature during storage of the positive electrode coating liquid. By this, even when the ratio of lithium iron phosphate is high, the aggregation is inhibited, so that the ratio of the 5°C 10-second current pause resistance with respect to the 25°C 10-second current pause resistance can be reduced. A method of measuring the current pause resistance ratio will be described below.

(Ratio Between Discharge Capacity of Positive Electrode and Charge Capacity of Negative Electrode>

When the discharge capacity per unit area of the positive electrode is defined as A1 ($mAh/cm^2$) and the charge capacity per unit area of the negative electrode is defined as B1 ($mAh/cm^2$), A1 and B1 preferably satisfy $0.71 \leq A1/B1 \leq 0.96$. By this, the voltage change of a lithium ion secondary battery using LFP and/or LMFP in the final stage of discharging can be made gradual. The condition "$0.71 \leq A1/B1 \leq 0.96$" may be, for example, "$0.710 \leq A1/B1 \leq 0.960$".

This condition indicates a state in which the amount of lithium ions occluded in the negative electrode is greater than the amount of lithium ions that the positive electrode can occlude. In the final stage of discharging of a lithium ion secondary battery, the potential of the positive electrode using LFP and/or LMFP drops sharply, while the potential of the negative electrode rises sharply. In a lithium ion secondary battery that is not pre-doped, because of the absence of excess lithium ions that do not contribute to charging and discharging, the values of A1 and B1 are substantially the same. In the final stage of discharging of such a lithium ion secondary battery, a sharp fluctuation in the potential of the positive electrode overlaps with that of the negative electrode, resulting in a sharp fluctuation in the cell voltage. In the present embodiment, by configuring a lithium ion secondary battery to satisfy $A1/B1 \leq 0.96$, the negative electrode is prevented from completely releasing lithium ions even in the final stage of discharging of the lithium ion secondary battery, so that a fluctuation in the potential of the negative electrode can be inhibited. As a result, a fluctuation in the cell voltage can be alleviated. Further, by configuring the lithium ion secondary battery to satisfy $0.71 \leq A1/B1$, the amount of excess lithium ions that do not contribute to charging and discharging can be reduced, so that the energy density of the lithium ion secondary battery can be increased.

From the same standpoint as above, A1 and B1 more preferably satisfies the following relationship: $0.730 \leq A1/B1 \leq 0.950$.

The value of A1/B1 can be controlled by adjusting A1 and/or B1. For example, when the charge capacity per unit area of the positive electrode precursor is defined as A2 ($mAh/cm^2$), the discharge capacity per unit area of the positive electrode precursor is defined as A3 ($mAh/cm^2$), and the charge capacity per unit area of the negative electrode precursor is defined as B2 ($mAh/cm^2$), the above-described A1 and/or B1 can be controlled by adjusting A2, A3, and/or B2. The above-described A1 and/or B1 can be adjusted by, for example, performing the above-described pre-doping on a lithium ion secondary battery precursor that satisfies $0.65 \leq A3/A2 \leq 0.93$ and $1.03 \leq B2/A3 \leq 1.26$. The details will be described below in the section relating to production methods.

<<Method of Producing Nonaqueous Lithium Power Storage Element>>

A method of producing the nonaqueous lithium power storage element of the present disclosure comprises: the step of preparing a positive electrode coating liquid; the step of obtaining a positive electrode precursor; the step of producing a negative electrode; the step of producing an electrode laminate or a wound electrode body from the positive electrode precursor and the negative electrode; the step of housing the thus produced electrode laminate or wound electrode body in a casing, and injecting thereto a nonaqueous electrolytic solution; and the step of applying a voltage between the positive electrode precursor and the negative electrode to pre-dope the negative electrode active material layer with lithium ions. In order to obtain the nonaqueous lithium power storage element of the present disclosure, it is preferred that a dispersion or dissolution operation in the step of preparing a positive electrode coating liquid be performed at a temperature of 15°C or lower, and that the thus prepared positive electrode coating liquid be stored at a temperature of 15°C or lower until the step of obtaining a positive electrode precursor is performed.

<Production of Positive Electrode Coating Liquid>

In the present disclosure, a coating liquid used for the production of a positive electrode precursor or positive electrode is referred to as "positive electrode coating liquid". The positive electrode coating liquid may encompass not only the form of a known coating liquid, but also the form of a known suspension, dispersion, emulsion, composition, or mixture. The positive electrode coating liquid may be simply referred to as "slurry", "coating liquid", or the like. The positive electrode coating liquid contains solid components for the formation of a positive electrode precursor, such as a carbon material, a lithium-transition metal oxide, and an alkali metal compound, in a dispersion solvent. In addition, if necessary, the positive electrode coating liquid may also contain optional components, such as a conductive material, a binder, a dispersant, a dispersion stabilizer, and a pH modifier.

(Dispersion or Dissolution of Positive Electrode Coating Liquid)

The positive electrode coating liquid of the nonaqueous lithium power storage element can be produced by any known coating liquid production technique used for lithium ion secondary batteries, electric double layer capacitors, and the like. For example, a slurry-like coating liquid can be prepared by dispersing or dissolving a positive electrode active material and an alkali metal compound, along with other optional components that are used as required, in water or an organic solvent in an arbitrary order.

A dispersion method employed in the preparation of the positive electrode coating liquid is not particularly limited and, for example, a disperser such as a bead mill, a ball mill, a jet mill, a homogenizer, an emulsifying disperser, a planetary centrifugal mixer, a homo disperser, a multi-screw disperser, a planetary mixer, or a thin-film rotary high-speed mixer, can be suitably used. The dispersion can also be performed using a plurality of these dispersers in combination. In order to obtain the coating liquid in a favorable dispersion state, for example, in the case of using a thin-film rotary high-speed mixer, the dispersion is preferably performed at a circumferential velocity of 1 m/s to 50 m/s. When the circumferential velocity is 1 m/s or more, various materials are dissolved or dispersed in a favorable manner, which is preferred. Meanwhile, when the circumferential velocity is 50 m/s or less, since various materials are not destructed by heat or shear force generated by the dispersion, re-aggregation of the materials does not occur, which is also preferred. In order to inhibit the destruction of the materials caused by heat generated by the dispersion, the coating liquid is preferably dispersed with cooling.

• Dispersion or Diffusion When Using Lithium-Transition Metal Oxide

A method of producing the positive electrode coating liquid comprises, for example: dry-mixing solid components comprising a carbon material, a lithium-transition metal oxide, and an alkali metal compound; and subsequently mixing the thus dry-mixed solid components with a dispersion solvent to disperse the solid components. More specifically, the positive electrode coating liquid may be prepared by, for example, dry-mixing some or all of the solid components comprising a carbon material, a lithium-transition metal oxide, and an alkali metal compound (this process is hereinafter also referred to as "dry-blending"), and subsequently adding a dispersion solvent, and/or a liquid or slurry substance in which a binder, a dispersant, and a pH modifier are dissolved or dispersed in a dispersion solvent. Alternatively, the positive electrode coating liquid may be prepared by adding the solid components comprising a carbon material, a lithium transition metal oxide, and an alkali metal compound, which have been dry-mixed in advance, to the liquid or slurry substance in which a binder, a dispersant, and a pH modifier are dissolved or dispersed in a dispersion solvent. A dry-mixing method is not limited and, for example, the dry-mixing can be performed using a ball mill or the like.

In another embodiment, a carbon material and an alkali metal compound may be dry-mixed, and other solid components and a dispersion solvent may be subsequently mixed and dispersed by an arbitrary procedure. According to this procedure, the carbon material and the alkali metal compound are more intimately mixed, so that the electron conductivity of the alkali metal compound can be improved to facilitate the decomposition of the alkali metal compound in the pre-doping step, which is preferred. More specifically, the positive electrode coating liquid may be prepared by, for example, dry-mixing a portion or all of the carbon material and the alkali metal compound, subsequently adding a lithium-transition metal oxide and dry-mixing the resultant, and then adding a dispersion solvent, and/or a liquid or slurry substance in which a binder, a dispersant, and a pH modifier are dissolved or dispersed in a dispersion solvent. Alternatively, the positive electrode coating liquid may be prepared by adding, by an arbitrary procedure, the carbon material, the alkali metal compound, the lithium-transition metal oxide, and the like, which have been dry-mixed in advance, to the liquid or slurry substance in which a binder, a dispersant, and a pH modifier are dissolved or dispersed in a dispersion solvent. A dry-mixing method is not limited and, for example, the dry-mixing can be performed using a ball mill or the like.

In yet another embodiment, a conductive material and the above-described alkali metal compound may be dry-mixed, and other solid components and the above-described dispersion solvent may be subsequently mixed and dispersed by an arbitrary procedure. According to this procedure, the alkali metal compound having a low conductivity is coated with the conductive material, so that the electron conductivity of the alkali metal compound can be improved to facilitate the decomposition of the alkali metal compound in the pre-doping step, which is preferred. More specifically, the positive electrode coating liquid may be prepared by, for example, dry-mixing a portion or all of the conductive material and the alkali metal compound, subsequently adding a carbon material and a lithium-transition metal oxide and dry-mixing the resultant, and then adding a dispersion solvent, and/or a liquid or slurry substance in which a binder, a dispersant, and a pH modifier are dissolved or dispersed in a dispersion solvent. Alternatively, the positive electrode coating liquid may be prepared by adding, by an arbitrary procedure, the conductive material, the alkali metal compound, the carbon material, the lithium-transition metal oxide, and the like, which have been dry-mixed in advance, to the liquid or slurry substance in which a binder, a dispersant, and a pH modifier are dissolved or dispersed in a dispersion solvent. A dry-mixing method is not limited and, for example, the dry-mixing can be performed using a ball mill or the like.

• Temperature of Positive Electrode Coating Liquid When Using Lithium Iron Phosphate

In a system in which the weight ratio of lithium iron phosphate in the positive electrode active material layer is high, an activated carbon and a conductive material tend to form fine aggregates due to cross-linking of the binder and a thickener by $Fe^{3+}$ generated from lithium iron phosphate that is placed in an alkaline environment attributed to a lithium compound such as lithium carbonate during the production of the positive electrode coating liquid. As a result, the decomposition reaction of lithium carbonate in pre-doping hardly proceeds. In a conventional method of increasing the shear during dispersion, aggregates of larger than 10,000 $\mu m^2$ can be removed; however, an increase in the shear causes a slurry to generate heat, and this rather induces crosslinking of the binder and the thickener by $Fe^{3+}$, as a result of which fine aggregates of the activated carbon and the conductive material are generated. Therefore, it is preferred to inhibit the aggregation of the activated carbon and the conductive material in the positive electrode under an alkaline environment by controlling the temperature during dispersion of the positive electrode coating liquid. This allows the decomposition reaction of lithium carbonate to sufficiently proceed even when the ratio of lithium iron phosphate is high, so that the total pore volume and the void diameter can be adjusted. It is noted here that the temperature of the positive electrode coating liquid during dispersion is preferably 15°C or lower.

Further, in a system in which the weight ratio of lithium iron phosphate in the positive electrode active material layer is high, lithium iron phosphate forms fine aggregates as described above, and this leads to an increase in the amount of aggregates on the positive electrode surface and an increase in the volume resistivity of the positive electrode active material layer. Therefore, it is preferred to inhibit the aggregation of lithium iron phosphate in the positive electrode under an alkaline environment by controlling the temperature during storage of the positive electrode coating liquid. By this, an increase in the amount of aggregates on the positive electrode surface, an increase in the volume resistivity of the positive electrode active material layer, and an increase in the current pause resistance ratio can be inhibited. It is noted here that the temperature of the positive electrode coating liquid during storage is preferably 15°C or lower.

• Dispersion or Diffusion When Using Lithium Compound Composite

When the positive electrode coating liquid contains a lithium compound composite, in the step of dispersing the positive electrode coating liquid, a portion of a lithium compound and/or a portion of $MO_2$ may be separated from the lithium compound composite. Accordingly, the positive electrode active material layer may contain particles in which the lithium compound and/or $MO_2$ that are not in the form of the lithium compound composite exist by themselves. Even in such a state, $MO_2$ acts as a decomposition catalyst for the lithium compound; however, in order to enhance the effect, it is preferred to adjust the load during the dispersion such that the amount of separated lithium compound and/or $MO_2$ is reduced.

• Reduction of Trace Gas

In the production of a positive electrode coating liquid containing an activated carbon, the acidic/basic functional groups existing on the surface of the activated carbon are likely to react with a binder and a dispersant to generate submicron trace gas. During storage of the positive electrode coating liquid before the coating of positive electrode, there is a problem that aggregation of the active material and the like starts from this trace gas, resulting in the generation of aggregates of 1,000 $\mu$m$^2$ to 10,000 $\mu$m$^2$ on the surface of the positive electrode when observed. In a conventional method of increasing the shear during dispersion, aggregates of larger than 10,000 $\mu$m$^2$ can be removed; however, an increase in the shear causes a slurry to generate heat, and this rather facilitates the reactions of the acidic/basic functional groups existing on the surface of the activated carbon, leading to the generation of trace gas. As a result, aggregates of 1,000 $\mu$m$^2$ to 10,000 $\mu$m$^2$ are generated during storage of the positive electrode coating liquid, starting from the trace gas. Further, a conventional method of removing such trace gas by vacuum degassing or the like also has the same problem since the release of the gas contained in the pores of the activated carbon rather causes the generation of trace gas.

On the other hand, the present inventors discovered that, by lowering the temperature of the slurry during dispersion, the reactions of the acidic/basic functional groups existing on the surface of the activated carbon can be suppressed and the amount of aggregates generated during storage of the positive electrode coating liquid can thus be reduced, whereby the generation of fine aggregates of 1,000 $\mu$m$^2$ to 10,000 $\mu$m$^2$ on the surface of the positive electrode can be inhibited. From the standpoint of inhibiting the generation of aggregates by reducing the amount of trace gas, the temperature of the slurry is preferably 15°C or lower, most preferably 10°C, and it is preferred to keep the slurry at 15°C or lower also in the storage period after the completion of the coating liquid until coating.

At the time of the dispersion, the dispersant is preferably added in the form of an aqueous solution, not in a powder form. By adding the dispersant in the form of an aqueous solution, the activated carbon can be maintained in a favorable dispersion state, so that the generation of aggregates during storage of the coating liquid can be inhibited. Further, when lithium iron phosphate is contained as an active material, from the standpoint of inhibiting the generation of aggregates, it is preferably dispersed before the activated carbon. This is because, when the activated carbon is dispersed first, the dispersant adsorbs to the surface of the activated carbon that is rich in functional groups, and a shear is thus required for dispersing lithium iron phosphate, which is likely to cause heat generation, making the generation of trace gas by the reactions of the acidic/basic functional groups existing on the surface of the activated carbon more likely to occur.

(Solid Content Ratio of Positive Electrode Coating Liquid)

The positive electrode coating liquid preferably has a solid content ratio of 15% to 50%. When the solid content ratio is 15% or higher, drying after coating can be performed under mild conditions. When the solid content ratio is 50% or lower, the formation of coating streaks and cracks during coating can be inhibited. The "solid content ratio" refers to a ratio of a total weight of a carbon material, a lithium-transition metal oxide, an alkali metal compound, and other solid components such as a binder and a conductive material, with respect to a total weight of the coating liquid.

(Defoaming)

The coating liquid is preferably defoamed after the dispersion. Examples of a defoaming method include, but not particularly limited to: a method of stirring the coating liquid at a low speed under a reduced pressure environment; a method of leaving the coating liquid to stand; and a method of stirring the coating liquid at a low speed using a planetary centrifugal mixer. Further, aggregates in the dispersed coating liquid are preferably removed using a filter. By removing aggregates having a large particle size, the formation of streaks and the like on the resulting coating film can be inhibited.

(Degree of Dispersion of Positive Electrode Coating Liquid)

The degree of dispersion of the positive electrode coating liquid is preferably 0.1 $\mu$m to 100 $\mu$m in terms of granularity measured by a fineness gauge. As an upper limit of the degree of dispersion, the granularity is more preferably 80 $\mu$m or less, still more preferably 50 $\mu$m or less. When the granularity is 0.1 $\mu$m or less, the granularity is equal to or less than the particle size of various material powders comprising the positive electrode active material, and this means that the materials have been crushed during the production of the coating liquid, which is not preferred. Meanwhile, when the granularity is 100 $\mu$m or less, coating can be stably performed without clogging during discharge of the coating liquid, formation of streaks on the resulting coating film, and the like.

The degree of dispersion is a value determined by the dispersion evaluation test using a fineness gauge prescribed in JIS K5600. In other words, using a fineness gauge having a groove of desired depth corresponding the particle size, a sufficient amount of a sample is poured into a deeper end of the groove and allowed to slightly overflow from the groove. Subsequently, a scraper is placed such that its long side is parallel to the width direction of the fineness gauge and the blade edge of the scraper is in contact with the deeper end of the groove of the fineness gauge. The scraper is then, while being held such that it follows the gauge surface, dragged perpendicular to the long side of the groove on the gauge surface to the groove depth of 0 (zero) at a uniform speed over a period of 1 to 2 seconds and, within 3 seconds thereafter, the fineness gauge was observed under a light irradiated thereto at an angle of 20° to 30° to read the depth at which a particle appears in the groove.

(Viscosity of Positive Electrode Coating Liquid)

In one embodiment, the above-described coating liquid of the positive electrode precursor has a viscosity ($\eta b$) of preferably 100 mPa·s to 5,000 mPa·s, more preferably 200 mPa·s to 3,000 mPa·s. When the viscosity ($\eta b$) is 100 mPa·s or higher, dripping of the coating liquid during the formation of a coating film is inhibited, so that the width and the thickness of the coating film can be favorably controlled. Further, when the viscosity ($\eta b$) is 5,000 mPa·s or lower, not only coating can be stably performed using a coating machine since the loss of pressure in the flow path of the coating liquid is small, but also the thickness of the resulting coating film can be controlled to be not more than a desired level.

In another embodiment, the above-described positive electrode coating liquid has a viscosity ($\eta b$) of preferably 1,000 mPa·s to 20,000 mPa·s, more preferably 1,500 mPa·s to 10,000 mPa·s, still more preferably 1,700 mPa·s to 5,000 mPa·s. When the viscosity ($\eta b$) is 1,000 mPa·s or higher, dripping of the coating liquid during the formation of a coating film is inhibited, so that the width and the thickness of the coating film can be favorably controlled. Further, when the viscosity ($\eta b$) is 20,000 mPa·s or lower, not only coating can be stably performed using a coating machine since the loss of pressure in the flow path of the coating liquid is small, but also the thickness of the resulting coating film can be controlled to be not more than a desired level.

When the viscosity of the positive electrode coating liquid is defined as $\eta b_1$ and the viscosity of the positive electrode coating liquid after being left to stand for 24 hours following the measurement of $\eta b_1$ is defined as $\eta b_2$, $\eta b_2/\eta b_1$ is preferably 0.40 to 1.30. When $\eta b_2/\eta b_1$ is 0.40 or more, uneven distribution of the binder in the coating liquid is inhibited; therefore, the peel strength of the positive electrode precursor can be increased, and the loss of the positive electrode active material layer during pre-doping can be inhibited. When $\eta b_2/\eta b_1$ is 1.30 or less, modification of the binder in the coating liquid by an alkali compound is inhibited; therefore, the peel strength of the positive electrode precursor can be increased, and the loss of the positive electrode active material layer during pre-doping can be inhibited. Generally, the time required for coating the positive electrode precursor is often 24 hours or shorter per reel of the electrode and, by evaluating $\eta b_1$ as well as $\eta b_2$ that is the viscosity measured after a lapse of 24 hours from the measurement of $\eta b_1$, the uniformity of the electrode conditions, such as basis weight and film thickness, over a period from the start to the end of coating can be ensured. From the above-described standpoints, $\eta b_2/\eta b_1$ is more preferably in a range of 0.40 to 1.30.

(TI Value of Positive Electrode Coating Liquid)

The positive electrode coating liquid has a TI value (thixotropy index value) of preferably 1.1 or more, more preferably 1.2 or more, still more preferably 1.5 or more. An upper limit of the TI value is preferably 6.0 or less, more preferably 5.0 or less. When the TI value is 1.1 or more, the width and the thickness of the coating film can be favorably controlled. When the TI value is 6.0 or less, the generation of streaks and defects after the formation of the coating film is likely to be inhibited.

When the thixotropy index value of the positive electrode coating liquid is defined as $TI_1$ and the thixotropy index value of the positive electrode coating liquid after being left to stand for 24 hours following the measurement of $TI_1$ is defined as $TI_2$, $TI_2/TI_1$ is preferably 0.50 to 1.20. When $TI_2/TI_1$ is 0.50 or more, dripping of the coating liquid during coating of the electrode can be inhibited, and the capacity can be increased by making the thickness of the positive electrode active material layer uniform. When $TI_2/TI_1$ is 1.20 or less, a local increase in the thickness of the edge portion of the positive electrode active material layer can be inhibited, so that the loss of the positive electrode active material layer during pre-doping can be inhibited. By evaluating $TI_1$ as well as $TI_2$ that is the TI value measured after a lapse of 24 hours from the measurement of $TI_1$, the uniformity of the edge portion of the coating film in basis weight and film thickness over a period from the start to the end of coating can be ensured.

The viscosity ($\eta b$) and the TI value are values each determined by the following method. First, using an E-type viscometer, the viscosity ($\eta a$), which is stabilized after performing the measurement for 2 minutes or longer at a temperature of 25°C and a shear rate of 2 s$^{-1}$, is obtained. Next, the viscosity ($\eta b$) is obtained under the same conditions as described above, except that the shear rate is changed to 20 s$^{-1}$. From the thus obtained viscosity values, the TI value is calculated by the following equation: TI value = $\eta a/\eta b$. When increasing the shear rate from 2 s$^{-1}$ to 20 s$^{-1}$, the shear rate may be increased in one step, or may be increased in multiple steps within the above-described range while measuring the viscosity at each shear rate as appropriate. $TI_1$ and $\eta b_1$ are measured by the above-described method after dispersing the coating liquid for 1 minute using a planetary centrifugal mixer at a speed of 600 rpm. Subsequently, the coating liquid is left to stand for 24 hours in a sealed state under a 25°C environment. The values measured again thereafter are $TI_2$ and $\eta b_2$.

The weight of the positive electrode coating liquid used for the measurement is not particularly limited; however, it is preferably 10 g to 100 g from the standpoint of reducing variations in the measurement. When the weight is 10 g or more, reproducibility of the measurement is ensured. When the weight is 100 g or less, excellent ease of sample handling is obtained.

<Production of Positive Electrode Precursor>

The positive electrode precursor, which gives the positive electrode of the nonaqueous lithium power storage element, can be produced by any known electrode production technique used for lithium ion secondary batteries, electric double layer capacitors, and the like. For example, the positive electrode precursor can be obtained by preparing a coating liquid in the above-described manner, applying the coating liquid onto one or both sides of a positive electrode power collector to form a coating film, and drying the thus formed coating film. Further, the thus obtained positive electrode precursor may be pressed to adjust the film thickness or the bulk density of the positive electrode active material layer. Alternatively, a method in which the positive electrode active material and the alkali metal compound, as well as other optional components used as required, are dry-mixed without using a solvent, and the thus obtained mixture is press-molded, after which the resultant is attached to the positive electrode power collector using a conductive adhesive, or a method in which the obtained mixture is hot-pressed on the positive electrode power collector to form the positive electrode active material layer, can be employed.

(Formation of Coating Film)

For the formation of the coating film of the positive electrode precursor, preferably, but not particularly limited to, a coating machine such as a die coater, a comma coater, a knife coater, or a gravure coater can be used. The coating film may be formed by single-layer coating or multi-layer coating. In the case of multi-layer coating, the composition of the coating liquid may be adjusted such that the content of the alkali metal compound is different between the layers of the coating film. When applying the coating film onto the positive electrode power collector, multiple coating, intermittent coating, or multiple intermittent coating may be employed. Further, sequential coating, in which one side of the positive electrode power collector is coated and dried and the other side is then coated and dried, may be performed, or double-sided simultaneous coating in which both sides of the positive electrode power collector are simultaneously coated with the coating liquid and dried may be performed. When both sides of the positive electrode power collector are coated with the coating liquid, the ratio of each of the carbon material, the lithium-transition metal oxide, and the alkali metal compound between the front side and the back side is preferably 10% or less. For example, a ratio $A_1$ (front)/$A_1$ (back) between a weight $A_1$ (front) of activated carbon on the front side of the positive electrode power collector and a weight $A_1$ (back) of activated carbon on the back side is 0.9 to 1.1. Further, a thickness ratio of the positive electrode active material layer between the front side and the back side of the positive electrode power collector is preferably 10% or lower. The closer the weight ratio and the thickness ratio between the front side and the back side to 1.0, the less likely is the charge-discharge load to be concentrated on either side; therefore, the high-load charge-discharge cycle characteristics are improved.

Further, in the TD (direction perpendicular to the machine direction MD) of the positive electrode active material layer, the edge portion is preferably thinner than the center portion. In the formation of the below-described electrode body, the loss of the positive electrode active material layer is likely to occur in a portion close to a terminal part due to a stress applied thereto. Thus, by making the edge portion of the positive electrode active material layer thinner, the stress can be alleviated to inhibit the loss of the positive electrode active material layer. As for the range of the edge portion to be thinned, the thickness of the positive electrode active material layer within a range of 10% from the edge of the longest line segment of the positive electrode active material layer to the center side along the TD of the positive electrode active material layer is more preferably 90% or more but less than 100% of the thickness of the positive electrode active material layer at the midpoint of the longest line segment of the positive electrode active material layer. The coating speed is preferably 0.1 m/min to 100 m/min, more preferably 0.5 m/min to 70 m/min, still more preferably 1 m/min to 50 m/min. When the coating speed is 0.1 m/min or faster, coating can be stably performed. Meanwhile, when the coating speed is 100 m/min or slower, a sufficient coating accuracy can be ensured.

(Drying of Coating Film)

The coating film of the positive electrode precursor is dried preferably by a drying method such as hot-air drying or infrared (IR) drying, more preferably with far-infrared rays, near-infrared rays, or hot air of 80°C or higher. The coating film may be dried at a single temperature, or may be dried at varying temperatures in multiple stages. In addition, the drying may be performed using a combination of plural drying methods. The drying temperature is preferably 25°C to 200°C, more preferably 40°C to 180°C, still more preferably 50°C to 160°C. When the drying temperature is 25°C or higher, the solvent in the coating film can be sufficiently volatilized. Meanwhile, when the drying temperature is 200°C or lower, cracking of the coating film due to rapid volatilization of the solvent, uneven distribution of the binder due to migration, and oxidation of the positive electrode power collector or the positive electrode active material layer can be inhibited.

The water content in the positive electrode precursor after the drying is preferably 0.1% to 10%, taking the weight of the positive electrode active material layer as 100%. When the water content is 0.1 wt.% or more, deterioration of the binder caused by excessive drying is inhibited, so that the resistance can be reduced. When the water content is 10 wt.% or less, deactivation of alkali metal ions in the nonaqueous lithium power storage element is inhibited, so that the capacity can be increased.

When N-methyl-2-pyrrolidone (NMP) is used for adjusting the coating liquid, the content of NMP in the positive electrode precursor after the drying is preferably 0.1% to 10%, taking the weight of the positive electrode active material layer as 100%. When the content of NMP is 0.1 wt.% or more, deterioration of the binder caused by excessive drying is inhibited, so that the resistance can be reduced. When the content of NMP is 10 wt.% or less, the self-discharge characteristics of the nonaqueous lithium power storage element can be improved.

The water content in the positive electrode precursor can be measured by, for example, Karl Fischer titration (JIS K0068 (2001) "Test methods for water content of chemical products"). Further, NMP contained in the positive electrode precursor can be quantified based on a calibration curve prepared in advance, after extracting the NMP by impregnation of the positive electrode precursor with ethanol in an amount of 50 to 100 times the weight of the positive electrode active material layer for 24 hours under a 25°C environment, and subsequently measuring GC/MS.

(Pressing of Positive Electrode Precursor)

For pressing of the positive electrode precursor, a press machine such as a hydraulic press or a vacuum press can be preferably used. The thickness, the bulk density, and the electrode strength of the positive electrode active material layer can be adjusted by modifying the below-described pressing pressure, gap between press rolls, and surface temperature of the pressing part. The pressing pressure is preferably 0.5 kN/cm to 20 kN/cm, more preferably 1 kN/cm to 10 kN/cm, still more preferably 2 kN/cm to 7 kN/cm. When the pressing pressure is 0.5 kN/cm or higher, the electrode strength can be sufficiently increased. Meanwhile, when the pressing pressure is 20 kN/cm or lower, the positive electrode active material layer can be adjusted to have a desired thickness or bulk density, without bending or wrinkling of the positive electrode precursor. Further, the gap between press rolls can be set to any value in accordance with the thickness of the positive electrode precursor after the drying such that the positive electrode active material layer has a desired thickness or bulk density. Moreover, the pressing speed can be set to any speed that does not cause bending or wrinkling of the positive electrode precursor. The surface temperature of the pressing part may be room temperature, or the pressing part may be heated if necessary. A lower limit of the surface temperature of the pressing part when heated is preferably not lower than a temperature of [melting point of the binder to be used - 60°C], more preferably not lower than a temperature of [melting point of the binder - 45°C], still more preferably not lower than a temperature of [melting point of the binder - 30°C]. Meanwhile, an upper limit of the surface temperature of the pressing part when heated is preferably not higher than a temperature of [melting point of the binder to be used + 50°C], more preferably not higher than a temperature of [melting point of the binder + 30°C], still more preferably not higher than a temperature of [melting point of the binder + 20°C]. For example, when PVdF (polyvinylidene fluoride: melting point = 150°C) is used as the binder, the pressing part is heated to a temperature of preferably 90°C to 200°C, more preferably 105°C to 180°C, still more preferably 120°C to 170°C. When a styrene-butadiene copolymer (melting point = 100°C) is used as the binder, the pressing part is heated to a temperature of preferably 40°C to 150°C, more preferably 55°C to 130°C, still more preferably 70°C to 120°C.

The melting point of the binder can be determined based on the position of an endothermic peak in DSC (Differential Scanning Calorimetry). For example, using a differential scanning calorimeter "DSC7" manufactured by PerkinElmer Co., Ltd., 10 mg of a sample resin is set in the measuring cell and heated from 30°C to 250°C at a rate of 10°C/min in a nitrogen gas atmosphere, and the endothermic peak temperature in this heating process is the melting point.

The pressing may be performed multiple times with varying conditions of the pressing pressure, the gap, the speed, and the surface temperature of the pressing part. When the positive electrode precursor is multiple-coated, the positive electrode precursor is preferably slit before being pressed. By slitting and then pressing the multiple-coated positive electrode precursor, the generation of wrinkles, which is caused by stress applied to the power collector portion that is not coated with the positive electrode active material layer, can be inhibited. Further, the positive electrode precursor may be slit again after being pressed.

(Thickness of Positive Electrode Active Material Layer)

The positive electrode active material layer preferably has a thickness of 10 $\mu$m to 200 $\mu$m per side of the positive electrode power collector. The thickness of the positive electrode active material layer per side is more preferably 20 $\mu$m to 100 $\mu$m, still more preferably 30 $\mu$m to 80 $\mu$m. When this thickness is 10 $\mu$m or more, a sufficient charge-discharge capacity can be exerted. When this thickness is 200 $\mu$m or less, the ion diffusion resistance in the electrode can be kept low.

Therefore, not only sufficient output characteristics can be obtained but also the cell volume can be reduced, so that the energy density can be increased. It is noted here that, when the power collector has through-holes or irregularities, the thickness of the positive electrode active material layer refers to an average value of the thickness per side of the power collector in those parts that do not have the through-holes or irregularities.

(Peel Strength of Positive Electrode Active Material Layer)

The positive electrode active material layer of the positive electrode precursor preferably has a peel strength of 0.02 N/cm to 3.00 N/cm. When the peel strength is 0.02 N/cm or more, the loss of the positive electrode active material layer due to the generation of gas in the pre-doping step is suppressed, so that a micro-short circuit can be inhibited. When the peel strength is 3.00 N/cm or less, since this means the absence of excess binder or the like in the positive electrode active material layer, the diffusibility of the electrolytic solution is improved, so that the resistance can be reduced. The peel strength of the positive electrode active material layer is preferably 0.03 to 2.76 N/cm, more preferably 0.05 to 1.64 N/cm.
The peel strength of the positive electrode active material layer of the positive electrode precursor is a value measured after the above-described pressing and, when the pressing is performed multiple times, it is a value measured after the final pressing. When the below-described electrode body is produced without pressing, the peel strength is a value measured in a non-pressed state.
The peel strength of the positive electrode active material layer can be measured by any known method and, for example, a peel test in accordance with JIS Z0237 (2009) "Testing methods of pressure-sensitive adhesive tapes and sheets", or the test method described below in the section of Examples, may be used.
The peel strength of the positive electrode active material layer of the positive electrode can be measured as follows. The nonaqueous lithium power storage element adjusted to have a voltage of 2.9 V is disassembled to take out an electrode laminate, and the positive electrode is cut out from the electrode laminate and washed with an organic solvent. The organic solvent is not particularly limited as long as it can remove a decomposed product of the electrolytic solution deposited on the surface of the positive electrode; however, by using an organic solvent having a lithium compound solubility of 2% or less, the elution of a lithium compound is inhibited. As such an organic solvent, for example, a polar solvent such as methanol, ethanol, acetone, or methyl acetate can be preferably used. The thus obtained positive electrode is vacuum-dried, and the peel strength can be measured by the above-described method.

<Production of Negative Electrode>

The negative electrode can be produced by forming a negative electrode active material layer on one or both sides of a negative electrode power collector. In a typical aspect, the negative electrode active material layer is fixed to the negative electrode power collector. The negative electrode can be produced by any known electrode production technique used for lithium ion secondary batteries, electric double layer capacitors, and the like. For example, the negative electrode can be obtained by dispersing or dissolving various materials comprising a negative electrode active material in water or an organic solvent to prepare a slurry-like coating liquid, applying this coating liquid to one or both sides of the negative electrode power collector to form a coating film, and subsequently drying the coating film. Further, the thus obtained negative electrode may be pressed to adjust the film thickness or the bulk density of the negative electrode active material layer.

(Production of Negative Electrode Coating Liquid)

A method of preparing the negative electrode coating liquid is not particularly limited, and the preparation can be preferably performed using a disperser such as a homo disperser, a multi-screw disperser, a planetary mixer, a thin-film rotary high-speed mixer, or a planetary centrifugal mixer.
From the standpoint of controlling the mode diameter of the voids in the negative electrode active material layer to be in an appropriate range, it is preferred to adjust the solid content ratio of the negative electrode coating liquid to be 16% to 21% (e.g., 16.0% to 21.0%). There is a tendency that the mode diameter can be controlled to be large by lowering the solid content ratio, while the mode diameter can be controlled to be small by increasing the solid content ratio.
As a material of the negative electrode, the above-described graphite is preferably used. The present inventors focused on that the use of a graphite having a small particle size and a large specific surface area leads to the generation of aggregates on the surface of the negative electrode after coating. According to the results of intensive studies conducted by the present inventors, during a storage period at room temperature before coating, a dispersant, a binder, and the like are separated from the graphite in the negative electrode coating liquid and re-aggregation of the graphite occurs, in which case it may be difficult to stably maintain a dispersion state. In the present disclosure, it is preferred to set the storage temperature of the negative electrode coating liquid after the production thereof until coating to 15°C or lower, more preferably 10°C or lower, and the present inventors discovered that this is likely to inhibit the generation of aggregates. As a result, a negative electrode whose surface has a frequency of 20,000-$\mu m^2$ or larger aggregates of 1 aggregate/$cm^2$ or less can be easily produced even with the use of a graphite having a small particle size and a large specific surface area. It is preferred to maintain the storage temperature at 15°C or lower immediately after the dispersion of the negative electrode coating liquid until just before coating. A method of controlling the storage temperature is not particularly limited. The storage temperature can be controlled by adjustment of the temperature of the storage environment, water cooling of the coating liquid tank, or the like. By controlling the storage temperature by water cooling of the coating liquid tank or the like, the storage temperature can be controlled until just before coating, which is more preferred.

(Formation of Coating Film)

For the formation of the coating film of the negative electrode active material layer, preferably, but not particularly limited to, a coating machine such as a die coater, a comma coater, a knife coater, or a gravure coater can be used. The coating film may be formed by single-layer coating or multi-layer coating. In the case of multi-layer coating, the composition of the coating liquid may be adjusted such that the content of components is different between the layers of the coating film. When applying the coating film onto the negative electrode power collector, multiple coating, intermittent coating, or multiple intermittent coating may be employed. In the case of forming the negative electrode active material layer on both sides of the negative electrode power collector, sequential coating, in which one side of the negative electrode power collector is coated and dried and the other side is then coated and dried, may be performed, or double-sided simultaneous coating in which both sides of the negative electrode power collector are simultaneously coated with the coating liquid and dried may be performed. Further, in this case, the difference in the thickness of the negative electrode active material layer between the front side and the back side of the negative electrode power collector is preferably 10% or less of the average thickness of both sides. The closer the weight ratio and the thickness ratio of the negative electrode active material layer between the front side and the back side to 1.0, the less likely is the charge-discharge load to be concentrated on either side; therefore, the high-load charge-discharge cycle characteristics are likely to be improved.

(Drying of Coating Film)

After the formation of the coating film of the negative electrode active material layer on the negative electrode power collector, the coating film is dried. Drying of the coating film of the negative electrode precursor is preferably performed by an appropriate drying method such as hot-air drying or infrared (IR) drying, using far-infrared rays, near-infrared rays, or hot air. The coating film may be dried at a single temperature, or may be dried at varying temperatures in multiple stages. The drying may also be performed using a combination of plural drying methods. The drying temperature is preferably 25°C to 200°C, more preferably 40°C to 180°C, still more preferably 50°C to 160°C. When the drying temperature is 25°C or higher, the solvent in the coating film can be sufficiently volatilized. Meanwhile, when the drying temperature is 200°C or lower, cracking of the coating film due to rapid volatilization of the solvent, uneven distribution of the binder due to migration, and oxidation of the negative electrode power collector or the negative electrode active material layer are likely to be inhibited.

The water content in the negative electrode active material layer after the drying is preferably 0.1 wt.% to 10 wt.%, taking a total weight of the negative electrode active material layer as 100 wt.%. When the water content is 0.1 wt.% or more, deterioration of the binder caused by excessive drying is inhibited, so that the resistance is likely to be reduced. When the water content is 10 wt.% or less, deactivation of alkali metal ions is inhibited, so that the capacity is likely to be increased. When N-methyl-2-pyrrolidone (NMP) is used for adjusting the coating liquid, the content of NMP in the negative electrode active material layer after the drying is preferably 0.1 wt.% to 10 wt.%, taking a total weight of the negative electrode active material layer as 100%. The water content in the negative electrode active material layer can be measured by, for example, Karl Fischer titration (JIS K0068 (2001) "Test methods for water content of chemical products"). The amount of NMP contained in the negative electrode active material layer can be quantified based on a calibration curve prepared in advance, after extracting the NMP by impregnation of the negative electrode active material layer with ethanol in an amount of 50 to 100 times the weight of the negative electrode active material layer for 24 hours under a 25°C environment and subsequently measuring GC/MS.

(Pressing of Negative Electrode)

In order to keep the mode diameter of the voids of the negative electrode, which is adjusted with the solid content ratio of the negative electrode coating liquid, at an appropriate size, it is preferred not to perform pressing. The negative electrode active material layer may be pressed as long as the mode diameter of the voids of the negative electrode can be kept. Preferably, an appropriate press machine such as a hydraulic press, a vacuum press, or a roll press can be used. The thickness, the bulk density, and the electrode strength of the positive electrode active material layer can be adjusted by modifying the below-described pressing pressure, gap between press rolls, and surface temperature of the pressing part.

In the case of using a roll press for the pressing, the gap between press rolls can be set to an appropriate value such that the negative electrode active material layer has a desired thickness and a desired bulk density. The pressing speed can be set to an appropriate speed that does not cause bending or wrinkling of the negative electrode.

The surface temperature of the pressing part may be room temperature, or the pressing part may be heated if necessary. A lower limit of the surface temperature of the pressing part when heated is preferably not lower than a temperature of [melting point of the binder to be used - 60°C], more preferably not lower than a temperature of [melting point of the binder - 45°C], still more preferably not lower than a temperature of [melting point of the binder - 30°C]. Meanwhile, an upper limit of the surface temperature of the pressing part when heated is preferably not higher than a temperature of [melting point of the binder to be used + 50°C], more preferably not higher than a temperature of [melting point of the binder + 30°C], still more preferably not higher than a temperature of [melting point of the binder + 20°C]. For example, when polyvinylidene fluoride (melting point = 150°C) is used as the binder, the pressing part is heated to a temperature of preferably 90°C to 200°C, more preferably 105°C to 180°C, still more preferably 120°C to 170°C. When a styrene-butadiene copolymer (melting point = 100°C) is used as the binder, the pressing part is heated to a temperature of preferably 40°C to 150°C, more preferably 55°C to 130°C, still more preferably 70°C to 120°C. The melting point of the binder can be determined based on the position of an endothermic peak in DSC (Differential Scanning Calorimetry). For example, using a differential scanning calorimeter "DSC7" manufactured by PerkinElmer Co., Ltd., 10 mg of a sample resin is set in the measuring cell and heated from 30°C to 250°C at a rate of 10°C/min in a nitrogen gas atmosphere, and the endothermic peak temperature in this heating process is the melting point.

The pressing may be performed multiple times with varying conditions of the pressing pressure, the gap, the speed, and the surface temperature of the pressing part. When the negative electrode active material layer is multiple-coated, the negative electrode active material layer is preferably slit before being pressed. When the negative electrode is pressed without slitting the multiple-coated negative electrode active material layer, an excessive stress may be applied to the negative electrode power collector portion that is not coated with the negative electrode active material layer, and this may cause the generation of wrinkles. Moreover, the positive electrode precursor can be slit again following pressing. The negative electrode active material layer may be slit again after being pressed.

(Thickness of Negative Electrode Active Material Layer)

The negative electrode active material layer has a thickness of preferably 10 $\mu$m to 70 $\mu$m per side, more preferably 20 $\mu$m to 60 $\mu$m per side. When this thickness is 10 $\mu$m or more, a favorable charge-discharge capacity can be exerted. Meanwhile, when this thickness is 70 $\mu$m or less, the cell volume can be reduced, so that the energy density can be increased. When the power collector has holes, the thickness of the negative electrode active material layer refers to an average value of the thickness per side of the power collector in those parts that do not have the holes.

<Assembly Step: Production of Electrode Body>

In the assembly step, for example, an electrode laminate can be produced by connecting a positive electrode terminal and a negative electrode terminal to a laminate obtained by laminating the positive electrode precursor and the negative electrode, which have been cut into the form of sheets, via a separator. Alternatively, an electrode wound body may be produced by connecting a positive electrode terminal and a negative electrode terminal to a wound body obtained by laminating and winding the positive electrode precursor and the negative electrode via a separator. The shape of the wound electrode body may be a cylindrical shape or a flat shape.

A method of connecting the positive electrode terminal and the negative electrode terminal is not particularly limited and, for example, resistance welding or ultrasonic welding may be employed. A residual solvent is preferably removed by drying the electrode body (electrode laminate or wound electrode body) to which the terminals are connected. A drying method is not limited, and the drying can be performed by vacuum-drying or the like. The amount of the residual solvent is preferably 1.5 wt.% or less with respect to a total weight of the positive electrode active material layer or the negative electrode active material layer. When the amount of the residual solvent is 1.5 wt.% or less, the self-discharge characteristics are improved, which is preferred.

(Inhibition of Interfacial Delamination)

When activated carbon is used as the positive electrode active material and a non-porous or smooth-surface aluminum foil is used as the positive electrode power collector, peeling is likely to occur at the interface of the positive electrode active material layer and the positive electrode power collector due to heat and vibration generated during welding. From the standpoint of inhibiting such interfacial delamination and controlling the interfacial resistance of the positive electrode at or after the completion of a cell to be 5.00 $\Omega$cm$^2$ or less, when connecting the wound body or the laminate with an external terminal by welding, it is desired to immobilize the wound body or the laminate using a jig such as a stainless steel (SUS) sheet and to fix the entire surface using a spring with a load of 0.1 kgf/cm$^2$ or more. By this, the interfacial delamination between the smooth-surface aluminum foil used as the positive electrode power collector and the activated carbon of the positive electrode active material layer, which is caused by heat and vibration generated during welding, can be inhibited.

(Secondary Drying of Electrode Body)

The residual solvent in the positive electrode precursor or the negative electrode can be further reduced by secondary drying. In this secondary drying, the positive electrode precursor or the negative electrode can be heated by reduced pressure heating (vacuum heat drying), infrared heating, or the like. In the secondary drying, the positive electrode precursor or the negative electrode may be dried at a single temperature, or may be dried at varying temperatures in multiple stages. In the case of reduced pressure heating, the residual solvent in the positive electrode precursor or the negative electrode active material layer can be efficiently reduced by lowering the pressure. Such electrode secondary drying may be performed at any timing after the primary drying of the electrode but before the injection of an electrolytic solution, and it is preferred to select the timing in consideration of the efficiency of reducing the residual solvent and the productivity. The amount of the residual solvent is preferably 1.5 wt.% or less with respect to a total weight of the positive electrode active material layer or the negative electrode active material layer. When the amount of the residual solvent is more than 1.5 wt.%, the solvent remains in the system and causes deterioration of the self-discharge characteristics, which is not preferred.

The thus dried electrode body is preferably housed in a casing typified by a metal can or a laminated film under a dry environment having a dew point of -40°C or lower, and this casing is preferably sealed with an opening for injection of a nonaqueous electrolytic solution being left only on one side. When the dew point is -40°C or lower, water can be prevented from remaining in the system by adhering to the electrode body, so that the self-discharge characteristics are improved, which is preferred. A method of sealing the casing is not particularly limited and, for example, heat sealing or impulse sealing may be employed.

<Injection, Impregnation, and Sealing Steps>

After the assembly step, a nonaqueous electrolytic solution is injected into the electrode body housed in the casing. After this injection, it is desired to sufficiently impregnate the positive electrode, negative electrode, and separator with the nonaqueous electrolytic solution. In a state where at least a portion of the positive electrode, the negative electrode, and the separator is not impregnated with the electrolytic solution, lithium doping proceeds heterogeneously in the below-described lithium doping step; therefore, the resulting nonaqueous lithium power storage element exhibits an increased resistance and a reduced durability. An impregnation method is not particularly limited and, for example, a method in which the electrode body after the injection is placed in a decompression chamber with the casing being in an open state, and the inside of the chamber is brought into a decompressed state using a vacuum pump and subsequently brought back to the atmospheric pressure, may be employed. After the impregnation, the casing in an open state can be sealed and tightly closed while decompressing the electrode body.

(Control of Interfacial Resistance of Positive Electrode)

When activated carbon is contained as the positive electrode active material and a non-porous or smooth-surface aluminum foil is used as the positive electrode power collector, it is preferred to inhibit not only the occurrence of swelling of the positive electrode active material layer during the impregnation, but also the occurrence of peeling at the interface of the positive electrode active material layer and the positive electrode power collector that is caused by air discharged from the pores of the activated carbon of the positive electrode active material at the time of permeation of the electrolytic solution into the pores. For this purpose, it is preferred to reduce the decompression rate in a high vacuum state during the impregnation. This can slow down the permeation of the electrolytic solution into the positive electrode active material layer and the pores of the activated carbon of the positive electrode active material, so that the interfacial delamination can be inhibited. Specifically, it is desired to perform multi-stage decompression in which the pressure is reduced at a rate of about 1.0 kPals down to -50 kPa based on the atmospheric pressure, and this rate is lowered to about 0.1 kPals at -50 kPa or below. By this, the interfacial resistance between the positive electrode active material layer and the positive electrode power collector at the completion of a cell can be controlled to be 0.05 Ωcm$^2$ to 5.00 Ωcm$^2$.

(Secondary Drying of Electrode)

The residual solvent in the positive electrode precursor or the negative electrode can be further reduced by secondary drying. In this secondary drying, the positive electrode precursor or the negative electrode can be heated by reduced pressure heating (vacuum heat drying), infrared heating, or the like. In the secondary drying, the positive electrode precursor or the negative electrode may be dried at a single temperature, or may be dried at varying temperatures in multiple stages. In the case of reduced pressure heating, the residual solvent in the positive electrode precursor or the negative electrode active material layer can be efficiently reduced by lowering the pressure. Such electrode secondary drying may be performed at any timing after the primary drying of the electrode but before the injection of the electrolytic solution, and it is preferred to select the timing in consideration of the efficiency of reducing the residual solvent and the productivity. The amount of the residual solvent is preferably 1.5 wt.% or less with respect to a total weight of the positive electrode active material layer or the negative electrode active material layer. When the amount of the residual solvent is more than 1.5 wt.%, the solvent remains in the system and causes deterioration of the self-discharge characteristics, which is not preferred.

<Lithium Doping Step>

In the lithium doping step, it is preferred to pre-dope the negative electrode active material layer with lithium ions by applying a voltage between the positive electrode precursor and the negative electrode to cause the lithium compound in the positive electrode precursor to be decomposed and release lithium ions, and reducing the lithium ions at the negative electrode. In this lithium doping step, gas such as $CO_2$ is generated in association with the oxidative decomposition of the lithium compound in the positive electrode precursor. Therefore, when applying a voltage, it is preferred to implement a means for releasing the generated gas to the outside of the casing. Examples of such means include: a method of applying a voltage with the casing being partially open; and a method of applying a voltage with an appropriate gas release means, such as a gas vent valve or a gas-permeable film, being installed in advance in a part of the casing. It is noted here that, when an alkali metal is used, "lithium doping" is read as "alkali doping" (the same applies below).

The voltage to be applied in the doping step is preferably 4.3 V to 4.6 V. In this range, the oxidative decomposition of the lithium compound proceeds, and excessive coating film formation on the positive electrode active material can be inhibited. By increasing the doping voltage, lithium fluoride in the negative electrode active material layer can be increased.

The temperature of the doping step is preferably 40°C to 70°C. In this range, the oxidative decomposition of the lithium compound proceeds, and excessive coating film formation on the positive electrode active material can be inhibited. By increasing the doping voltage, lithium fluoride in the negative electrode active material layer can be increased. Further, by raising the doping temperature, the decomposition of the lithium compound is accelerated, and the formation of voids in the positive electrode active material layer is facilitated.

(Lithium Doping When Using Lithium Compound Composite)

When the positive electrode active material layer contains a lithium compound composite, it is preferred to perform the pre-doping (lithium doping) step at a temperature of 20°C to 60°C. In this aspect, the positive electrode active material containing lithium ions and the lithium compound in the lithium compound composite function as a dopant source of lithium ions for the negative electrode active material. In the lithium doping step, it is preferred to pre-dope the negative electrode active material layer with lithium ions by applying a voltage between the positive electrode precursor and the negative electrode precursor to cause the lithium compound in the positive electrode precursor to be decomposed and release lithium ions, and reducing the lithium ions at the negative electrode precursor.

When the positive electrode active material layer contains a lithium compound composite, the voltage to be applied between the positive electrode precursor and the negative electrode precursor in the pre-doping is preferably 4.2 V or higher. This voltage is preferably 4.2 to 5.0 V, more preferably 4.3 to 4.9 V. As a voltage application method, for example, a method of applying a constant voltage of 4.2 V or higher using a charge-discharge device, a power supply, or the like; a method of superimposing a pulse voltage at the time of applying a constant voltage of 4.2 V or higher; or a method of performing a charge-discharge cycle in a voltage range that comprises a voltage of 4.2 V or higher using a charge-discharge device, may be employed. When the pre-doping is performed by constant-current constant-voltage charging, the pre-doping can be judged to be completed once the current value in constant-voltage charging is 0.3 times or less the current value in constant-current charging. Although the decomposition of the lithium compound in the positive electrode precursor leads to a flow of electric current, the current value decreases with a reduction in the amount of the lithium compound. The decomposition reaction of the electrolytic solution proceeds along with the decomposition of the lithium compound as a result of applying a voltage of 4.2 V or higher; however, by completing the pre-doping at the point when the current value has decreased to 0.3 times or less the current value in constant-current charging, not only a sufficient amount of the lithium compound is likely to be decomposed, but also the decomposition of the electrolytic solution, which is a side reaction, is likely to be inhibited.

When the positive electrode active material layer contains a lithium compound composite, it is preferred that the temperature of a lithium ion secondary battery during the pre-doping be adjusted to be 20°C to 60°C. When this temperature is 20°C or higher, the decomposition of the lithium compound is facilitated, so that the pre-doping can be easily performed in a short time. When the temperature is 60°C or lower, side reactions associated with the decomposition of the lithium compound are likely to be inhibited.

(Degassing)

In the pre-doping operation, gas such as $CO_2$ is generated in association with the oxidative decomposition of the lithium compound in the positive electrode precursor. Therefore, when applying a voltage, it is preferred to implement a means for releasing the generated gas to the outside of the casing. Examples of such means include: a method of applying a voltage with the casing being partially open; and a method of applying a voltage with an appropriate gas release means, such as a gas vent valve or a gas-permeable film, being installed in advance in a part of the casing.

<Aging Step>

After the lithium doping step, the electrode body is preferably aged. In this aging step, the solvent in the electrolytic solution is decomposed at the negative electrode, and a lithium ion-permeable solid polymer film is formed on the negative electrode surface. An aging method is not particularly limited and, for example, a method of allowing the solvent in the electrolytic solution to react in a high temperature environment may be employed.

<Degassing Step>

After the aging step, it is preferred to further perform degassing so as to surely remove the gas remaining in the electrolytic solution, the positive electrode, and the negative electrode. This can prevent the gas remaining in at least a part of the electrolytic solution, the positive electrode, and the negative electrode from interfering with ion conduction to cause an increase in the resistance of the resulting nonaqueous lithium power storage element. A degassing method is not particularly limited and, for example, a method in which the electrode laminate is placed in a decompression chamber with the casing being in an open state, and the inside of the chamber is brought into a decompressed state using a vacuum pump may be employed. After the degassing, the casing is sealed and tightly closed, whereby a nonaqueous lithium power storage element can be produced.

A nonaqueous lithium power storage element can be produced by the above-described method. When the positive electrode precursor contains a lithium compound composite, this nonaqueous lithium power storage element may include: a positive electrode that contains $MO_2$ remaining after the decomposition of the lithium compound in the lithium compound composite contained in the positive electrode precursor; and a negative electrode that has a negative electrode active material layer doped with lithium ions using the lithium compound as a dopant source. The positive electrode may further contain the lithium compound that was not decomposed during pre-doping.

<Cell Design of Nonaqueous Lithium Power Storage Element Precursor>

When the charge capacity per unit area of the positive electrode precursor is defined as A2 (mAh/cm$^2$), the discharge capacity per unit area of the positive electrode precursor is defined as A3 (mAh/cm$^2$), and the charge capacity per unit area of the negative electrode precursor is defined as B2 (mAh/cm$^2$), these precursors are preferably configured such that $0.65 \leq A3/A2 \leq 0.93$ and $1.03 \leq B2/A3 \leq 1.26$ are satisfied. By this, the voltage change of a lithium ion secondary battery using LFP and/or LMFP in the final stage of discharging can be made gradual. The condition "$0.65 \leq A3/A2 \leq 0.93$" may be, for example, "$0.650 \leq A3/A2 \leq 0.930$", and the condition "$1.03 \leq B2/A3 \leq 1.26$" may be, for example, "$1.030 \leq B2/A3 \leq 1.260$".

In the relationship of A2 and A3, a condition of $A3/A2 \leq 0.93$ indicates that the amount of lithium ions that the positive electrode precursor can occlude is smaller than the amount of lithium ions released from the positive electrode precursor. In other words, this condition indicates the presence of a certain amount of a lithium ion source (lithium ions derived from a lithium compound) other than the positive electrode active material in the positive electrode precursor. Further, a condition of $1.03 \leq B2/A3$ indicates that the amount of lithium ions that the negative electrode precursor can occluded is greater than that of the positive electrode precursor. A lithium ion secondary battery precursor satisfying these relationships satisfies the above-described lithium ion secondary battery cell design of $A1/B1 \leq 0.96$.

On the other hand, a condition of $0.65 \leq A3/A2$ indicates the absence of excess lithium ion source in the positive electrode precursor. Further, in a condition of $B2/A3 \leq 1.26$, excess negative electrode active material can be reduced. A lithium ion secondary battery precursor satisfying these relationships satisfies the above-described lithium ion secondary battery cell design of $0.71 \leq A1/B1$. The value of A3/A2 and/or that of B2/A3 can be controlled by adjusting A2, A3, and/or B2. With regard to the above-described A2, A3, and/or B2, the value of A3/A2 can be adjusted by, for example, adjusting the mixing amount of the positive electrode active material and the lithium compound in the production of the positive electrode precursor. Subsequently, in the production of the positive electrode precursor, the value of A2 and/or that of A3 can be adjusted by adjusting the thickness of the resulting coating film such that the active material layer has a desired basis weight. Further, in the production of the negative electrode precursor, the value of B1 can be adjusted by adjusting the mixing amount of an active material and the like such that a desired composition is obtained, and adjusting the thickness of the resulting coating film such that the active material layer has a desired basis weight.

<<Power Storage Module>>

A power storage module can be produced using the nonaqueous lithium power storage element of the present disclosure. A desired power storage system can be produced by, for example, connecting a plurality of the nonaqueous lithium power storage elements in series or in parallel.

The power storage module of the present disclosure can achieve both high input-output characteristics and high-temperature safety and, therefore, can be used as, for example, a power regeneration assist system, a power load leveling system, an uninterruptible power supply system, a contactless power supply system, an energy harvesting system, a power storage system, a photovoltaic power generation/storage system, an electric power steering system, an emergency power supply system, an in-wheel motor system, an idling stop system, an electric vehicle, a plug-in hybrid vehicle, a hybrid vehicle, an electric motorcycle, a quick-charging system, or a smart grid system.

A power storage system is suitably used for natural power generation such as photovoltaic or wind power generation; a power load leveling system is suitably used in microgrids and the like; and an uninterruptible power source system is suitably used in factory production equipment and the like. In a contactless power supply system, the nonaqueous lithium power storage element is suitably used for leveling of voltage fluctuations in microwave power transmission, electric field resonance, or the like, as well as for energy storage; and, in an energy harvesting system, the nonaqueous lithium power storage element is suitably used for the use of electric power generated by vibration power generation or the like.

In a power storage system, as a cell stack, a plurality of the nonaqueous lithium power storage elements are connected in series or in parallel, or the nonaqueous lithium power storage element is connected in series or in parallel with a lead-acid battery, a nickel-metal hydride battery, a lithium ion secondary battery, a sodium ion secondary battery, a zinc ion secondary battery, a fluoride ion secondary battery, or a fuel cell. Further, the nonaqueous lithium power storage element of the present disclosure can achieve both high input-output characteristics and high-temperature safety and, therefore, can be mounted in vehicles, such as electric vehicles, plug-in hybrid vehicles, hybrid vehicles, and electric motorcycles. The above-described power regeneration assist system, electric power steering system, emergency power supply system, in-wheel motor system, idling stop system, or a combination thereof is suitably mounted in vehicles.

EXAMPLES

Examples and Comparative Examples of the present disclosure will now be described concretely; however, the present disclosure is not limited by the below-described Examples and Comparative Examples at any rate.

<<Measurement and Evaluation Methods>>

<Frequency of 1,000-$\mu m^2$ to 10,000-$\mu m^2$ Aggregates on Positive Electrode Surface>

The frequency of 1,000-$\mu m^2$ to 10,000-$\mu m^2$ aggregates on the surface of a positive electrode is determined by the following method. In the case of a nonaqueous lithium power storage element, first, the voltage was adjusted by performing constant-current discharge to 2.0 V at a 1 C-rate current value and subsequently performing 2.0-V constant-voltage discharging for 1 hour in a 25°C environment. Thereafter, the nonaqueous lithium power storage element was disassembled in an argon atmosphere having a dew point of -60°C or lower, and the positive electrode was taken out. The thus obtained positive electrode was washed three times with methyl ethyl carbonate and then vacuum-dried at 25°C for 12 hours to obtain a positive electrode sample.

In the case of an electric double layer capacitor, the voltage was adjusted by performing constant-current discharge to 0 V at a 1 C-rate current value and subsequently performing 0-V constant-voltage discharging for 1 hour in a 25°C environment. Thereafter, the electric double layer capacitor was disassembled in an argon atmosphere having a dew point of -60°C or lower, and the positive electrode was taken out. The thus obtained positive electrode was washed three times with methyl ethyl carbonate and then vacuum-dried at 25°C for 12 hours to obtain a positive electrode sample.

The positive electrode sample of at least 8 cm × 6 cm in size was measured using a scanner (MP C5503, manufactured by Ricoh Co., Ltd.). The settings in this measurement are as follows: color tone = grayscale, resolution = 600 dpi, concentration = medium, file format = JPEG/TIFF, load size = size including the entire positive electrode sample, and other settings = default. A region of the thus scanned image excluding the 1-cm portions from both vertical and horizontal ends is loaded to ImageJ (ver. 1.53t). For the thus loaded image, on ImageJ, "Type" is converted to 8-bit, "Mean" (average brightness) is obtained using the getStatistics function, and the image is binarized with "Min" and "Max" under "Threshold" being set to "Mean +15" and "255", respectively, after which "Distance" of scale, "Known", and "Unit" are set to "600", "25400", and "$\mu$m", respectively (i.e., the width of 600 pixels corresponds to 1 inch (25.4 mm)) to obtain Area distribution using the "Analyze Particles" function. From the thus obtained Area distribution, the number n of 1,000-$\mu$m$^2$ to 10,000-$\mu$m$^2$ areas deemed as aggregates is counted. Using the area S (cm$^2$) of the region analyzed by ImageJ, the frequency Dn of 1,000-$\mu$m$^2$ to 10,000-$\mu$m$^2$ aggregates was calculated by Dn = n/S.

<Total Pore Volume of Positive Electrode>

The total pore volume of the positive electrode according to the present disclosure based on the weight of the positive electrode active material layer is determined by mercury porosimetry. The voltage of the nonaqueous lithium power storage element was adjusted by performing constant-current discharge to 2.0 V at a 1 C-rate current value and subsequently performing 2.0-V constant-voltage discharging for 1 hour in a 25°C environment. Thereafter, the nonaqueous lithium power storage element was disassembled in an argon atmosphere having a dew point of - 60°C or lower, and the positive electrode was taken out. The thus obtained positive electrode was washed three times with methyl ethyl carbonate and then vacuum-dried at 25°C for 12 hours to obtain a positive electrode sample. When the weight of the positive electrode, the area of the positive electrode, and the basis weight of the power collector are defined as $M_1$ (g/electrode), $S_1$, and $m_1$ (g/m$^2$), respectively, the weight of the active material layer weight per positive electrode sample is calculated by M = $M_1$ - $S_1$ × $m_1$ (g). The pore distribution was measured using "AutoPore 9500" manufactured by Micromeritics Instrument Corporation. The sample was placed in a sample container and degassed, and mercury was subsequently introduced into the sample container, after which the pressure was gradually increased to inject the mercury into the pores of the sample (maximum pressure: 0.33 Mpsia). From the relationship between the pressure and the amount of injected mercury in this process, the pore distribution of the sample is determined using the following equation. In the calculation of the pore diameter, when mercury is injected into a cylindrical pore having a diameter D with a pressure P, the following equation is established based on the balance between the surface tension and the pressure acting on a cross section of the pore:

$$D = -(1/P)4\gamma\cos\theta$$

wherein, $\theta$ represents the contact angle of mercury, and y represents the surface tension of mercury.

In the present disclosure, the contact angle $\theta$ and the surface tension $\gamma$ of mercury were assumed to be 130° and 485°/cm, respectively. The differential pore volume $dV_{tot}/dD$, wherein $V_{tot}$ (cc) represents a total injection amount, was obtained. This value was integrated in a membrane pore range (0.0055 to 5 $\mu$m) to determine the total injection amount $V_{tot}$ (cc). The total pore volume $I_{tot}$ (cc/g) was calculated from the weight M (g) of the active material layer of the sample using the following equation:

$$I_{tot} = V_{tot}/M$$

<Void Diameter of Positive Electrode Active Material Layer>

The void diameters D25 and D75 of the positive electrode active material layer according to the present disclosure and the value of D25 - D75 are determined by mercury porosimetry. From the results obtained by the mercury porosimetry described above in <Total Pore Volume of Positive Electrode>, the differential pore volume V (mL/g) at each pore diameter D ($\mu$m) is determined. The differential pore volume is integrated in the below-described pore range to determine $V_{tot}$ and Vi.

A total pore volume in a membrane pore range of 0.0055 to 5 $\mu$m is defined as $V_{tot}$ (mL/g), and a cumulative pore volume in a membrane pore diameter range of $D_i$ to 5 ($\mu$m) is defined as $V_i$ (mL/g).

Next, the pore volume ratio $V_{pi}$ (%) was calculated using the following equation:

$$V_{pi} (\%) = V_i \times 100/V_{tot}$$

From the $V_{pi}$ vs. pore diameter Di graph obtained in this process, the pore diameter D ($\mu$m) was read at Vpi = 25(%) and Vpi = 75(%) to determine the cumulative pore diameters D25 and D75 ($\mu$m). It is noted here that, in terms of the void diameter measured by a mercury porosimeter, voids of 5.0 μm or smaller are deemed as the voids of the positive electrode active material layer. This is because those voids of a larger size include, for example, cracks and chips of the active material layer, and voids between electrodes that are generated when the electrodes are stacked at the time of placing the sample in a sample container.

<C-Rate>

The current discharge rate (also referred to as "C-rate") is a relative ratio of the current during discharge with respect to the discharge capacity and, generally, in constant-current discharge performed from an upper limit voltage to a lower limit voltage, the current value at which the discharge is completed in one hour is referred to as "1 C". In the present disclosure, for a nonaqueous lithium power storage element, the current value at which discharge is completed in one hour when performing constant-current discharge from 4.0 V to 2.0 V is defined as 1 C. For an electric double layer capacitor, the current value at which discharge is completed in one hour when performing constant-current discharge from 2.5 V to 0 V is defined as 1 C.

<Measurement of Capacity>

The capacity Q (mAh) of a nonaqueous lithium power storage element from 4.0 to 2.0 V is determined by the following method. In an incubator set at 25°C, the nonaqueous lithium power storage element is constant-current charged up to 4.0 V at a current value of 1 C, and then constant-voltage charged with application of a constant voltage of 4.0 V for 30 minutes. Subsequently, the nonaqueous lithium power storage element is constant-current discharged to 2.0 V at a current value of 1 C, and the capacity in this process is defined as Q (mAh).

<Quantification of Lithium Carbonate, Lithium Iron Phosphate, and Carbon Material in Positive Electrode, and Calculation of Weight ratio of Lithium Iron Phosphate>

The content $X_3$ of lithium carbonate, the content $X_2$ of lithium iron phosphate, and the content $X_1$ of a carbon material such as activated carbon in a positive electrode active material layer of a positive electrode of a nonaqueous lithium power storage element are quantified by the following method. First, the voltage of the nonaqueous lithium power storage element is adjusted by performing constant-current discharge to 2.0 V at a 1 C-rate current value and subsequently performing 2.0-V constant-voltage discharging for 1 hour in a 25°C environment. Thereafter, the nonaqueous lithium power storage element is disassembled in an argon atmosphere having a dew point of -60°C or lower, and the positive electrode is taken out and is washed with an organic solvent. The organic solvent is not particularly limited as long as it can remove a decomposed product of an electrolytic solution deposited on the surface of the positive electrode; however, by using an organic solvent having a lithium carbonate solubility of 2% or less, the elution of the lithium compound is inhibited. As such an organic solvent, for example, a polar solvent such as methanol, ethanol, acetone, or methyl acetate can be preferably used. The area of the positive electrode to be measured is not particularly limited; however, from the standpoint of reducing variations in the measurement, it is preferably 5 cm² to 200 cm², more preferably 25 cm² to 150 cm². When the area of the positive electrode is 5 cm² or larger, reproducibility of the measurement is ensured. When the area of the positive electrode is 200 cm² or smaller, excellent ease of sample handling is obtained. The positive electrode is cut to the size of the above-described area and vacuum-dried. The conditions of this vacuum drying are preferably, for example, temperature = 100 to 200°C, pressure = 0 to 10 kPa, and time = 5 to 20 hours, such that the residual water content in the positive electrode is 1 wt.% or less. The residual water content can be quantified by Karl Fischer titration.

The weight ($M_{0A}$) of the positive electrode obtained after the vacuum drying is measured. Subsequently, the positive electrode is immersed in distilled water in an amount of 100 to 150 times the weight of the positive electrode for 3 days or more to elute lithium carbonate into the water. During the immersion, the container is preferably covered with a lid to prevent volatilization of the distilled water. After the immersion for 3 days or more, the positive electrode is removed from the distilled water, and vacuum-dried in the same manner as described above. The weight ($M_{1A}$) of the thus obtained positive electrode is measured. Then, the positive electrode active material layer applied to one or both sides of the positive electrode power collector is removed using a spatula, a brush, a paint brush, or the like. The weight ($M_{2A}$) of the remaining positive electrode power collector is measured, and the content $X_3$ (wt.%) of the lithium compound is calculated using the following equation (1):

$$X_3 = (M_{0A} - M_{1A})/(M_{0A} - M_{2A}) \times 100 \,(1)$$

Thereafter, in order to calculate the content $X_1$ of the carbon material and the content $X_2$ of lithium iron phosphate, a TG curve of the positive electrode active material layer obtained by removing lithium carbonate is measured under the following conditions:

- Sample pan: platinum
- Gas: air atmosphere or compressed air
- Heating rate: 0.5°C/min or less
- Temperature range: 25°C to 750°C

In the thus obtained TG curve, the weight at 25°C is defined as $M_{3A}$, and the weight at a first temperature of 500°C or higher at which the weight reduction rate is $M_{3A} \times 0.01$/min or less is defined as $M_{4A}$. The carbon material is entirely oxidized and combusted when heated at a temperature of 500°C or lower in an oxygen-containing atmosphere (e.g., air atmosphere). On the other hand, the weight of lithium iron phosphate does not decrease until the temperature reaches 750°C even in an oxygen-containing atmosphere. Therefore, the content $X_2$ (wt.%) of lithium iron phosphate in the positive electrode active material layer can be calculated using the following equation (2):

$$X_2 = (M_{4A}/M_{3A}) \times \{1 - (M_{0A} - M_{1A})/(M_{0A} - M_{2A})\} \times 100 \qquad (2)$$

Further, the content $X_1$ (wt.%) of the carbon material in the positive electrode active material layer can be calculated using the following equation (3):

$$X_1 = \{(M_{3A} - M_{4A})/M_{3A}\} \times \{1 - (M_{0A} - M_{1A})/(M_{0A} - M_{2A})\} \times 100 \quad (3)$$

The weight ratio of lithium iron phosphate can be calculated from the content $X_1$ (wt.%) of the carbon material and the content $X_2$ (wt.%) of lithium iron phosphate in the positive electrode active material layer, using the following equation (4):

$$\text{Weight ratio of lithium iron phosphate} = X_2/(X_1 + X_2) \quad (4)$$

<Quantification of Lithium Compound, Lithium Iron Phosphate, and Carbon Material in Positive Electrode>

The weight ratio $Y_3$ of the lithium compound, the weight ratio $Y_2$ of lithium iron phosphate, and the weight ratio $Y_1$ of the carbon material such as activated carbon in the positive electrode active material layer of the positive electrode of the nonaqueous lithium power storage element are quantified by the following method. First, the voltage of the nonaqueous lithium power storage element is adjusted by performing constant-current discharge to 2.0 V at a 1 C-rate current value and subsequently performing 2.0-V constant-voltage discharging for 1 hour in a 25°C environment. Thereafter, the nonaqueous lithium power storage element is disassembled in an argon atmosphere having a dew point of -60°C or lower, and the positive electrode is taken out and is washed with an organic solvent. The organic solvent is not particularly limited as long as it can remove a decomposed product of an electrolytic solution deposited on the surface of the positive electrode; however, by using an organic solvent having a lithium compound solubility of 2% or less, the elution of the lithium compound is inhibited. As such an organic solvent, for example, a polar solvent such as methanol, ethanol, acetone, or methyl acetate can be preferably used. The area of the positive electrode to be measured is not particularly limited; however, from the standpoint of reducing variations in the measurement, it is preferably 5 cm$^2$ to 200 cm$^2$, more preferably 25 cm$^2$ to 150 cm$^2$. When the area of the positive electrode is 5 cm$^2$ or larger, reproducibility of the measurement is ensured. When the area of the positive electrode is 200 cm$^2$ or smaller, excellent ease of sample handling is obtained. The positive electrode is cut to the size of the above-described area and vacuum-dried. The conditions of this vacuum drying are preferably, for example, temperature = 100 to 200°C, pressure = 0 to 10 kPa, and time = 5 to 20 hours, such that the residual water content in the positive electrode is 1 wt.% or less. The residual water content can be quantified by Karl Fischer titration.

The weight ($M_{0A}$) of the positive electrode obtained after the vacuum drying is measured. Subsequently, the positive electrode is immersed in distilled water in an amount of 100 to 150 times the weight of the positive electrode for 3 days or more to elute the lithium compound into the water. During the immersion, the container is preferably covered with a lid to prevent volatilization of the distilled water. After the immersion for 3 days or more, the positive electrode is removed from the distilled water, and vacuum-dried in the same manner as described above. The weight ($M_{1A}$) of the thus obtained positive electrode is measured. Then, the positive electrode active material layer applied to one or both sides of the positive electrode power collector is removed using a spatula, a brush, a paint brush, or the like. The weight ($M_{2A}$) of the remaining positive electrode power collector is measured, and the weight ratio $Y_3$ of the lithium compound is calculated using the following equation (1):

$$Y_3 = (M_{0A} - M_{1A})/(M_{0A} - M_{2A}) \times 100 \quad (1)$$

Thereafter, in order to calculate $Y_1$ and $Y_2$, a TG curve of the positive electrode active material layer obtained by removing the lithium compound is measured under the following conditions:

- Sample pan: platinum
- Gas: air atmosphere or compressed air
- Heating rate: 0.5°C/min or less
- Temperature range: 25°C to 750°C

In the thus obtained TG curve, the weight at 25°C is defined as $M_{3A}$, and the weight at a first temperature of 500°C or higher at which the weight reduction rate is $M_{3A} \times 0.01$/min or less is defined as $M_{4A}$. The carbon material is entirely oxidized and combusted when heated at a temperature of 500°C or lower in an oxygen-containing atmosphere (e.g., air atmosphere). On the other hand, the weight of lithium iron phosphate does not decrease until the temperature reaches 750°C even in an oxygen-containing atmosphere. Therefore, the content $Y_2$ of a lithium-transition metal oxide (specifically, lithium iron phosphate) in the positive electrode active material layer can be calculated using the following equation (2):

$$Y_2 = (M_{4A}/M_{3A}) \times \{1 - (M_{0A} - M_{1A})/(M_{0A} - M_{2A})\} \times 100 \qquad (2)$$

Further, the content $Y_1$ of the carbon material in the positive electrode active material layer can be calculated using the following equation (3):

$$Y_1 = \{(M_{3A} - M_{4A})/M_{3A}\} \times \{1-(M_{0A} - M_{1A})/(M_{0A} - M_{2A})\} \times 100 \quad (3)$$

<Quantification of Lithium Fluoride in Negative Electrode>

A completed nonaqueous lithium power storage element was adjusted to have a voltage of 2.9 V, and subsequently disassembled in an Ar box that was installed in a 23°C room and maintained at a dew point of -90°C or lower and an oxygen concentration of 1 ppm or less, and a negative electrode was taken out. This negative electrode was washed by immersion in dimethyl carbonate (DMC), and then vacuum-dried in a side box with a state of non-exposure to air being maintained. The thus dried negative electrode was transferred from the side box to an Ar box with a state of non-exposure to air being maintained, and subsequently immersed and extracted in heavy water to obtain a negative electrode extract. This extract was analyzed by (1) IC or (2) $^{19}$F-NMR and, from the thus determined concentration A (mol/ml) of each compound in the negative electrode extract, volume B (ml) of the heavy water used for the extraction, and weight C (g) of the negative electrode active material layer used for the extraction, the amount (mol/g) of each compound deposited on the negative electrode active material layer per unit weight of the negative electrode active material layer was calculated using the following equation 1:

$$\text{Amount per unit weight (mmol/g)} = A \times B/C \times 1{,}000 \quad (1)$$

The weight of the negative electrode active material layer used for the extraction is determined by the following method.

The negative electrode active material layer is peeled off from the negative electrode power collector remaining after the extraction with heavy water, and the peeled negative electrode active material layer is washed with water and then vacuum-dried. This vacuum-dried negative electrode active material layer is washed with NMP or DMF. Subsequently, the thus obtained negative electrode active material layer is vacuum-dried again and then weighed to examine the weight of the negative electrode active material layer used for the extraction.

One example of a method of analyzing the extract will now be described. In the present disclosure, the measurement was performed by the method described in (1).

(1) F⁻ derived from LiF was detected by IC measurement (negative mode) of the negative electrode extract, and the F⁻ concentration A was determined by the absolute calibration curve method.

(2) F⁻ derived from LiF can also be quantified by $^{19}$F-NMR. The negative electrode extract was placed in a 3-mmφ NMR tube (PN-002, manufactured by Shigemi Co., Ltd.), and this tube was inserted into a 5-mmφ NMR tube (N-5, manufactured by Nihon Seimitsu Kagaku Co., Ltd.) containing 1,2,4,5-tetrafluorobenzene-added deuterated chloroform, after which $^{19}$F-NMR measurement was performed by a double tube method. The result thereof was normalized with the -142 ppm (4F) signal of 1,2,4,5-tetrafluorobenzene, and the integral value of F⁻ observed at - 127 ppm was determined.

Further, deuterated chloroform containing $C_6F_6$ at known concentration was placed in a 3-mm$\varphi$ NMR tube (PN-002, manufactured by Shigemi Co., Ltd.), and this tube was inserted into a 5-mm$\varphi$ NMR tube (N-5, manufactured by Nihon Seimitsu Kagaku Co., Ltd.) containing the same 1,2,4,5-tetrafluorobenzene-added deuterated chloroform as above, after which $^{19}$F-NMR measurement was performed by a double tube method. In the same manner as described above, the measurement result was normalized with the -142 ppm (4F) signal of 1,2,4,5-tetrafluorobenzene, and the integral value of the -161 ppm (6F) signal of $C_6F_6$ was determined. The F$^-$ concentration A in the negative electrode extract was determined based on the relationship between the concentration of $C_6F_6$ used and the integral values.

(Interfacial Resistance Between Lithium Fluoride in Negative Electrode Active Material Layer and Positive Electrode)

In the power storage element according to the present disclosure, when the interfacial resistance between the positive electrode active material layer and the positive electrode power collector is defined as A [$\Omega$cm$^2$] and the concentration of lithium fluoride contained in the negative electrode with respect to the weight of the negative electrode active material layer is defined as B [mmol/g], the value of A/B is determined by dividing the interfacial resistance A [$\Omega$cm$^2$] between the positive electrode active material layer and the positive electrode power collector by the concentration B [mmol/g] of lithium fluoride contained in the negative electrode with respect to the weight of the negative electrode active material layer.

<Capacity Ratio>

The capacity Q (mAh) of the nonaqueous lithium power storage element from 4.0 to 2.0 V is determined by the following method. In an incubator set at 25°C, the nonaqueous lithium power storage element is constant-current charged up to 4.0 V at a current value of 2 C, and then constant-voltage charged with application of a constant voltage of 4.0 V for a total of 30 minutes. Subsequently, the nonaqueous lithium power storage element is constant-current discharged to 2.0 V at a current value of 2 C, and the capacity in this process is defined as Q (mAh). The capacity (mAh) from 3.4 to 3.0V is calculated from the charge-discharge curve of discharge capacity vs. voltage that is obtained in this process.

<Method of Identifying Lithium Compound>

The lithium compound contained in the positive electrode or the positive electrode precursor can be identified by any of the above-described analysis methods. The lithium compound is preferably identified by a combination of these analysis methods. When the lithium compound cannot be identified by the below-described analysis method, for example, $^7$Li solid-state NMR, TOF-SIMS (time-of-flight secondary ion mass spectrometry), AES (Auger electron spectroscopy), TPD/MS (temperature-programmed desorption-mass spectrometry), or DSC (differential scanning calorimetry) may be employed as an alternative analysis method to identify the lithium compound.

(X-Ray Diffraction (XRD))

By an XRD analysis of the positive electrode or the positive electrode precursor, a material having a crystal structure that is contained therein can be analyzed. For example, XRD can be measured under the following conditions: start angle 2$\theta$ = 20.000°, end angle 2$\theta$ = 90.000°, sampling width = 0.020°, scanning speed = 2.000°/min, tube voltage = 40 kV, tube current = 40 mA, divergence slit = 1°, scattering slit = 1°, and receiving slit = 0.30 mm.

(Energy Dispersive X-Ray Analysis (SEM-EDX))

By an SEM-EDX analysis of the surface of the positive electrode or the positive electrode precursor measured at an observation magnification of $\times$1,000 to $\times$4,000, atoms contained therein can be quantified. For example, an SEM-EDX image can be measured under the following conditions: acceleration voltage = 10 kV, emission current = 10 $\mu$A, number of measured pixels of 256 $\times$ 256 pixels, number of integrations = 50. In order to prevent electrification of a sample, the sample may be measured after a surface treatment, such as vacuum deposition or sputtering of gold, platinum, osmium, or the like, is performed thereon.

One example of a method of identifying the lithium compound by SEM observation of a cross section of the positive electrode will now be described. When the lithium compound is lithium carbonate, for example, lithium carbonate can be distinguished by carbon mapping and oxygen mapping using an SEM-EDX image of a cross section of the positive electrode measured at an observation magnification of $\times$1,000 to $\times$4,000. In the measurement of the SEM-EDX image, it is preferred to adjust the brightness and the contrast such that there are no pixel reaching a maximum brightness and the average brightness value is in a range of 40% to 60%. In the thus obtained carbon map and oxygen map, when those regions containing bright areas, which are binarized based on the average brightness value, in an area ratio of 50% or more are defined as a carbon region and an oxygen region, respectively, the parts where these regions overlap can be judged as lithium carbonate.

(X-Ray Photoelectron Spectroscopy (XPS))

The bonding state of lithium atoms can be determined by analyzing the electronic state using XPS. The measurement conditions may be, for example: X-ray source = monochromatized

A1K$\alpha$; X-ray beam diameter = 100 $\mu$m$\varphi$ (25 W, 15 kV); narrow scan of pass energy = 58.70 eV; charge neutralization = on; narrow scan of number of sweeps = 10 sweeps (carbon, oxygen), 20 sweeps (fluorine), 30 sweeps (phosphorus), 40 sweeps (alkali metal atoms), 50 sweeps (silicon); and narrow scan of energy steps = 0.25 eV. The surface of the positive electrode is preferably cleaned by sputtering prior to the XPS measurement. As for the sputtering conditions, for example, the surface of the positive electrode may be cleaned with an acceleration voltage of 1.0 kV over a range of 2 mm $\times$ 2 mm for 1 minute (1.25 nm/min in terms of $SiO_2$).

The thus obtained XPS spectrum can be attributed as follows based on the electron binding energy.

[Table 1]

Table 1

| Electron shell | Binding energy (eV) | Attributes |
|---|---|---|
| Li1s | 50 to 54 | LiO2 or Li-C bond |
| | 55 to 60 | Lif, Li2CO3, $Li_xPO_yF_z$ (wherein, x, y, and z each represent an integer of 1 to 6) |
| C1s | 285 | C-C bond |
| | 286 | C-O bond |
| | 288 | COO |
| | 290 to 292 | $CO_3^{2-}$, C-F bond |
| O1s | 527 to 530 | $O^{2-}(Li_2O)$ |
| | 531 to 532 | CO, $CO_3$, OH, $PO_x$ (wherein, x represents an integer of 1 to 4), $SiO_x$ (wherein, x represents an integer of 1 to 4) |
| | 533 | C-O, $SiO_x$ (wherein, x represents an integer of 1 to 4) |
| F1s | 685 | LiF |
| | 687 | C-F bond, $Li_xPO_yF_z$ (wherein, x, y, and z each represent an integer of 1 to 6), $PF_6^-$ |
| P2p | 133 | $PO_x$ (wherein, x represents an integer of 1 to 4) |
| | 134 to 136 | $PF_x$ (wherein, x represents an integer of 1 to 6) |
| Si2P | 99 | Si, silicide |
| | 101 to 107 | $Si_xO_y$ (wherein, x and y each represent an arbitrary integer) |

With regard to the thus obtained spectrum, when there are overlapping peaks, it is preferred to attribute the spectrum by separating the peaks with the assumption of a Gaussian function or a Lorenz function. The lithium compound that is present can be identified based on the obtained electronic state measurement results and the ratios of atoms that are present.

(Ion Chromatography)

By washing the positive electrode or the positive electrode precursor with distilled water and analyzing this water used for the washing by ion chromatography, anion species eluted in the water can be identified. As a column, an ion exchange column, an ion exclusion column, or a reversed-phase ion-pair column can be used. As a detector, for example, an electric conductivity detector, a UV-visible spectrophotometric detector, or an electrochemical detector can be used, and a suppressor system in which a suppressor is installed in front of the detector, or a non-suppressor system in which a solution having a low electric conductivity is used as an eluent without a suppressor can be used. The measurement can also be performed using ion chromatography in combination with a mass spectrometer or a charged particle detector; therefore, it is preferred to combine appropriate column and detector based on the lithium compound identified from the analysis results of SEM-EDX and XPS.

Once the conditions of the column, the eluent, and the like to be used are determined, the sample retention time is constant for each ionic species component, while the magnitude of the peak response varies between ionic species and is proportional to the concentration of the ionic species. By measuring a standard solution having a known concentration with ensured traceability in advance, it is possible to qualitatively and quantitatively analyze the ionic species components.

(Method of Quantifying Lithium Element: ICP-MS)

A measurement sample is acid-decomposed with a strong acid such as concentrated nitric acid, concentrated hydrochloric acid, or aqua regia, and the resulting solution is diluted with purified water to an acid concentration of 2% to 3%. For the acid decomposition, the sample may be heated and pressurized as appropriate. The thus obtained diluted solution is analyzed by ICP-MS and, in this process, it is preferred to add an element of known amount as an internal standard. When the concentration of lithium element to be measured exceeds the measurement upper limit concentration, it is preferred to further dilute the diluted solution while maintaining its acid concentration. Each element can be quantified from the thus obtained measurement results, based on a calibration curve prepared in advance using a standard solution for chemical analysis.

<Analysis of Lithium Compound>

A method of analyzing the lithium compound contained in the positive electrode active material layer of the positive electrode or the positive electrode precursor will now be described. The positive electrode or the positive electrode precursor is washed with distilled water, and the lithium compound can be quantified based on the change in the weight of the positive electrode before and after the washing with distilled water. From the standpoint of reducing variations in the measurement, the area of a positive electrode or positive electrode precursor sample to be measured is preferably 5 $cm^2$ to 200 $cm^2$, more preferably 25 $cm^2$ to 150 $cm^2$. When the area is 5 $cm^2$ or larger, reproducibility of the measurement is ensured. When the area is 200 $cm^2$ or smaller, excellent ease of sample handling is obtained.

(Quantification of Lithium Compound)

Taking the case of the lithium compound contained in the positive electrode active material layer as an example, specific methods of determining the amount of the lithium compound and the average particle size of the lithium compound will now be described. The weight of a cut positive electrode is measured and defined as $M_0$ (g). Subsequently, in a 25°C environment, this positive electrode is thoroughly immersed in distilled water in an amount of 100 times the weight of the positive electrode ($100M_0$ (g)) for 3 days or more to elute the lithium compound into the water. In this process, it is preferred to take measures, such as putting a lid on the container, so as to prevent volatilization of the distilled water. After the immersion for 3 days or more, the positive electrode is removed from the distilled water (in the case of performing ion chromatography, the liquid amount is adjusted such that the amount of the distilled water is $100M_0$ (g)), and then vacuum-dried. The conditions of this vacuum drying are preferably, for example, temperature = 100 to 200°C, pressure = 0 to 10 kPa, and time = 5 to 20 hours, such that the residual water content in the positive electrode active material layer is 1 part by weight or less. The residual water content can be quantified by Karl Fischer titration. The weight of the thus vacuum-dried positive electrode is defined as $M_1$ (g) and, subsequently, in order to measure the weight of the power collector of the thus obtained positive electrode, the positive electrode active material layer applied onto the power collector is removed using a spatula, a brush, a paint brush, or the like. When the weight of the thus obtained positive electrode power collector is defined as $M_2$ (g), the amount (parts by weight) of the lithium compound contained in the positive electrode active material layer can be calculated by the following equation:

$$\text{Amount of lithium compound} = 100 \times (M_0 - M_1)/(M_0 - M_2)$$

(Average Particle Size of Lithium Compound)

A method of measuring the average particle size of the lithium compound is not particularly limited, and the average particle size can be calculated from SEM and SEM-EDX images of a cross section of the positive electrode. As a method of forming the cross section of the positive electrode, BIB processing, in which an Ar beam is irradiated to the positive electrode from above to produce a smooth cross section along the edge of a shielding plate placed directly above a sample, may be employed. The average particle size of the lithium compound can be determined by measuring the lithium compound in the same field of view as in the above-described SEM-EDX of the cross section of the positive electrode, and analyzing the thus obtained image. A cross-sectional area S is determined for all particles of the lithium compound identified in the SEM image of the cross section of the positive electrode, and the particle diameter d can be calculated by the following equation: $d = 2 \times (S/\pi)^{1/2}$ (wherein, $\pi$ represents the circular constant). When the positive electrode contains lithium carbonate, the distribution of carbonate ions may be determined by measuring the cross section of the positive electrode by Raman imaging.

<Interfacial Resistance Between Positive Electrode Active Material Layer and Positive Electrode Power collector of Positive Electrode>

The interfacial resistance between the positive electrode active material layer and the positive electrode power collector of the positive electrode is determined by the following method. In the case of a nonaqueous lithium power storage element, first, the voltage was adjusted by performing constant-current discharge to 2.0 V at a 1 C-rate current value and subsequently performing 2.0-V constant-voltage discharging for 1 hour in a 25°C environment. Thereafter, the nonaqueous lithium power storage element was disassembled in an argon atmosphere having a dew point of -60°C or lower, and the positive electrode was taken out. The thus obtained positive electrode was washed three times with methyl ethyl carbonate and then vacuum-dried at 25°C for 12 hours to obtain a positive electrode sample.

In the case of an electric double layer capacitor, the voltage was adjusted by performing constant-current discharge to 0 V at a 1 C-rate current value and subsequently performing 0-V constant-voltage discharging for 1 hour in a 25°C environment. Thereafter, the electric double layer capacitor was disassembled in an argon atmosphere having a dew point of -60°C or lower, and the positive electrode was taken out. The thus obtained positive electrode was washed three times with methyl ethyl carbonate and then vacuum-dried at 25°C for 12 hours to obtain a positive electrode sample.

Using an electrode resistance measurement system RM2610 manufactured by Hioki E.E. Corporation, a measurement probe was brought into contact with the surface of the positive electrode active material layer of the positive electrode at normal pressure, a constant current (1 mA) was applied to the surface of the positive electrode active material layer, and the potential distribution generated on the surface was measured at multiple points to calculate the interfacial resistance between the positive electrode active material layer and the positive electrode power collector of the positive electrode. The interface resistance was measured at arbitrary five points, and an average value thereof was calculated. When the active material layer was applied to both sides, the measurement was performed on each side, and an average value thereof was calculated.

<Method of Calculating A1 and B1>

The discharge capacity A1 (mAh/cm$^2$) per unit area of the positive electrode and the charge capacity B1 (mAh/cm$^2$) per unit area of the negative electrode can be determined by the following method. A fully charged lithium ion secondary battery cell (3.6 V when LFP is used as the positive electrode active material, or 4.2 V when LMFP is used as the positive electrode active material) is disassembled in an argon atmosphere. The positive electrode and the negative electrode, which have been cut to a certain size, are used as working electrodes, while lithium metal is used as a counter electrode and a reference electrode. Electrochemical cells are produced using a nonaqueous electrolytic solution containing a lithium salt {e.g., a nonaqueous electrolytic solution in which a mixed solvent of ethylene carbonate (EC):methyl ethyl carbonate (EMC) = 33:67 (volume ratio) is used and LiPF$_6$ is dissolved therein to a concentration of 1.2 mol/L}.

Using a charge-discharge device, an electrochemical cell in which the positive electrode is used as a working electrode is constant-current discharged to a voltage value of 2.00 V at a current value of 0.2 mA/cm$^2$ in a 25°C environment. The discharge capacity in this process is defined as $Q_{A1}$ (mAh), and A1 is calculated using the following equation: $A1 = Q_{A1}/Z$. Further, using a charge-discharge device, an electrochemical cell in which the negative electrode is used as a working electrode is constant-current charged to a voltage value of 2.00 V at a current value of 0.2 mA/cm$^2$ in a 25°C environment. The charge capacity in this process is defined as $Q_{B1}$ (mAh), and B1 is calculated using the following equation: $B1 = Q_{B1}/Z$.

<Method of Calculating A2, A3, and B2>

The charge capacity A2 (mAh/cm$^2$) per unit area of the positive electrode precursor, the discharge capacity A3 (mAh/cm$^2$) per unit area of the positive electrode precursor, and the charge capacity B2 (mAh/cm$^2$) per unit area of the negative electrode precursor can be determined by the following method. The positive electrode precursor and the negative electrode precursor prior to pre-doping, which have been cut to a certain size, are used as working electrodes, while lithium metal is used as a counter electrode and a reference electrode. Electrochemical cells are produced using a nonaqueous electrolytic solution containing a lithium salt {e.g., a nonaqueous electrolytic solution in which a mixed solvent of ethylene carbonate (EC):methyl ethyl carbonate (EMC) = 33:67 (volume ratio) is used and $LiPF_6$ is dissolved therein to a concentration of 1.2 mol/L}.

Using a charge-discharge device, in a 25°C environment, an electrochemical cell in which the positive electrode precursor is used as a working electrode is constant-current charged to a voltage value of 4.50 V at a current value of 0.2 $mA/cm^2$, and then constant-voltage charged to a current value of 0.05 $mA/cm^2$. A sum of the charge capacity during this constant-current charging and the charge capacity during this constant-voltage charging is defined as $Q_{A2}$ (mAh). Next, the electrochemical cell is constant-current discharged to a voltage value of 4.20 V at a current value of 0.2 $mA/cm^2$, and then constant-voltage discharged to a current value of 0.05 $mA/cm^2$. Thereafter, the electrochemical cell is constant-current discharged to a voltage value of 2.00 V at a current value of 0.2 $mA/cm^2$, and the discharge capacity in this process (when constant-current discharged from a voltage value of 4.20 V to a voltage value of 2.00 V) is defined as $Q_{A3}$ (mAh). From the values obtained above, A2 and A3 are calculated using the following equations: A2 = $Q_{A2}$/Z and A3 = $Q_{A3}$/Z.

Using a charge-discharge device, in a 25°C environment, an electrochemical cell in which the negative electrode precursor is used as a working electrode is constant-current discharged to a voltage value of 0.05 V at a current value of 0.2 $mA/cm^2$, and then constant-voltage discharged to a current value of 0.02 $mA/cm^2$. Subsequently, this electrochemical cell is constant-current charged to a voltage value of 2.00 V at a current value of 0.2 $mA/cm^2$. The charge capacity in this constant-current charging is defined as $Q_{B2}$ (mAh), and B2 is calculated using the following equation: B2 = QB2/Z.

<Method of Identifying $MO_2$ in Positive Electrode or Positive Electrode Precursor>

$MO_2$ contained in the positive electrode or the positive electrode precursor can be identified by, for example, XRD (X-ray diffractometry), energy dispersive X-ray analysis (SEM-EDX), X-ray photoelectron spectroscopy (XPS), ion chromatography, $^7$Li solid-state NMR, microscopic Raman spectroscopy, TOF-SIMS (time-of-flight secondary ion mass spectrometry), AES (Auger electron spectroscopy), TPD/MS (temperature-programmed desorption-mass spectrometry), or DSC (differential scanning calorimetry). $MO_2$ is preferably identified by a combination of these analysis methods.

<Negative Electrode Sample for Measurement of Thickness of Negative Electrode Material, Mode Diameter Analysis in Mercury Porosimetry of Negative Electrode, Nitrogen Gas Adsorption Measurement of Negative Electrode Active Material Layer, and Measurement of Frequency of Aggregates on Negative Electrode Surface>

The negative electrode to be measured is desirably a pre-injection negative electrode that has not been assembled into a nonaqueous power storage element. In the case of obtaining a negative electrode sample from a completed nonaqueous lithium power storage element, the voltage of the nonaqueous lithium power storage element is adjusted by performing constant-current discharge to 2.0 V at a 1 C-rate current value and then 2.0-V constant-voltage discharging for 1 hour in a 25°C environment, and this nonaqueous lithium power storage element is disassembled in an argon atmosphere having a dew point of -60°C or lower to take out a negative electrode, after which the thus obtained negative electrode is washed three times with methyl ethyl carbonate and then vacuum-dried at 25°C for 12 hours to completely remove the electrolytic solution and the washing solvent, and this negative electrode is used as the negative electrode sample. It is noted here that, in Examples, a coated pre-injection negative electrode was used as a sample.

<Measurement of Thickness of Negative Electrode Material>

The thickness of a negative electrode material is determined by a local thickness analysis of a cross-sectional SEM image of the negative electrode. First, for the coated pre-injection negative electrode, a smooth cross section for SEM observation was prepared by the following method. The smooth cross section was prepared by an $Ar^+$ ion beam milling method. As an $Ar^+$ ion beam milling device, SM-09010CP (manufactured by JEOL Ltd.) was used. $Ar^+$ ion beam milling was performed without filling the holes of the sample by embedding or the like, and a conductive treatment was performed after the preparation of the cross section. As the conductive treatment, the cross section was coated with osmium at a thickness of about 1 nm.

Next, a cross-sectional SEM image was obtained by the following method. The conditions for capturing the SEM image in this case were as follows.

Apparatus: SU7000 (manufactured by Hitachi, Ltd.)
Acceleration voltage: 1.5 kV
Detector: MD (reflection electron detector)

The image-capturing field of view and magnification were selected such that the power collector was not included in the field of view. The detector is not particularly limited; however, it is desired to select a detector that hardly causes contour enhancement due to the edge effect as in the case of the reflection electron detector used above.

A local thickness analysis was performed on the thus obtained SEM image. As an image analysis software, ImageJ (developer: The U.S. National Institutes of Health) was used. The version of the software is not limited; however, Version 1.51p was used. For the local thickness analysis, the BoneJ plug-in "Thickness" analysis function was applied. The version of this BoneJ plug-in is not limited; however, Version 1.4.2 was used in Examples. The procedure of the local thickness analysis was as follows.

(1) The portion of the SEM image other than the information section showing the magnification, the acceleration voltage, and the like at the bottom was cut out.
(2) A filtering treatment was performed on the image cut out in the above (1) under the following conditions: Median Filter, R = 2.0, once.
(3) The image was thresholded by the Otsu's method to obtain a binary image in which the parts corresponding to an active material or conductive aid had a brightness of 0.
(4) The BoneJ plug-in "Thickness" was applied to obtain a local thickness image.
(5) The Histogram function was used to obtain the structure size distribution data.

<Mode Diameter Analysis in Mercury Porosimetry of Negative Electrode>

The void diameter of the negative electrode is determined by a mode diameter analysis in mercury porosimetry of the negative electrode. As a sample, the coated pre-injection negative electrode was used. The pore distribution was measured using "AutoPore 9500" manufactured by Micromeritics Instrument Corporation. The sample was placed in a sample container and degassed, and mercury was subsequently introduced into the sample container, after which the pressure was gradually increased to inject the mercury into the pores of the sample (maximum pressure: 0.33 Mpsia). From the relationship between the pressure and the amount of injected mercury in this process, the pore distribution of the sample is determined using the following equation. A pore diameter of 5 $\mu$m or less at which a maximum pore volume was obtained was defined as mode diameter. In the calculation of the pore diameter, when mercury is injected into a cylindrical pore having a diameter D with a pressure P, the following equation is established based on the balance between the surface tension and the pressure acting on a cross section of the pore:

$$D = -(1/P)4\gamma\cos\theta$$

wherein, $\theta$ represents the contact angle of mercury, and $\gamma$ represents the surface tension of mercury.

In the present investigation, the contact angle $\theta$ and the surface tension $\gamma$ of mercury were assumed to be 130° and 485°/cm, respectively.

<Total Pore Volume Analysis in Mercury Porosimetry of Negative Electrode>

The void volume of the negative electrode based on the weight of the negative electrode active material layer is determined by a total pore volume analysis in mercury porosimetry. As a sample, the coated pre-injection negative electrode was used. First, in order to measure the basis weight of the negative electrode power collector, a negative electrode sample for the measurement of the negative electrode power collector is prepared, and the negative electrode active material layer is dissolved in water or an organic solvent to obtain only the negative electrode power collector, after which the basis weight m ($g/m^2$) of this negative electrode power collector is measured. Next, the area S ($m^2$) and the weight M1 (g) of the negative electrode sample used for mercury porosimetry are measured, and the weight M2 (g) of the negative electrode active material layer is calculated using the following equation:

$$M2 = M1 - S \times m$$

"Mercury Porosimetry": The pore distribution was measured using "AutoPore 9500" manufactured by Micromeritics Instrument Corporation. The sample was placed in a sample container and degassed, and mercury was subsequently introduced into the sample container, after which the pressure was gradually increased to inject the mercury into the pores of the sample (maximum pressure: 0.33 Mpsia). From the relationship between the pressure and the amount of injected mercury in this process, the pore distribution of the sample is determined using the following equation. In the calculation of the pore diameter, when mercury is injected into a cylindrical pore having a diameter D with a pressure P, the following equation is established based on the balance between the surface tension and the pressure acting on a cross section of the pore:

$$D = -(1/P)4\gamma\cos\theta$$

wherein, $\theta$ represents the contact angle of mercury, and $\gamma$ represents the surface tension of mercury.

In the present investigation, the contact angle $\theta$ and the surface tension $\gamma$ of mercury were assumed to be 130° and 485°/cm, respectively. The differential pore volume $dV_{tot}/dD$, wherein $V_{tot}$ (cm$^3$) represents a total injection amount, is obtained. This value was integrated in a membrane pore range (0.0055 to 5 $\mu$m) to determine the total injection amount $V_{tot}$ (cm$^3$). The total pore volume $I_{tot}$ (cm$^3$/g) per weight was calculated from the weight M2 (g) of the negative electrode active material of the sample using the following equation:

$$I_{tot} = V_{tot}/M_2$$

<Nitrogen Gas Adsorption Measurement of Negative Electrode Active Material Layer>

The specific surface area per weight of the negative electrode active material layer can be determined by nitrogen gas adsorption measurement of the negative electrode active material layer. First, from the coated pre-injection negative electrode, the negative electrode active material layer was scraped off using a spatula to obtain a sample of the negative electrode active material layer. As the sample, the negative electrode active material layer scraped off from the coated pre-injection negative electrode using a spatula was used.

"Nitrogen Gas Adsorption Measurement": The pore specific surface area (m$^2$/g) was measured using "3-Flex" manufactured by Micromeritics Instrument Corporation.

The sample was placed in a sample tube, and a heating and vacuum-degassing treatment thereof was performed at 100°C for 18 hours using a pretreatment apparatus, after which, using 3-Flex, the sample was vacuumed and N$_2$ gas adsorption-desorption operation was subsequently performed in liquid nitrogen (-196°C). In an adsorption equilibrium state at a constant temperature, when the adsorption equilibrium pressure is defined as P (mmHg), the saturated vapor pressure in this state is defined as Po (mmHg), the adsorption amount at this pressure is defined as V (cm$^3$), the monolayer adsorption amount is defined as Vm (cm$^3$), and a parameter (> 0) relating to the adsorption heat or the like is defined as C, the following BET equation is established in a relative pressure (Prel = P/P0) range of 0.05 to 0.35:

$$P/(V \times (P0 - P)) = 1/(Vm \times C) + \{(C - 1)/(Vm \times C)\} \times (P/P0)$$

In addition, for each point specified in the calculation of the specific surface area in this case, when the relative pressure is defined as Prel(-) and the adsorption amount in a standard state (STP) is defined as Nads,1 (cm$^3$STP/g) = nads,1 (cm$^3$STP)/m (g), the BET2 conversion B (g/cm$^3$STP) is calculated using the following equation:

$$B = Prel/((1.0 - Prel) \times Nads,1)$$

Further, the least-squares method of (Prel (independent variable), B (dependent variable)) was performed, and the BET specific surface area $SA_{bet}$ (m$^2$/g) was calculated using the following equation, wherein the slope of the thus obtained results, the Y-axis intercept, and the molecular cross-sectional area of the gas in a correlation coefficient range of 0.999 or more were defined as S (g/cm$^3$STP), Yint (g/cm$^3$STP), and CSA (nm$^2$), respectively:

$$SA_{bet} = (CSA \times (6.023 \times 10^{23}))/((22,414 \text{ cm}^3) \times (10^{18} \text{ nm}^2/\text{m}^2) \times (S + Yint)).$$

In this calculation, the value of N$_2$ gas CSA (nm$^2$) at -196°C was 0.162 nm$^2$.

<Measurement of Frequency of Aggregates on Negative Electrode Surface>

The frequency of aggregates on the negative electrode surface can be measured by the following method. As a sample, the coated pre-injection negative electrode was used. This negative electrode sample of at least 8 cm $\times$ 6 cm in size was measured using a scanner (MP C5503, manufactured by Ricoh Co., Ltd.). The settings in this measurement are as follows: color tone = grayscale, resolution = 600 dpi, concentration = medium, file format = JPEG/TIFF, load size = size including the entire negative electrode sample, and other settings = default. A region of the thus scanned image excluding the 1-cm portions from both vertical and horizontal ends is loaded to ImageJ (ver. 1.53t). For the thus loaded image, on ImageJ, "Type" is converted to 8-bit, "Mean" (average brightness) is obtained using the getStatistics function, and the image is binarized with "Min" and "Max" under "Threshold" being set to "0" and "Mean -15", respectively, after which "Distance" of scale, "Known", and "Unit" are set to "600", "25400", and "$\mu$m", respectively (i.e., the width of 600 pixels corresponds to 1 inch (25.4 mm)) to obtain Area distribution using the "Analyze Particles" function. From the thus obtained Area distribution, the number n of 20,000 $\mu m^2$ or larger areas deemed as aggregates is counted. Using the area S ($cm^2$) of the region analyzed by ImageJ, the frequency Dn of 20,000 $\mu m^2$ or larger aggregates was calculated by Dn = n/S.

<Example A: Evaluation of Nonaqueous Lithium Power Storage Element>

(5°C 10-Second Output Density)

The 5°C 10-second output W (W) of a nonaqueous lithium power storage element is a value obtained by the following method. First, in an incubator set at 25°C, a cell corresponding to the nonaqueous lithium power storage element is constant-current charged up to 4.0 V at a current value of 2 C, and then constant-voltage charged with application of a constant voltage of 4.0 V for a total of 30 minutes. Subsequently, the cell is constant-power discharged to 2.0 V at a constant power value, and the output time in this process is defined as T (seconds). In this case, plural power values are set such that a power value exceeding 10 seconds and a power value less than 10 seconds are included therein. For example, the measurement is performed at 0.05 W, 0.5 W, 1.25 W, 2.5 W, 5.0 W, and 10.0 W, and the power value may be adjusted if necessary. Next, the logarithm of the power value is plotted on abscissa while the logarithm of the output time is plotted on ordinate, and the power value corresponding to the 10-second output is calculated by approximation using the least-squares method. The 5°C 10-second output density (kW/L) of the nonaqueous lithium power storage element is a value calculated by dividing the obtained 5°C 10-second output W/1,000 (kW) by the volume (L) of the electrode body. The volume of the electrode body is calculated by: Area of coated portion of positive electrode × Thickness of electrode laminate (Total thickness of positive electrode precursor + Total thickness of negative electrode + Thickness of separator).

(Method of Measuring Current Pause Resistance Ratio)

The ratio of the 5°C 10-second current pause resistance with respect to the 25°C 10-second current pause resistance (current pause resistance ratio) is determined by the following method.

(1) Measurement of 25°C 10-Second Current Pause Resistance

In an incubator set at 25°C, the nonaqueous lithium power storage element is constant-current charged up to 4.0 V at 4 A, and then constant-voltage charged with application of a constant voltage of 4.0 V for 15 minutes. Subsequently, the nonaqueous lithium power storage element is constant-current discharged to 2.8 V at 18 A, followed by a pause of the discharge. The voltage is measured after a 10-second pause of the discharge, and the change in voltage from 2.8 V is defined as $\Delta V$ (V). The 25°C 10-second current pause resistance $R_2$ ($\Omega$) is calculated by dividing the $\Delta V$ by 18 A.

(2) Measurement of 5°C 10-Second Current Pause Resistance

The temperature of the nonaqueous lithium power storage element is adjusted to be 5°C by storing the nonaqueous lithium power storage element in an incubator set at 5°C for 2 hours. Next, the nonaqueous lithium power storage element is constant-current charged up to 4.0 V at 4 A, and then constant-voltage charged with application of a constant voltage of 4.0 V for 15 minutes. Subsequently, the nonaqueous lithium power storage element is constant-current discharged to 2.8 V at 18 A, followed by a pause of the discharge. The voltage is measured after a 10-second pause of the discharge, and the change in voltage from 2.8 V is defined as $\Delta V$ (V). The 5°C 10-second current pause resistance $R_1$ ($\Omega$) is calculated by dividing the $\Delta V$ by 18 A.

(3) The thus measured 5°C 10-second current pause resistance $R_1$ ($\Omega$) is divided by the above-measured 25°C 10-second current pause resistance $R_2$ ($\Omega$) to calculate the current pause resistance ratio ($R_1/R_2$).

(Volume Resistivity of Positive Electrode Active Material Layer)

The volume resistivity of the positive electrode active material layer of the positive electrode is determined by the following method. First, the voltage of the nonaqueous lithium power storage element is adjusted by performing constant-current discharge to 2.0 V at a 1 C-rate current value and subsequently performing 2.0-V constant-voltage discharging for 1 hour in a 25°C environment. Thereafter, the nonaqueous lithium power storage element is disassembled in an argon atmosphere having a dew point of -60°C or lower, and the positive electrode is taken out. The thus obtained positive electrode is washed three times with methyl ethyl carbonate and then vacuum-dried at 25°C for 12 hours to obtain a positive electrode sample. Using an electrode resistance measurement system RM2610 manufactured by Hioki E.E. Corporation, a measurement probe is brought into contact with the surface of the positive electrode active material layer of the positive electrode at normal pressure, a constant current (1 mA) is applied to the surface of the positive electrode active material layer, and the potential distribution generated on the surface is measured at multiple points to calculate the volume resistivity of the positive electrode active material layer. When the positive electrode active material layer is provided on both sides of the positive electrode power collector, the volume resistivity and the interfacial resistance on the side brought into contact with the measurement probe can be measured. When the volume resistivity and the interfacial resistance are also measured on the other side, the positive electrode precursor is turned over and measured again, and an average value of both sides is calculated.

(Micro-Short Circuit Test, Assessment of Micro-Short Circuit, and Micro-Short Circuit Rate)

A micro-short circuit test, assessment of micro-short circuit, and calculation of the micro-short circuit rate are performed by the following method. The micro-short circuit rate of the nonaqueous lithium power storage element is judged by the following method. First, the nonaqueous lithium power storage element is constant-current discharged to 2.2 V at a 2 C-rate current value, subsequently constant-current charged up to a voltage of 3.8 V at a 2 C-rate current value, and then continuously constant-voltage charged at 3.8 V for 3 hours, whereby the voltage is adjusted to be 3.8 V. Thereafter, the electrode body is left to stand in an incubator set at 25°C for one week in a state of being pressurized with a pressure of 1 kgf/cm$^2$, and the electrode body is judged to have a micro-short circuit if the voltage dropped to 3.0 V or less. The same test is performed for 10 nonaqueous lithium power storage elements, and the proportion of the nonaqueous lithium power storage elements that are judged to have a micro-short circuit is defined as the micro-short circuit rate (%).

(Low-Temperature Constant-Power Cycle Test)

A low-temperature constant-power cycle test is performed by the following method. A micro-short circuit test is performed before the low-temperature constant-power cycle test. A nonaqueous lithium power storage element not judged to have a micro-short circuit is, in an incubator set at 5°C, constant-power charged up to 4.0 V at a power value of 10 W/cc per volume of the electrode body and then constant-power discharged to 2.0 V at a power value of 10 W/cc. This charge-discharge operation is repeated 5,000 times. It is noted here that the volume of the electrode body is calculated by: Area of coated portion of positive electrode × Thickness of electrode laminate (Total thickness of positive electrode precursor + Total thickness of negative electrode + Thickness of separator).

• Micro-Short Circuit Rate After Low-Temperature Constant-Power Cycle Test

The above-described micro-short circuit test was performed before and after the low-temperature constant-power cycle test, and the micro-short circuit rate was calculated.

• Capacity Retention Rate After Low-Temperature Constant-Power Cycle Test

The above-described capacity measurement was performed after the low-temperature constant-power cycle test, and the thus measured capacity after the cycle test was divided by the capacity before the cycle test to calculate the capacity retention rate after the low-temperature constant-power cycle test.

(High-Temperature Constant-Power Cycle Test)

A high-temperature constant-power cycle test is performed by the following method. In an incubator set at 80°C, the nonaqueous lithium power storage element is constant-power charged up to 4.0 V at a power value of 10 W/cc per volume of the electrode body and then constant-power discharged to 2.0 V at a power value of 15 W/cc. This charge-discharge operation is repeated 5,000 times. It is noted here that the volume of the electrode body is calculated by: Area of coated portion of positive electrode × Thickness of electrode laminate (Total thickness of positive electrode precursor + Total thickness of negative electrode + Thickness of separator).

• Capacity Retention Rate After High-Temperature Constant-Power Cycle Test

The above-described capacity measurement was performed after the high-temperature constant-power cycle test, and the thus measured capacity after the cycle test was divided by the capacity before the cycle test to calculate the capacity retention rate after the high-temperature constant-power cycle test.

<Example B: Evaluation of Nonaqueous Lithium Power Storage Element>

[Calculation of Alkali Metal Doping Efficiency in Alkali Metal Doping Step]

As a result of calculating the alkali metal doping efficiency η (%) in the alkali metal doping step by the above-described method, the alkali metal doping efficiency η in Example B1 was found to be 60.1%.

(Measurement of Capacity Q)

As a result of measuring the capacity Q of the nonaqueous lithium power storage element by the above-described method in an incubator set at 25°C using a charge-discharge device (manufactured by Aska Electronic Co., Ltd.), the capacity Q was found to be 18.7 mAh.

(Calculation of Internal Resistance R)

As a result of measuring the internal resistance R of the nonaqueous lithium power storage element by the above-described method in an incubator set at 25°C using a charge-discharge device (manufactured by Aska Electronic Co., Ltd.), the internal resistance R in Example B1 was found to be 109 mΩ.

<Example C: Evaluation of Electric Double Layer Capacitor and Nonaqueous Lithium Power Storage Element>

(Internal Resistance)

The internal resistance Ra (Ω) of an electric double layer capacitor is a value obtained by the following method. First, in an incubator set at 25°C, the electric double layer capacitor is constant-current charged up to 2.5 V at a current value of 2 C, and then constant-voltage charged with application of a constant voltage of 2.5 V for a total of 30 minutes. Subsequently, the electric double layer capacitor is constant-current discharged to 0 V at a current value of 20 C to obtain a discharge curve (time-voltage) at a sampling interval of 0.05 seconds. In this discharge curve, when the voltage at discharge time = 0 seconds, which is determined by extrapolating the voltage values at the discharge times of 1 second and 2 seconds by linear approximation, is defined as Eo, the internal resistance is a value calculated as Ra = $\Delta E$/(current value of 20 C) from the value of voltage drop $\Delta E$ = 2.5 - Eo.

The internal resistance Ra (Ω) of a nonaqueous lithium power storage element is a value obtained by the following method. First, in an incubator set at 25°C, the nonaqueous lithium power storage element is constant-current charged up to 4.0 V at a current value of 2 C, and then constant-voltage charged with application of a constant voltage of 4.0 V for a total of 30 minutes. Subsequently, the nonaqueous lithium power storage element is constant-current discharged to 2.0 V at a current value of 20 C to obtain a discharge curve (time-voltage) at a sampling interval of 0.05 seconds. In this discharge curve, when the voltage at discharge time = 0 seconds, which is determined by extrapolating the voltage values at the discharge times of 1 second and 2 seconds by linear approximation, is defined as Eo, the internal resistance is a value calculated as Ra = $\Delta E$/(current value of 20 C) from the value of voltage drop $\Delta E$ = 4.0 - Eo.

(Micro-Short Circuit Test, Assessment of Micro-Short Circuit, and Micro-Short Circuit Rate)

A micro-short circuit test, assessment of micro-short circuit, and calculation of the micro-short circuit rate are performed by the following method.

First, the nonaqueous lithium power storage element is constant-current discharged to 2.2 V at a 2 C-rate current value, subsequently constant-current charged up to a voltage of 3.8 V at a 2 C-rate current value, and then continuously constant-voltage charged at 3.8 V for 3 hours, whereby the voltage is adjusted to be 3.8 V. Thereafter, the electrode body is left to stand in an incubator set at 25°C for one week in a state of being pressurized with a pressure of 1 kgf/cm$^2$, and the electrode body is judged to have a micro-short circuit if the voltage dropped to 3.0 V or less. The same test is performed for 10 nonaqueous lithium power storage elements, and the proportion of the nonaqueous lithium power storage elements that are judged to have a micro-short circuit is defined as the micro-short circuit rate (%).

First, the electric double layer capacitor is constant-current discharged to 0 V at a 2 C-rate current value, subsequently constant-current charged up to a voltage of 2.5 V at a 2 C-rate current value, and then continuously constant-voltage charged at 2.5 V for 1 hour, whereby the voltage is adjusted to be 2.5 V. Thereafter, the electrode body is left to stand in an incubator set at 25°C for 3 hours in a state of being pressurized with a pressure of 1 kgf/cm$^2$, and the electrode body is judged to have a micro-short circuit if the voltage dropped to 1.0 V or less. The same test is performed for 10 electric double layer capacitors, and the proportion of the electric double layer capacitors that are judged to have a micro-short circuit is defined as the micro-short circuit rate (%).

(Vibration Test)

A vibration test of the power storage element is performed by the following method with reference to UN3480. A micro-short circuit test is performed before the vibration test, and a power storage element not judged to have a micro-short circuit is immobilized on the vibration table of a vibration device, after which vibration is applied by performing sinusoidal logarithmic sweep at frequencies of 7 Hz → 200 Hz → 7 Hz for 15 minutes. This set is repeated 12 times for each of three directions perpendicular to one another. In other words, the test time is 3 hours in each direction for a total of 9 hours. One of the vibration directions is perpendicular to the terminal surface.

In the logarithmic sweep, the peak acceleration is maintained at 1 G until the vibration reaches 18 Hz from 7 Hz. Then, while maintaining the amplitude at 0.8 mm, the vibration is increased until the peak acceleration reaches 8 G (about 50 Hz). Thereafter, a peak acceleration of 8 G is maintained until the vibration is increased to 200 Hz.

• Micro-Short Circuit Rate After Vibration Test

After the vibration test, the above-described micro-short circuit test was performed, and the micro-short circuit rate was calculated.

• Resistance Increase Rate After Vibration Test

After the vibration test, the above-described internal resistance measurement was performed, and the internal resistance Rb after the vibration test was calculated. The resistance increase rate after the vibration test was calculated as a ratio (Rb/Ra) of the internal resistance Rb with respect to the internal resistance Ra before the vibration test.

(High-Temperature High-Voltage Float Test)

First, in an incubator set at 85°C, the nonaqueous lithium power storage element was constant-current charged up to 4.0 V at a current value of 2 C, and then constant-voltage charged with application of a constant voltage of 4.0 V for a total of 90 days. The cell volume before the start of a high-temperature high-voltage float test, Va, and the cell volume 90 days after the high-temperature high-voltage float test, Vb, were measured in accordance with the Archimedes method. The amount of generated gas was calculated by Vb - Va.

<Example D: Evaluation of Nonaqueous Lithium Power Storage Element>

(Micro-Short Circuit Rate After Room-Temperature High-Rate Doping)

The micro-short circuit rate after the room-temperature high-rate doping step is determined by the following method. After the below-described room-temperature high-rate doping, in a 25°C environment, the nonaqueous lithium power storage element is constant-current discharged to 2.2 V at a 2 C-rate current value, subsequently constant-current charged up to a voltage of 4.0 V at a 2 C-rate current value, and then continuously constant-voltage charged at 4.0 V for 3 hours, whereby the voltage is adjusted to be 4.0 V. Thereafter, the electrode body is left to stand in a 25°C environment for 24 hours in a state of being pressurized with a pressure of 1 kgf/cm$^2$, and the electrode body is judged to have a micro-short circuit if the voltage dropped to 3.8 V or less. The same test is performed for 10 nonaqueous lithium power storage elements, and the proportion of the nonaqueous lithium power storage elements that are judged to have a micro-short circuit is defined as the micro-short circuit rate (%).

(Internal Resistance)

The internal resistance Ra (Ω) of a nonaqueous lithium power storage element containing activated carbon in its positive electrode is a value obtained by the following method. First, in an incubator set at 25°C, the nonaqueous lithium power storage element is constant-current charged up to 4.0 V at a current value of 2 C, and then constant-voltage charged with application of a constant voltage of 4.0 V for a total of 30 minutes. Subsequently, the nonaqueous lithium power storage element is constant-current discharged to 2.0 V at a current value of 20 C to obtain a discharge curve (time-voltage) at a sampling interval of 0.05 seconds. In this discharge curve, when the voltage at discharge time = 0 seconds, which is determined by extrapolating the voltage values at the discharge times of 1 second and 2 seconds by linear approximation, is defined as Eo, the internal resistance is a value calculated as Ra = ΔE/(current value of 20 C) from the value of voltage drop ΔE = 4.0 - Eo. The internal resistance Ra (Ω) of a nonaqueous lithium power storage element not containing activated carbon in its positive electrode is a value obtained by the following method. First, in an incubator set at 25°C, the nonaqueous lithium power storage element is constant-current charged up to 4.0 V at a current value of 2 C, and then constant-voltage charged with application of a constant voltage of 4.0 V for a total of 30 minutes. Thereafter, the sampling interval is set to 0.05 seconds, and the voltage value $E_1$ (V) is measured after the nonaqueous lithium power storage element is discharged for 2 seconds at a current value $I_1$ (A) corresponding to 2 C. When the same measurement is performed at 10 C and 20 C, the current values are defined as $I_2$ and $I_3$, respectively, and the voltage values are defined as $E_2$ and $E_3$, respectively. The current values $I_1$, $I_2$, and $I_3$ are plotted on abscissa while the voltage values $E_1$, $E_2$, and $E_3$ are plotted on ordinate, and the internal resistance (mΩ) is calculated from the slope.

(Low-Temperature Cycle Test)

The capacity retention rate after a low-temperature cycle test is a value determined by the following method. First, for the nonaqueous lithium power storage element before a low-temperature cycle test, the capacity Qa before the low-temperature cycle test is measured in accordance with the above-described capacity measurement method. Next, in an incubator set at 0°C, the nonaqueous lithium power storage element is constant-current charged up to 4.0 V at a current value of 50 C, and then constant-current discharged to 2.5 V at a current value of 50 C. After repeating this charge-discharge operation 30,000 times, the capacity Qb after the low-temperature cycle test is measured in accordance with the above-described capacity measurement method. The value of Qb/Qa is defined as the capacity change rate (%) in the low-temperature cycle test.

(High-Temperature Cycle Test)

The capacity retention rate after a high-temperature cycle test is a value determined by the following method. First, for the nonaqueous lithium power storage element before a high-temperature cycle test, the capacity Qc before the high-temperature cycle test is measured in accordance with the above-described capacity measurement method. Next, in an incubator set at 85°C, the nonaqueous lithium power storage element is constant-current charged up to 4.0 V at a current value of 50 C, and then constant-current discharged to 2.5 V at a current value of 50 C. After repeating this charge-discharge operation 30,000 times, the capacity Qd after the high-temperature cycle test is measured in accordance with the above-described capacity measurement method. The value of Qd/Qc is defined as the capacity change rate (%) in the high-temperature cycle test.

<Example E: Evaluation of Lithium Ion Secondary Battery>

The characteristics of a lithium ion secondary battery are evaluated as described below. The characteristics of a lithium ion secondary battery are such that the operating voltage varies depending on the combination of a positive electrode active material and a negative electrode active material; therefore, it is necessary to change the preset values of the charging and discharging voltages as appropriate based on the types of the positive electrode active material and the negative electrode active material in the lithium ion secondary battery to be measured. Accordingly, the charging and discharging voltages used for the evaluation of the characteristics are not particularly limited to the values exemplified below.

(Decomposition Efficiency of Lithium Compound)

The decomposition efficiency E (%) of a lithium compound is a value obtained by the following method. First, a cell corresponding to a lithium ion secondary battery precursor is pre-doped by constant-current constant-voltage charging in accordance with the above-described method. In this process, the charge capacity $Q_{CG}$ (mAh) at a cell voltage of 4.2 V or more is divided by the theoretical capacity $Q_{Th}$ (mAh) of the lithium compound contained in a positive electrode precursor to calculate the decomposition efficiency E of the lithium compound, i.e., $E = Q_{CG}/Q_{Th} \times 100$. With regard to the theoretical capacity $Q_{Th}$ (mAh) of the lithium compound, when the theoretical capacity of lithium per weight of the lithium compound is defined as $Q_1$ (mAh/g) ($Q_1 = 725$ mAh/g when the lithium compound is lithium carbonate), the active material layer basis weight and the area of the positive electrode precursor are defined as $M_C$ (g/m$^2$) and $Z_C$ (m$^2$), respectively, and the weight ratio of the lithium compound in the active material layer is defined as $R_C$ (%), the theoretical capacity $Q_{Th}$ (mAh) can be calculated using the following equation:

$$Q_{Th} = Q_1 \times M_C \times Z_C \times R_C \times 100.$$

(Discharge Capacity)

The capacity Q (Wh) is a value obtained by the following method. First, in an incubator set at 25°C, a cell corresponding to the lithium ion secondary battery is constant-current charged up to a preset voltage (3.6 V when the positive electrode active material is LFP, or 4.2 V when the positive electrode active material is LMFP) at a current value of 0.1 C, and then constant-voltage charged with application of the preset voltage for 30 minutes. Subsequently, the cell is constant-current discharged to 2.5 V at a current value of 0.1 C, and the electric capacity in this process is defined as Q (Wh).

(Discharge Capacity Per Unit Voltage in Low-Voltage Range)

The discharge capacity X (mAh/V) per unit voltage in a low-voltage range is a value obtained by the following method. First, in an incubator set at 25°C, a cell corresponding to the lithium ion secondary battery is constant-current discharged to 2.5 V at a current value of 0.1 C. Subsequently, the cell is constant-current charged up to 3.0 V at a current value of 0.1 C, and then constant-voltage charged with application of 3.0 V for 30 minutes. Thereafter, the cell is constant-current discharged to 2.5 V at a current value of 0.1 C, and the electric capacity in this process is defined as A (Ah). The discharge capacity X per unit voltage in a low-voltage range can be calculated using the following equation: X = A/(3.0 - 2.5), i.e., X = A/0.5. When X is small, it indicates that the voltage change is steep in the final stage of discharging of the lithium ion secondary battery at a voltage of 3.0 V or less. When X is large, the voltage change in the final stage of discharging is small, and the accuracy of SOC estimation by the OCV method is improved.

(Internal Resistance)

The internal resistance Ra ($\Omega$) is a value obtained by the following method. First, in an incubator set at 25°C, a cell corresponding to the lithium ion secondary battery is constant-current charged up to the above-described preset voltage at a current value of 0.1 C, and then constant-voltage charged with application of a constant voltage at the preset voltage for 30 minutes. Subsequently, the cell corresponding to the lithium ion secondary battery is constant-current discharged to 2.5 V at a current value of 2 C to obtain a discharge curve (time-voltage). In this discharge curve, when the voltage at discharge time = 0 seconds, which is determined by extrapolating the voltage values at the discharge times of 2 second and 4 seconds by linear approximation, is defined as Eo, the internal resistance Ra ($\Omega$) is a value calculated as Ra = $\Delta$E/(2C (current value A)) from the value of voltage drop $\Delta$E = 3.6 - Eo.

(High-Temperature Storage Test)

The resistance increase rate (Rb/Ra) after a high-temperature storage test is determined by the following method. First, in an incubator set at 25°C, a cell corresponding to the lithium ion secondary battery is constant-current charged up to 3.5 V at a current value of 0.5 C, and then constant-voltage charged at a voltage of 3.5 V for 30 minutes. The lithium ion secondary battery is stored in a 60°C incubator for 30 days, and the internal resistance is measured before and after this test. When the internal resistance before the start of the test is defined as Ra ($\Omega$) and the internal resistance after the completion of the test is defined as Rb ($\Omega$), the resistance increase rate after the high-temperature storage test relative to before the start of the test is calculated by Rb/Ra.

<<Example A>>

<Example A1>

(Preparation of Positive Electrode Activated Carbon)

A crushed coconut shell carbide was placed in a small carbonization furnace, and carbonized at 500°C for 6 hours in a nitrogen atmosphere to obtain a carbonized product. The thus obtained carbonized product was placed in an activation furnace, and water vapor heated in a preheating furnace was introduced into the activation furnace at a rate of 1 kg/h, after which the temperature was raised to 900°C over a period of 10 hours to activate the carbonized product. The thus activated carbonized product was taken out and cooled in a nitrogen atmosphere to obtain activated carbon. The thus obtained activated carbon was washed with flushing water for 10 hours, drained, dried for 10 hours in an electric dryer maintained at 115°C, and then pulverized for 2 hours using a ball mill to obtain an activated carbon 1. As a result of measuring the average particle size of the activated carbon 1 using a laser-diffraction particle size distribution analyzer (SALD-2000J) manufactured by Shimadzu Corporation, the average particle size of the activated carbon 1 was found to be 4.5 $\mu$m. Further, the pore distribution of the activated carbon 1 was measured using a pore distribution analyzer (AUTOSORB-1 AS-1-MP) manufactured by Yuasa Ionics Co., Ltd. As a result, the BET specific surface area, the amount of mesopores ($V_1$), and the amount of micropores ($V_2$) were found to be 2,460 m$^2$/g, 0.56 cc/g, and 0.92 cc/g, respectively.

(Production of Positive Electrode)

For the production of a positive electrode coating liquid, materials were dispersed by the following method. First, a 10 wt.% aqueous solution of carboxymethyl cellulose (CMC) and lithium iron phosphate (LFP) were mixed and dispersed for 20 minutes at 10°C and 60 rpm using a planetary mixer. Next, the activated carbon 1 was added, and the resultant was dispersed for 20 minutes at 10°C and 60 rpm using a planetary mixer. Then, lithium carbonate A (average particle size: 5.1 $\mu$m), lithium carbonate B (average particle size: 0.5 $\mu$m), carbon black (CB), a 40 wt.% suspension of acrylic latex (LTX), and water were added such that the solid content weight was 35%, and the resultant was dispersed for 20 minutes at 10°C and 60 rpm using a planetary mixer to obtain a positive electrode coating liquid. It is noted here that the above-described materials were each weighed as follows in terms of solid content ratio: 36.71 wt.% of activated carbon, 31.60 wt.% of lithium iron phosphate (LFP), 1.00 wt.% of carboxymethyl cellulose (CMC), 13.08 wt.% of lithium carbonate A, 10.61 wt.% of lithium carbonate B, a total of 23.69 wt.% of these lithium carbonates, 3.00 wt.% of carbon black (CB), 3.00 wt.% of acrylic latex (LTX), and 1.00 wt.% of PVP (polyvinylpyrrolidone). The thus obtained dispersion was stored at 25°C for a whole day and night. Using a small die coater, the positive electrode coating liquid was applied to one side of a 15-$\mu$m thick conductive layer-coated aluminum foil in a target active material layer basis weight of 50 g/m$^2$ per side, and this aluminum foil was passed through a 60°C drying furnace to be dried with hot air for 2 minutes, and subsequently pressed using a roll press at a pressure of 6 kN/cm and a pressing-part surface temperature of 25°C, whereby a positive electrode precursor was obtained.

(Production of Negative Electrode)

A mixture having a solid content of 30.0 wt.% was obtained by mixing 81.0 wt.% of artificial graphite having an average particle size of 5.0 $\mu$m, 15.0 wt.% of carbon black, 2.0 wt.% of a styrene-butadiene rubber, 2.0 wt.% of carboxymethyl cellulose (CMC) as a dispersant, and distilled water. The thus obtained mixture was dispersed for 10 minutes at a rotation speed of 2,000 rpm using a planetary centrifugal mixer "AWATORI RENTARO" (registered trademark)" manufactured by Thinky Corporation to prepare a negative electrode coating liquid. Using a small die coater, the thus obtained negative electrode coating liquid was applied to both sides of a 10-$\mu$m thick electrolytic copper foil in a target active material layer basis weight of 16 g/m$^2$ per side, and this copper foil was passed through a 60°C drying furnace and dried with hot air for 2 minutes. Subsequently, this copper foil was pressed using a roll press at a pressure of 5 kN/cm and a pressing-part surface temperature of 25°C, whereby a negative electrode was produced.

(Preparation of Electrolytic solution)

Using a mixed solvent of ethylene carbonate (EC) and ethyl methyl carbonate (EMC) (EC:EMC = 33:67 (volume ratio)) as an organic solvent, an electrolyte salt was dissolved therein such that the concentration of LiPF$_6$ was 1.2 mol/L, whereby an electrolytic solution was obtained.

(Assembly Step)

A piece was cut out from the positive electrode precursor such that its positive electrode active material layer had a size of 4 cm $\times$ 9 cm, and vacuum-dried for 24 hours at a temperature of 200°C. A piece was also cut out from the negative electrode in a size of 4.3 cm $\times$ 9.3 cm, and vacuum-dried for 12 hours at a temperature of 200°C. Further, a 4.8 cm $\times$ 9.8 cm polyethylene separator (manufactured by Asahi Kasei Corporation, thickness: 15 $\mu$m) was prepared. These were disposed in layers in the order of the positive electrode precursor, the separator, and the negative electrode such that the positive electrode active material layer and the negative electrode active material layer faced each other via the separator, whereby an electrode laminate was obtained. A positive electrode terminal and a negative electrode terminal were ultrasonically welded to the thus obtained electrode laminate, and this electrode laminate was put into a casing formed of an aluminum laminated packaging material, after which the casing was heat-sealed on three sides including the electrode terminals.

(Injection, Impregnation, and Sealing Steps)

Under the atmospheric pressure in a dry-air environment having a temperature of 25°C and a dew point of -40°C or lower, about 2.5 g of the above-prepared electrolytic solution was injected into the casing in which the electrode laminate was housed. Then, this casing housing the electrode laminate and the electrolytic solution was placed in a decompression chamber, and the pressure was reduced from the atmospheric pressure to -87 kPa, after which the pressure was brought back to the atmospheric pressure, and the casing was left to stand for 5 minutes. Subsequently, for the casing in the chamber, a process of reducing the pressure from the atmospheric pressure to -87 kPa and then restoring the atmospheric pressure was repeated four times, and the casing was left to stand for 15 minutes under the atmospheric pressure. By these steps, the electrode laminate was impregnated with the electrolytic solution. Thereafter, this electrode laminate impregnated with the electrolytic solution was placed in a vacuum sealing machine, and the casing was sealed at 180°C for 10 seconds with a pressure of 0.1 MPa under a reduced pressure of -95 kPa.

(Lithium Doping Step)

A central portion of the thus sealed electrode laminate was sandwiched from both sides by 5 cm × 10 cm silicone sponge buffer materials and pressed with a pressure of 30 kPa. This electrode laminate was constant-current charged up to a voltage of 4.3 V with a current value of 10 mA at a temperature of 56°C and then continuously constant-voltage charged at 4.5 V for 2.5 hours, whereby initial charging was performed to dope the negative electrode with lithium.

(Aging Step)

In an 80°C environment, the thus doped electrode body was adjusted to have a voltage of 4.2 V by performing constant-current discharging to a voltage of 2.0 V at a current value of 100 mA, subsequently performing constant-current charging up to a voltage of 4.2 V, and then performing constant-voltage charging for 10 minutes. Thereafter, the electrode body was stored in an 80°C incubator for 24 hours.

(Degassing Step)

The aluminum laminated packaging material of the thus aged electrode body was partially opened in a dry-air environment having a temperature of 25°C and a dew point of -40°C or lower. Subsequently, the electrode body was placed in a decompression chamber, and a process of reducing the pressure from the atmospheric pressure to -80 kPa over a period of 3 minutes using a diaphragm pump and then restoring the atmospheric pressure over a period of 3 minutes was repeated for a total of three times. Thereafter, the electrode body was placed in a vacuum sealing machine, and the pressure was reduced to -90 kPa, after which the aluminum laminated packaging material was sealed at 200°C for 10 seconds with a pressure of 0.1 MPa, whereby a nonaqueous lithium power storage element was produced.

(Measurement and Evaluation)

The thus obtained nonaqueous lithium power storage element was measured and evaluated by the above-described methods. The conditions and the measurement and evaluation results of Example A1 are shown in Tables A1 to A6.

<Examples A2 to A51 and Comparative Examples A1 to A1>

In Examples A2 to A51 and Comparative Examples A1 to A11, nonaqueous lithium power storage elements were produced in the same manner as in Example A1, except for the conditions shown in Tables A1 to A6. These conditions as well as the measurement and evaluation results are shown in Tables A1 to A6.

[Table A1]

Table A1

| | Main materials of positive electrode dispersion | | | | | | | Positive electrode dispersion production temperature (°C) | Positive electrode dispersion storage temperature (°C) | Lithium doping temperature (°C) |
|---|---|---|---|---|---|---|---|---|---|---|
| | Activated carbon (% by weight) | LFP (% by weight) | Li carbonate, total (% by weight) | Li carbonate (A) (% by weight) | Li carbonate (B) (% by weight) | Li carbonate (A) particle size (μm) | Li carbonate (B) particle size (μm) | | | |
| Example A1 | 36.71 | 31.60 | 23.69 | 13.08 | 10.61 | 5.1 | 0.5 | 10 | 25 | 56 |
| Example A2 | 2.71 | 64.94 | 24.35 | 7.83 | 16.53 | 2.9 | 0.8 | 10 | 25 | 56 |
| Example A3 | 14.07 | 68.94 | 8.99 | 2.96 | 6.03 | 3.3 | 0.8 | 10 | 25 | 48 |
| Example A4 | 4.81 | 39.27 | 47.92 | 22.37 | 25.56 | 4.0 | 0.7 | 10 | 25 | 56 |
| Example A5 | 12.05 | 64.53 | 15.42 | 3.08 | 12.33 | 2.2 | 0.8 | 10 | 25 | 55 |
| Example A6 | 12.50 | 51.80 | 27.70 | 22.16 | 5.54 | 7.2 | 0.8 | 10 | 25 | 56 |
| Example A7 | 6.89 | 58.23 | 26.88 | 18.80 | 8.08 | 5.2 | 0.3 | 10 | 25 | 56 |
| Example A8 | 11.54 | 57.25 | 23.21 | 4.64 | 18.57 | 3.3 | 0.6 | 10 | 25 | 56 |
| Example A9 | 11.60 | 65.71 | 14.69 | 2.83 | 11.86 | 4.7 | 1 | 25 | 25 | 55 |
| Example A10 | 7.25 | 61.95 | 22.80 | 18.24 | 4.56 | 6.4 | 0.8 | 10 | 25 | 56 |
| Example A11 | 11.28 | 60.25 | 20.47 | 6.55 | 13.92 | 2.9 | 0.6 | 10 | 25 | 56 |
| Example A12 | 10.96 | 62.62 | 18.42 | 7.22 | 11.20 | 3.2 | 0.7 | 10 | 10 | 64 |
| Example A13 | 19.31 | 59.87 | 12.82 | 5.50 | 7.32 | 3.1 | 0.8 | 10 | 25 | 52 |
| Example A14 | 12.68 | 52.43 | 26.89 | 13.24 | 13.64 | 4.3 | 0.5 | 10 | 25 | 56 |
| Example A15 | 9.01 | 59.50 | 23.49 | 9.03 | 14.46 | 3.4 | 0.5 | 10 | 25 | 56 |
| Example A16 | 7.65 | 61.79 | 22.56 | 8.57 | 13.99 | 4.2 | 0.6 | 10 | 25 | 56 |
| Example A17 | 7.01 | 67.53 | 17.46 | 8.57 | 8.89 | 5.1 | 0.9 | 10 | 25 | 55 |
| Example A18 | 9.83 | 71.74 | 10.43 | 4.85 | 5.58 | 5.1 | 0.8 | 10 | 25 | 48 |
| Example A19 | 12.42 | 68.09 | 11.49 | 6.58 | 4.91 | 4.8 | 0.7 | 10 | 25 | 49 |
| Example A20 | 7.39 | 63.07 | 21.54 | 8.20 | 13.35 | 3.5 | 0.8 | 10 | 25 | 56 |
| Example A21 | 12.78 | 52.14 | 27.08 | 8.41 | 18.67 | 3.2 | 0.6 | 10 | 25 | 56 |

(continued)

| | Activated carbon (% by weight) | LFP (% by weight) | Main materials of positive electrode dispersion | | | | | Positive electrode dispersion production temperature (°C) | Positive electrode dispersion storage temperature (°C) | Lithium doping temperature (°C) |
| | | | Li carbonate, total (% by weight) | Li carbonate (A) (% by weight) | Li carbonate (B) (% by weight) | Li carbonate (A) particle size (μm) | Li carbonate (B) particle size (μm) | | | |
|---|---|---|---|---|---|---|---|---|---|---|
| Example A22 | 2.93 | 44.20 | 44.87 | 18.38 | 26.49 | 4.1 | 0.7 | 10 | 25 | 56 |
| Example A23 | 14.59 | 62.21 | 15.20 | 3.93 | 11.28 | 2.0 | 0.7 | 10 | 25 | 54 |
| Example A24 | 12.72 | 62.76 | 16.52 | 5.44 | 11.08 | 2.5 | 0.8 | 10 | 25 | 55 |
| Example A25 | 6.42 | 59.67 | 25.91 | 9.26 | 16.65 | 3.7 | 0.5 | 10 | 25 | 56 |
| Example A26 | 10.67 | 52.74 | 28.59 | 15.44 | 13.15 | 5.5 | 0.8 | 10 | 25 | 56 |
| Example A27 | 15.42 | 60.85 | 15.73 | 12.59 | 3.15 | 7.1 | 0.5 | 10 | 25 | 55 |
| Example A28 | 12.45 | 64.68 | 14.87 | 10.34 | 4.53 | 5.0 | 0.6 | 10 | 25 | 53 |
| Example A29 | 9.16 | 61.09 | 21.75 | 14.10 | 7.65 | 5.0 | 0.5 | 10 | 25 | 56 |
| Example A30 | 7.29 | 55.43 | 29.28 | 8.77 | 20.50 | 3.1 | 0.6 | 10 | 25 | 56 |

[Table A2]

[Table A2]

Table A2

| | Main materials of positive electrode dispersion | | | | | | | Positive electrode dispersion production temperature (°C) | Positive electrode dispersion storage temperature (°C) | Lithium doping temperature (°C) |
|---|---|---|---|---|---|---|---|---|---|---|
| | Activated carbon (% by weight) | LFP (% by weight) | Li carbonate, total (% by weight) | Li carbonate (A) (% by weight) | Li carbonate (B) (% by weight) | Li carbonate (A) particle size (μm) | Li carbonate (B) particle size (μm) | | | |
| Example A31 | 10.24 | 62.94 | 18.82 | 6.53 | 12.29 | 3.8 | 0.6 | 10 | 25 | 56 |
| Example A32 | 14.47 | 62.02 | 15.51 | 4.69 | 10.82 | 3.9 | 0.7 | 10 | 25 | 54 |
| Example A33 | 12.94 | 54.78 | 24.28 | 4.86 | 19.42 | 2.5 | 0.7 | 10 | 25 | 56 |
| Example A34 | 8.72 | 64.19 | 19.09 | 4.74 | 14.36 | 2.6 | 0.5 | 10 | 25 | 56 |
| Example A35 | 12.79 | 67.33 | 11.88 | 5.23 | 6.65 | 4.4 | 0.6 | 10 | 25 | 50 |
| Example A36 | 12.37 | 53.34 | 26.29 | 14.72 | 11.57 | 5.3 | 0.5 | 10 | 25 | 56 |
| Example A37 | 10.81 | 62.11 | 19.08 | 14.81 | 4.28 | 6.2 | 0.6 | 10 | 25 | 56 |
| Example A38 | 15.74 | 57.27 | 18.99 | 8.64 | 10.35 | 3.9 | 0.4 | 10 | 10 | 56 |
| Example A39 | 13.91 | 58.40 | 19.69 | 8.96 | 10.73 | 4.1 | 0.4 | 10 | 10 | 56 |
| Example A40 | 10.73 | 58.50 | 22.77 | 6.95 | 15.82 | 3.3 | 0.5 | 10 | 10 | 56 |
| Example A41 | 9.04 | 56.28 | 26.68 | 8.05 | 18.62 | 3.2 | 0.4 | 10 | 10 | 56 |
| Example A42 | 9.04 | 63.26 | 19.70 | 12.10 | 7.60 | 5.4 | 0.8 | 10 | 10 | 56 |
| Example A43 | 5.49 | 65.03 | 21.48 | 7.20 | 14.27 | 3.6 | 0.6 | 10 | 10 | 56 |
| Example A44 | 2.69 | 64.86 | 24.45 | 8.20 | 16.25 | 3.5 | 0.7 | 10 | 10 | 56 |
| Example A45 | 8.55 | 60.00 | 23.45 | 13.57 | 9.88 | 5.1 | 0.9 | 10 | 25 | 65 |
| Example A46 | 10.12 | 63.98 | 17.90 | 9.07 | 8.83 | 4.4 | 0.7 | 10 | 25 | 65 |
| Example A47 | 8.39 | 58.81 | 24.80 | 8.65 | 16.15 | 3.2 | 0.8 | 10 | 25 | 65 |
| Example A48 | 10.51 | 66.09 | 15.40 | 7.17 | 8.23 | 3.9 | 0.8 | 10 | 25 | 64 |
| Example A49 | 13.39 | 52.70 | 25.91 | 12.86 | 13.06 | 4.3 | 0.6 | 10 | 25 | 63 |
| Example A50 | 7.20 | 60.68 | 24.12 | 13.28 | 10.84 | 4.7 | 0.5 | 10 | 25 | 59 |
| Example A51 | 11.73 | 60.61 | 19.66 | 11.35 | 8.31 | 5.0 | 0.7 | 10 | 25 | 57 |

EP 4 668 393 A1

(continued)

| | Main materials of positive electrode dispersion | | | | | | | Positive electrode dispersion production temperature (°C) | Positive electrode dispersion storage temperature (°C) | Lithium doping temperature (°C) |
|---|---|---|---|---|---|---|---|---|---|---|
| | Activated carbon (% by weight) | LFP (% by weight) | Li carbonate, total (% by weight) | Li carbonate (A) (% by weight) | Li carbonate (B) (% by weight) | Li carbonate (A) particle size ($\mu$m) | Li carbonate (B) particle size ($\mu$m) | | | |
| Comparative Example A1 | 56.50 | 35.27 | 0.23 | 0.60 | 0.10 | 10.0 | 0.7 | 25 | 25 | 41 |
| Comparative Example A2 | 39.44 | 28.31 | 24.25 | 9.35 | 14.90 | 3.5 | 0.8 | 10 | 25 | 56 |
| Comparative Example A3 | 3.21 | 74.06 | 14.73 | 3.83 | 10.91 | 3.7 | 0.9 | 10 | 25 | 54 |
| Comparative Example A4 | 10.44 | 75.88 | 5.68 | 2.34 | 3.34 | 3.7 | 0.4 | 25 | 25 | 36 |
| Comparative Example A5 | 3.35 | 36.28 | 52.37 | 19.01 | 33.36 | 3.8 | 0.9 | 25 | 25 | 56 |
| Comparative Example A6 | 9.33 | 61.75 | 20.92 | 3.60 | 17.32 | 1.8 | 0.5 | 25 | 25 | 56 |
| Comparative Example A7 | 13.20 | 65.32 | 13.48 | 12.83 | 0.65 | 8.2 | 0.6 | 25 | 25 | 53 |
| Comparative Example A8 | 16.08 | 63.67 | 12.25 | 7.53 | 4.72 | 3.6 | 0.5 | 25 | 25 | 52 |
| Comparative Example A9 | 5.98 | 57.58 | 28.44 | 7.55 | 20.89 | 4.2 | 0.9 | 25 | 25 | 56 |
| Comparative Example A10 | 10.47 | 55.52 | 26.01 | 3.33 | 22.68 | 2.2 | 0.5 | 25 | 25 | 56 |
| Comparative Example A11 | 14.48 | 66.38 | 11.14 | 9.72 | 1.43 | 7.8 | 0.9 | 25 | 25 | 50 |

[Table A3]

Table A3

| | LFP weight ratio | Total pore volume (cc/g) | D25 (μm) | D75 (μm) | D25 - D75 (μm) | Li carbonate in positive electrode active material layer (% by weight) | Volume resistivity of positive electrode active material layer (Ωcm) | Aggregates (aggregates/cm$^2$) |
|---|---|---|---|---|---|---|---|---|
| | | | | | Evaluation results of positive electrode | | | |
| Example A1 | 0.41 | 0.44 | 0.50 | 0.15 | 0.35 | 7.11 | 9.87 | 1.02 |
| Example A2 | 0.85 | 0.45 | 0.38 | 0.13 | 0.25 | 7.31 | 9.17 | 1.03 |
| Example A3 | 0.75 | 0.29 | 0.39 | 0.14 | 0.25 | 5.16 | 10.60 | 0.92 |
| Example A4 | 0.75 | 0.70 | 0.44 | 0.13 | 0.31 | 14.38 | 9.93 | 1.24 |
| Example A5 | 0.75 | 0.36 | 0.34 | 0.14 | 0.20 | 5.17 | 9.85 | 1.07 |
| Example A6 | 0.71 | 0.49 | 0.64 | 0.19 | 0.45 | 8.31 | 9.80 | 0.98 |
| Example A7 | 0.79 | 0.47 | 0.52 | 0.11 | 0.41 | 8.06 | 9.92 | 1.03 |
| Example A8 | 0.74 | 0.44 | 0.40 | 0.20 | 0.20 | 6.96 | 10.53 | 1.07 |
| Example A9 | 0.76 | 0.35 | 0.50 | 0.30 | 0.20 | 5.13 | 9.57 | 0.88 |
| Example A10 | 0.79 | 0.44 | 0.50 | 0.15 | 0.45 | 6.84 | 10.44 | 0.88 |
| Example A11 | 0.75 | 0.41 | 0.39 | 0.14 | 0.25 | 6.14 | 10.93 | 0.86 |
| Example A12 | 0.76 | 0.39 | 0.41 | 0.13 | 0.28 | 0.34 | 5.87 | 0.32 |
| Example A13 | 0.68 | 0.33 | 0.41 | 0.11 | 0.30 | 5.68 | 9.53 | 1.18 |
| Example A14 | 0.71 | 0.48 | 0.46 | 0.14 | 0.32 | 8.07 | 10.64 | 0.82 |
| Example A15 | 0.77 | 0.44 | 0.42 | 0.14 | 0.28 | 7.05 | 9.37 | 1.00 |
| Example A16 | 0.79 | 0.43 | 0.47 | 0.19 | 0.27 | 6.77 | 9.09 | 0.90 |
| Example A17 | 0.81 | 0.38 | 0.51 | 0.19 | 0.32 | 5.69 | 9.47 | 1.09 |
| Example A18 | 0.79 | 0.30 | 0.50 | 0.19 | 0.31 | 5.93 | 10.10 | 0.87 |

(continued)

| | Evaluation results of positive electrode | | | | | | | |
|---|---|---|---|---|---|---|---|---|
| | LFP weight ratio | Total pore volume (cc/g) | D25 (µm) | D75 (µm) | D25 - D75 (µm) | Li carbonate in positive electrode active material layer (% by weight) | Volume resistivity of positive electrode active material layer (Ωcm) | Aggregates (aggregates/cm²) |
| Example A19 | 0.76 | 0.32 | 0.50 | 0.15 | 0.36 | 5.96 | 9.01 | 0.81 |
| Example A20 | 0.80 | 0.42 | 0.41 | 0.14 | 0.28 | 6.46 | 9.72 | 1.08 |
| Example A21 | 0.71 | 0.48 | 0.40 | 0.15 | 0.25 | 8.12 | 10.43 | 0.95 |
| Example A22 | 0.79 | 0.67 | 0.45 | 0.16 | 0.29 | 13.46 | 9.40 | 1.01 |
| Example A23 | 0.73 | 0.35 | 0.34 | 0.12 | 0.22 | 5.61 | 9.77 | 0.97 |
| Example A24 | 0.74 | 0.37 | 0.36 | 0.11 | 0.25 | 5.55 | 10.92 | 0.96 |
| Example A25 | 0.80 | 0.47 | 0.43 | 0.16 | 0.27 | 7.77 | 9.85 | 1.07 |
| Example A26 | 0.73 | 0.50 | 0.52 | 0.18 | 0.34 | 8.58 | 9.45 | 0.80 |
| Example A27 | 0.71 | 0.36 | 0.64 | 0.19 | 0.45 | 5.43 | 9.88 | 1.25 |
| Example A28 | 0.75 | 0.36 | 0.51 | 0.10 | 0.41 | 5.89 | 10.91 | 0.83 |
| Example A29 | 0.77 | 0.42 | 0.52 | 0.13 | 0.39 | 6.53 | 10.56 | 0.98 |
| Example A30 | 0.78 | 0.50 | 0.38 | 0.14 | 0.24 | 8.78 | 9.86 | 0.84 |

[Table A4]

Table A4

| | Evaluation results of positive electrode | | | | | | | |
|---|---|---|---|---|---|---|---|---|
| | LFP weight ratio | Total pore volume (cc/g) | D25 (µm) | D75 (µm) | D25 - D75 (µm) | Li carbonate in positive electrode active material layer (% by weight) | Volume resistivity of positive electrode active material layer (Ωcm) | Aggregates (aggregates/cm²) |
| Example A31 | 0.77 | 0.39 | 0.42 | 0.16 | 0.26 | 5.85 | 10.79 | 0.96 |
| Example A32 | 0.73 | 0.35 | 0.44 | 0.20 | 0.24 | 5.76 | 10.00 | 1.26 |

(continued)

| | Evaluation results of positive electrode | | | | | | | |
|---|---|---|---|---|---|---|---|---|
| | LFP weight ratio | Total pore volume (cc/g) | D25 (μm) | D75 (μm) | D25 - D75 (μm) | Li carbonate in positive electrode active material layer (% by weight) | Volume resistivity of positive electrode active material layer (Ωcm) | Aggregates (aggregates/cm²) |
| Example A33 | 0.72 | 0.45 | 0.35 | 0.15 | 0.20 | 7.28 | 10.59 | 0.87 |
| Example A34 | 0.79 | 0.40 | 0.36 | 0.14 | 0.22 | 5.73 | 10.72 | 0.85 |
| Example A35 | 0.76 | 0.32 | 0.46 | 0.16 | 0.30 | 5.75 | 10.50 | 0.83 |
| Example A36 | 0.72 | 0.48 | 0.54 | 0.19 | 0.35 | 7.89 | 9.24 | 0.86 |
| Example A37 | 0.76 | 0.40 | 0.59 | 0.15 | 0.44 | 5.73 | 10.56 | 1.14 |
| Example A38 | 0.70 | 0.40 | 0.45 | 0.14 | 0.31 | 5.70 | 1.47 | 0.00 |
| Example A39 | 0.72 | 0.40 | 0.45 | 0.14 | 0.31 | 5.91 | 1.52 | 0.00 |
| Example A40 | 0.75 | 0.43 | 0.39 | 0.15 | 0.24 | 6.83 | 4.86 | 0.26 |
| Example A41 | 0.76 | 0.48 | 0.39 | 0.15 | 0.24 | 8.00 | 5.53 | 0.33 |
| Example A42 | 0.78 | 0.40 | 0.52 | 0.15 | 0.37 | 5.91 | 6.75 | 0.43 |
| Example A43 | 0.82 | 0.42 | 0.41 | 0.16 | 0.26 | 6.44 | 7.97 | 0.48 |
| Example A44 | 0.85 | 0.45 | 0.41 | 0.16 | 0.26 | 7.34 | 8.04 | 0.53 |
| Example A45 | 0.78 | 0.44 | 0.50 | 0.15 | 0.36 | 0.00 | 10.12 | 0.91 |
| Example A46 | 0.77 | 0.39 | 0.47 | 0.15 | 0.33 | 0.01 | 10.85 | 1.14 |
| Example A47 | 0.77 | 0.46 | 0.40 | 0.14 | 0.26 | 0.12 | 9.70 | 1.16 |
| Example A48 | 0.77 | 0.36 | 0.46 | 0.15 | 0.31 | 0.48 | 9.31 | 0.92 |
| Example A49 | 0.70 | 0.47 | 0.47 | 0.15 | 0.32 | 1.50 | 9.55 | 1.01 |
| Example A50 | 0.79 | 0.45 | 0.48 | 0.14 | 0.35 | 4.95 | 10.24 | 1.28 |
| Example A51 | 0.75 | 0.40 | 0.50 | 0.14 | 0.36 | 5.20 | 9.51 | 0.88 |
| Comparative Example A1 | 0.35 | 0.20 | 0.80 | 0.05 | 0.75 | 0.19 | 10.67 | 1.04 |
| Comparative Example A2 | 0.37 | 0.45 | 0.41 | 0.13 | 0.28 | 7.27 | 9.65 | 0.91 |
| Comparative Example A3 | 0.86 | 0.35 | 0.41 | 0.19 | 0.22 | 5.59 | 10.97 | 0.82 |
| Comparative Example A4 | 0.80 | 0.25 | 0.43 | 0.14 | 0.29 | 5.44 | 10.39 | 1.23 |
| Comparative Example A5 | 0.75 | 0.74 | 0.44 | 0.17 | 0.27 | 15.71 | 10.81 | 0.95 |
| Comparative Example A6 | 0.77 | 0.42 | 0.30 | 0.11 | 0.19 | 6.27 | 9.40 | 0.97 |
| Comparative Example A7 | 0.75 | 0.34 | 0.70 | 0.19 | 0.51 | 5.22 | 10.76 | 0.88 |
| Comparative Example A8 | 0.72 | 0.32 | 0.43 | 0.06 | 0.37 | 5.28 | 9.72 | 1.00 |
| Comparative Example A9 | 0.80 | 0.50 | 0.46 | 0.23 | 0.23 | 8.53 | 9.88 | 0.97 |

(continued)

| | Evaluation results of positive electrode | | | | | | | |
|---|---|---|---|---|---|---|---|---|
| | LFP weight ratio | Total pore volume (cc/g) | D25 (μm) | D75 (μm) | D25 - D75 (μm) | Li carbonate in positive electrode active material layer (% by weight) | Volume resistivity of positive electrode active material layer (Ωcm) | Aggregates (aggregates/cm²) |
| Comparative Example A10 | 0.74 | 0.47 | 0.34 | 0.17 | 0.17 | 7.80 | 10.58 | 1.13 |
| Comparative Example A11 | 0.74 | 0.31 | 0.67 | 0.19 | 0.48 | 5.71 | 9.24 | 1.19 |

[Table A5]

Table A5

| | Evaluation results of nonaqueous lithium power storage element | | | | |
|---|---|---|---|---|---|
| | Current pause resistance ratio | 5°C 10-second output density (kW/L) | Capacity retention rate in low-temperature constant-power (W/cc, constant) cycle | Micro-short circuit rate (%) after low-temperature cycle | Capacity retention rate in high-temperature constant-power cycle |
| Example A1 | 2.3 | 6.4 | 0.80 | 20 | 0.88 |
| Example A2 | 2.5 | 7.3 | 0.71 | 20 | 0.88 |
| Example A3 | 2.5 | 6.1 | 0.72 | 20 | 0.82 |
| Example A4 | 2.6 | 6.3 | 0.80 | 20 | 0.85 |
| Example A5 | 2.6 | 6.3 | 0.75 | 30 | 0.84 |
| Example A6 | 2.7 | 6.4 | 0.76 | 20 | 0.84 |
| Example A7 | 2.7 | 9.1 | 0.96 | 20 | 0.84 |
| Example A8 | 2.4 | 10.0 | 0.94 | 30 | 0.9 |
| Example A9 | 2.6 | 3.6 | 0.48 | 60 | 0.43 |
| Example A10 | 2.4 | 6.4 | 0.74 | 30 | 0.84 |
| Example A11 | 2.7 | 9.7 | 0.96 | 30 | 0.89 |
| Example A12 | 1.6 | 10.1 | 0.96 | 0 | 0.96 |

(continued)

| | Evaluation results of nonaqueous lithium power storage element | | | | |
|---|---|---|---|---|---|
| | Current pause resistance ratio | 5°C 10-second output density (kW/L) | Capacity retention rate in low-temperature constant-power (W/cc, constant) cycle | Micro-short circuit rate (%) after low-temperature cycle | Capacity retention rate in high-temperature constant-power cycle |
| Example A13 | 2.6 | 6.4 | 0.79 | 20 | 0.87 |
| Example A14 | 2.3 | 10.1 | 0.93 | 30 | 0.85 |
| Example A15 | 2.6 | 9.1 | 0.94 | 20 | 0.84 |
| Example A16 | 2.3 | 9.5 | 0.92 | 30 | 0.82 |
| Example A17 | 2.6 | 6.3 | 0.73 | 30 | 0.86 |
| Example A18 | 2.7 | 7.3 | 0.75 | 20 | 0.89 |
| Example A19 | 2.6 | 10.1 | 0.95 | 30 | 0.85 |
| Example A20 | 2.6 | 9.8 | 0.94 | 20 | 0.88 |
| Example A21 | 2.7 | 9.9 | 0.95 | 20 | 0.84 |
| Example A22 | 2.5 | 6.4 | 0.72 | 30 | 0.82 |
| Example A23 | 2.7 | 6.1 | 0.76 | 30 | 0.87 |
| Example A24 | 2.5 | 9.4 | 0.95 | 30 | 0.85 |
| Example A25 | 2.7 | 9.8 | 0.95 | 20 | 0.87 |
| Example A26 | 2.3 | 10.3 | 0.93 | 30 | 0.8 |
| Example A27 | 2.4 | 6.2 | 0.80 | 30 | 0.85 |
| Example A28 | 2.7 | 10.5 | 0.96 | 30 | 0.84 |
| Example A29 | 2.6 | 10.3 | 0.93 | 30 | 0.85 |
| Example A30 | 2.5 | 10.2 | 0.94 | 30 | 0.82 |

[Table A6]

Table A6

| | Evaluation results of nonaqueous lithium power storage element | | | | |
|---|---|---|---|---|---|
| | Current pause resistance ratio | 5°C 10-second output density (kW/L) | Capacity retention rate in low-temperature constant-power (W/cc, constant) cycle | Micro-short circuit rate (%) after low-temperature cycle | Capacity retention rate in high-temperature constant-power cycle |
| Example A31 | 2.3 | 9.8 | 0.94 | 20 | 0.85 |
| Example A32 | 2.7 | 9.1 | 0.92 | 30 | 0.85 |
| Example A33 | 2.68 | 6.9 | 0.77 | 30 | 0.84 |
| Example A34 | 2.42 | 10.3 | 0.95 | 20 | 0.83 |
| Example A35 | 2.61 | 10.4 | 0.93 | 20 | 0.9 |
| Example A36 | 2.67 | 6.9 | 0.73 | 30 | 0.84 |
| Example A37 | 2.47 | 7.0 | 0.73 | 20 | 0.88 |
| Example A38 | 1.00 | 9.1 | 0.95 | 20 | 0.84 |
| Example A39 | 1.05 | 9.4 | 0.92 | 0 | 0.88 |
| Example A40 | 1.53 | 9.2 | 0.92 | 0 | 0.89 |
| Example A41 | 1.74 | 10.4 | 0.95 | 0 | 0.82 |
| Example A42 | 1.79 | 9.3 | 0.94 | 0 | 0.82 |
| Example A43 | 1.90 | 7.3 | 0.80 | 0 | 0.86 |
| Example A44 | 2.10 | 6.6 | 0.78 | 20 | 0.82 |
| Example A45 | 2.44 | 9.4 | 0.94 | 30 | 0.82 |
| Example A46 | 2.40 | 9.9 | 0.93 | 20 | 0.99 |
| Example A47 | 2.30 | 9.5 | 0.94 | 30 | 0.96 |
| Example A48 | 2.42 | 9.7 | 0.95 | 30 | 0.97 |
| Example A49 | 2.65 | 9.1 | 0.93 | 20 | 0.95 |
| Example A50 | 2.32 | 9.9 | 0.94 | 30 | 0.97 |
| Example A51 | 2.62 | 10.3 | 0.95 | 20 | 0.87 |
| Comparative Example A1 | 2.60 | 3.9 | 0.42 | 70 | 0.51 |
| Comparative Example A2 | 2.30 | 3.7 | 0.42 | 80 | 0.51 |
| Comparative Example A3 | 2.50 | 3.8 | 0.35 | 90 | 0.46 |
| Comparative Example A4 | 2.48 | 3.7 | 0.46 | 70 | 0.42 |
| Comparative Example A5 | 2.62 | 3.8 | 0.45 | 80 | 0.5 |
| Comparative Example A6 | 2.61 | 4.0 | 0.50 | 70 | 0.5 |
| Comparative Example A7 | 2.61 | 3.4 | 0.50 | 80 | 0.51 |
| Comparative Example A8 | 2.46 | 3.3 | 0.32 | 70 | 0.49 |

(continued)

| | Evaluation results of nonaqueous lithium power storage element | | | | |
|---|---|---|---|---|---|
| | Current pause resistance ratio | 5°C 10-second output density (kW/L) | Capacity retention rate in low-temperature constant-power (W/cc, constant) cycle | Micro-short circuit rate (%) after low-temperature cycle | Capacity retention rate in high-temperature constant-power cycle |
| Comparative Example A9 | 2.49 | 3.9 | 0.34 | 70 | 0.5 |
| Comparative Example A10 | 2.48 | 3.5 | 0.41 | 70 | 0.51 |
| Comparative Example A11 | 2.34 | 3.7 | 0.33 | 60 | 0.56 |

According to Tables A1 to A6, it was demonstrated that the nonaqueous lithium power storage element of the present disclosure has a favorable low-temperature output density and exhibits a favorable high-power cycle durability over a wide temperature range from low to high temperatures, and that a micro-short circuit in the power storage element during a low-temperature cycle test is inhibited.

<<Example B>>

<Example B1>

(Production of Positive Electrode Coating Liquid)

A mixture 1 was obtained by adding and mixing 47.6 wt.% of activated carbon, 22.4 wt.% of $LiFePO_4$ (specific surface area: 8.6 $m^2$/g, 10% particle size: 0.8 $\mu$m, 90% particle size: 15.4 $\mu$m) as a lithium-transition metal oxide, 21.7 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black with distilled water such that the weight ratio of the solid components (activated carbon, $LiFePO_4$, lithium carbonate, carboxymethyl cellulose, PVP, and carbon black) was 39.8 wt.%. The thus obtained mixture 1 was dispersed for 4 minutes at 2,000 rpm using a planetary centrifugal mixer (manufactured by Thinky Corporation) to obtain a positive electrode coating liquid.

(Production of Positive Electrode Precursor)

Using a control coater (manufactured by Imoto Machinery Co., Ltd.), the thus obtained positive electrode coating liquid was applied to one side of a 15 $\mu$m-thick aluminum foil, which was subsequently dried on a 50°C hot plate to obtain a positive electrode precursor 1. The thus obtained positive electrode precursor 1 was pressed using a 2-ton mechanical roll press (manufactured by Thank-Metal Co., Ltd.) at a pressing-part surface temperature of 25°C.

(Production of Negative Electrode)

A mixture 2 was obtained by adding and mixing 82.3 wt.% of artificial graphite, 2.2 wt.% of SBR (styrene-butadiene rubber), 2.5 wt.% of carboxymethyl cellulose, and 13.0 wt.% of carbon black with distilled water such that the weight ratio of the solid components (artificial graphite, SBR, carboxymethyl cellulose, and carbon black) was 25.6 wt.%. The thus obtained mixture 2 was dispersed for 4 minutes at 2,000 rpm using a planetary centrifugal mixer (manufactured by Thinky Corporation) to obtain a negative electrode coating liquid. Using a control coater (manufactured by Imoto Machinery Co., Ltd.), this negative electrode coating liquid was applied to one side of a 10 $\mu$m-thick copper foil, which was subsequently dried on a 50°C hot plate to obtain a negative electrode.

(Preparation of Electrolytic solution)

Using a mixed solvent of ethylene carbonate (EC), ethyl methyl carbonate (EMC), and dimethyl methyl carbonate (DMC) (EC:EMC:DMC = 34: 22: 44 (volume ratio)) as an organic solvent, electrolyte salts were dissolved therein such that $LiPF_6$ and lithium bis(fluorosulfonyl)imide (LiFSI) had a concentration ratio of 3:1 and a total concentration of 1.2 mol/L.

<Production of Nonaqueous Lithium Power Storage Element>

(Assembly Step)

The above-obtained positive electrode precursor was cut out such that its positive electrode active material layer had a size of 4.3 cm × 9.5 cm (41 cm²), while the above-obtained negative electrode was cut out such that its negative electrode active material layer had a size of 4.6 cm × 9.6 cm (44 cm²). Further, a 4.8 cm × 9.8 cm (47 cm²) polyolefin separator (manufactured by Celgard LLC., thickness: 20 µm) was prepared, and the positive electrode precursor, the separator, and the negative electrode were sequentially disposed in layers to obtain an electrode laminate. A positive electrode terminal and a negative electrode terminal were ultrasonically welded to the thus obtained electrode laminate, and this electrode laminate was put into a container formed of an aluminum laminated packaging material, after which the container was heat-sealed on three sides including the electrode terminals.

(Injection, Impregnation, and Sealing Steps)

Under the atmospheric pressure in an argon environment having a temperature of 25°C and a dew point of -110°C or lower, about 3 g of the above-prepared nonaqueous electrolytic solution was injected into the electrode laminate housed in the aluminum laminated packaging material. Subsequently, this aluminum laminated packaging material housing the electrode laminate and the nonaqueous electrolytic solution was placed in a decompression chamber. A process of reducing the pressure inside the decompression chamber from the atmospheric pressure to -87 kPa and then restoring the atmospheric pressure was repeated four times. By these steps, the electrode laminate was impregnated with the nonaqueous electrolytic solution.

Thereafter, the aluminum laminated packaging material containing the electrode laminate impregnated with the nonaqueous electrolytic solution was placed in a vacuum sealing machine, and sealed at 180°C for 10 seconds with a pressure of 0.1 MPa under a reduced pressure of -90 kPa.

(Alkali Metal Doping Step)

In a 45°C environment, using a charge-discharge device (manufactured by Toyo System Co., Ltd.), the sealed electrode laminate was constant-current charged up to 4.5 V at a constant value of 0.36 mA/cm² per unit area of the positive electrode active material layer, and then constant-voltage charged at 4.5 V for 2 hours to dope the negative electrode with the alkali metal.

(Aging Step)

In a 45°C environment, using a charge-discharge device (manufactured by Toyo System Co., Ltd.), a process of constant-current discharging the thus doped electrode laminate to 2.0 V at a current value of 0.36 mA/cm² per unit area of the positive electrode active material layer and then constant-current charging the electrode laminate up to 4.2 V at a current value of 1.21 mA/cm² was repeated five times. Subsequently, the electrode laminate was constant-current discharged to 3.6 V at a current value of 1.21 mA/cm² in a 45°C environment, and then constant-current charged up to 4.2 V at a current value of 1.21 mA/cm² in a 25°C environment, followed by 30-minute constant-voltage charging at 4.2 V. This electrode laminate was left to stand for 16 hours in a 60°C environment and thereby aged.

(Degassing Step)

The thus aged electrode laminate was placed under the atmospheric pressure in an argon atmosphere having a temperature of 25°C and a dew point of -110°C. The aluminum laminated packaging material of the electrode body was partially opened. Subsequently, the electrode laminate was placed in a decomposition chamber. A process of reducing the pressure inside the decompression chamber from the atmospheric pressure to -87 kPa and then restoring the atmospheric pressure was repeated four times.

Thereafter, this electrode laminate was placed in a vacuum sealing machine, and the aluminum laminated packaging material was sealed at 180°C for 10 seconds with a pressure of 0.1 MPa under a reduced pressure of -90 kPa, whereby a nonaqueous lithium power storage element was obtained.

<Example B2>

A nonaqueous lithium power storage element was produced in the same manner as in the above-described Example B1, except that 42.7 wt.% of activated carbon, 33.0 wt.% of LiFePO₄ (specific surface area: 8.6 m²/g, 10% particle

size: 0.8 μm, 90% particle size: 15.4 μm) as a lithium-transition metal oxide, 16.0 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Example B3>

A nonaqueous lithium power storage element was produced in the same manner as in the above-described Example B1, except that 39.5 wt.% of activated carbon, 36.3 wt.% of LiFePO$_4$ (specific surface area: 8.6 m$^2$/g, 10% particle size: 0.8 μm, 90% particle size: 15.4 μm) as a lithium-transition metal oxide, 15.9 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Example B4>

A nonaqueous lithium power storage element was produced in the same manner as in the above-described Example B1, except that 33.5 wt.% of activated carbon, 42.5 wt.% of LiFePO$_4$ (specific surface area: 8.6 m$^2$/g, 10% particle size: 0.8 μm, 90% particle size: 15.4 μm) as a lithium-transition metal oxide, 15.7 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Example B5>

A nonaqueous lithium power storage element was produced in the same manner as in the above-described Example B1, except that 42.7 wt.% of activated carbon, 33.0 wt.% of LiFePO$_4$ (specific surface area: 8.1 m$^2$/g, 10% particle size: 1.0 μm, 90% particle size: 11.3 μm) as a lithium-transition metal oxide, 16.0 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Example B6>

A nonaqueous lithium power storage element was produced in the same manner as in the above-described Example B1, except that 42.7 wt.% of activated carbon, 33.0 wt.% of LiFePO$_4$ (specific surface area: 8.7 m$^2$/g, 10% particle size: 0.7 μm, 90% particle size: 12.5 μm) as a lithium-transition metal oxide, 16.0 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Example B7>

A nonaqueous lithium power storage element was produced in the same manner as in the above-described Example B1, except that 42.7 wt.% of activated carbon, 33.0 wt.% of LiFePO4 (specific surface area: 9.2 m$^2$/g, 10% particle size: 0.4 μm, 90% particle size: 6.7 μm) as a lithium-transition metal oxide, 16.0 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Example B8>

A nonaqueous lithium power storage element was produced in the same manner as in the above-described Example B1, except that 42.7 wt.% of activated carbon, 33.0 wt.% of LiFePO$_4$ (specific surface area: 10.8 m$^2$/g, 10% particle size: 0.9 μm, 90% particle size: 13.0 μm) as a lithium-transition metal oxide, 16.0 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Comparative Example B1>

A nonaqueous lithium power storage element was produced in the same manner as in the above-described Example B1, except that 56.7 wt.% of activated carbon, 31.5 wt.% of lithium carbonate, 1.3 wt.% of carboxymethyl cellulose, 5.0 wt.% of acrylic latex, 1.8 wt.% of PVP (polyvinylpyrrolidone), and 3.7 wt.% of carbon black were used.

<Comparative Example B2>

A nonaqueous lithium power storage element was produced in the same manner as in the above-described Example B1, except that 53.8 wt.% of activated carbon, 10.2 wt.% of LiFePO$_4$ (specific surface area: 8.6 m$^2$/g, 10% particle size: 0.8 $\mu$m, 90% particle size: 15.4 $\mu$m) as a lithium-transition metal oxide, 27.7 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Comparative Example B3>

A nonaqueous lithium power storage element was produced in the same manner as in the above-described Example B1, except that 28.2 wt.% of activated carbon, 48.0 wt.% of LiFePO$_4$ (specific surface area: 8.6 m$^2$/g, 10% particle size: 0.8 $\mu$m, 90% particle size: 15.4 $\mu$m) as a lithium-transition metal oxide, 15.5 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Comparative Example B4>

A nonaqueous lithium power storage element was produced in the same manner as in the above-described Example B1, except that 24.4 wt.% of activated carbon, 52.0 wt.% of LiFePO$_4$ (specific surface area: 8.6 m$^2$/g, 10% particle size: 0.8 $\mu$m, 90% particle size: 15.4 $\mu$m) as a lithium-transition metal oxide, 15.3 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Comparative Example B5>

A nonaqueous lithium power storage element was produced in the same manner as in the above-described Example B1, except that 15.4 wt.% of activated carbon, 61.6 wt.% of LiFePO$_4$ (specific surface area: 8.6 m$^2$/g, 10% particle size: 0.8 $\mu$m, 90% particle size: 15.4 $\mu$m) as a lithium-transition metal oxide, 14.7 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Comparative Example B6>

A nonaqueous lithium power storage element was produced in the same manner as in the above-described Example B1, except that 42.7 wt.% of activated carbon, 33.0 wt.% of LiFePO$_4$ (specific surface area: 8.8 m$^2$/g, 10% particle size: 2.4 $\mu$m, 90% particle size: 11.0 $\mu$m) as a lithium-transition metal oxide, 16.0 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Comparative Example B7>

A nonaqueous lithium power storage element was produced in the same manner as in the above-described Example B1, except that 42.7 wt.% of activated carbon, 33.0 wt.% of LiFePO$_4$ (specific surface area: 9.8 m$^2$/g, 10% particle size: 1.5 $\mu$m, 90% particle size: 12.3 $\mu$m) as a lithium-transition metal oxide, 16.0 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Comparative Example B8>

A nonaqueous lithium power storage element was produced in the same manner as in the above-described Example B1, except that 42.7 wt.% of activated carbon, 33.0 wt.% of LiFePO$_4$ (specific surface area: 10.3 m$^2$/g, 10% particle size: 0.4 $\mu$m, 90% particle size: 2.0 $\mu$m) as a lithium-transition metal oxide, 16.0 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Comparative Example B9>

A nonaqueous lithium power storage element was produced in the same manner as in the above-described Example B1, except that 42.7 wt.% of activated carbon, 33.0 wt.% of $LiFePO_4$ (specific surface area: 10.7 $m^2$/g, 10% particle size: 1.6 $\mu$m, 90% particle size: 8.9 $\mu$m) as a lithium-transition metal oxide, 16.0 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Comparative Example B10>

A nonaqueous lithium power storage element was produced in the same manner as in the above-described Example B1, except that 42.7 wt.% of activated carbon, 33.0 wt.% of $LiFePO_4$ (specific surface area: 11.4 $m^2$/g, 10% particle size: 4.5 $\mu$m, 90% particle size: 23.4 $\mu$m) as a lithium-transition metal oxide, 16.0 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Comparative Example B11>

A nonaqueous lithium power storage element was produced in the same manner as in the above-described Example B1, except that 42.7 wt.% of activated carbon, 33.0 wt.% of $LiFePO_4$ (specific surface area: 11.8 $m^2$/g, 10% particle size: 0.8 $\mu$m, 90% particle size: 6.5 $\mu$m) as a lithium-transition metal oxide, 16.0 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Comparative Example B12>

A nonaqueous lithium power storage element was produced in the same manner as in the above-described Example B1, except that 42.7 wt.% of activated carbon, 33.0 wt.% of $LiFePO_4$ (specific surface area: 12.0 $m^2$/g, 10% particle size: 0.8 $\mu$m, 90% particle size: 10.2 $\mu$m) as a lithium-transition metal oxide, 16.0 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Comparative Example B13>

A nonaqueous lithium power storage element was produced in the same manner as in the above-described Example B1, except that 42.7 wt.% of activated carbon, 33.0 wt.% of $LiFePO_4$ (specific surface area: 12.5 $m^2$/g, 10% particle size: 1.2 $\mu$m, 90% particle size: 13.5 $\mu$m) as a lithium-transition metal oxide, 16.0 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

<Comparative Example B 14>

A nonaqueous lithium power storage element was produced in the same manner as in the above-described Example B1, except that 42.7 wt.% of activated carbon, 33.0 wt.% of $LiFePO_4$ (specific surface area: 13.1 $m^2$/g, 10% particle size: 0.4 $\mu$m, 90% particle size: 2.1 $\mu$m) as a lithium-transition metal oxide, 16.0 wt.% of lithium carbonate, 1.3 wt.% of carboxymethyl cellulose, 5.0 wt.% of acrylic latex, 1.0 wt.% of PVP (polyvinylpyrrolidone), and 1.0 wt.% of carbon black were used.

With regard to Examples B1 and B2 and Comparative Examples B1 and B2, the basis weight (g/$cm^2$) of the positive electrode active material layer was adjusted such that the weight of activated carbon contained in the positive electrode active material layer was the same. With regard to Examples B3 to B8 and Comparative Examples B3 to B14, the basis weight (g/$cm^2$) of the positive electrode active material layer was adjusted such that the weight of lithium atoms contained in the positive electrode active material layer was the same.

The evaluation results of Examples B1 to B8 and Comparative Examples B1 to B14 are shown in Table B1.

[Table B1]

Table B1

| | Ratio in positive electrode precursor (wt.%) | | A1 + A2 | A2/A1 | Specific surface area of lithium-transition metal oxide (m²/g) | Particle size of lithium-transition metal oxide (μm) | | C2/C1 | η (%) | Q (mAh) | R (mΩ) |
|---|---|---|---|---|---|---|---|---|---|---|---|
| | A1 | A2 | | | B | C1 | C2 | | | | |
| Example B1 | 55.9 | 22.4 | 78.3 | 0.40 | 8.6 | 0.8 | 15.4 | 19.3 | 60.1 | 18.7 | 109 |
| Example B2 | 51.0 | 33.0 | 84.0 | 0.65 | 8.6 | 0.8 | 15.4 | 19.3 | 59.6 | 19.4 | 103 |
| Example B3 | 47.8 | 36.3 | 84.1 | 0.76 | 8.6 | 0.8 | 15.4 | 19.3 | 59.5 | 19.6 | 109 |
| Example B4 | 41.8 | 42.5 | 84.3 | 1.02 | 8.6 | 0.8 | 15.4 | 19.3 | 53.5 | 19.8 | 112 |
| Example B5 | 51.0 | 33.0 | 84.0 | 0.65 | 8.1 | 1.0 | 11.3 | 11.3 | 59.8 | 19.2 | 104 |
| Example B6 | 51.0 | 33.0 | 84.0 | 0.65 | 8.7 | 0.7 | 12.5 | 17.9 | 58.9 | 19.5 | 103 |
| Example B7 | 51.0 | 33.0 | 84.0 | 0.65 | 9.2 | 0.4 | 6.7 | 16.8 | 59.4 | 19.4 | 110 |
| Example B8 | 51.0 | 33.0 | 84.0 | 0.65 | 10.8 | 0.9 | 13.0 | 14.4 | 58.8 | 19.3 | 109 |
| Comparative Example B1 | 68.5 | 0.0 | 68.5 | 0.00 | - | - | - | - | 46.3 | 7.9 | 112 |
| Comparative Example B2 | 62.1 | 10.2 | 72.3 | 0.16 | 8.6 | 0.8 | 15.4 | 19.3 | 47.1 | 10.0 | 118 |
| Comparative Example B3 | 36.5 | 48.0 | 84.5 | 1.32 | 8.6 | 0.8 | 15.4 | 19.3 | 48.0 | 19.0 | 160 |
| Comparative Example B4 | 32.7 | 52.0 | 84.7 | 1.59 | 8.6 | 0.8 | 15.4 | 19.3 | 43.2 | 18.9 | 260 |
| Comparative Example B5 | 23.7 | 61.6 | 85.3 | 2.60 | 8.6 | 0.8 | 15.4 | 19.3 | 32.8 | 17.1 | 295 |
| Comparative Example B6 | 51.0 | 33.0 | 84.0 | 0.65 | 8.8 | 2.4 | 11.0 | 4.6 | 57.2 | 18.8 | 110 |
| Comparative Example B7 | 51.0 | 33.0 | 84.0 | 0.65 | 9.8 | 1.5 | 12.3 | 8.2 | 58.5 | 19.3 | 107 |
| Comparative Example B8 | 51.0 | 33.0 | 84.0 | 0.65 | 10.3 | 0.4 | 2.0 | 5.0 | 54.5 | 19.4 | 117 |
| Comparative Example B9 | 51.0 | 33.0 | 84.0 | 0.65 | 10.7 | 1.6 | 8.9 | 5.6 | 54.6 | 19.1 | 117 |
| Comparative Example B10 | 51.0 | 33.0 | 84.0 | 0.65 | 11.4 | 4.5 | 23.4 | 5.2 | 45.7 | 17.9 | 114 |
| Comparative Example B11 | 51.0 | 33.0 | 84.0 | 0.65 | 11.8 | 0.8 | 6.5 | 8.1 | 49.1 | 18.2 | 120 |
| Comparative Example B12 | 51.0 | 33.0 | 84.0 | 0.65 | 12.0 | 0.8 | 10.2 | 12.8 | 50.4 | 17.5 | 116 |
| Comparative Example B13 | 51.0 | 33.0 | 84.0 | 0.65 | 12.5 | 1.2 | 13.5 | 11.3 | 48.3 | 17.8 | 121 |
| Comparative Example B14 | 51.0 | 33.0 | 84.0 | 0.65 | 13.1 | 0.4 | 2.1 | 5.3 | 47.6 | 18.2 | 117 |

According to Examples B1 to B4 and Comparative Examples B1 to B5, when the value of $A_2/A_1$ is 0.30 or more, the capacity is increased because of an increase in the ratio of the lithium-transition metal oxide. When the value of $A_2/A_1$ is 1.20 or less, the ratio of the lithium-transition metal compound is not excessively high, and the electron conductivity in the positive electrode active material layer is thus favorably maintained; therefore, it is believed that not only a low resistance can be obtained but also, since the decomposition of lithium carbonate is facilitated and the negative electrode is sufficiently doped, a high capacity can be obtained.

According to Example B2, Examples B5 to B8, and Comparative Examples B6 to B14, when B is 7.5 $m^2/g$ or more, since the contact between the lithium-transition metal oxide and the carbon material having a high conductivity is improved, the capacity is believed to be improved. When B is 11.0 $m^2/g$ or less, the amount of the carbon material required for maintaining the conductivity of the lithium-transition metal oxide can be reduced. Accordingly, since the contact between the carbon material and the alkali metal compound is favorably maintained, doping of an electrode favorably proceeds even if the electrode has a composition in which the content ratio of active materials is high at $A_1 + A_2$ of 74 wt.% or more while the ratio of the alkali metal compound is low; therefore, it is believed that a nonaqueous lithium power storage element having a high capacity and a low resistance can be obtained. Further, when the value of $C_2/C_1$ is 10 or more, since the lithium-transition metal oxide has a wide particle size distribution, the filling property thereof in the positive electrode active material layer is improved; therefore, it is believed that the decomposition of the alkali metal compound is facilitated, and a further increase in capacity and a further reduction in resistance are achieved in the nonaqueous lithium power storage element.

<<Example C>>

<Example C1>

(Preparation of Positive Electrode Activated Carbon)

A crushed coconut shell carbide was placed in a small carbonization furnace, and carbonized at 500°C for 6 hours in a nitrogen atmosphere to obtain a carbonized product. The thus obtained carbonized product was placed in an activation furnace, and water vapor heated in a preheating furnace was introduced into the activation furnace at a rate of 1 kg/h, after which the temperature was raised to 900°C over a period of 10 hours to activate the carbonized product. The thus activated carbonized product was taken out and cooled in a nitrogen atmosphere to obtain activated carbon. The thus obtained activated carbon was washed with flushing water for 10 hours, drained, dried for 10 hours in an electric dryer maintained at 115°C, and then pulverized for 2 hours using a ball mill to obtain an activated carbon 1. As a result of measuring the average particle size of the activated carbon 1 using a laser-diffraction particle size distribution analyzer (SALD-2000J) manufactured by Shimadzu Corporation, the average particle size of the activated carbon 1 was found to be 4.5 $\mu$m. Further, the pore distribution of the activated carbon 1 was measured using a pore distribution analyzer (AUTOSORB-1 AS-1-MP) manufactured by Yuasa Ionics Co., Ltd. As a result, the BET specific surface area, the amount of mesopores ($V_1$), and the amount of micropores ($V_2$) were found to be 2,460 $m^2/g$, 0.56 cc/g, and 0.92 cc/g, respectively.

(Production of Positive Electrode)

For the production of a positive electrode coating liquid, materials were dispersed by the following method. First, a 10 wt.% aqueous solution of carboxymethyl cellulose (CMC) and lithium iron phosphate (LFP) were mixed and dispersed for 20 minutes at 15°C and 60 rpm using a planetary mixer. Next, the activated carbon 1 was added, and the resultant was dispersed for 20 minutes at 15°C and 60 rpm using a planetary mixer. Then, lithium carbonate, carbon black (CB), a 40 wt.% suspension of acrylic latex (LTX), and water were added such that the solid content weight was 45%, and the resultant was dispersed for 20 minutes at 15°C and 60 rpm using a planetary mixer to obtain a positive electrode coating liquid. It is noted here that the above-described materials were each weighed as follows in terms of solid content ratio: 45.0 wt.% of activated carbon, 18.5 wt.% of lithium iron phosphate (LFP), 1.3 wt.% of carboxymethyl cellulose (CMC), 23.5 wt.% of lithium carbonate, 4.7 wt.% of carbon black (CB), 5.0 wt.% of acrylic latex (LTX), and 2.0 wt.% of PVP (polyvinylpyrrolidone).

Using a small die coater, the positive electrode coating liquid was applied to both sides of a 15-$\mu$m thick plain aluminum foil in a target active material layer basis weight of 50 g/m² per side, and this aluminum foil was passed through a 60°C drying furnace and dried with hot air for 2 minutes, whereby a positive electrode precursor was obtained.

(Production of Negative Electrode)

A mixture having a solid content weight ratio of 30.0 wt.% was obtained by mixing 93.5 wt.% of natural graphite having an average particle size of 4.5 $\mu$m, 3.0 wt.% of carbon black, 2.0 wt.% of a styrene-butadiene rubber, 1.5 wt.% of carboxymethyl cellulose (CMC) as a dispersant, and distilled water. The thus obtained mixture was dispersed for 10 minutes at a rotation speed of 2,000 rpm using a planetary centrifugal mixer "AWATORI RENTARO" (registered trademark)" manufactured by Thinky Corporation to prepare a negative electrode coating liquid. Using a small die coater, the thus obtained negative electrode coating liquid was applied to both sides of a 10-$\mu$m thick electrolytic copper foil in a target active material layer basis weight of 19 g/m$^2$ per side, and this copper foil was passed through a 60°C drying furnace and dried with hot air for 2 minutes. Subsequently, this copper foil was pressed using a roll press at a pressure of 5 kN/cm and a pressing-part surface temperature of 25°C, whereby a negative electrode was produced.

(Preparation of Electrolytic solution)

Using a mixed solvent of ethylene carbonate (EC), propylene carbonate (PC), and ethyl methyl carbonate (EMC) (EC:PC:EMC = 12: 11:67 (volume ratio)) as an organic solvent, an electrolyte salt was dissolved therein such that the concentration of LiPF$_6$ was 1.2 mol/L, whereby an electrolytic solution was obtained.

(Assembly Step)

The positive electrode precursor was cut out such that its positive electrode active material layer had a size of 5 cm $\times$ 10 cm, and vacuum-dried for 12 hours at a temperature of 200°C. A piece was cut out from the negative electrode in a size of 5.3 cm $\times$ 10.3 cm, and vacuum-dried for 12 hours at a temperature of 200°C. Further, a 5.5 cm $\times$ 10.5 cm polyethylene separator (manufactured by Asahi Kasei Corporation, thickness: 15 $\mu$m) was prepared. Using these materials, three pieces of the positive electrode precursor and four pieces of the negative electrode were disposed in layers in the order of negative electrode/separator/positive electrode precursor/separator/negative electrode/separator/positive electrode precursor/negative electrode/separator/positive electrode precursor/separator/negative electrode such that each positive electrode active material layer and each negative electrode active material layer faced one another via the separator and the outermost layer was the negative electrode, whereby an electrode body was obtained. For the purpose of inhibiting the peeling between the positive electrode active material layer and the positive electrode power collector of the positive electrode precursor caused by welding, the entire surface of the thus obtained electrode body was covered with a SUS sheet and fixed using a spring with application of a pressure of 0.2 kgf/cm$^2$. A positive electrode terminal and a negative electrode terminal were ultrasonically welded to the electrode body. This electrode body was put into a casing formed of an aluminum laminated packaging material, and the casing was subsequently heat-sealed on three sides including the electrode terminals.

(Injection, Impregnation, and Sealing Steps)

In the injection step, under the atmospheric pressure in a dry-air environment having a temperature of 25°C and a dew point of -40°C or lower, about 6 g of the above-prepared electrolytic solution was injected into the casing in which the electrode body was housed.
In the impregnation step, the casing housing the electrode body and the electrolytic solution was placed in a decompression chamber. In this Example C1, for the purpose of inhibiting the peeling between the positive electrode active material layer and the positive electrode power collector of the positive electrode precursor caused by impregnation, two-step impregnation was performed. In other words, the pressure was reduced from the atmospheric pressure to -50 kPa at a rate of 1.0 kPa/s and then from -50 kPa to -90 kPa at a rate of 0.1 kPa/s, and the pressure was subsequently brought back from -90 kPa to -50 kPa at a rate of 0.1 kPals and then from -50 kPa to the atmospheric pressure at a rate of 1.0 kPa/s, after which the casing was left to stand for 5 minutes. The above-described process of reducing the pressure and then restoring the atmospheric pressure was repeated four times. By this process, the electrode body was impregnated with the electrolytic solution.
In the sealing step, the electrode body impregnated with the electrolytic solution was placed in a vacuum sealing machine, and the casing was sealed at 180°C for 10 seconds with a pressure of 0.1 MPa under a reduced pressure of -95 kPa. In this Example C1, for the purpose of inhibiting the peeling between the positive electrode active material layer and the positive electrode power collector of the positive electrode precursor, the thus sealed casing was left to stand for 16 hours under the atmospheric pressure.

(Lithium Doping Step)

A central portion of the sealed electrode laminate was sandwiched from both sides by 6.0 cm $\times$ 11.0 cm silicone sponge buffer materials and pressed with a pressure of 30 kPa. This electrode laminate was constant-current charged up to the voltage shown in Table C1 with a current value of 50 mA at the temperature shown in Table C1 and then continuously constant-voltage charged at the voltage shown in Table C1 for 2.5 hours, whereby initial charging was performed to dope the negative electrode with lithium.

(Aging Step)

In an 80°C environment, the thus doped electrode body was adjusted to have a voltage of 4.2 V by performing constant-current discharging to a voltage of 2.0 V at a current value of 100 mA, subsequently performing constant-current charging up to a voltage of 4.2 V, and then performing constant-voltage charging for 10 minutes. Thereafter, the electrode body was stored in an 80°C incubator for 24 hours.

(Degassing Step)

The aluminum laminated packaging material of the thus aged electrode body was partially opened in a dry-air environment having a temperature of 25°C and a dew point of -40°C or lower. Subsequently, the electrode body was placed in a decompression chamber, and a process of reducing the pressure from the atmospheric pressure to -80 kPa over a period of 3 minutes using a diaphragm pump and then restoring the atmospheric pressure over a period of 3 minutes was repeated for a total of three times. Thereafter, the electrode body was placed in a vacuum sealing machine, and the pressure was reduced to -90 kPa, after which the aluminum laminated packaging material was sealed at 200°C for 10 seconds with a pressure of 0.1 MPa, whereby a nonaqueous lithium power storage element was produced.

(Measurement and Evaluation)

The thus obtained nonaqueous lithium power storage element was measured and evaluated by the above-described methods. The conditions and the measurement and evaluation results of Example C1 are shown in Tables C1 to C3.

<Example C12>

A nonaqueous lithium power storage element was produced in the same manner as in Example C1, except for the conditions that are described below and shown in Table C1. These conditions as well as the measurement and evaluation results are shown in Tables C1 and C2.

(Production of Positive Electrode)

For the production of a positive electrode coating liquid, materials were dispersed by the following method. First, a 10 wt.% aqueous solution of carboxymethyl cellulose (CMC) and the activated carbon 1 were mixed and dispersed for 20 minutes at 15°C and 60 rpm using a planetary mixer. Then, lithium carbonate, carbon black (CB), a 40 wt.% suspension of acrylic latex (LTX), and water were added such that the solid content weight was 45%, and the resultant was dispersed for 20 minutes at 15°C and 60 rpm using a planetary mixer to obtain a positive electrode coating liquid.
It is noted here that the above-described materials were each weighed as follows in terms of solid content ratio: 54.7 wt.% of activated carbon, 1.3 wt.% of carboxymethyl cellulose (CMC) aqueous solution, 32.3 wt.% of lithium carbonate, 4.7 wt.% of carbon black (CB), 5.0 wt.% of acrylic latex (LTX), and 2.0 wt.% of PVP (polyvinylpyrrolidone).
Using a small die coater, the positive electrode coating liquid was applied to both sides of a 15-$\mu$m thick plain aluminum foil in a target active material layer basis weight of 50 g/m$^2$ per side, and this aluminum foil was passed through a 60°C drying furnace and dried with hot air for 2 minutes, whereby a positive electrode precursor was obtained.

<<Comparative Example C1>>

A nonaqueous lithium power storage element was produced and evaluated in the same manner as in Example C1, except for the conditions that are described below and shown in Table C1.

(Preparation of Positive Electrode Activated Carbon)

A positive electrode activated carbon was prepared in the same manner as in Example C1.

(Production of Positive Electrode)

For the production of a positive electrode coating liquid, materials were dispersed by the following method. Activated carbon, lithium iron phosphate (LFP), carboxymethyl cellulose (CMC), lithium carbonate, carbon black (CB), a 40 wt.% suspension of acrylic latex (LTX), and PVP (polyvinylpyrrolidone) were batch-mixed, and distilled water was subsequently added such that the solid content weight ratio was 24.5%, after which the resultant was dispersed for 20 minutes at 25°C and 60 rpm using a planetary mixer to obtain a positive electrode coating liquid.

It is noted here that the above-described materials were each weighed as follows in terms of solid content ratio: 33.9 wt.% of activated carbon, 41.1 wt.% of lithium iron phosphate (LFP), 1.3 wt.% of carboxymethyl cellulose (CMC) aqueous solution, 16.0 wt.% of lithium carbonate, 4.7 wt.% of carbon black (CB), 1.0 wt.% of acrylic latex (LTX), and 2.0 wt.% of PVP (polyvinylpyrrolidone).

Using a small die coater, the positive electrode coating liquid was applied to both sides of a 15-$\mu$m thick plain aluminum foil in a target active material layer basis weight of 50 g/m$^2$ per side, and this aluminum foil was passed through a 60°C drying furnace and dried with hot air for 2 minutes, whereby a positive electrode precursor was obtained.

(Production of Negative Electrode)

A negative electrode was produced in the same manner as in Example C1.

(Preparation of Electrolytic solution)

An electrolytic solution was prepared in the same manner as in Example C1.

(Assembly Step)

The positive electrode precursor was cut out such that its positive electrode active material layer had a size of 5 cm $\times$ 10 cm, and vacuum-dried for 12 hours at a temperature of 200°C. A piece was cut out from the negative electrode in a size of 5.3 cm $\times$ 10.3 cm, and vacuum-dried for 12 hours at a temperature of 200°C. Further, a 5.5 cm $\times$ 10.5 cm polyethylene separator (manufactured by Asahi Kasei Corporation, thickness: 15 $\mu$m) was prepared. Using these materials, three pieces of the positive electrode precursor and four pieces of the negative electrode were disposed in layers in the order of negative electrode/separator/positive electrode precursor/separator/negative electrode/separator/positive electrode precursor/negative electrode/separator/positive electrode precursor/separator/negative electrode such that each positive electrode active material layer and each negative electrode active material layer faced one another via the separator and the outermost layer was the negative electrode, whereby an electrode body was obtained. The thus obtained electrode body was not particularly restrained, and a positive electrode terminal and a negative electrode terminal were ultrasonically welded thereto. This electrode body was put into a casing formed of an aluminum laminated packaging material, and the casing was subsequently heat-sealed on three sides including the electrode terminals.

(Injection, Impregnation, and Sealing Steps)

In the injection step, under the atmospheric pressure in a dry-air environment having a temperature of 25°C and a dew point of -40°C or lower, about 6 g of the above-prepared electrolytic solution was injected into the casing in which the electrode body was housed.

In the impregnation step, the casing housing the electrode body and the electrolytic solution was placed in a decompression chamber. In this Example C12, one-step impregnation was performed. In other words, the pressure was reduced from the atmospheric pressure to -90 kPa at a rate of 1.0 kPa/s, and then brought back from -90 kPa to the atmospheric pressure at a rate of 1.0 kPa/s, after which the casing was left to stand for 5 minutes. The above-described process of reducing the pressure and then restoring the atmospheric pressure was repeated four times. By this process, the electrode body was impregnated with the electrolytic solution.

In the sealing step, the electrode body impregnated with the electrolytic solution was placed in a vacuum sealing machine, and the casing was sealed at 180°C for 10 seconds with a pressure of 0.1 MPa under a reduced pressure of -95 kPa. In this Example C12, the next step was carried out in 2 hours with no time after the sealing.

(Lithium Doping Step)

A central portion of the sealed electrode laminate was sandwiched from both sides by 3.5 cm $\times$ 7.5 cm silicone sponge buffer materials and pressed with a pressure of 30 kPa. This electrode laminate was constant-current charged up to the voltage shown in Table C1 with a current value of 50 mA at the temperature shown in Table C1 and then continuously constant-voltage charged at the voltage shown in Table C1 for 2.5 hours, whereby initial charging was performed to dope the negative electrode with lithium.

(Aging Step)

The thus lithium-doped electrode body was taken out of a dry box and, in an 80°C environment, the electrode body was adjusted to have a voltage of 4.2 V by performing constant-current discharging to a voltage of 4.2 V at 100 mA and then performing constant-current discharging at 4.2 V for 1 hour. Thereafter, the electrode body was stored in an 80°C incubator for 24 hours.

(Degassing Step)

The aluminum laminated packaging material of the thus aged electrode body was partially opened in a dry-air environment having a temperature of 25°C and a dew point of -40°C or lower. Subsequently, the electrode body was placed in a decompression chamber, and a process of reducing the pressure from the atmospheric pressure to -80 kPa over a period of 3 minutes using a diaphragm pump and then restoring the atmospheric pressure over a period of 3 minutes was repeated for a total of three times. Thereafter, the electrode body was placed in a vacuum sealing machine, and the pressure was reduced to -90 kPa, after which the aluminum laminated packaging material was sealed at 200°C for 10 seconds with a pressure of 0.1 MPa, whereby a nonaqueous lithium power storage element was produced.

(Measurement and Evaluation)

The thus obtained nonaqueous lithium power storage element was measured and evaluated by the above-described methods. The conditions and the measurement and evaluation results of Example C1 are shown in Tables C1 and C2.

<Examples C2 to C11 and C13 to C30 and Comparative Examples C2 to C42>

In Examples C2 to C11 and C13 to C30 and Comparative Examples C2 to C42, nonaqueous lithium power storage elements were produced in the same manner as in Example C1, except for the conditions shown in Table C1. These conditions as well as the measurement and evaluation results are shown in Tables C1 and C2.

<Example C31>

An electric double layer capacitor was produced and evaluated in the same manner as in Example C1, except for the conditions that are shown in Table C1 and described below.

(Preparation of Positive Electrode Activated Carbon)

A positive electrode activated carbon was prepared in the same manner as in Example C1.

(Production of Positive Electrode)

For the production of a positive electrode coating liquid, materials were dispersed by the following method.
First, a 10 wt.% aqueous solution of carboxymethyl cellulose (CMC) and the activated carbon 1 were mixed and dispersed for 20 minutes at 15°C and 60 rpm using a planetary mixer. Then, lithium carbonate, carbon black (CB), a 40 wt.% suspension of acrylic latex (LTX), and water were added such that the solid content weight was 45%, and the resultant was dispersed for 20 minutes at 15°C and 60 rpm using a planetary mixer to obtain a positive electrode coating liquid.
It is noted here that the above-described materials were each weighed as follows in terms of solid content ratio: 87.0 wt.% of activated carbon, 1.3 wt.% of carboxymethyl cellulose (CMC) aqueous solution, 0 wt.% of lithium carbonate, 4.7 wt.% of carbon black (CB), 5.0 wt.% of acrylic latex (LTX), and 2.0 wt.% of PVP (polyvinylpyrrolidone).
Using a small die coater, the positive electrode coating liquid was applied to both sides of a 15-$\mu$m thick plain aluminum foil in a target active material layer basis weight of 50 g/m$^2$ per side, and this aluminum foil was passed through a 60°C drying furnace and dried with hot air for 2 minutes, whereby a positive electrode precursor was obtained.

(Production of Negative Electrode)

A negative electrode was produced in the same manner as the positive electrode.

(Preparation of Electrolytic solution)

Using a propylene carbonate (PC) solvent as an organic solvent, an electrolyte salt was dissolved therein such that the concentration of triethylmethylammonium tetrafluoroborate was 1.4 mol/L, whereby an electrolytic solution was obtained.

(Assembly Step)

The positive electrode precursor was cut out such that its positive electrode active material layer had a size of 5 cm × 10 cm, and vacuum-dried for 12 hours at a temperature of 200°C. A piece was cut out from the negative electrode in a size of 5 cm × 10 cm, and vacuum-dried for 12 hours at a temperature of 200°C. Further, a 5.5 cm × 10.5 cm polyethylene separator (manufactured by Asahi Kasei Corporation, thickness: 15 $\mu$m) was prepared. Using these materials, three pieces of the positive electrode precursor and four pieces of the negative electrode were disposed in layers in the order of negative electrode/separator/positive electrode precursor/separator/negative electrode/separator/positive electrode precursor/negative electrode/separator/positive electrode precursor/separator/negative electrode such that each positive electrode active material layer and each negative electrode active material layer faced one another via the separator and the outermost layer was the negative electrode, whereby an electrode body was obtained. For the purpose of inhibiting the peeling between the positive electrode active material layer and the positive electrode power collector of the positive electrode precursor caused by welding, the entire surface of the thus obtained electrode body was covered with a SUS sheet and fixed using a spring with application of a pressure of 0.2 kgf/cm$^2$. A positive electrode terminal and a negative electrode terminal were ultrasonically welded to the electrode body, and this electrode body was put into a casing formed of an aluminum laminated packaging material, after which the casing was heat-sealed on three sides including the electrode terminals.

(Injection, Impregnation, and Sealing Steps)

In the injection step, under the atmospheric pressure in a dry-air environment having a temperature of 25°C and a dew point of -40°C or lower, about 6 g of the above-prepared electrolytic solution was injected into the casing in which the electrode body was housed.

In the impregnation step, the casing housing the electrode body and the electrolytic solution was placed in a decompression chamber. In this Example C31, for the purpose of inhibiting the peeling between the positive electrode active material layer and the positive electrode power collector of the positive electrode precursor caused by impregnation, two-step impregnation was performed. In other words, the pressure was reduced from the atmospheric pressure to -50 kPa at a rate of 1.0 kPa/s and then from -50 kPa to -90 kPa at a rate of 0.1 kPa/s, and the pressure was subsequently brought back from -90 kPa to -50 kPa at a rate of 0.1 kPa/s and then from -50 kPa to the atmospheric pressure at a rate of 1.0 kPa/s, after which the casing was left to stand for 5 minutes. The above-described process of reducing the pressure and then restoring the atmospheric pressure was repeated four times. By this process, the electrode body was impregnated with the electrolytic solution.

In the sealing step, the electrode body impregnated with the electrolytic solution was placed in a vacuum sealing machine, and the casing was sealed at 180°C for 10 seconds with a pressure of 0.1 MPa under a reduced pressure of -95 kPa. In this Example C31, for the purpose of inhibiting the peeling between the positive electrode active material layer and the positive electrode power collector of the positive electrode precursor, the thus sealed casing was left to stand for 16 hours under the atmospheric pressure.

(Lithium Doping Step)

The lithium doping step was not performed.

(Aging Step)

After the injection, impregnation, and sealing steps, the electrode body was taken out of a dry box and, in an 80°C environment, the electrode body was adjusted to have a voltage of 2.5 V by performing constant-current discharging to a voltage of 2.5 V at 100 mA and then performing constant-current discharging at 2.5 V for 1 hour. Thereafter, the electrode body was stored in an 80°C incubator for 24 hours.

(Measurement and Evaluation)

The thus obtained nonaqueous power storage element was measured and evaluated by the above-described methods. The conditions and the measurement and evaluation results of Example C31 are shown in Tables C1 and C2.

<Examples C32 to C35 and Comparative Examples C43 to C45>

In Examples C32 to C35 and Comparative Examples C43 to C45, electric double layer capacitors were produced in the same manner as in Example C31, except for the conditions shown in Table C1. These conditions as well as the measurement and evaluation results are shown in Tables C1 and C2.

[Table C1-1]

[Table C1-1]

Table C1-1

| No. | Composition of positive electrode precursor | | | | | Type of positive electrode power collector | Positive electrode dispersion method | | | | Assembly step | Impregnation step | | Lithium doping step | |
|---|---|---|---|---|---|---|---|---|---|---|---|---|---|---|---|
| | Activated carbon (wt.%) | Second active material | Second active material (wt.%) | Amount of binder (wt.%) | Lithium carbonate in positive electrode precursor (wt.%) | | CMC addition method | Mixing order | Solid content ratio (wt.%) | Slurry temperature | Restraint during ultrasonic welding | Impregnation rate | Post-impregnation retention time (h) | Doping temperature (°C) | Doping voltage (V) |
| Example C1 | 45.0 | LFP | 18.5 | 5.0 | 23.5 | plain foil | aqueous solution | CMC aqueous solution → LFP → activated carbon → other | 45 | 15°C | yes | two steps | 16 | 44 | 4.4 |
| Example C2 | 29.6 | LFP | 35.9 | 5.0 | 21.4 | plain foil | aqueous solution | CMC aqueous solution → LFP → activated carbon → other | 45 | 15°C | yes | two steps | 6 | 38 | 4.5 |
| Example C3 | 34.0 | LFP | 36.9 | 5.0 | 16.2 | plain foil | aqueous solution | CMC aqueous solution → LFP → activated carbon → other | 45 | 15°C | yes | two steps | 16 | 39 | 4.4 |
| Example C4 | 34.4 | LFP | 36.7 | 5.0 | 16.0 | plain foil | aqueous solution | CMC aqueous solution → LFP → activated carbon → other | 45 | 20°C | yes | two steps | 16 | 41 | 4.35 |

(continued)

| No. | Composition of positive electrode precursor | | | | | Type of positive electrode power collector | Positive electrode dispersion method | | | | Assembly step | Impregnation step | | Lithium doping step | |
|---|---|---|---|---|---|---|---|---|---|---|---|---|---|---|---|
| | Activated carbon (wt.%) | Second active material | Second active material (wt.%) | Amount of binder (wt.%) | Lithium carbonate in positive electrode precursor (wt.%) | | CMC addition method | Mixing order | Solid content ratio (wt.%) | Slurry temperature | Restraint during ultrasonic welding | Impregnation rate | Post-impregnation retention time (h) | Doping temperature (°C) | Doping voltage (V) |
| Example C5 | 33.9 | LFP | 33.1 | 5.0 | 20.0 | plain foil | aqueous solution | CMC aqueous solution → LFP → activated carbon → other | 45 | 15°C | yes | two steps | 16 | 43 | 4.4 |
| Example C6 | 53.5 | LFP | 1.4 | 5.0 | 32.2 | plain foil | aqueous solution | CMC aqueous solution → LFP → activated carbon → other | 45 | 15°C | yes | two steps | 16 | 42 | 4.35 |
| Example C7 | 54.5 | LFP | 2.4 | 5.0 | 30.1 | plain foil | aqueous solution | CMC aqueous solution → LFP → activated carbon → other | 45 | 15°C | yes | two steps | 16 | 42 | 4.35 |
| Example C8 | 49.8 | LFP | 20.0 | 5.0 | 17.2 | plain foil | aqueous solution | CMC aqueous solution → LFP → activated carbon → other | 45 | 15°C | yes | two steps | 16 | 38 | 4.35 |

(continued)

| No. | Composition of positive electrode precursor | | | | | Type of positive electrode power collector | Positive electrode dispersion method | | | | Assembly step | Impregnation step | | Lithium doping step | |
|---|---|---|---|---|---|---|---|---|---|---|---|---|---|---|---|
| | Activated carbon (wt.%) | Second active material | Second active material (wt.%) | Amount of binder (wt.%) | Lithium carbonate in positive electrode precursor (wt.%) | | CMC addition method | Mixing order | Solid content ratio (wt.%) | Slurry temperature | Restraint during ultrasonic welding | Impregnation rate | Post-impregnation retention time (h) | Doping temperature (°C) | Doping voltage (V) |
| Example C9 | 28.8 | LFP | 36.5 | 5.0 | 21.7 | plain foil | aqueous solution | CMC aqueous solution → LFP → activated carbon → other | 45 | 15°C | yes | two steps | 16 | 37 | 4.35 |
| Example C10 | 10.8 | LFP | 57.1 | 5.0 | 19.1 | plain foil | aqueous solution | CMC aqueous solution → LFP → activated carbon → other | 45 | 15°C | yes | two steps | 16 | 38 | 4.35 |
| Example C11 | 7.6 | LFP | 57.2 | 5.0 | 22.2 | plain foil | aqueous solution | CMC aqueous solution → LFP → activated carbon → other | 45 | 15°C | yes | two steps | 16 | 37 | 4.35 |
| Example C12 | 54.7 | none | - | 5.0 | 32.3 | plain foil | aqueous solution | CMC aqueous solution → activated carbon → other | 45 | 15°C | yes | two steps | 16 | 39 | 4.5 |
| Example C13 | 52.9 | none | - | 5.0 | 34.1 | plain foil | aqueous solution | CMC aqueous solution → activated carbon → other | 45 | 15°C | yes | two steps | 16 | 37 | 4.5 |

(continued)

| No. | Composition of positive electrode precursor | | | | | Type of positive electrode power collector | Positive electrode dispersion method | | | | Assembly step | Impregnation step | | Lithium doping step | |
|---|---|---|---|---|---|---|---|---|---|---|---|---|---|---|---|
| | Activated carbon (wt.%) | Second active material | Second active material (wt.%) | Amount of binder (wt.%) | Lithium carbonate in positive electrode precursor (wt.%) | | CMC addition method | Mixing order | Solid content ratio (wt.%) | Slurry temperature | Restraint during ultrasonic welding | Impregnation rate | Post-impregnation retention time (h) | Doping temperature (°C) | Doping voltage (V) |
| Example C14 | 55.3 | none | - | 5.0 | 31.7 | plain foil | aqueous solution | CMC aqueous solution → activated carbon → other | 45 | 15°C | yes | two steps | 16 | 39 | 4.5 |
| Example C15 | 52.0 | none | - | 5.0 | 35.0 | plain foil | aqueous solution | CMC aqueous solution → activated carbon → other | 45 | 15°C | yes | two steps | 16 | 38 | 4.35 |
| Example C16 | 57.6 | none | - | 5.0 | 29.4 | plain foil | aqueous solution | CMC aqueous solution → activated carbon → other | 45 | 15°C | yes | two steps | 16 | 36 | 4.35 |
| Example C17 | 61.5 | none | - | 5.0 | 25.5 | plain foil | aqueous solution | CMC aqueous solution → activated carbon → other | 45 | 15°C | yes | two steps | 16 | 40 | 4.35 |
| Example C18 | 38.1 | none | - | 5.0 | 48.9 | plain foil | aqueous solution | CMC aqueous solution → activated carbon → other | 45 | 15°C | yes | two steps | 16 | 43 | 4.35 |

| No. | Composition of positive electrode precursor | | | | | Type of positive electrode power collector | Positive electrode dispersion method | | | | | Assembly step | Impregnation step | | Lithium doping step | |
|---|---|---|---|---|---|---|---|---|---|---|---|---|---|---|---|---|
| | Activated carbon (wt.%) | Second active material | Second active material (wt.%) | Amount of binder (wt.%) | Lithium carbonate in positive electrode precursor (wt.%) | | CMC addition method | Mixing order | Solid content ratio (wt.%) | Slurry temperature | Restraint during ultrasonic welding | Impregnation rate | Post-impregnation retention time (h) | Doping temperature (°C) | Doping voltage (V) |
| Example C19 | 42.0 | none | - | 5.0 | 45.0 | plain foil | aqueous solution | CMC aqueous solution → activated carbon → other | 45 | 15°C | yes | two steps | 16 | 35 | 4.35 |
| Example C20 | 36.0 | none | - | 5.0 | 51.0 | plain foil | aqueous solution | CMC aqueous solution → activated carbon → other | 45 | 15°C | yes | two steps | 16 | 39 | 4.35 |

[Table C1-2]

[Table C1-2]

Table C1-2

| No. | Composition of positive electrode precursor | | | | | | Positive electrode dispersion method | | | | Assembly step | Impregnation step | | Lithium doping step | |
|---|---|---|---|---|---|---|---|---|---|---|---|---|---|---|---|
| | Activated carbon (wt.%) | Second active material | Second active material (wt.%) | Amount of binder (wt.%) | Lithium carbonate in positive electrode precursor (wt.%) | Type of positive electrode power collector | CMC addition method | Mixing order | Solid content ratio (wt.%) | Slurry temperature | Restraint during ultrasonic welding | Impregnation rate | Post-impregnation retention time (h) | Doping temperature (°C) | Doping voltage (V) |
| Example C21 | 32.5 | none | - | 5.0 | 54.5 | plain foil | aqueous solution | CMC aqueous solution → activated carbon → other | 45 | 15°C | yes | two steps | 16 | 41 | 4.35 |
| Example C22 | 84.0 | none | - | 5.0 | 3.0 | plain foil | aqueous solution | CMC aqueous solution → activated carbon → other | 45 | 15°C | yes | two steps | 16 | 36 | 4.35 |
| Example C23 | 81.7 | none | - | 5.0 | 5.3 | plain foil | aqueous solution | CMC aqueous solution → activated carbon → other | 45 | 15°C | yes | two steps | 16 | 43 | 4.35 |
| Example C24 | 48.8 | none | - | 5.0 | 38.2 | plain foil | aqueous solution | CMC aqueous solution → activated carbon → other | 45 | 15°C | yes | two steps | 16 | 45 | 4.35 |
| Example C25 | 40.9 | none | - | 5.0 | 46.1 | plain foil | aqueous solution | CMC aqueous solution → activated carbon → other | 45 | 15°C | yes | two steps | 16 | 43 | 4.35 |

| No. | Composition of positive electrode precursor | | | | | Type of positive electrode power collector | Positive electrode dispersion method | | | | Assembly step | Impregnation step | | Lithium doping step | |
|---|---|---|---|---|---|---|---|---|---|---|---|---|---|---|---|
| | Activated carbon (wt.%) | Second active material | Second active material (wt.%) | Amount of binder (wt.%) | Lithium carbonate in positive electrode precursor (wt.%) | | CMC addition method | Mixing order | Solid content ratio (wt.%) | Slurry temperature | Restraint during ultrasonic welding | Impregnation rate | Post-impregnation retention time (h) | Doping temperature (°C) | Doping voltage (V) |
| Example C26 | 58.5 | none | - | 5.0 | 28.5 | plain foil | aqueous solution | CMC aqueous solution → activated carbon → other | 45 | 15°C | yes | two steps | 16 | 44 | 4.35 |
| Example C27 | 38.3 | LCO | 31.4 | 5.0 | 17.3 | plain foil | aqueous solution | CMC aqueous solution → LCO → activated carbon → other | 45 | 15°C | yes | two steps | 16 | 42 | 4.35 |
| Example C28 | 36.5 | NCM622 | 29.9 | 5.0 | 20.7 | plain foil | aqueous solution | CMC aqueous solution → NCM622 → activated carbon → other | 45 | 15°C | yes | two steps | 16 | 44 | 4.35 |
| Example C29 | 38.6 | NCM811 | 31.6 | 5.0 | 16.7 | plain foil | aqueous solution | CMC aqueous solution → NCM811 → activated carbon → other | 45 | 15°C | yes | two steps | 16 | 39 | 4.35 |

(continued)

| No. | Composition of positive electrode precursor | | | | | Type of positive electrode power collector | Positive electrode dispersion method | | | | Assembly step | Impregnation step | | Lithium doping step | |
|---|---|---|---|---|---|---|---|---|---|---|---|---|---|---|---|
| | Activated carbon (wt.%) | Second active material | Second active material (wt.%) | Amount of binder (wt.%) | Lithium carbonate in positive electrode precursor (wt.%) | | CMC addition method | Mixing order | Solid content ratio (wt.%) | Slurry temperature | Restraint during ultrasonic welding | Impregnation rate | Post-impregnation retention time (h) | Doping temperature (°C) | Doping voltage (V) |
| Example C30 | 35.1 | NCA | 28.8 | 5.0 | 23.1 | plain foil | aqueous solution | CMC aqueous solution → NCA → activated carbon → other | 45 | 15°C | yes | two steps | 16 | 39 | 4.35 |
| Example C31 | 87.0 | none | - | 5.0 | 0.0 | plain foil | aqueous solution | CMC aqueous solution → activated carbon → other | 45 | 15°C | yes | two steps | 16 | - | - |
| Example C32 | 87.0 | none | - | 5.0 | 0.0 | plain foil | aqueous solution | CMC aqueous solution → activated carbon → other | 45 | 15°C | yes | two steps | 6 | - | - |
| Example C33 | 87.0 | none | - | 5.0 | 0.0 | plain foil | aqueous solution | CMC aqueous solution → activated carbon → other | 45 | 15°C | yes | two steps | 16 | - | - |
| Example C34 | 87.0 | none | - | 5.0 | 0.0 | plain foil | aqueous solution | CMC aqueous solution → activated carbon → other | 45 | 20°C | yes | two steps | 16 | - | - |

(continued)

| No. | Composition of positive electrode precursor | | | | | Type of positive electrode power collector | Positive electrode dispersion method | | | | | Assembly step | Impregnation step | | Lithium doping step | |
|---|---|---|---|---|---|---|---|---|---|---|---|---|---|---|---|---|
| | Activated carbon (wt.%) | Second active material | Second active material (wt.%) | Amount of binder (wt.%) | Lithium carbonate in positive electrode precursor (wt.%) | | CMC addition method | Mixing order | Solid content ratio (wt.%) | Slurry temperature | Restraint during ultrasonic welding | Impregnation rate | Post-impregnation retention time (h) | Doping temperature (°C) | Doping voltage (V) |
| Example C35 | 87.0 | none | - | 5.0 | 0.0 | plain foil | aqueous solution | CMC aqueous solution → activated carbon → other | 45 | 15°C | yes | two steps | 16 | - | - |

[Table C1-3]

Table C1-3

| No. | Composition of positive electrode precursor | | | | | | Positive electrode dispersion method | | | | Assembly step | Impregnation step | | Lithium doping step | |
|---|---|---|---|---|---|---|---|---|---|---|---|---|---|---|---|
| | Activated carbon (wt.%) | Second active material | Second active material (wt.%) | Amount of binder (wt.%) | Lithium carbonate in positive electrode precursor (wt.%) | Type of positive electrode power collector | CMC addition method | Mixing order | Solid content ratio (wt.%) | Slurry temperature | Restraint during ultrasonic welding | Impregnation rate | Post-impregnation retention time (h) | Doping temperature (°C) | Doping voltage (V) |
| Comparative Example C1 | 33.9 | LFP | 41.1 | 1.0 | 16.0 | plain foil | powder | at once | 24.5 | 25°C | no | one step | 2 | 44 | 4.5 |
| Comparative Example C2 | 38.8 | LFP | 31.6 | 1.0 | 20.5 | plain foil | aqueous solution | CMC aqueous solution → LFP → activated carbon → other | 45 | 15°C | yes | two steps | 16 | 37 | 4.35 |
| Comparative Example C3 | 30.8 | LFP | 36.6 | 5.0 | 19.6 | plain foil | aqueous solution | CMC aqueous solution → LFP → activated carbon → other | 28.1 | 15°C | no | one step | 2 | 45 | 4.55 |
| Comparative Example C4 | 50.4 | LFP | 20.6 | 5.0 | 16.1 | plain foil | powder | at once | 45 | 25°C | yes | two steps | 16 | 44 | 4.4 |
| Comparative Example C5 | 49.2 | LFP | 19.8 | 5.0 | 18.1 | etched foil | aqueous solution | CMC aqueous solution → LFP → activated carbon → other | 45 | 15°C | yes | two steps | 16 | 41 | 4.35 |

(continued)

| No. | Composition of positive electrode precursor | | | | | Type of positive electrode power collector | Positive electrode dispersion method | | | | | Assembly step | Impregnation step | | Lithium doping step | |
|---|---|---|---|---|---|---|---|---|---|---|---|---|---|---|---|---|
| | Activated carbon (wt.%) | Second active material | Second active material (wt.%) | Amount of binder (wt.%) | Lithium carbonate in positive electrode precursor (wt.%) | | CMC addition method | Mixing order | Solid content ratio (wt.%) | Slurry temperature | Restraint during ultrasonic welding | Impregnation rate | Post-impregnation retention time (h) | Doping temperature (°C) | Doping voltage (V) |
| Comparative Example C6 | 48.8 | LFP | 21.5 | 5.0 | 16.7 | expanded foil | aqueous solution | CMC aqueous solution → LFP → activated carbon → other | 45 | 15°C | yes | two steps | 16 | 43 | 4.35 |
| Comparative Example C7 | 34.3 | LFP | 37.4 | 5.0 | 15.3 | embossed foil | aqueous solution | CMC aqueous solution → LFP → activated carbon → other | 45 | 15°C | yes | two steps | 16 | 44 | 4.35 |
| Comparative Example C8 | 38.9 | LFP | 27.7 | 5.0 | 20.4 | anchor foil | aqueous solution | CMC aqueous solution → LFP → activated carbon → other | 45 | 15°C | yes | two steps | 16 | 45 | 4.35 |
| Comparative Example C9 | 0.0 | LFP | 69.4 | 5.0 | 17.6 | plain foil | aqueous solution | CMC aqueous solution → LFP → activated carbon → other | 45 | 15°C | yes | two steps | 16 | 38 | 4.35 |

| No. | Composition of positive electrode precursor | | | | | Type of positive electrode power collector | Positive electrode dispersion method | | | | | Assembly step | Impregnation step | | Lithium doping step | |
|---|---|---|---|---|---|---|---|---|---|---|---|---|---|---|---|---|
| | Activated carbon (wt.%) | Second active material | Second active material (wt.%) | Amount of binder (wt.%) | Lithium carbonate in positive electrode precursor (wt.%) | | CMC addition method | Mixing order | Solid content ratio (wt.%) | Slurry temperature | Restraint during ultrasonic welding | Impregnation rate | Post-impregnation retention time (h) | Doping temperature (°C) | Doping voltage (V) |
| Comparative Example C10 | 44.6 | LFP | 22.1 | 1.0 | 24.4 | anchor foil | aqueous solution | CMC aqueous solution → LFP → activated carbon → other | 45 | 15°C | yes | two steps | 16 | 40 | 4.35 |
| Comparative Example C11 | 27.6 | LFP | 35.0 | 5.0 | 24.4 | anchor foil | aqueous solution | CMC aqueous solution → LFP → activated carbon → other | 24.5 | 15°C | no | one step | 2 | 39 | 4.5 |
| Comparative Example C12 | 36.6 | LFP | 32.1 | 5.0 | 18.3 | anchor foil | powder | at once | 45 | 25°C | yes | two steps | 16 | 39 | 4.35 |
| Comparative Example C13 | 47.4 | LFP | 20.1 | 1.0 | 23.5 | etched foil | aqueous solution | CMC aqueous solution → LFP → activated carbon → other | 45 | 15°C | yes | two steps | 16 | 43 | 4.35 |
| Comparative Example C14 | 32.1 | LFP | 31.1 | 5.0 | 23.9 | etched foil | aqueous solution | CMC aqueous solution → LFP → activated carbon → other | 28.1 | 15°C | no | one step | 2 | 43 | 4.5 |
| Comparative Example C15 | 30.0 | LFP | 35.2 | 5.0 | 21.9 | etched foil | powder | at once | 45 | 25°C | yes | two steps | 16 | 41 | 4.35 |

(continued)

| No. | Composition of positive electrode precursor | | | | | Type of positive electrode power collector | Positive electrode dispersion method | | | | Assembly step | Impregnation step | | Lithium doping step | |
|---|---|---|---|---|---|---|---|---|---|---|---|---|---|---|---|
| | Activated carbon (wt.%) | Second active material | Second active material (wt.%) | Amount of binder (wt.%) | Lithium carbonate in positive electrode precursor (wt.%) | | CMC addition method | Mixing order | Solid content ratio (wt.%) | Slurry temperature | Restraint during ultrasonic welding | Impregnation rate | Post-impregnation retention time (h) | Doping temperature (°C) | Doping voltage (V) |
| Comparative Example C16 | 56.6 | none | - | 1 | 34.4 | plain foil | aqueous solution | CMC aqueous solution → activated carbon → other | 45 | 15°C | yes | two steps | 16 | 44 | 4.35 |
| Comparative Example C17 | 55.2 | none | - | 5 | 31.8 | plain foil | aqueous solution | CMC aqueous solution → activated carbon → other | 28.1 | 15°C | no | one step | 2 | 42 | 4.5 |
| Comparative Example C18 | 58.3 | none | - | 5 | 28.7 | plain foil | powder | at once | 45 | 25°C | yes | two steps | 16 | 44 | 4.4 |
| Comparative Example C19 | 58.0 | LFP | 2.0 | 1 | 31.0 | plain foil | aqueous solution | CMC aqueous solution → LFP → activated carbon → other | 45 | 15°C | yes | two steps | 16 | 36 | 4.35 |
| Comparative Example C20 | 51.3 | LFP | 1.8 | 5 | 34.0 | plain foil | aqueous solution | CMC aqueous solution → LFP → activated carbon → other | 24.5 | 15°C | no | one step | 16 | 45 | 4.5 |

[Table C1-4]

Table C1-4

| No. | Composition of positive electrode precursor | | | | | Type of positive electrode power collector | Positive electrode dispersion method | | | | | Assembly step | Impregnation step | | Lithium doping step | |
|---|---|---|---|---|---|---|---|---|---|---|---|---|---|---|---|---|
| | Activated carbon (wt.%) | Second active material | Second active material (wt.%) | Amount of binder (wt.%) | Lithium carbonate in positive electrode precursor (wt.%) | | CMC addition method | Mixing order | Solid content ratio (wt.%) | Slurry temperature | Restraint during ultrasonic welding | Impregnation rate | Post-impregnation retention time (h) | Doping temperature (°C) | Doping voltage (V) |
| Comparative Example C21 | 57.6 | LFP | 2.0 | 5.0 | 27.4 | plain foil | powder | at once | 45 | 25°C | yes | two steps | 16 | 39 | 4.35 |
| Comparative Example C22 | 4.7 | LFP | 67.1 | 1.0 | 19.2 | plain foil | aqueous solution | CMC aqueous solution → LFP → activated carbon → other | 45 | 15°C | yes | two steps | 16 | 44 | 4.35 |
| Comparative Example C23 | 4.7 | LFP | 67.2 | 5.0 | 15.1 | plain foil | aqueous solution | CMC aqueous solution → LFP → activated carbon → other | 24.5 | 15°C | no | one step | 2 | 40 | 4.55 |
| Comparative Example C24 | 4.0 | LFP | 58.2 | 5.0 | 24.8 | plain foil | powder | at once | 45 | 25°C | | | | 40 | 4.35 |
| Comparative Example C25 | 35.0 | LFP | 32.4 | 1.0 | 23.6 | plain foil | aqueous solution | CMC aqueous solution → LFP → activated carbon → other | 45 | 15°C | yes | two steps | 16 | 41 | 4.5 |

| No. | Composition of positive electrode precursor | | | | | Type of positive electrode power collector | Positive electrode dispersion method | | | | Assembly step | Impregnation step | | Lithium doping step | |
|---|---|---|---|---|---|---|---|---|---|---|---|---|---|---|---|
| | Activated carbon (wt.%) | Second active material | Second active material (wt.%) | Amount of binder (wt.%) | Lithium carbonate in positive electrode precursor (wt.%) | | CMC addition method | Mixing order | Solid content ratio (wt.%) | Slurry temperature | Restraint during ultrasonic welding | Impregnation rate | Post-impregnation retention time (h) | Doping temperature (°C) | Doping voltage (V) |
| Comparative Example C26 | 42.7 | LFP | 25.3 | 5.0 | 19.0 | plain foil | aqueous solution | CMC aqueous solution → LFP → activated carbon → other | 28.1 | 15°C | no | one step | 2 | 35 | 4.6 |
| Comparative Example C27 | 41.6 | LFP | 25.8 | 5.0 | 19.6 | plain foil | powder | at once | 45 | 25°C | yes | two steps | 16 | 40 | 4.5 |
| Comparative Example C28 | 48.5 | LFP | 27.3 | 1.0 | 15.3 | plain foil | aqueous solution | CMC aqueous solution → LFP → activated carbon → other | 45 | 15°C | yes | two steps | 16 | 41 | 4.35 |
| Comparative Example C29 | 42.2 | LFP | 23.8 | 5.0 | 21.0 | plain foil | aqueous solution | CMC aqueous solution → LFP → activated carbon → other | 24.5 | 15°C | no | one step | 2 | 40 | 4.35 |
| Comparative Example C30 | 37.2 | LFP | 29.0 | 5.0 | 20.8 | plain foil | powder | at once | 45 | 25°C | yes | two steps | 16 | 43 | 4.35 |
| Comparative Example C31 | 41.7 | LFP | 25.3 | 1.0 | 24.0 | plain foil | aqueous solution | CMC aqueous solution → LFP → activated carbon → other | 45 | 15°C | yes | two steps | 16 | 43 | 4.35 |

(continued)

| No. | Composition of positive electrode precursor | | | | | Type of positive electrode power collector | Positive electrode dispersion method | | | | | Assembly step | Impregnation step | | Lithium doping step | |
|---|---|---|---|---|---|---|---|---|---|---|---|---|---|---|---|---|
| | Activated carbon (wt.%) | Second active material | Second active material (wt.%) | Amount of binder (wt.%) | Lithium carbonate in positive electrode precursor (wt.%) | | CMC addition method | Mixing order | Solid content ratio (wt.%) | Slurry temperature | Restraint during ultrasonic welding | Impregnation rate | Post-impregnation retention time (h) | Doping temperature (°C) | Doping voltage (V) |
| Comparative Example C32 | 41.3 | LFP | 29.1 | 5.0 | 16.6 | plain foil | aqueous solution | CMC aqueous solution → LFP → activated carbon → other | 24.5 | 15°C | no | one step | 2 | 43 | 4.5 |
| Comparative Example C33 | 28.8 | LFP | 33.3 | 5.0 | 24.9 | plain foil | powder | at once | 45 | 25°C | yes | two steps | 16 | 37 | 4.35 |
| Comparative Example C34 | 35.7 | LFP | 34.4 | 1.0 | 20.9 | plain foil | aqueous solution | CMC aqueous solution → LFP → activated carbon → other | 45 | 15°C | yes | two steps | 16 | 36 | 4.35 |
| Comparative Example C35 | 39.5 | LFP | 31.8 | 5.0 | 15.6 | plain foil | aqueous solution | CMC aqueous solution → LFP → activated carbon → other | 24.5 | 15°C | no | one step | 2 | 41 | 4.5 |
| Comparative Example C36 | 30.2 | LFP | 35.3 | 5 | 21.5 | plain foil | powder | at once | 45 | 25°C | yes | two steps | 16 | 41 | 4.35 |
| Comparative Example C37 | 60.3 | LFP | 26.6 | 1 | 4.1 | plain foil | aqueous solution | CMC aqueous solution → LFP → activated carbon → other | 45 | 15°C | yes | two steps | 16 | 42 | 4.35 |

| No. | Composition of positive electrode precursor | | | | | Type of positive electrode power collector | Positive electrode dispersion method | | | | | Assembly step | Impregnation step | | Lithium doping step | |
|---|---|---|---|---|---|---|---|---|---|---|---|---|---|---|---|---|
| | Activated carbon (wt.%) | Second active material | Second active material (wt.%) | Amount of binder (wt.%) | Lithium carbonate in positive electrode precursor (wt.%) | | CMC addition method | Mixing order | Solid content ratio (wt.%) | Slurry temperature | Restraint during ultrasonic welding | Impregnation rate | Post-impregnation retention time (h) | Doping temperature (°C) | Doping voltage (V) |
| Comparative Example C38 | 37.4 | LFP | 45.8 | 5 | 3.8 | plain foil | aqueous solution | CMC aqueous solution → LFP → activated carbon → other | 28.1 | 15°C | no | one step | 2 | 44 | 4.5 |
| Comparative Example C39 | 49.0 | LFP | 33.3 | 5 | 4.7 | plain foil | powder | at once | 45 | 25°C | yes | two steps | 16 | 36 | 4.35 |
| Comparative Example C40 | 29.8 | LFP | 18.2 | 1 | 43.0 | plain foil | aqueous solution | CMC aqueous solution → LFP → activated carbon → other | 45 | 15°C | yes | two steps | 16 | 39 | 4.35 |

[Table C1-5]

[Table C1-5]

Table C1-5

| No. | Composition of positive electrode precursor | | | | | Type of positive electrode power collector | Positive electrode dispersion method | | | | Assembly step | Impregnation step | | Lithium doping step | |
|---|---|---|---|---|---|---|---|---|---|---|---|---|---|---|---|
| | Activated carbon (wt.%) | Second active material | Second active material (wt.%) | Amount of binder (wt.%) | Lithium carbonate in positive electrode precursor (wt.%) | | CMC addition method | Mixing order | Solid content ratio (wt.%) | Slurry temperature | Restraint during ultrasonic welding | Impregnation rate | Post-impregnation retention time (h) | Doping temperature (°C) | Doping voltage (V) |
| Comparative Example C41 | 29.2 | LFP | 12.1 | 5.0 | 45.7 | plain foil | aqueous solution | CMC aqueous solution → LFP → activated carbon → other | 24.5 | 15°C | no | one step | 2 | 43 | 4.5 |
| Comparative Example C42 | 21.7 | LFP | 22.8 | 5.0 | 42.5 | plain foil | powder | at once | 45 | 25°C | yes | two steps | 16 | 36 | 4.35 |
| Comparative Example C43 | 91.0 | none | - | 1.0 | 0.0 | plain foil | aqueous solution | CMC aqueous solution → activated carbon → other | 45 | 15°C | yes | two steps | 16 | - | - |
| Comparative Example C44 | 87.0 | none | - | 5.0 | 0.0 | plain foil | aqueous solution | CMC aqueous solution → activated carbon → other | 24.5 | 15°C | no | one step | 2 | - | - |
| Comparative Example C45 | 87.0 | none | - | 5.0 | 0.0 | plain foil | powder | at once | 45 | 25°C | yes | two steps | 16 | - | - |

[Table C2-1]

[Table C2-1]

Table C2-1

| No. | Lithium carbonate in positive electrode (wt.%) | Interfacial resistance of removed positive electrode ($\Omega cm^2$) | Frequency of aggregates (aggregates/cm$^2$) | Ratio of 3.4-3.0 V capacity to 4.0-2.0 V capacity (-) | Amount of lithium fluoride [mmol/g] | A/B | Initial internal resistance (m$\Omega$) | Micro-short circuit rate after vibration test (%) | Resistance increase rate after vibration test (-) | Amount of generated gas after 90 days (cc) |
|---|---|---|---|---|---|---|---|---|---|---|
| Example C1 | 0.10 | 0.05 | 0.08 | 50 | 0.1312 | 0.38 | 6.42 | 0 | 1.08 | 2 |
| Example C2 | 0.04 | 4.80 | 0.00 | 69 | 2.1204 | 2.26 | 6.94 | 0 | 1.05 | 1 |
| Example C3 | 0.07 | 0.11 | 0.00 | 68 | 0.2695 | 0.39 | 6.67 | 0 | 1.05 | 2 |
| Example C4 | 0.02 | 0.09 | 0.45 | 67 | 0.0283 | 3.21 | 7.62 | 0 | 1.08 | 1 |
| Example C5 | 0.05 | 0.09 | 0.08 | 66 | 0.1800 | 0.50 | 7.12 | 0 | 1.02 | 1 |
| Example C6 | 6.08 | 0.10 | 0.08 | 23 | 0.0004 | 260.90 | 14.26 | 0 | 1.44 | 28 |
| Example C7 | 6.85 | 0.10 | 0.06 | 25 | 0.0004 | 253.89 | 6.16 | 0 | 1.10 | 13 |
| Example C8 | 8.86 | 0.11 | 0.07 | 50 | 0.0004 | 262.62 | 6.73 | 0 | 1.07 | 1 |
| Example C9 | 7.95 | 0.10 | 0.13 | 70 | 0.0004 | 254.85 | 6.74 | 0 | 1.02 | 3 |
| Example C10 | 8.04 | 0.08 | 0.09 | 82 | 0.0003 | 295.20 | 7.02 | 0 | 1.05 | 15 |
| Example C11 | 10.00 | 0.08 | 0.01 | 83 | 0.0003 | 276.85 | 14.45 | 0 | 1.48 | 47 |
| Example C12 | 8.01 | 0.08 | 0.10 | - | 8.0441 | 0.01 | 14.39 | 0 | 1.43 | 48 |
| Example C13 | 8.80 | 0.08 | 0.11 | - | 4.0710 | 0.02 | 7.19 | 0 | 1.38 | 12 |
| Example C14 | 8.94 | 0.08 | 0.08 | - | 1.1866 | 0.07 | 7.80 | 0 | 1.32 | 0 |
| Example C15 | 6.20 | 0.11 | 0.05 | - | 0.0206 | 5.30 | 6.81 | 0 | 1.37 | 0 |
| Example C16 | 6.36 | 0.11 | 0.10 | - | 0.0004 | 246.82 | 7.60 | 0 | 1.47 | 13 |
| Example C17 | 9.86 | 0.09 | 0.02 | - | 0.0003 | 297.71 | 14.27 | 0 | 1.36 | 49 |
| Example C18 | 0.00 | 0.10 | 0.10 | - | 0.0004 | 287.47 | 7.17 | 0 | 1.30 | 46 |
| Example C19 | 0.01 | 0.09 | 0.03 | - | 0.0004 | 261.98 | 6.26 | 0 | 1.09 | 2 |
| Example C20 | 4.90 | 0.09 | 0.00 | - | 0.0003 | 266.54 | 6.98 | 0 | 1.08 | 3 |

[Table C2-2]

Table C2-2

| No. | Lithium carbonate in positive electrode (wt.%) | Interfacial resistance of removed positive electrode ($\Omega cm^2$) | Frequency of aggregates (aggregates/cm$^2$) | Ratio of 3.4-3.0 V capacity to 4.0-2.0 V capacity (-) | Amount of lithium fluoride [mmol/g] | A/B | Initial internal resistance (m$\Omega$) | Micro-short circuit rate after vibration test (%) | Resistance increase rate after vibration test (-) | Amount of generated gas after 90 days (cc) |
|---|---|---|---|---|---|---|---|---|---|---|
| Example C21 | 5.30 | 0.08 | 0.03 | - | 0.0003 | 275.15 | 14.33 | 0 | 1.44 | 45 |
| Example C22 | 0.00 | 0.11 | 0.09 | - | 0.0004 | 283.22 | 14.45 | 0 | 1.38 | 46 |
| Example C23 | 0.00 | 0.10 | 0.05 | - | 0.0004 | 274.73 | 7.67 | 0 | 1.05 | 1 |
| Example C24 | 0.00 | 0.08 | 0.14 | - | 0.0003 | 267.95 | 7.71 | 0 | 1.03 | 0 |
| Example C25 | 0.00 | 0.10 | 0.15 | - | 0.0003 | 296.55 | 14.47 | 0 | 1.30 | 42 |
| Example C26 | 7.34 | 0.10 | 0.13 | - | 0.0004 | 280.03 | 14.49 | 0 | 1.46 | 49 |
| Example C27 | 7.83 | 0.09 | 0.14 | - | 0.0003 | 272.20 | 14.76 | 0 | 1.40 | 29 |
| Example C28 | 6.48 | 0.09 | 0.01 | - | 0.0004 | 265.88 | 14.29 | 0 | 1.35 | 27 |
| Example C29 | 9.46 | 0.09 | 0.03 | - | 0.0003 | 286.64 | 14.99 | 0 | 1.47 | 28 |
| Example C30 | 7.79 | 0.09 | 0.05 | - | 0.0003 | 273.01 | 14.64 | 0 | 1.39 | 30 |
| Example C31 | 0.00 | 0.06 | 0.07 | - | 0.0000 | - | 14.54 | 0 | 1.40 | 58 |
| Example C32 | 0.00 | 4.90 | 0.03 | - | 0.0000 | - | 14.84 | 0 | 1.34 | 59 |
| Example C33 | 0.00 | 0.09 | 0.00 | - | 0.0000 | - | 14.45 | 0 | 1.49 | 57 |
| Example C34 | 0.00 | 0.08 | 0.48 | - | 0.0000 | - | 14.44 | 0 | 1.47 | 59 |
| Example C35 | 0.00 | 0.09 | 0.08 | - | 0.0000 | - | 14.61 | 0 | 1.33 | 54 |

[Table C2-3]

[Table C2-3]

Table C2-3

| No. | Lithium carbonate in positive electrode (wt.%) | Interfacial resistance of removed positive electrode ($\Omega cm^2$) | Frequency of aggregates (aggregates/cm$^2$) | Ratio of 3.4-3.0 V capacity to 4.0-2.0 V capacity (-) | Amount of lithium fluoride [mmol/g] | A/B | Initial internal resistance (m$\Omega$) | Micro-short circuit rate after vibration test (%) | Resistance increase rate after vibration test (-) | Amount of generated gas after 90 days (cc) |
|---|---|---|---|---|---|---|---|---|---|---|
| Comparative Example C1 | 0.08 | 5.23 | 0.70 | 69 | 4.0621 | 1.29 | 34.33 | 70 | 3.20 | 217 |
| Comparative Example C2 | 0.04 | 0.03 | 0.08 | 63 | 0.0123 | 2.44 | 34.08 | 60 | 3.25 | 204 |
| Comparative Example C3 | 0.04 | 5.11 | 0.09 | 69 | 10.0366 | 0.51 | 37.04 | 50 | 3.19 | 249 |
| Comparative Example C4 | 0.06 | 0.08 | 0.60 | 50 | 0.1468 | 0.58 | 36.47 | 70 | 3.69 | 247 |
| Comparative Example C5 | 0.04 | 0.09 | 0.04 | 50 | 0.0499 | 1.73 | 31.86 | 60 | 2.69 | 277 |
| Comparative Example C6 | 0.01 | 0.08 | 0.00 | 52 | 0.0686 | 1.17 | 30.05 | 70 | 2.49 | 292 |
| Comparative Example C7 | 0.05 | 0.10 | 0.02 | 68 | 0.0471 | 2.04 | 31.26 | 70 | 2.14 | 284 |
| Comparative Example C8 | 0.07 | 0.09 | 0.10 | 61 | 0.0720 | 1.31 | 31.05 | 80 | 2.25 | 271 |
| Comparative Example C9 | 0.08 | 0.08 | 0.13 | 90 | 0.0164 | 5.16 | 34.99 | 70 | 3.70 | 221 |
| Comparative Example C10 | 0.02 | 0.04 | 0.03 | 54 | 0.0185 | 2.16 | 31.30 | 50 | 2.43 | 274 |
| Comparative Example C11 | 0.09 | 5.20 | 0.10 | 70 | 1.5459 | 3.36 | 31.92 | 50 | 2.14 | 299 |
| Comparative Example C12 | 0.07 | 0.09 | 0.70 | 64 | 0.0399 | 2.28 | 31.45 | 70 | 2.42 | 282 |

EP 4 668 393 A1

(continued)

| No. | Lithium carbonate in positive electrode (wt.%) | Interfacial resistance of removed positive electrode (Ωcm²) | Frequency of aggregates (aggregates/cm²) | Ratio of 3.4-3.0 V capacity to 4.0-2.0 V capacity (-) | Amount of lithium fluoride [mmol/g] | A/B | Initial internal resistance (mΩ) | Micro-short circuit rate after vibration test (%) | Resistance increase rate after vibration test (-) | Amount of generated gas after 90 days (cc) |
|---|---|---|---|---|---|---|---|---|---|---|
| Comparative Example C13 | 0.10 | 0.04 | 0.01 | 51 | 0.0085 | 4.69 | 30.78 | 60 | 2.71 | 281 |
| Comparative Example C14 | 0.08 | 5.30 | 0.10 | 66 | 1.1220 | 4.72 | 30.94 | 70 | 2.49 | 287 |
| Comparative Example C15 | 0.05 | 0.11 | 0.56 | 69 | 0.0298 | 3.57 | 30.10 | 60 | 2.63 | 276 |
| Comparative Example C16 | 0.02 | 0.02 | 0.12 | - | 0.0065 | 3.09 | 34.82 | 70 | 3.20 | 236 |
| Comparative Example C17 | 0.08 | 5.30 | 0.09 | - | 1.3977 | 3.79 | 38.37 | 70 | 3.93 | 221 |
| Comparative Example C18 | 0.07 | 0.08 | 0.70 | - | 0.1026 | 0.80 | 39.34 | 60 | 3.57 | 201 |
| Comparative Example C19 | 0.06 | 0.02 | 0.01 | 24 | 0.0051 | 3.94 | 33.09 | 60 | 3.11 | 227 |
| Comparative Example C20 | 0.05 | 5.30 | 0.09 | 24 | 1.3020 | 4.07 | 38.44 | 80 | 3.74 | 241 |

[Table C2-4]

Table C2-4

| No. | Lithium carbonate in positive electrode (wt.%) | Interfacial resistance of removed positive electrode (Ωcm²) | Frequency of aggregates (aggregates/cm²) | Ratio of 3.4-3.0 V capacity to 4.0-2.0 V capacity (-) | Amount of lithium fluoride [mmol/g] | A/B | Initial internal resistance (mΩ) | Micro-short circuit rate after vibration test (%) | Resistance increase rate after vibration test (-) | Amount of generated gas after 90 days (cc) |
|---|---|---|---|---|---|---|---|---|---|---|
| Comparative Example C21 | 0.04 | 0.10 | 0.70 | 24 | 0.0307 | 3.21 | 39.94 | 80 | 3.52 | 236 |
| Comparative Example C22 | 0.08 | 0.02 | 0.08 | 84 | 0.0055 | 3.63 | 34.80 | 70 | 3.92 | 226 |
| Comparative Example C23 | 0.10 | 5.30 | 0.00 | 84 | 10.0053 | 0.53 | 36.97 | 60 | 3.89 | 208 |
| Comparative Example C24 | 0.09 | 0.09 | 0.70 | 84 | 0.0591 | 1.58 | 37.54 | 60 | 3.19 | 201 |
| Comparative Example C25 | 0.03 | 0.02 | 0.09 | 65 | 2.0000 | 0.01 | 34.94 | 70 | 3.49 | 240 |
| Comparative Example C26 | 0.07 | 5.30 | 0.13 | 57 | 530.0000 | 0.01 | 39.50 | 60 | 3.72 | 240 |
| Comparative Example C27 | 0.05 | 0.09 | 0.70 | 58 | 8.5528 | 0.01 | 39.58 | 70 | 3.63 | 236 |
| Comparative Example C28 | 0.10 | 0.02 | 0.13 | 56 | 0.0001 | 266.78 | 34.94 | 70 | 3.40 | 230 |
| Comparative Example C29 | 0.04 | 5.30 | 0.05 | 56 | 0.0211 | 250.75 | 35.16 | 60 | 3.67 | 243 |
| Comparative Example C30 | 0.07 | 0.09 | 0.70 | 62 | 0.0003 | 286.12 | 35.50 | 70 | 3.32 | 248 |
| Comparative Example C31 | 0.00 | 0.02 | 0.06 | 58 | 0.0040 | 5.00 | 33.59 | 70 | 3.04 | 216 |
| Comparative Example C32 | 0.00 | 5.30 | 0.12 | 60 | 2.2943 | 2.31 | 38.42 | 50 | 3.08 | 234 |

(continued)

| No. | Lithium carbonate in positive electrode (wt.%) | Interfacial resistance of removed positive electrode (Ωcm²) | Frequency of aggregates (aggregates/cm²) | Ratio of 3.4-3.0 V capacity to 4.0-2.0 V capacity (-) | Amount of lithium fluoride [mmol/g] | A/B | Initial internal resistance (mΩ) | Micro-short circuit rate after vibration test (%) | Resistance increase rate after vibration test (-) | Amount of generated gas after 90 days (cc) |
|---|---|---|---|---|---|---|---|---|---|---|
| Comparative Example C33 | 0.00 | 0.09 | 0.70 | 69 | 0.0197 | 4.46 | 35.36 | 50 | 3.50 | 204 |
| Comparative Example C34 | 5.34 | 0.02 | 0.12 | 66 | 0.0355 | 0.56 | 34.33 | 50 | 3.63 | 236 |
| Comparative Example C35 | 6.21 | 5.30 | 0.11 | 63 | 9.4297 | 0.56 | 36.94 | 70 | 3.24 | 230 |
| Comparative Example C36 | 5.93 | 0.08 | 0.70 | 69 | 0.0267 | 3.04 | 36.93 | 60 | 3.97 | 238 |
| Comparative Example C37 | 0.05 | 0.02 | 0.09 | 52 | 0.0043 | 4.66 | 33.50 | 60 | 3.19 | 222 |
| Comparative Example C38 | 0.09 | 5.30 | 0.02 | 70 | 7.6741 | 0.69 | 37.08 | 60 | 3.06 | 225 |
| Comparative Example C39 | 0.06 | 0.08 | 0.70 | 60 | 0.0391 | 2.14 | 38.88 | 60 | 3.74 | 226 |
| Comparative Example C40 | 0.05 | 0.02 | 0.03 | 58 | 0.0148 | 1.35 | 34.54 | 70 | 3.71 | 213 |

[Table C2-5]

[Table C2-5]

Table C2-5

| No. | Lithium carbonate in positive electrode (wt.%) | Interfacial resistance of removed positive electrode (Ωcm²) | Frequency of aggregates (aggregates/cm²) | Ratio of 3.4-3.0 V capacity to 4.0-2.0 V capacity (-) | Amount of lithium fluoride [mmol/g] | A/B | Initial internal resistance (mΩ) | Micro-short circuit rate after vibration test (%) | Resistance increase rate after vibration test (-) | Amount of generated gas after 90 days (cc) |
|---|---|---|---|---|---|---|---|---|---|---|
| Comparative Example C41 | 0.05 | 5.30 | 0.02 | 51 | 1.3712 | 3.87 | 35.51 | 70 | 3.11 | 219 |
| Comparative Example C42 | 0.06 | 0.08 | 0.70 | 67 | 0.0173 | 4.81 | 38.88 | 70 | 3.02 | 230 |
| Comparative Example C43 | 0.00 | 0.03 | 0.05 | - | 0.0000 | - | 34.83 | 70 | 3.95 | 542 |
| Comparative Example C44 | 0.00 | 5.11 | 0.08 | - | 0.0000 | - | 39.30 | 60 | 3.12 | 521 |
| Comparative Example C45 | 0.00 | 0.11 | 0.76 | - | 0.0000 | - | 38.74 | 80 | 3.03 | 516 |

133

<<Example D>>

<Example D1>

(Preparation of Positive Electrode Activated Carbon)

A crushed coconut shell carbide was placed in a small carbonization furnace, and carbonized at 500°C for 6 hours in a nitrogen atmosphere to obtain a carbonized product. The thus obtained carbonized product was placed in an activation furnace, and water vapor heated in a preheating furnace was introduced into the activation furnace at a rate of 1 kg/h, after which the temperature was raised to 900°C over a period of 10 hours to activate the carbonized product. The thus activated carbonized product was taken out and cooled in a nitrogen atmosphere to obtain activated carbon. The thus obtained activated carbon was washed with flushing water for 10 hours, drained, dried for 10 hours in an electric dryer maintained at 115°C, and then pulverized for 2 hours using a ball mill to obtain activated carbon.

(Production of Positive Electrode Coating Liquid)

A mixture having a solid content weight ratio of 28.0 wt.% was obtained by mixing 60.0 wt.% of activated carbon, 2.0 wt.% of carboxymethyl cellulose (CMC), 25.0 wt.% of lithium carbonate, 6.0 wt.% of carbon black (CB), 5.0 wt.% of acrylic latex (LTX), 2.0 wt.% of PVP (polyvinylpyrrolidone), and distilled water. The thus obtained mixture was dispersed at room temperature and 60 rpm for 60 minutes using a planetary mixer to obtain a positive electrode coating liquid.

(Production of Positive Electrode Precursor)

Using a small die coater, the positive electrode coating liquid was adjusted and applied to both sides of a 15-$\mu$m thick aluminum foil, which had been coated with a 1-$\mu$m thick conductive layer on both sides, such that the active material layer basis weight was 50.0 g/m$^2$ per side, and this aluminum foil was passed through a 60°C drying furnace to be dried with hot air for 2 minutes, and subsequently pressed using a roll press at a pressure of 6 kN/cm and a pressing-part surface temperature of 25°C, whereby a positive electrode precursor was obtained.

(Production of Negative Electrode Coating Liquid)

A mixture having a solid content weight ratio of 19.5 wt.% was obtained by mixing 92.0 wt.% of a graphite having an average particle size of 1.3 $\mu$m and a specific surface area of 16.2 m$^2$/g, 4.0 wt.% of carbon black, 2.0 wt.% of a styrene-butadiene rubber, 2.0 wt.% of carboxymethyl cellulose (CMC) as a dispersant, and distilled water. The thus obtained mixture was dispersed at room temperature and 60 rpm for 30 minutes using a planetary mixer to obtain a negative electrode coating liquid.

(Storage of Negative Electrode Coating Liquid)

The thus obtained negative electrode coating liquid was stored for 20 hours until being used for coating, in a state of being cooled to 10°C with cooling water in a temperature-controllable tank.

(Production of Negative Electrode)

Using a small die coater, the negative electrode coating liquid was adjusted and applied to both sides of a 10 $\mu$m-thick electrolytic copper foil such that the active material layer basis weight was 18.0 g/m$^2$ per side, and this aluminum foil was passed through a 60°C drying furnace to be dried with hot air for 2 minutes, whereby a negative electrode was obtained. This negative electrode was not pressed.

(Preparation of Electrolytic solution)

Using a mixed solvent of ethylene carbonate (EC) and ethyl methyl carbonate (EMC) (EC:EMC = 33:67 (volume ratio)) as an organic solvent, an electrolyte salt was dissolved therein such that the concentration of LiPF$_6$ was 1.2 mol/L, whereby a nonaqueous electrolytic solution was obtained.

(Assembly Step)

The positive electrode precursor was cut out such that its positive electrode active material layer had a size of 5 cm × 10 cm, and vacuum-dried for 12 hours at a temperature of 200°C. A piece was cut out from the negative electrode in a size of 5.3 cm × 10.3 cm, and vacuum-dried for 12 hours at a temperature of 200°C. Further, a 5.5 cm × 10.5 cm polyethylene separator (manufactured by Asahi Kasei Corporation, thickness: 15 μm) was prepared. Using these materials, three pieces of the positive electrode precursor and four pieces of the negative electrode were disposed in layers in the order of negative electrode/separator/positive electrode precursor/separator/negative electrode/separator/positive electrode precursor/negative electrode/separator/positive electrode precursor/separator/negative electrode such that each positive electrode active material layer and each negative electrode active material layer faced one another via the separator and the outermost layer was the negative electrode, whereby an electrode body was obtained. A positive electrode terminal and a negative electrode terminal were ultrasonically welded to the thus obtained electrode laminate, and this electrode laminate was put into a casing formed of an aluminum laminated packaging material, after which the casing was heat-sealed on three sides including the electrode terminals.

(Injection, Impregnation, and Sealing Steps)

Under the atmospheric pressure in a dry-air environment having a temperature of 25°C and a dew point of -40°C or lower, about 6 g of the nonaqueous electrolytic solution 1 was injected into the casing in which the electrode laminate was housed. Then, this casing housing the electrode laminate and the nonaqueous electrolytic solution was placed in a decompression chamber, and the pressure was reduced from the atmospheric pressure to -87 kPa, after which the pressure was brought back to the atmospheric pressure, and the casing was left to stand for 5 minutes. Subsequently, for the casing in the chamber, a process of reducing the pressure from the atmospheric pressure to -87 kPa and then restoring the atmospheric pressure was repeated four times, and the casing was left to stand for 15 minutes under the atmospheric pressure. By these steps, the electrode laminate was impregnated with the nonaqueous electrolytic solution 1. Thereafter, this electrode laminate impregnated with the nonaqueous electrolytic solution 1 was placed in a vacuum sealing machine, and the casing was sealed at 180°C for 10 seconds with a pressure of 0.1 MPa under a reduced pressure of -95 kPa.

(Room-Temperature High-Rate Doping Step)

A central portion of the sealed electrode laminate was sandwiched from both sides by 6.0 cm × 11.0 cm silicone sponge buffer materials and pressed with a pressure of 30 kPa. This electrode laminate was constant-current charged up to a voltage of 4.5 V with a current value of 50 C at a temperature of 25°C and then continuously constant-voltage charged at 4.5 V for 10 minutes, whereby initial charging was performed to dope the negative electrode with the alkali metal.

(Examination of Micro-Short Circuit After Room-Temperature High-Rate Doping Step)

The micro-short circuit rate after the room-temperature high-rate doping step was measured by the above-described method. It is noted here that the subsequent steps were not performed for a sample judged to have a micro-short circuit.

(Aging Step)

In an 80°C environment, the doped electrode body was adjusted to have a voltage of 4.2 V by performing constant-current discharging to a voltage of 2.0 V at a current value of 10 C, subsequently performing constant-current charging up to a voltage of 4.2 V, and then performing constant-voltage charging for 10 minutes. Thereafter, the electrode body was stored in an 80°C incubator for 24 hours.

(Degassing Step)

The aluminum laminated packaging material of the thus aged electrode body was partially opened in a dry-air environment having a temperature of 25°C and a dew point of -40°C or lower. Subsequently, the electrode body was placed in a decompression chamber, and a process of reducing the pressure from the atmospheric pressure to -80 kPa over a period of 3 minutes using a diaphragm pump and then restoring the atmospheric pressure over a period of 3 minutes was repeated for a total of three times. Thereafter, the electrode body was placed in a vacuum sealing machine, and the pressure was reduced to -90 kPa, after which the aluminum laminated packaging material was sealed at 200°C for 10 seconds with a pressure of 0.1 MPa, whereby a nonaqueous lithium power storage element was produced.

(Measurement and Evaluation)

The thus obtained nonaqueous lithium power storage element was measured and evaluated by the above-described methods. The production conditions and the measurement and evaluation results of Example D1 are shown in the tables below.

<Examples D2 to D45 and Comparative Examples D1 to D17>

In Examples D2 to D45 and Comparative Examples D1 to D17, nonaqueous lithium power storage elements were produced in the same manner as in Example D1, except for the conditions shown in the tables below. These conditions as well as the measurement and evaluation results are shown in the tables below.

<Examples D46 and D47 and Comparative Examples D18 to D24>

In Examples D46 and D47 and Comparative Examples D18 to D24, nonaqueous lithium power storage elements were produced in the same manner as in Example D1, except for the conditions shown in the tables below and the below-described production conditions relating to the positive electrode precursor. These conditions as well as the measurement and evaluation results are shown in the tables below.

(Production of Positive Electrode Coating Liquid)

A mixture having a solid content weight ratio of 40.0 wt.% was obtained by mixing 90.3 wt.% of lithium iron phosphate, 1.7 wt.% of carboxymethyl cellulose (CMC), 4.0 wt.% of carbon black (CB), 4.0 wt.% of acrylic latex (LTX), and distilled water. The thus obtained mixture was dispersed at room temperature and 60 rpm for 60 minutes using a planetary mixer to obtain a positive electrode coating liquid.

(Production of Positive Electrode Precursor)

Using a small die coater, the positive electrode coating liquid was adjusted and applied to both sides of a 15-$\mu$m thick aluminum foil, which had been coated with a 1-$\mu$m thick conductive layer on both sides, such that the active material layer basis weight was 46.0 g/m$^2$ per side, and this aluminum foil was passed through a 60°C drying furnace to be dried with hot air for 2 minutes, and subsequently pressed using a roll press at a pressure of 6 kN/cm and a pressing-part surface temperature of 25°C, whereby a positive electrode precursor was obtained.

[Table D1]

Table D1

| No. | Production of negative electrode coating liquid and storage condition | | | | | |
| | Type of graphite | | Composition | | Solid content ratio (%) | Storage temperature (°C) |
| | Particle size ($\mu$m) | Specific surface area (m$^2$/g) | Amount of graphite (wt.%) | Amount of carbon black (wt.%) | | |
| Example D1 | 1.3 | 16.2 | 92.0 | 4.0 | 19.5 | 10 |
| Example D2 | 8.4 | 21.9 | 92.0 | 4.0 | 17.6 | 10 |
| Example D3 | 3.6 | 27.4 | 92.0 | 4.0 | 21.0 | 10 |
| Example D4 | 3.8 | 21.9 | 92.0 | 4.0 | 16.7 | 10 |
| Example D5 | 2.1 | 10.4 | 92.0 | 4.0 | 17.8 | 10 |
| Example D6 | 2.3 | 44.6 | 92.0 | 4.0 | 17.8 | 10 |
| Example D7 | 4.6 | 23.7 | 92.0 | 4.0 | 17.5 | 10 |
| Example D8 | 4.2 | 20.7 | 92.0 | 4.0 | 19.1 | 10 |
| Example D9 | 1.7 | 28.7 | 92.0 | 4.0 | 17.5 | 10 |
| Example D10 | 2.4 | 18.8 | 92.0 | 4.0 | 18.8 | 10 |
| Example D11 | 3.8 | 20.1 | 92.0 | 4.0 | 18.0 | 10 |

(continued)

| No. | Production of negative electrode coating liquid and storage condition | | | | | |
|---|---|---|---|---|---|---|
| | Type of g raphite | | Composition | | Solid content ratio (%) | Storage temperature (°C) |
| | Particle size (μm) | Specific surface area (m²/g) | Amount of graphite (wt.%) | Amount of carbon black (wt.%) | | |
| Example D12 | 6.5 | 22.5 | 92.0 | 4.0 | 17.3 | 10 |
| Example D13 | 7.2 | 23.4 | 92.0 | 4.0 | 19.3 | 10 |
| Example D14 | 6.4 | 20.4 | 92.0 | 4.0 | 20.3 | 10 |
| Example D15 | 3.5 | 25.1 | 92.0 | 4.0 | 20.4 | 10 |
| Example D16 | 4.6 | 15.5 | 92.0 | 4.0 | 19.3 | 10 |
| Example D17 | 2.3 | 18.3 | 92.0 | 4.0 | 17.1 | 10 |
| Example D18 | 2.7 | 21.3 | 92.0 | 4.0 | 16.9 | 10 |
| Example D19 | 3.6 | 11.8 | 92.0 | 4.0 | 18.6 | 10 |
| Example D20 | 6.4 | 14.0 | 92.0 | 4.0 | 19.2 | 10 |
| Example D21 | 3.0 | 18.8 | 92.0 | 4.0 | 19.9 | 10 |
| Example D22 | 5.9 | 32.2 | 92.0 | 4.0 | 17.7 | 10 |
| Example D23 | 5.3 | 32.4 | 92.0 | 4.0 | 18.1 | 10 |
| Example D24 | 4.8 | 14.3 | 92.0 | 4.0 | 19.8 | 10 |
| Example D25 | 6.7 | 19.3 | 92.0 | 4.0 | 19.4 | 10 |
| Example D26 | 6.3 | 24.3 | 92.0 | 4.0 | 18.8 | 10 |
| Example D27 | 1.6 | 14.0 | 92.0 | 4.0 | 16.4 | 10 |
| Example D28 | 1.7 | 28.9 | 92.0 | 4.0 | 16.4 | 10 |
| Example D29 | 3.6 | 28.4 | 92.0 | 4.0 | 16.8 | 10 |
| Example D30 | 5.9 | 16.1 | 92.0 | 4.0 | 16.6 | 10 |
| Example D31 | 6.3 | 17.9 | 92.0 | 4.0 | 16.5 | 10 |
| Example D32 | 1.3 | 26.5 | 92.0 | 4.0 | 17.2 | 10 |
| Example D33 | 2.1 | 21.5 | 92.0 | 4.0 | 17.8 | 10 |
| Example D34 | 3.4 | 20.0 | 92.0 | 4.0 | 17.1 | 10 |
| Example D35 | 6.6 | 23.8 | 92.0 | 4.0 | 17.5 | 10 |

[Table D2]

Table D2

| No. | Production of negative electrode coating liquid and storage condition | | | | | |
|---|---|---|---|---|---|---|
| | Type of graphite | | Composition | | Solid content ratio o (%) | Storage temperature (°C) |
| | Particle size (μm) | Specific surface area (m²/g) | Amount of graphite (wt.%) | Amount of carbon black (wt.%) | | |
| Example D36 | 7.1 | 24.3 | 92.0 | 4.0 | 17.2 | 10 |
| Example D37 | 4.7 | 16.5 | 79.6 | 16.4 | 20.0 | 10 |
| Example D38 | 4.0 | 20.6 | 80.8 | 15.2 | 19.2 | 10 |

(continued)

| No. | Production of negative electrode coating liquid and storage condition | | | | | |
| --- | --- | --- | --- | --- | --- | --- |
| | Type of graphite | | Composition | | Solid content ratio $_o$ (%) | Storage temperature (°C) |
| | Particle size (μm) | Specific surface area (m$^2$/g) | Amount of graphite (wt.%) | Amount of carbon black (wt.%) | | |
| Example D39 | 3.9 | 20.1 | 81.7 | 14.3 | 19.1 | 10 |
| Example D40 | 3.3 | 20.4 | 82.7 | 13.3 | 18.9 | 10 |
| Example D41 | 3.2 | 18.8 | 85.9 | 10.1 | 19.7 | 10 |
| Example D42 | 4.8 | 20.4 | 88.7 | 7.3 | 19.6 | 10 |
| Example D43 | 4.1 | 17.7 | 89.4 | 6.6 | 19.4 | 10 |
| Example D44 | 3.5 | 17.3 | 90.3 | 5.7 | 20.2 | 10 |
| Example D45 | 3.7 | 19.8 | 91.2 | 4.8 | 20.0 | 10 |
| Example D46 | 4.2 | 18.4 | 92.0 | 4.0 | 19.8 | 10 |
| Example D47 | 4.7 | 21.4 | 86.0 | 10.0 | 20.5 | 10 |
| Comparative Example D1 | 0.8 | 7.8 | 92.0 | 4.0 | 22.0 | 25 |
| Comparative Example D2 | 0.9 | 18.8 | 92.0 | 4.0 | 17.8 | 10 |
| Comparative Example D3 | 9.5 | 15.1 | 92.0 | 4.0 | 19.2 | 10 |
| Comparative Example D4 | 4.0 | 20.0 | 92.0 | 4.0 | 22.0 | 10 |
| Comparative Example D5 | 2.1 | 15.7 | 92.0 | 4.0 | 15.9 | 10 |
| Comparative Example D6 | 2.5 | 9.8 | 92.0 | 4.0 | 19.2 | 10 |
| Comparative Example D7 | 3.6 | 46.0 | 92.0 | 4.0 | 18.4 | 10 |
| Comparative Example D8 | 5.6 | 15.7 | 92.0 | 4.0 | 18.4 | 25 |
| Comparative Example D9 | 19.9 | 3.8 | 92.0 | 4.0 | 18.7 | 25 |
| Comparative Example D10 | 19.9 | 3.8 | 92.0 | 4.0 | 18.2 | 10 |
| Comparative Example D11 | 0.9 | 16.0 | 87.3 | 8.7 | 19.2 | 10 |
| Comparative Example D12 | 9.5 | 21.1 | 86.0 | 10.0 | 19.9 | 10 |
| Comparative Example D13 | 3.4 | 22.4 | 85.2 | 10.8 | 22.0 | 10 |
| Comparative Example D14 | 4.8 | 16.2 | 84.8 | 11.2 | 16.0 | 10 |
| Comparative Example D15 | 3.6 | 7.1 | 86.7 | 9.3 | 20.3 | 10 |
| Comparative Example D16 | 4.0 | 47.9 | 86.5 | 9.5 | 19.3 | 10 |
| Comparative Example D17 | 3.9 | 20.6 | 87.2 | 8.8 | 19.1 | 25 |
| Comparative Example D18 | 0.9 | 19.0 | 92.0 | 4.0 | 17.2 | 10 |
| Comparative Example D19 | 9.5 | 17.7 | 92.0 | 4.0 | 19.2 | 10 |
| Comparative Example D20 | 2.7 | 17.2 | 92.0 | 4.0 | 22.0 | 10 |
| Comparative Example D21 | 4.5 | 19.7 | 92.0 | 4.0 | 15.9 | 10 |
| Comparative Example D22 | 3.4 | 9.8 | 92.0 | 4.0 | 18.7 | 10 |
| Comparative Example D23 | 5.4 | 46.0 | 92.0 | 4.0 | 18.6 | 10 |
| Comparative Example D24 | 2.9 | 16.8 | 92.0 | 4.0 | 17.9 | 25 |

[Table D3]

Table D3

| No. | Evaluation results of negative electrode | | | | | |
|---|---|---|---|---|---|---|
| | Thickness of negative electrode material ($\mu$m) | Void diameter of negative electrode ($\mu$m) | Void volume of negative electrode ($cm^3/g$) | Specific surface area of negative electrode active material layer ($m^2/g$) | Frequency of aggregates on negative electrode surface (aggregates/$cm^2$) | (1.35 - p)/t |
| Example D1 | 0.21 | 0.31 | 0.38 | 15.9 | 0.01 | 4.95 |
| Example D2 | 0.98 | 0.57 | 0.37 | 20.2 | 0.04 | 0.80 |
| Example D3 | 0.44 | 0.16 | 0.36 | 26.1 | 0.06 | 2.67 |
| Example D4 | 0.47 | 0.68 | 0.36 | 19.3 | 0.19 | 1.41 |
| Example D5 | 0.30 | 0.48 | 0.37 | 8.2 | 0.13 | 2.89 |
| Example D6 | 0.31 | 0.50 | 0.37 | 39.2 | 0.19 | 2.72 |
| Example D7 | 0.56 | 0.54 | 0.37 | 21.4 | 0.95 | 1.44 |
| Example D8 | 0.52 | 0.31 | 0.38 | 20.3 | 0.01 | 2.00 |
| Example D9 | 0.26 | 0.54 | 0.38 | 25.9 | 0.08 | 3.10 |
| Example D10 | 0.32 | 0.40 | 0.38 | 16.4 | 0.09 | 2.98 |
| Example D11 | 0.48 | 0.53 | 0.36 | 17.6 | 0.11 | 1.70 |
| Example D12 | 0.77 | 0.55 | 0.37 | 20.9 | 0.06 | 1.04 |
| Example D13 | 0.84 | 0.36 | 0.37 | 22.0 | 0.11 | 1.18 |
| Example D14 | 0.78 | 0.18 | 0.35 | 18.5 | 0.19 | 1.51 |
| Example D15 | 0.45 | 0.23 | 0.35 | 24.9 | 0.12 | 2.49 |
| Example D16 | 0.57 | 0.33 | 0.37 | 15.1 | 0.02 | 1.79 |
| Example D17 | 0.33 | 0.58 | 0.36 | 16.2 | 0.11 | 2.36 |
| Example D18 | 0.36 | 0.64 | 0.37 | 21.3 | 0.17 | 1.96 |
| Example D19 | 0.45 | 0.46 | 0.36 | 11.5 | 0.16 | 1.96 |
| Example D20 | 0.76 | 0.31 | 0.36 | 12.3 | 0.11 | 1.35 |
| Example D21 | 0.39 | 0.24 | 0.36 | 16.5 | 0.18 | 2.88 |

(continued)

| No. | Evaluation results of negative electrode | | | | | |
|---|---|---|---|---|---|---|
| | Thickness of negative electrode material ($\mu$m) | Void diameter of negative electrode ($\mu$m) | Void volume of negative electrode ($cm^3/g$) | Specific surface area of negative electrode active material layer ($m^2/g$) | Frequency of aggregates on negative electrode surface (aggregates/$cm^2$) | (1.35 - p)/t |
| Example D22 | 0.72 | 0.52 | 0.38 | 29.5 | 0.02 | 1.16 |
| Example D23 | 0.64 | 0.51 | 0.36 | 31.2 | 0.02 | 1.32 |
| Example D24 | 0.58 | 0.32 | 0.36 | 13.4 | 0.00 | 1.76 |
| Example D25 | 0.79 | 0.27 | 0.37 | 17.3 | 0.17 | 1.37 |
| Example D26 | 0.75 | 0.38 | 0.37 | 22.3 | 0.24 | 1.28 |
| Example D27 | 0.24 | 0.65 | 0.37 | 13.4 | 0.10 | 2.92 |
| Example D28 | 0.25 | 0.66 | 0.37 | 26.9 | 0.12 | 2.76 |
| Example D29 | 0.45 | 0.62 | 0.35 | 27.3 | 0.15 | 1.62 |
| Example D30 | 0.7 | 0.63 | 0.37 | 13.9 | 0.03 | 1.03 |
| Example D31 | 0.75 | 0.65 | 0.37 | 16.9 | 0.02 | 0.93 |
| Example D32 | 0.22 | 0.55 | 0.37 | 25.7 | 0.06 | 3.64 |
| Example D33 | 0.29 | 0.55 | 0.36 | 19.9 | 0.17 | 2.76 |
| Example D34 | 0.45 | 0.55 | 0.37 | 17.9 | 0.05 | 1.78 |
| Example D35 | 0.78 | 0.55 | 0.38 | 22.9 | 0.11 | 1.03 |

[Table D4]

Table D4

| No. | Evaluation results of negative electrode | | | | | |
|---|---|---|---|---|---|---|
| | Thickness of negative electrode material ($\mu$m) | Void diameter of negative electrode ($\mu$m) | Void volume of negative electrode ($cm^3/g$) | Specific surface area of negative electrode active material layer ($m^2/g$) | Frequency of aggregates on negative electrode surface (aggregates/$cm^2$) | (1.35 - p)/t |
| Example D36 | 0.83 | 0.55 | 0.37 | 21.6 | 0.10 | 0.96 |

(continued)

| No. | Evaluation results of negative electrode | | | | | |
| --- | --- | --- | --- | --- | --- | --- |
| | Thickness of negative electrode material (μm) | Void diameter of negative electrode (μm) | Void volume of negative electrode (cm³/g) | Specific surface area of negative electrode active material layer (m²/g) | Frequency of aggregates on negative electrode surface (aggregates/cm²) | (1.35 - p)/t |
| Example D37 | 0.59 | 0.27 | 1.25 | 16.3 | 0.02 | 1.85 |
| Example D38 | 0.51 | 0.38 | 1.18 | 18.3 | 0.03 | 1.91 |
| Example D39 | 0.50 | 0.33 | 1.13 | 19.2 | 0.05 | 2.03 |
| Example D40 | 0.42 | 0.37 | 1.06 | 19.7 | 0.04 | 2.33 |
| Example D41 | 0.41 | 0.29 | 0.82 | 16.9 | 0.02 | 2.60 |
| Example D42 | 0.58 | 0.32 | 0.63 | 18.8 | 0.03 | 1.78 |
| Example D43 | 0.51 | 0.33 | 0.58 | 17.6 | 0.04 | 1.98 |
| Example D44 | 0.44 | 0.21 | 0.52 | 16.9 | 0.02 | 2.56 |
| Example D45 | 0.48 | 0.30 | 0.47 | 19.1 | 0.03 | 2.20 |
| Example D46 | 0.52 | 0.31 | 0.36 | 15.9 | 0.01 | 2.00 |
| Example D47 | 0.58 | 0.20 | 0.82 | 19.3 | 0.01 | 1.99 |
| Comparative Example D1 | 0.17 | 0.13 | 0.37 | 7.8 | 1.03 | 7.18 |
| Comparative Example D2 | 0.18 | 0.52 | 0.36 | 17.7 | 0.07 | 4.60 |
| Comparative Example D3 | 1.03 | 0.36 | 0.36 | 14.6 | 0.05 | 0.96 |
| Comparative Example D4 | 0.50 | 0.12 | 0.35 | 18.4 | 0.07 | 2.45 |
| Comparative Example D5 | 0.31 | 0.73 | 0.36 | 15.6 | 0.00 | 2.01 |
| Comparative Example D6 | 0.33 | 0.36 | 0.38 | 7.5 | 0.19 | 2.98 |
| Comparative Example D7 | 0.47 | 0.46 | 0.36 | 41.3 | 0.02 | 1.91 |
| Comparative Example D8 | 0.66 | 0.48 | 0.35 | 15.6 | 1.02 | 1.32 |
| Comparative Example D9 | 2.22 | 0.40 | 0.36 | 3.7 | 0.03 | 0.43 |
| Comparative Example D10 | 2.22 | 0.44 | 0.37 | 3.7 | 0.04 | 0.41 |
| Comparative Example D11 | 0.15 | 0.33 | 0.73 | 15.6 | 0.01 | 6.78 |
| Comparative Example D12 | 1.01 | 0.31 | 0.82 | 19.2 | 0.02 | 1.03 |
| Comparative Example D13 | 0.44 | 0.11 | 0.87 | 19.6 | 0.00 | 2.82 |
| Comparative Example D14 | 0.59 | 0.74 | 0.90 | 15.7 | 0.00 | 1.03 |

(continued)

| No. | Evaluation results of negative electrode | | | | | |
|---|---|---|---|---|---|---|
| | Thickness of negative electrode material ($\mu$m) | Void diameter of negative electrode ($\mu$m) | Void volume of negative electrode ($cm^3$/g) | Specific surface area of negative electrode active material layer ($m^2$/g) | Frequency of aggregates on negative electrode surface (aggregates/$cm^2$) | (1.35 - p)/t |
| Comparative Example D15 | 0.45 | 0.22 | 0.76 | 5.0 | 0.05 | 2.54 |
| Comparative Example D16 | 0.51 | 0.33 | 0.78 | 45.0 | 0.01 | 2.01 |
| Comparative Example D17 | 0.49 | 0.33 | 0.73 | 18.4 | 1.30 | 2.07 |
| Comparative Example D18 | 0.18 | 0.56 | 0.38 | 17.4 | 0.18 | 4.37 |
| Comparative Example D19 | 1.03 | 0.34 | 0.37 | 17.5 | 0.09 | 0.98 |
| Comparative Example D20 | 0.36 | 0.12 | 0.36 | 14.9 | 0.06 | 3.44 |
| Comparative Example D21 | 0.55 | 0.73 | 0.36 | 18.2 | 0.01 | 1.12 |
| Comparative Example D22 | 0.44 | 0.39 | 0.35 | 7.5 | 0.17 | 2.16 |
| Comparative Example D23 | 0.66 | 0.39 | 0.35 | 41.3 | 0.16 | 1.46 |
| Comparative Example D24 | 0.38 | 0.46 | 0.37 | 16.6 | 1.02 | 2.31 |

[Table D5]

Table D5

| No. | Evaluation results of nonaqueous lithium power storage element | | | |
|---|---|---|---|---|
| | Micro-short circuit rate after room-temperature high-rate doping step (%) | Internal resistance (m$\Omega$) | Capacity retention rate after low-temperature cycle test (%) | Capacity retention rate after high-temperature cycle test (%) |
| Example D1 | 30 | 20.0 | 60 | 71 |
| Example D2 | 30 | 19.4 | 52 | 68 |
| Example D3 | 30 | 18.3 | 52 | 90 |
| Example D4 | 20 | 20.1 | 53 | 86 |
| Example D5 | 20 | 19.9 | 60 | 73 |
| Example D6 | 20 | 20.0 | 53 | 86 |
| Example D7 | 30 | 20.9 | 51 | 87 |
| Example D8 | 0 | 13.7 | 76 | 86 |
| Example D9 | 20 | 18.7 | 56 | 70 |

(continued)

| No. | Evaluation results of nonaqueous lithium power storage element | | | |
|---|---|---|---|---|
| | Micro-short circuit rate after room-temperature high-rate doping step (%) | Internal resistance (mΩ) | Capacity retention rate after low-temperature cycle test (%) | Capacity retention rate after high-temperature cycle test (%) |
| Example D10 | 0 | 13.3 | 83 | 74 |
| Example D11 | 0 | 13.9 | 81 | 89 |
| Example D12 | 0 | 14.2 | 83 | 92 |
| Example D13 | 30 | 19.6 | 53 | 90 |
| Example D14 | 20 | 18.2 | 57 | 90 |
| Example D15 | 0 | 13.0 | 79 | 89 |
| Example D16 | 0 | 12.3 | 76 | 88 |
| Example D17 | 0 | 12.9 | 80 | 88 |
| Example D18 | 30 | 19.2 | 54 | 87 |
| Example D19 | 30 | 18.1 | 59 | 85 |
| Example D20 | 0 | 12.1 | 80 | 87 |
| Example D21 | 0 | 13.3 | 76 | 68 |
| Example D22 | 0 | 13.5 | 84 | 91 |
| Example D23 | 30 | 20.1 | 53 | 88 |
| Example D24 | 0 | 13.0 | 84 | 90 |
| Example D25 | 0 | 13.9 | 84 | 88 |
| Example D26 | 30 | 20.4 | 60 | 86 |
| Example D27 | 30 | 19.1 | 55 | 73 |
| Example D28 | 20 | 19.5 | 59 | 88 |
| Example D29 | 30 | 19.6 | 51 | 93 |
| Example D30 | 30 | 19.8 | 60 | 94 |
| Example D31 | 30 | 18.7 | 54 | 71 |
| Example D32 | 20 | 20.7 | 60 | 75 |
| Example D33 | 20 | 19.5 | 60 | 91 |
| Example D34 | 0 | 14.6 | 80 | 88 |
| Example D35 | 0 | 14.5 | 81 | 93 |

[Table D6]

Table D6

| No. | Evaluation results of nonaqueous lithium power storage element | | | |
|---|---|---|---|---|
| | Micro-short circuit rate after room-temperature high-rate doping step (%) | Internal resistance (mΩ) | Capacity retention rate after low-temperature cycle test (%) | Capacity retention rate after high-temperature cycle test (%) |
| Example D36 | 30 | 19.7 | 62 | 68 |
| Example D37 | 0 | 14.4 | 76 | 92 |

(continued)

| No. | Evaluation results of nonaqueous lithium power storage element | | | |
| --- | --- | --- | --- | --- |
| | Micro-short circuit rate after room-temperature high-rate doping step (%) | Internal resistance (mΩ) | Capacity retention rate after low-temperature cycle test (%) | Capacity retention rate after high-temperature cycle test (%) |
| Example D38 | 0 | 10.1 | 79 | 91 |
| Example D39 | 0 | 10.7 | 78 | 89 |
| Example D40 | 0 | 8.7 | 83 | 88 |
| Example D41 | 0 | 8.9 | 81 | 94 |
| Example D42 | 0 | 8.8 | 81 | 89 |
| Example D43 | 0 | 10.6 | 80 | 89 |
| Example D44 | 0 | 10.1 | 78 | 86 |
| Example D45 | 0 | 13.9 | 81 | 94 |
| Example D46 | 0 | 19.4 | 77 | 87 |
| Example D47 | 0 | 15.8 | 81 | 89 |
| Comparative Example D1 | 70 | 35.9 | 22 | 31 |
| Comparative Example D2 | 80 | 34.7 | 25 | 34 |
| Comparative Example D3 | 70 | 32.7 | 25 | 40 |
| Comparative Example D4 | 80 | 43.0 | 11 | 31 |
| Comparative Example D5 | 90 | 43.8 | 25 | 32 |
| Comparative Example D6 | 90 | 41.5 | 27 | 39 |
| Comparative Example D7 | 80 | 43.7 | 24 | 39 |
| Comparative Example D8 | 90 | 43.2 | 25 | 40 |
| Comparative Example D9 | 80 | 43.0 | 25 | 31 |
| Comparative Example D10 | 70 | 39.2 | 15 | 38 |
| Comparative Example D11 | 90 | 38.4 | 24 | 34 |
| Comparative Example D12 | 90 | 45.0 | 18 | 38 |
| Comparative Example D13 | 90 | 33.3 | 20 | 36 |
| Comparative Example D14 | 80 | 41.5 | 17 | 39 |
| Comparative Example D15 | 90 | 32.6 | 26 | 32 |
| Comparative Example D16 | 70 | 32.7 | 16 | 33 |
| Comparative Example D17 | 90 | 31.6 | 22 | 32 |
| Comparative Example D18 | 80 | 45.5 | 22 | 34 |
| Comparative Example D19 | 80 | 51.4 | 17 | 37 |
| Comparative Example D20 | 70 | 49.8 | 13 | 34 |
| Comparative Example D21 | 80 | 50.7 | 28 | 32 |
| Comparative Example D22 | 70 | 46.5 | 11 | 30 |
| Comparative Example D23 | 70 | 53.2 | 20 | 32 |
| Comparative Example D24 | 80 | 51.0 | 20 | 32 |

According to the tables above, it was demonstrated that, by using the negative electrode of the present disclosure, not only a low micro-short circuit rate can be realized during pre-doping performed at room temperature and a high rate, but also the internal resistance can be reduced and the cycle durability over a wide temperature range from low to high temperatures can be improved.

<<Example E>>

<Production of Lithium Compound Composites>

(Lithium Compound Composite 1)

Lithium carbonate ($Li_2CO_3$) powder as a lithium compound and $MnO_2$ as $MO_2$ were each weighed in an amount of 50.0 parts by weight. Using a planetary bead mill, these materials were mixed at a rotation speed of 100 rpm for 60 minutes to obtain a lithium compound composite 1.

<Production and Evaluation of Positive Electrode Precursors>

(Positive Electrode Precursor 1)

First, 84.0 parts by weight of $LiFePO_4$ as a positive electrode active material, 8.0 parts by weight of the lithium compound composite 1 obtained above, 3.0 parts by weight of acetylene black (AB) as a conductive filler, 5.0 parts by weight of PVdF (polyvinylidene fluoride) as a binder, and NMP (N-methylpyrrolidone) as an organic solvent were mixed. Then, the resultant was stirred for 3 minutes at 2,000 rpm using a planetary centrifugal mixer to obtain a positive electrode slurry. The thus obtained positive electrode slurry was applied to one side of a 15-$\mu$m thick aluminum foil serving as a positive electrode power collector, and this aluminum foil was dried and then pressed to obtain a positive electrode precursor 1. The positive electrode active material layer of the thus obtained positive electrode precursor 1 had a thickness of 70 $\mu$m per side, a basis weight of 156 g/$m^2$ per side, and a bulk density of 2.23 g/$cm^3$. Further, the charge capacity A2 (mAh/$cm^2$) per unit area and the discharge capacity A3 (mAh/$cm^2$) per unit area of this positive electrode precursor were measured in accordance with the above-described method.

(Lithium Compound Composites 2 to 11)

Lithium compound composites 2 to 11 were produced in the same manner as the lithium compound composite 1, except that the type and the amount (parts by weight) of the transition metal oxide and the amount (parts by weight) of the lithium compound were changed as shown in the table below, and various evaluations were performed on these lithium compound composites.

(Positive Electrode Precursors 2 to 18)

Positive electrode precursors 2 to 18 were produced in the same manner as the positive electrode precursor 1, except that the type and the amount (parts by weight) of the positive electrode active material, the type and the amount of the lithium compound composite (parts by weight), as well as the amount (parts by weight) of acetylene black (AB) and that of PVdF (polyvinylidene fluoride) were each changed as shown in the table below, and various evaluations were performed on these positive electrode precursors. The amounts (parts by weight) of these components shown in the tables below are values assuming that the total solid content weight in each positive electrode slurry is 100 parts by weight.

[Table E1]

Table E1

| | Materials | | Composition ratio (parts by weight) | |
|---|---|---|---|---|
| | Lithium compound | Transition metal oxide $MO_2$ | Lithium compound | Transition metal oxide $MO_2$ |
| Lithium compound composite 1 | $Li_2CO_3$ | MnO2 | 50.0 | 50.0 |
| Lithium compound composite 2 | $Li_2CO_3$ | MnO2 | 40.0 | 60.0 |
| Lithium compound composite 3 | $Li_2CO_3$ | MnO2 | 30.0 | 70.0 |

(continued)

| | Materials | | Composition ratio (parts by weight) | |
|---|---|---|---|---|
| | Lithium compound | Transition metal oxide $MO_2$ | Lithium compound | Transition metal oxide $MO_2$ |
| Lithium compound composite 4 | $Li_2CO_3$ | MnO2 | 20.0 | 80.0 |
| Lithium compound composite 5 | - | MnO2 | 0.0 | 100.0 |
| Lithium compound composite 6 | $Li_2CO_3$ | MnO2 | 70.0 | 30.0 |
| Lithium compound composite 7 | $Li_2CO_3$ | MnO2 | 80.0 | 20.0 |
| Lithium compound composite 8 | $Li_2CO_3$ | MnO2 | 90.0 | 10.0 |
| Lithium compound composite 9 | $Li_2CO_3$ | - | 100.0 | 0.0 |
| Lithium compound composite 10 | $Li_2CO_3$ | $CoO_2$ | 50.0 | 50.0 |
| Lithium compound composite 11 | $Li_2CO_3$ | $NiO_2$ | 50.0 | 50.0 |

[Table E2]

Table E2

| | Materials | | Composition ratio (parts by weight) | | | | Electrode physical properties | | Evaluation results | |
|---|---|---|---|---|---|---|---|---|---|---|
| | Positive electrode active material | Lithium compound composite | Positive electrode active material | Lithium compound composite | AB | PVdF | Basis weight (g/m$^2$) | Thickness (μm) | A2 (mAh/cm$^2$) | A3 (mAh/cm$^2$) |
| Positive electrode precursor 1 | LiFePO$_4$ | Lithium compound composite 1 | 84.0 | 8.0 | 3.0 | 5.0 | 156 | 70 | 2.48 | 2.10 |
| Positive electrode precursor 2 | LiFePO$_4$ | Lithium compound composite 1 | 87.0 | 5.0 | 3.0 | 5.0 | 150 | 68 | 2.30 | 2.09 |
| Positive electrode precursor 3 | LiFePO$_4$ | Lithium compound composite 1 | 72.0 | 20.0 | 3.0 | 5.0 | 178 | 81 | 3.10 | 2.05 |
| Positive electrode precursor 4 | LiFePO$_4$ | Lithium compound composite 2 | 84.0 | 8.0 | 3.0 | 5.0 | 155 | 70 | 2.38 | 2.08 |
| Positive electrode precursor 5 | LiFePO$_4$ | Lithium compound composite 3 | 84.0 | 8.0 | 3.0 | 5.0 | 158 | 71 | 2.37 | 2.12 |
| Positive electrode precursor 6 | LiFePO$_4$ | Lithium compound composite 4 | 84.0 | 8.0 | 3.0 | 5.0 | 157 | 71 | 2.28 | 2.11 |
| Positive electrode precursor 7 | LiFePO$_4$ | Lithium compound composite 5 | 84.0 | 8.0 | 3.0 | 5.0 | 157 | 70 | 2.11 | 2.11 |
| Positive electrode precursor 8 | LiFePO$_4$ | Lithium compound composite 6 | 84.0 | 8.0 | 3.0 | 5.0 | 155 | 70 | 2.54 | 2.08 |
| Positive electrode precursor 9 | LiFePO$_4$ | Lithium compound composite 7 | 84.0 | 8.0 | 3.0 | 5.0 | 157 | 71 | 2.55 | 2.11 |

(continued)

| | Materials | | Composition ratio (parts by weight) | | | | Electrode physical properties | | Evaluation results | |
|---|---|---|---|---|---|---|---|---|---|---|
| | Positive electrode active material | Lithium compound composite | Positive electrode active material | Lithium compound composite | AB | PVdF | Basis weight (g/m²) | Thickness (μm) | A2 (mAh/cm²) | A3 (mAh/cm²) |
| Positive electrode precursor 10 | $LiFePO_4$ | Lithium compound composite 8 | 84.0 | 8.0 | 3.0 | 5.0 | 158 | 73 | 2.55 | 2.12 |
| Positive electrode precursor 11 | $LiFePO_4$ | Lithium compound composite 9 | 84.0 | 8.0 | 3.0 | 5.0 | 159 | 74 | 2.23 | 2.14 |
| Positive electrode precursor 12 | $LiFePO_4$ | Lithium compound composite 10 | 84.0 | 8.0 | 3.0 | 5.0 | 156 | 71 | 2.48 | 2.10 |
| Positive electrode precursor 13 | $LiFePO_4$ | Lithium compound composite 11 | 84.0 | 8.0 | 3.0 | 5.0 | 157 | 70 | 2.47 | 2.11 |
| Positive electrode precursor 14 | $LiFePO_4$ | Lithium compound composite 1 | 67.0 | 25.0 | 3.0 | 5.0 | 159 | 69 | 2.83 | 1.70 |
| Positive electrode precursor 15 | $LiFePO_4$ | Lithium compound composite 1 | 62.0 | 30.0 | 3.0 | 5.0 | 155 | 69 | 2.74 | 1.54 |
| Positive electrode precursor 16 | $LiMn_{0.3}Fe_{0.7}PO_4$ | Lithium compound composite 1 | 84.0 | 8.0 | 3.0 | 5.0 | 159 | 69 | 2.40 | 2.14 |
| Positive electrode precursor 17 | $LiMn_{0.5}Fe_{0.5}PO_4$ | Lithium compound composite 1 | 84.0 | 8.0 | 3.0 | 5.0 | 155 | 69 | 2.30 | 2.08 |
| Positive electrode precursor 18 | $LiMn_{0.7}Fe_{0.3}PO_4$ | Lithium compound composite 1 | 84.0 | 8.0 | 3.0 | 5.0 | 151 | 70 | 2.27 | 2.03 |

<Production and Evaluation of Negative Electrode Precursors>

(Negative Electrode Precursor 1)

First, 92.0 parts by weight of artificial graphite as a first negative electrode active material, 3.0 parts by weight of acetylene black (AB) as a conductive filler, 5.0 parts by weight of PVdF (polyvinylidene fluoride) as a binder, and NMP (N-methylpyrrolidone) were mixed. Then, the resultant was stirred for 6 minutes at 2,000 rpm using a planetary centrifugal mixer to obtain a negative electrode slurry. The thus obtained negative electrode slurry was applied to one side of a 10 $\mu$m-thick electrolytic copper foil serving as a negative electrode power collector, and this copper foil was dried and then pressed to obtain a negative electrode precursor 1. The negative electrode active material layer of the thus obtained negative electrode precursor 1 had a thickness of 74 $\mu$m per side, a basis weight of 70.3 g/m$^2$, and a bulk density of 0.95 g/cm$^3$. Further, the charge capacity B2 (mAh/cm$^2$) per unit area of this negative electrode precursor was measured in accordance with the above-described method.

(Negative Electrode Precursors 2 to 16)

Negative electrode precursors 2 to 16 were produced in the same manner as the negative electrode precursor 1, except that the type and the amount of a second negative electrode active material, as well as the amount (parts by weight) of the artificial graphite used as the first negative electrode active material, that of acetylene black (AB) and that of PVdF (polyvinylidene fluoride) were each changed as shown in the table below. The amounts (parts by weight) of these components shown in the table below are values assuming that the total solid content weight in each negative electrode slurry is 100 parts by weight.

[Table E3]

Table E3

| | Materials | | Composition ratio (parts by weight) | | | | Electrode physical properties | | Evaluation results |
|---|---|---|---|---|---|---|---|---|---|
| | First negative electrode active material | Second negative electrode active material | First negative electrode active material | Second negative electrode active material | AB | PVdF | Basis weight (g/m$^2$) | Thickness ($\mu$m) | B2 (mAh/cm$^2$) |
| Negative electrode precursor 1 | artificial graphite | - | 92.0 | 0.0 | 3.0 | 5.0 | 70.3 | 74 | 2.20 |
| Negative electrode precursor 2 | artificial graphite | - | 92.0 | 0.0 | 3.0 | 5.0 | 74.6 | 77 | 2.33 |
| Negative electrode precursor 3 | artificial graphite | - | 92.0 | 0.0 | 3.0 | 5.0 | 78.2 | 84 | 2.45 |
| Negative electrode precursor 4 | artificial graphite | - | 92.0 | 0.0 | 3.0 | 5.0 | 81.3 | 86 | 2.54 |
| Negative electrode precursor 5 | artificial graphite | - | 92.0 | 0.0 | 3.0 | 5.0 | 84.0 | 90 | 2.63 |

(continued)

| | Materials | | Composition ratio (parts by weight) | | | | Electrode physical properties | | Evaluation results |
|---|---|---|---|---|---|---|---|---|---|
| | First negative electrode active material | Second negative electrode active material | First negative electrode active material | Second negative electrode active material | AB | PVdF | Basis weight (g/m$^2$) | Thickness ($\mu$m) | B2 (mAh/cm$^2$) |
| Negative electrode precursor 6 | artificial graphite | - | 92.0 | 0.0 | 3.0 | 5.0 | 87.7 | 95 | 2.74 |
| Negative electrode precursor 7 | artificial graphite | - | 92.0 | 0.0 | 3.0 | 5.0 | 90.5 | 97 | 2.83 |
| Negative electrode precursor 8 | artificial graphite | - | 92.0 | 0.0 | 3.0 | 5.0 | 67.4 | 71 | 2.11 |
| Negative electrode precursor 9 | artificial graphite | - | 92.0 | 0.0 | 3.0 | 5.0 | 64.0 | 68 | 2.00 |
| Negative electrode precursor 10 | artificial graphite | - | 92.0 | 0.0 | 3.0 | 5.0 | 61.3 | 65 | 1.92 |
| Negative electrode precursor 11 | artificial graphite | SiO | 82.0 | 10.0 | 3.0 | 5.0 | 58.9 | 56 | 2.23 |
| Negative electrode precursor 12 | artificial graphite | SiO | 72.0 | 20.0 | 3.0 | 5.0 | 55.1 | 50 | 2.45 |
| Negative electrode precursor 13 | artificial graphite | SiO | 62.0 | 30.0 | 3.0 | 5.0 | 51.1 | 44 | 2.61 |
| Negative electrode precursor 14 | artificial graphite | SiO | 72.0 | 20.0 | 3.0 | 5.0 | 62.5 | 57 | 2.78 |
| Negative electrode precursor 15 | artificial graphite | SiO | 72.0 | 20.0 | 3.0 | 5.0 | 46.7 | 43 | 2.08 |
| Negative electrode precursor 16 | artificial graphite | Si | 82.0 | 10.0 | 3.0 | 5.0 | 55.0 | 50 | 2.36 |

In Table E2, the abbreviations used in the column of "Second negative electrode active material" have the following meanings.

SiO: silicon oxide
Si: silicon

<Example E1>

(Assembly of Electrode Body)

The positive electrode precursor 1 was cut to a size of 5.0 cm × 10.0 cm, and the negative electrode precursor 1 was cut to a size of 5.1 cm × 10.1 cm. Using a 15-$\mu$m thick polyolefin microporous membrane as a separator, the positive electrode precursor 1, the separator, and the negative electrode precursor 1 were disposed in layers in this order. Subsequently, a negative electrode terminal and a positive electrode terminal were connected to the negative electrode precursor 1 and the positive electrode precursor 1, respectively, by ultrasonic welding, whereby an electrode body was obtained. This electrode body housed in a casing formed of an aluminum laminated packaging material, and the electrode terminal parts of the casing periphery and three sides of the bottom part were heat-sealed at a sealing temperature of 180°C for a sealing time of 20 seconds with a sealing pressure of 1.0 MPa. The thus heat-sealed casing was vacuum-dried at a temperature of 50°C and a pressure of 50 Pa for a drying time of 60 hours.

(Preparation of Nonaqueous Electrolytic solution)

Using a mixed solvent of ethylene carbonate (EC) and ethyl methyl carbonate (EMC) (EC:EMC = 33:67 (volume ratio)) as a nonaqueous solvent, $LiPF_6$ was dissolved therein such that the concentration thereof was 1.2 mol/L, whereby a nonaqueous electrolytic solution 1 was prepared.

(Injection, Impregnation, and Sealing Steps)

Under the atmospheric pressure in a dry-air environment having a temperature of 25°C and a dew point of -40°C or lower, about 3.0 g of the thus prepared nonaqueous electrolytic solution 1 was injected into the electrode body housed in the aluminum laminated packaging material. Then, this aluminum laminated packaging material was placed in a decompression chamber, and the pressure was reduced from the atmospheric pressure to -95 kPa to impregnate the electrode body with the nonaqueous electrolytic solution 1.

Subsequently, the electrode laminate housed in the aluminum laminated packaging material and impregnated with the nonaqueous electrolytic solution 1 was placed in a vacuum sealing machine. Thereafter, under a reduced pressure of -95 kPa, the aluminum laminated packaging material was sealed at 180°C for 10 seconds with a pressure of 0.1 MPa. In this manner, a lithium ion secondary battery precursor was produced, and another lithium ion secondary battery precursor was further produced by the above-described method. As a result, a total of two lithium ion secondary battery precursors were obtained.

(Pre-Doping)

Using a charge-discharge device (TOSCAT-3100U) manufactured by Toyo System Co., Ltd., the thus obtained lithium ion secondary battery precursors were constant-current charged up to a voltage of 4.5 V at a constant value of 50 mA in a 45°C environment. Then, these lithium ion secondary battery precursors were constant-voltage charged at 4.5 V until the current value was 5 mA or less, whereby each negative electrode precursor was pre-doped. In this process, the decomposition efficiency E (%) of the lithium compound was calculated in accordance with the above-described method. The decomposition efficiency E (%) was summarized in the table below.

(Aging)

The thus pre-doped lithium ion secondary batteries were constant-current discharged to a voltage of 3.0 V at 0.2 A in a 25°C environment. Then, these lithium ion secondary batteries were constant-current discharged at 3.0 V for 1 hour and adjusted to have a voltage of 3.0 V. Thereafter, the lithium ion secondary batteries were stored in a 60°C incubator for 5 hours and to be aged.

(Degassing)

For each of the thus aged lithium ion secondary batteries, the aluminum laminated packaging material was partially opened in a dry-air environment having a temperature of 25°C and a dew point of -40°C. Subsequently, each lithium ion secondary battery was placed in a decompression chamber, and an operation of reducing the pressure from the atmospheric pressure to -80 kPa over a period of 3 minutes and then restoring the atmospheric pressure over a period of 3 minutes was repeated for a total of three times. Thereafter, the lithium ion secondary battery was placed in a vacuum sealing machine, and the pressure was reduced to -90 kPa, after which the aluminum laminated packaging material was sealed at 200°C for 10 seconds with a pressure of 0.1 MPa.

(Measurement of A1 and B1)

For one of the obtained lithium ion secondary batteries, the discharge capacity A1 per unit area of the positive electrode and the charge capacity B1 per unit area of the negative electrode were measured in accordance with the above-described methods. The results thereof are summarized in the tables below.

(Measurement of Discharge Capacity)

The other of the obtained lithium ion secondary batteries was placed in an incubator set at 25°C and, using a charge-discharge device (ACD-01) manufactured by Aska Electronic Co., Ltd., the discharge capacity Qa, the discharge capacity X per unit voltage in a low-voltage range, and the energy density (Wh/L) were calculated in accordance with the above-described methods. The thus obtained values are summarized in the tables below. The energy density was calculated by dividing the discharge capacity Qa (Wh) by the volume of the electrode body {Area of negative electrode precursor (5.1 cm × 10.1 cm) × Thickness of electrode body (Total thickness of positive electrode precursor, separator, and negative electrode precursor)}.

(Calculation of Internal Resistance)

For the lithium ion secondary batteries after the above-described measurement of the discharge capacity, in an incubator set at 25°C, the internal resistance Ra was calculated by the above-described method using a charge-discharge device (ACD-01) manufactured by Aska Electronic Co., Ltd. The thus obtained values of the internal resistance Ra at 25°C are summarized in the tables below.

(High-Temperature Storage Test)

For the lithium ion secondary batteries, a high-temperature storage test was conducted in accordance with the above-described method, and the resistance increase rate (Rb/Ra) after the test was measured. The thus obtained results are summarized in the tables below.

<Examples E2 to E22 and Comparative Examples E1 to E11>

Lithium ion secondary batteries were produced and evaluated in the same manner as in Example E1, except that the types of the positive electrode precursor and the negative electrode precursor were each changed as shown in the tables below. The thus obtained results are summarized in the tables below.

[Table E4]

Table E4

| | Electrode configuration | | Design of positive electrode precursor | | | Design of negative electrode precursor | | A3/A2 | B2/A3 | Decomposition efficiency of lithium compound E (%) | Lithium ion secondary battery | | |
|---|---|---|---|---|---|---|---|---|---|---|---|---|---|
| | Positive electrode precursor | Negative electrode precursor | MO2 | A2 | A3 | Ratio of second negative electrode active material | B2 | | | | A1 (mAh/cm$^2$) | B1 (mAh/cm$^2$) | A1/B1 |
| Example E1 | Positive electrode precursor 1 | Negative electrode precursor 1 | 50 | 2.48 | 2.10 | 0 | 2.20 | 0.846 | 1.049 | 82.8 | 2.05 | 2.19 | 0.936 |
| Example E2 | Positive electrode precursor 1 | Negative electrode precursor 2 | 50 | 2.48 | 2.10 | 0 | 2.33 | 0.846 | 1.113 | 88.7 | 2.00 | 2.31 | 0.865 |
| Example E3 | Positive electrode precursor 1 | Negative electrode precursor 3 | 50 | 2.48 | 2.10 | 0 | 2.45 | 0.846 | 1.167 | 81.1 | 1.93 | 2.37 | 0.813 |
| Example E4 | Positive electrode precursor 1 | Negative electrode precursor 4 | 50 | 2.48 | 2.10 | 0 | 2.54 | 0.846 | 1.213 | 85.3 | 1.86 | 2.42 | 0.770 |
| Example E5 | Positive electrode precursor 1 | Negative electrode precursor 5 | 50 | 2.48 | 2.10 | 0 | 2.63 | 0.846 | 1.253 | 81.9 | 1.81 | 2.48 | 0.733 |
| Example E6 | Positive electrode precursor 1 | Negative electrode precursor 11 | 50 | 2.48 | 2.10 | 10 | 2.23 | 0.846 | 1.064 | 87.0 | 1.91 | 2.04 | 0.935 |

(continued)

| | Electrode configuration | | Design of positive electrode precursor | | | Design of negative electrode precursor | | A3/A2 | B2/A3 | Decomposition efficiency of lithium compound E (%) | Lithium ion secondary battery | | |
|---|---|---|---|---|---|---|---|---|---|---|---|---|---|
| | Positive electrode precursor | Negative electrode precursor | MO2 | A2 | A3 | Ratio of second negative electrode active material | B2 | | | | A1 (mAh/cm$^2$) | B1 (mAh/cm$^2$) | A1/B1 |
| Example E7 | Positive electrode precursor 1 | Negative electrode precursor 12 | 50 | 2.48 | 2.10 | 20 | 2.45 | 0.846 | 1.169 | 81.9 | 1.67 | 2.00 | 0.835 |
| Example E8 | Positive electrode precursor 1 | Negative electrode precursor 13 | 50 | 2.48 | 2.10 | 30 | 2.61 | 0.846 | 1.245 | 82.8 | 1.52 | 1.99 | 0.764 |
| Example E9 | Positive electrode precursor 1 | Negative electrode precursor 16 | 50 | 2.48 | 2.10 | 10 | 2.36 | 0.846 | 1.125 | 86.2 | 2.02 | 2.25 | 0.896 |
| Example E10 | Positive electrode precursor 2 | Negative electrode precursor 2 | 50 | 2.30 | 2.09 | 0 | 2.33 | 0.910 | 1.118 | 78.6 | 1.87 | 2.05 | 0.915 |
| Example E11 | Positive electrode precursor 3 | Negative electrode precursor 2 | 50 | 3.10 | 2.05 | 0 | 2.33 | 0.662 | 1.138 | 84.5 | 2.00 | 2.68 | 0.747 |
| Example E12 | Positive electrode precursor 4 | Negative electrode precursor 2 | 60 | 2.38 | 2.08 | 0 | 2.33 | 0.876 | 1.120 | 79.9 | 1.92 | 2.09 | 0.918 |

(continued)

| | Electrode configuration | | Design of positive electrode precursor | | | Design of negative electrode precursor | | A3/A2 | B2/A3 | Decomposition efficiency of lithium compound E (%) | Lithium ion secondary battery | | |
|---|---|---|---|---|---|---|---|---|---|---|---|---|---|
| | Positive electrode precursor | Negative electrode precursor | MO2 | A2 | A3 | Ratio of second negative electrode active material | B2 | | | | A1 (mAh/cm$^2$) | B1 (mAh/cm$^2$) | A1/B1 |
| Example E13 | Positive electrode precursor 5 | Negative electrode precursor 2 | 70 | 2.37 | 2.12 | 0 | 2.33 | 0.898 | 1.099 | 87.2 | 1.95 | 2.08 | 0.937 |
| Example E14 | Positive electrode precursor 6 | Negative electrode precursor 2 | 80 | 2.28 | 2.11 | 0 | 2.33 | 0.924 | 1.106 | 98.3 | 1.88 | 1.99 | 0.948 |
| Example E15 | Positive electrode precursor 8 | Negative electrode precursor 2 | 30 | 2.54 | 2.08 | 0 | 2.33 | 0.819 | 1.120 | 76.1 | 2.03 | 2.26 | 0.897 |
| Example E16 | Positive electrode precursor 9 | Negative electrode precursor 2 | 20 | 2.55 | 2.11 | 0 | 2.33 | 0.829 | 1.106 | 53.9 | 2.06 | 2.27 | 0.909 |
| Example E17 | Positive electrode precursor 10 | Negative electrode precursor 2 | 10 | 2.55 | 2.12 | 0 | 2.33 | 0.833 | 1.099 | 48.5 | 2.07 | 2.27 | 0.914 |
| Example E18 | Positive electrode precursor 12 | Negative electrode precursor 2 | 50 | 2.48 | 2.10 | 0 | 2.33 | 0.846 | 1.113 | 82.8 | 2.00 | 2.21 | 0.907 |

(continued)

| | Electrode configuration | | Design of positive electrode precursor | | | Design of negative electrode precursor | | A3/A2 | B2/A3 | Decomposition efficiency of lithium compound E (%) | Lithium ion secondary battery | | |
|---|---|---|---|---|---|---|---|---|---|---|---|---|---|
| | Positive electrode precursor | Negative electrode precursor | MO2 | A2 | A3 | Ratio of second negative electrode active material | B2 | | | | A1 (mAh/cm$^2$) | B1 (mAh/cm$^2$) | A1/B1 |
| Example E19 | Positive electrode precursor 13 | Negative electrode precursor 2 | 50 | 2.47 | 2.11 | 0 | 2.33 | 0.856 | 1.106 | 76.4 | 2.01 | 2.20 | 0.913 |
| Example E20 | Positive electrode precursor 16 | Negative electrode precursor 2 | 50 | 2.40 | 2.14 | 0 | 2.33 | 0.892 | 1.092 | 86.1 | 1.98 | 2.14 | 0.929 |
| Example E21 | Positive electrode precursor 17 | Negative electrode precursor 2 | 50 | 2.30 | 2.08 | 0 | 2.33 | 0.906 | 1.120 | 74.8 | 1.87 | 2.05 | 0.912 |
| Example E22 | Positive electrode precursor 18 | Negative electrode precursor 2 | 50 | 2.27 | 2.03 | 0 | 2.33 | 0.896 | 1.150 | 84.5 | 1.80 | 2.02 | 0.891 |
| Comparative Example E1 | Positive electrode precursor 1 | Negative electrode precursor 6 | 50 | 2.48 | 2.10 | 0 | 2.74 | 0.846 | 1.308 | 87.9 | 1.75 | 2.56 | 0.684 |
| Comparative Example E2 | Positive electrode precursor 1 | Negative electrode precursor 7 | 50 | 2.48 | 2.10 | 0 | 2.83 | 0.846 | 1.350 | 81.9 | 1.71 | 2.59 | 0.660 |

| | Electrode configuration | | Design of positive electrode precursor | | | Design of negative electrode precursor | | A3/A2 | B2/A3 | Decomposition efficiency of lithium compound E (%) | Lithium ion secondary battery | | |
|---|---|---|---|---|---|---|---|---|---|---|---|---|---|
| | Positive electrode precursor | Negative electrode precursor | MO2 | A2 | A3 | Ratio of second negative electrode active material | B2 | | | | A1 (mAh/cm$^2$) | B1 (mAh/cm$^2$) | A1/B1 |
| Comparative Example E3 | Positive electrode precursor 1 | Negative electrode precursor 8 | 50 | 2.48 | 2.10 | 0 | 2.11 | 0.846 | 1.006 | 82.8 | 2.05 | 2.05 | 0.999 |
| Comparative Example E4 | Positive electrode precursor 1 | Negative electrode precursor 9 | 50 | 2.48 | 2.10 | 0 | 2.00 | 0.846 | 0.955 | 86.2 | 2.05 | 1.92 | 1.065 |
| Comparative Example E5 | Positive electrode precursor 1 | Negative electrode precursor 10 | 50 | 2.48 | 2.10 | 0 | 1.92 | 0.846 | 0.915 | 87.9 | 2.05 | 1.82 | 1.126 |
| Comparative Example E6 | Positive electrode precursor 1 | Negative electrode precursor 14 | 50 | 2.48 | 2.10 | 20 | 2.78 | 0.846 | 1.326 | 84.5 | 1.50 | 2.20 | 0.682 |
| Comparative Example E7 | Positive electrode precursor 1 | Negative electrode precursor 15 | 50 | 2.48 | 2.10 | 20 | 2.08 | 0.846 | 0.991 | 81.1 | 1.91 | 1.86 | 1.028 |
| Comparative Example E8 | Positive electrode precursor 7 | Negative electrode precursor 2 | 100 | 2.11 | 2.11 | 0 | 2.33 | 1.000 | 1.106 | - | 1.76 | 1.77 | 0.997 |

EP 4 668 393 A1

(continued)

| | Electrode configuration | | Design of positive electrode precursor | | | Design of negative electrode precursor | | A3/A2 | B2/A3 | Decomposition efficiency of lithium compound E (%) | Lithium ion secondary battery | | |
| --- | --- | --- | --- | --- | --- | --- | --- | --- | --- | --- | --- | --- | --- |
| | Positive electrode precursor | Negative electrode precursor | MO2 | A2 | A3 | Ratio of second negative electrode active material | B2 | | | | A1 (mAh/cm²) | B1 (mAh/cm²) | A1/B1 |
| Comparative Example E9 | Positive electrode precursor 11 | Negative electrode precursor 2 | 0 | 2.23 | 2.14 | 0 | 2.33 | 0.959 | 1.092 | 10.1 | 1.87 | 1.87 | 1.000 |
| Comparative Example E10 | Positive electrode precursor 14 | Negative electrode precursor 2 | 50 | 2.83 | 1.70 | 0 | 2.33 | 0.603 | 1.369 | 85.3 | 1.66 | 2.54 | 0.655 |
| Comparative Example E11 | Positive electrode precursor 15 | Negative electrode precursor 2 | 50 | 2.74 | 1.54 | 0 | 2.33 | 0.561 | 1.518 | 79.5 | 1.50 | 2.54 | 0.591 |

[Table E5]

Table E5

| | Cell characteristics | | | | High-temperature storage test | |
|---|---|---|---|---|---|---|
| | Qa (mWh) | X (mAh/V) | Energy density (Wh/L) | Ra (mΩ) | Rb (mΩ) | Rb/Ra |
| Example E1 | 346 | 7.0 | 422 | 211 | 284 | 1.35 |
| Example E2 | 345 | 7.3 | 413 | 211 | 294 | 1.39 |
| Example E3 | 354 | 7.4 | 406 | 214 | 287 | 1.34 |
| Example E4 | 342 | 8.0 | 389 | 208 | 283 | 1.36 |
| Example E5 | 339 | 8.0 | 376 | 207 | 279 | 1.35 |
| Example E6 | 322 | 8.1 | 443 | 210 | 287 | 1.37 |
| Example E7 | 314 | 9.4 | 452 | 208 | 280 | 1.35 |
| Example E8 | 282 | 10.5 | 424 | 213 | 284 | 1.33 |
| Example E9 | 341 | 8.2 | 490 | 210 | 279 | 1.33 |
| Example E10 | 313 | 6.2 | 380 | 209 | 286 | 1.37 |
| Example E11 | 345 | 7.6 | 387 | 209 | 284 | 1.36 |
| Example E12 | 322 | 6.3 | 385 | 214 | 274 | 1.28 |
| Example E13 | 323 | 6.1 | 385 | 213 | 265 | 1.24 |
| Example E14 | 312 | 6.0 | 371 | 215 | 260 | 1.21 |
| Example E15 | 347 | 6.5 | 415 | 213 | 295 | 1.38 |
| Example E16 | 348 | 6.4 | 414 | 208 | 325 | 1.56 |
| Example E17 | 350 | 6.5 | 412 | 211 | 330 | 1.56 |
| Example E18 | 338 | 6.1 | 403 | 213 | 284 | 1.33 |
| Example E19 | 335 | 6.2 | 402 | 210 | 288 | 1.37 |
| Example E20 | 358 | 6.5 | 432 | 208 | 280 | 1.35 |
| Example E21 | 362 | 6.4 | 436 | 209 | 281 | 1.34 |
| Example E22 | 369 | 6.9 | 442 | 213 | 288 | 1.35 |
| Comparative Example E1 | 296 | 8.1 | 319 | 221 | 289 | 1.31 |
| Comparative Example E2 | 266 | 8.2 | 284 | 225 | 295 | 1.31 |
| Comparative Example E3 | 332 | 4.5 | 413 | 218 | 299 | 1.37 |
| Comparative Example E4 | 326 | 4.7 | 413 | 220 | 298 | 1.35 |
| Comparative Example E5 | 319 | 4.3 | 413 | 221 | 294 | 1.33 |
| Comparative Example E6 | 241 | 9.7 | 330 | 224 | 301 | 1.34 |
| Comparative Example E7 | 307 | 4.7 | 466 | 220 | 302 | 1.37 |
| Comparative Example E8 | 283 | 4.5 | 340 | 224 | 270 | 1.21 |
| Comparative Example E9 | 300 | 4.6 | 351 | 228 | 395 | 1.73 |
| Comparative Example E10 | 259 | 8.0 | 313 | 224 | 305 | 1.36 |
| Comparative Example E11 | 234 | 8.1 | 282 | 229 | 310 | 1.35 |

From the results above, it was confirmed that, by controlling the value of A1/B1 in a lithium ion secondary battery to be 0.96 or less (e.g., 0.960 or less), a sharp voltage drop in the final stage of discharging of the lithium ion secondary battery can be inhibited in some cases. A reduction in this value of A1/B1 may lead to a reduction in the energy density; however, it was confirmed that, by controlling the value of A1/B1 to be 0.71 or more (e.g., 0.710 or more), inhibition of a sharp voltage drop in the final stage of discharging, an increase in the energy density, and an improvement in the discharge capacity per unit voltage in a low-voltage range are all achieved. It was also confirmed that, in order to control the value of A1/B1 to be an appropriate value, it is effective to design a lithium ion secondary battery precursor to have appropriate values of A3/A2 and B2/A3.

Further, it was confirmed that $MO_2$ contained in a positive electrode active material layer is effective not only in facilitating the decomposition of a lithium compound in a positive electrode precursor to improve the decomposition efficiency of the lithium compound, but also in inhibiting an increase in the resistance during a high-temperature storage test in a positive electrode.

It was confirmed that, by incorporating a second negative electrode active material as a negative electrode active material, not only the energy density is increased, but also a sharp voltage drop in the final stage of discharging is inhibited. The second negative electrode active material has a large irreversible capacity of lithium ions; therefore, when the lithium compound does not exist in a sufficient amount in the positive electrode precursor, lithium ions are excessively deactivated during pre-doping into a negative electrode precursor, resulting in a reduction in the energy density.

<Reference Example 1>

A lithium ion secondary battery was produced in the same manner as in Example E1, except that the positive electrode slurry was prepared by stirring the materials for 10 minutes at 2,000 rpm using a planetary centrifugal mixture and a positive electrode precursor 19 was produced. This lithium ion secondary battery and its corresponding lithium ion secondary battery were designed as follows: A1/B1 = 0.950, A3/A2 = 0.857, and B2/A3 = 1.049. When these lithium ion secondary batteries were evaluated in accordance with the above-described methods, the following results were obtained: lithium compound decomposition efficiency E = 75.6%, Qa = 330 mWh, X = 6.8 mAh, energy density = 403 Wh/L, Ra = 215 m$\Omega$, Rb = 302 m$\Omega$, and Rb/Ra = 1.40. It is believed that an increase in the time of dispersing the positive electrode slurry caused the lithiunm compound or the transition metal oxide $MO_2$ to partially dissociate from the lithium compound composite, as a result of which the decomposition efficiency of the lithium compound during the pre-doping was slightly reduced.

<Reference Example E2>

A lithium ion secondary battery was produced in the same manner as in Example E1, except that 68.0 parts by weight of $LiFePO_4$, 10.0 parts by weight of activated carbon, and 14.0 parts by weight of the lithium compound composite 1 as positive electrode active materials were mixed with 3.0 parts by weight of acetylene black as a conductive filler, 5.0 parts by weight of PVdF (polyvinylidene fluoride) as a binder, and NMP (N-methylpyrrolidone) as an organic solvent to produce a positive electrode precursor 20. This lithium ion secondary battery and its corresponding lithium ion secondary battery were designed as follows: A1/B1 = 0.820, A3/A2 = 0.728, and B2/A3 = 1.225. When these lithium ion secondary batteries were evaluated in accordance with the above-described methods, the following results were obtained: lithium compound decomposition efficiency E = 95.3%, Qa = 287 mWh, X = 12.2 mAh, energy density = 297 Wh/L, Ra = 176 m$\Omega$, Rb = 220 m$\Omega$, and Rb/Ra = 1.25. According to these results, by incorporating activated carbon as a positive electrode active material, the discharge capacity per unit voltage in a low-voltage range is increased, whereby a sharp voltage drop in the final stage of discharging can be further inhibited. In addition, not only the initial internal resistance Ra can be reduced, but also an increase in the resistance during high-temperature storage can be inhibited. By combining Examples E1 to E22 with the above-described aspect that comprises activated carbon, it is possible to realize an aspect that is more advantageous than Examples E1 to E22 in terms of the resistance increase rate (Rb/Ra) after a high-temperature storage test.

INDUSTRIAL APPLICABILITY

The nonaqueous lithium power storage element of the present disclosure can be suitably utilized in: a power regeneration system of an automobile hybrid drive system; a power load leveling system for natural power generation such as photovoltaic or wind power generation, or in a microgrid or the like; an uninterruptible power source system of a factory production equipment or the like; a contactless power supply system for leveling of voltage fluctuations in microwave power transmission, electric field resonance, or the like, and for energy storage; or an energy harvesting system for the use of electric power generated by vibration power generation or the like. For example, a plurality of the nonaqueous lithium power storage elements can be connected in series or in parallel to construct a power storage module. The nonaqueous lithium power storage element of the present disclosure is preferred because the effects of the present disclosure are maximized when it is applied as, for example, a lithium ion capacitor or a lithium ion secondary battery.

**Claims**

1. A nonaqueous lithium power storage element, comprising a positive electrode that comprises a positive electrode active material layer arranged on a positive electrode power collector; a negative electrode that comprises a negative electrode active material layer arranged on a negative electrode power collector; a separator; and a lithium ion-containing nonaqueous electrolytic solution,

   wherein the positive electrode active material layer contains an activated carbon-containing carbon material and lithium iron phosphate as positive electrode active materials,
   when the content of the carbon material and that of lithium iron phosphate in the positive electrode active material layer are defined as $X_1$ (wt.%) and $X_2$ (wt.%), respectively, a weight ratio of lithium iron phosphate ($X_2/(X_1 + X_2)$) is 0.40 to 0.85,
   the positive electrode active material layer has a total pore volume of 0.29 cc/g to 0.70 cc/g based on the weight of the positive electrode active material layer,
   the positive electrode active material layer has a void diameter D25 of 0.34 $\mu$m to 0.64 $\mu$m as determined by mercury porosimetry,
   the positive electrode active material layer has a void diameter D75 of 0.10 $\mu$m to 0.20 $\mu$m as determined by mercury porosimetry, and
   a difference between the void diameters D25 and D75 (D25 - D75) is 0.20 $\mu$m to 0.45 $\mu$m.

2. The nonaqueous lithium power storage element according to claim 1, wherein the positive electrode active material layer contains 0.01 wt.% to 5.0 wt.% of lithium carbonate based on a total weight of the positive electrode active material layer.

3. The nonaqueous lithium power storage element according to claim 2, wherein the positive electrode active material layer has a volume resistivity of 1.5 $\Omega$cm to 8.0 $\Omega$cm.

4. The nonaqueous lithium power storage element according to claim 2, wherein the surface of the positive electrode active material layer has a frequency of 1,000-$\mu$m$^2$ to 10,000-$\mu$m$^2$ aggregates of 0.5 aggregates/cm$^2$ or less.

5. A positive electrode precursor used for the power storage element according to claim 1, the positive electrode precursor comprising a positive electrode power collector, and a positive electrode active material layer arranged on the positive electrode power collector,

   wherein the positive electrode active material layer contains a carbon material containing at least activated carbon, a lithium-transition metal oxide, and an alkali metal compound,
   a weight ratio $A_1$ of the carbon material in the positive electrode active material layer is 38 wt.% to 60 wt.%,
   a weight ratio $A_2$ of the lithium-transition metal oxide in the positive electrode active material layer is 15 wt.% to 45 wt.%,
   $A_1 + A_2$ is 74 wt.% to 93 wt.%,
   $A_2/A_1$ is 0.30 to 1.20,
   the lithium-transition metal oxide has a specific surface area B of 7.5 m$^2$/g to 11.0 m$^2$/g as measured by the BET method, and
   when $D_{10}$ and $D_{90}$ of the lithium-transition metal oxide are defined as $C_1$ and $C_2$, respectively,
   $C_2/C_1$ is 10 to 25.

6. The positive electrode precursor according to claim 5, wherein the alkali metal compound is lithium carbonate, and the lithium-transition metal oxide is lithium iron phosphate.

7. The nonaqueous lithium power storage element according to claim 1, comprising a positive electrode that comprises a positive electrode power collector and a positive electrode active material layer arranged on the positive electrode power collector; a negative electrode; a separator; and a lithium ion-containing nonaqueous electrolytic solution,

   wherein the positive electrode active material layer contains a carbon material containing at least activated carbon, a lithium-transition metal oxide, and an alkali metal compound,

a weight ratio $X_1$ of the carbon material in the positive electrode active material layer is 43 wt.% to 74 wt.%,

a weight ratio $X_2$ of the lithium-transition metal oxide in the positive electrode active material layer is 23 wt.% to 55 wt.%,

$X_2/X_1$ is 0.30 to 1.20,

$X_1 + X_2$ is 92.5 wt.% to 99.3 wt.%,

the lithium-transition metal oxide has a specific surface area Y of 7.5 $m^2$/g to 11.0 $m^2$/g as measured by the BET method, and

when $D_{10}$ and $D_{90}$ of the lithium-transition metal oxide are defined as $Z_1$ and $Z_2$, respectively,

$Z_2/Z_1$ is 10 to 25.

8. The nonaqueous lithium power storage element according to claim 7, wherein the alkali metal compound is lithium carbonate, and the lithium-transition metal oxide is lithium iron phosphate.

9. The nonaqueous lithium power storage element according to claim 1, comprising a positive electrode that comprises a positive electrode active material layer arranged on a positive electrode power collector; a negative electrode that comprises a negative electrode active material layer arranged on a negative electrode power collector; a separator; and an electrolytic solution,

   wherein the positive electrode power collector is a non-porous aluminum foil,
   the positive electrode power collector has no undercoat layer thereon, and the positive electrode active material layer is directly formed on the positive electrode power collector,
   the positive electrode active material layer contains activated carbon as a positive electrode active material,
   the positive electrode taken out by disassembling the power storage element has an interfacial resistance of 0.05 $\Omega cm^2$ to 5.00 $\Omega cm^2$ between the positive electrode active material layer and the positive electrode power collector, and
   the surface of the positive electrode taken out by disassembling the power storage element has a frequency of 1,000-$\mu m^2$ to 10,000-$\mu m^2$ aggregates of 0.5 aggregates/$cm^2$ or less.

10. The nonaqueous lithium power storage element according to claim 9, wherein the positive electrode active material layer contains a lithium-transition metal oxide as a positive electrode active material, and the lithium-transition metal oxide is represented by the following formula:

    $Li_xNi_aCo_bAl_{(1-a-b)}O_2$ {wherein, x satisfies $0 \leq x \leq 1$, and a and b satisfy $0.2 < a < 0.97$ and $0.2 < b < 0.97$, respectively},
    $Li_xNi_cCo_dMn_{(1-c-d)}O_2$ {wherein, x satisfies $0 \leq x \leq 1$, and c and d satisfy $0.2 < c < 0.97$ and $0.2 < d < 0.97$, respectively},
    $Li_xCoO_2$ {wherein, x satisfies $0 \leq x \leq 1$},
    $Li_xMn_2O4$ {wherein, x satisfies $0 \leq x \leq 1$},
    $Li_xFePO_4$ {wherein, x satisfies $0 \leq x \leq 1$},
    $Li_xMnPO_4$ {wherein, x satisfies $0 \leq x \leq 1$}, or
    $Li_zV_2(PO_4)_3$ {wherein, z satisfies $0 \leq z \leq 3$}.

11. The nonaqueous lithium power storage element according to claim 9 or 10, wherein the positive electrode active material layer contains a lithium-transition metal oxide as a positive electrode active material, and the lithium-transition metal oxide is lithium iron phosphate.

12. The nonaqueous lithium power storage element according to claim 11, wherein the lithium-transition metal oxide is lithium iron phosphate, and a ratio of the 3.4-3.0 V capacity (mAh) with respect to the 4.0-2.0 V capacity (mAh) of the nonaqueous lithium power storage element is 25 to 82%.

13. The nonaqueous lithium power storage element according to claim 9 or 10, wherein, when the interfacial resistance between the positive electrode active material layer and the positive electrode power collector of the positive electrode is defined as A [$\Omega cm^2$] and the concentration of lithium fluoride contained in the negative electrode with respect to the weight of the negative electrode active material layer is defined as B [mmol/g], A/B is 0.02 to 250.

14. A negative electrode used for the nonaqueous lithium power storage element according to claim 1, the negative electrode comprising a negative electrode power collector; and a negative electrode active material layer containing a negative electrode active material, which is composed of a graphite and capable of occluding and releasing lithium ions, on one or both sides of the negative electrode power collector,

wherein the negative electrode satisfies all of the following (1) to (4):

(1) a material constituting the negative electrode active material layer has an average thickness of 0.2 $\mu$m to 1.0 $\mu$m;

(2) the negative electrode active material layer has a void diameter of 0.15 $\mu$m to 0.70 $\mu$m;

(3) the negative electrode active material layer has a specific surface area of 8 m$^2$/g to 40 m$^2$/g as calculated based on the weight of the negative electrode active material layer; and

(4) the surface of the negative electrode has an aggregate frequency of 0 aggregates/cm$^2$ to 1.0 aggregates/cm$^2$.

15. The negative electrode according to claim 14, wherein, when the average thickness of the material constituting the negative electrode active material layer is defined as t ($\mu$m) and the void diameter of the negative electrode active material layer is defined as p ($\mu$m), $1.0 \leq (1.35 - p)/t \leq 2.8$ is satisfied.

16. The negative electrode according to claim 14 or 15, wherein the negative electrode active material layer has a void volume of 0.5 cm$^3$/g to 1.2 cm$^3$/g.

17. The negative electrode according to claim 14 or 15, wherein the specific surface area of the negative electrode active material layer is 12 m$^2$/g to 30 m$^2$/g as calculated based on the weight of the negative electrode active material layer.

18. The nonaqueous lithium power storage element according to claim 1, comprising a positive electrode; a negative electrode; and a lithium ion-containing nonaqueous electrolytic solution,

wherein the positive electrode comprises a positive electrode power collector, and a positive electrode active material layer provided on one or both sides of the positive electrode power collector,

the positive electrode active material layer contains a positive electrode active material and a transition metal oxide represented by MO$_2$ {wherein, M represents at least one selected from the group consisting of Co, Ni, and Mn},

the positive electrode active material contains a compound represented by Li$_x$Mn$_{(1-y)}$Fe$_y$PO$_4$ {wherein, x satisfies $0 \leq x \leq 1$, and y satisfies $0 < y \leq 1$},

the negative electrode comprises a negative electrode power collector, and a negative electrode active material layer provided on one or both sides of the negative electrode power collector, and when the discharge capacity per unit area of the positive electrode is defined as A1 (mAh/cm$^2$) and the charge capacity per unit area of the negative electrode is defined as B1 (mAh/cm$^2$), $0.71 \leq A1/B1 \leq 0.96$ is satisfied.

19. The nonaqueous lithium power storage element according to claim 18, wherein the positive electrode active material layer further contains activated carbon.

20. The nonaqueous lithium power storage element according to claim 18 or 19, wherein the negative electrode active material layer contains, as a negative electrode active material, at least one selected from the group consisting of silicon, silicon compounds, tin, and tin compounds in a ratio of 5 parts by weight to 30 parts by weight based on a total weight of the negative electrode active material layer.

21. The nonaqueous lithium power storage element according to claim 18 or 19, wherein the negative electrode active material layer contains a carbon material as a first negative electrode active material in a ratio of 50 parts by weight to 95 parts by weight, and at least one of silicon or a silicon compound as a second negative electrode active material in a ratio of 5 parts by weight to 30 parts by weight, based on a total weight of the negative electrode active material layer.

22. A nonaqueous lithium power storage element precursor used for the nonaqueous lithium power storage element according to claim 1, the nonaqueous lithium power storage element precursor comprising a positive electrode precursor; a negative electrode precursor; and a lithium ion-containing nonaqueous electrolytic solution,

wherein the positive electrode precursor comprises a positive electrode power collector, and a positive electrode active material layer provided on one or both sides of the positive electrode power collector,

the positive electrode active material layer contains a positive electrode active material and a lithium compound composite,

the positive electrode active material contains a compound represented by Li$_x$Mn$_{(1-y)}$Fe$_y$PO$_4$ {wherein, x satisfies

$0 \leq x \leq 1$, and y satisfies $0 < y \leq 1$},

the lithium compound composite is a composite of a lithium compound and a transition metal oxide represented by $MO_2$ {wherein, M represents one selected from the group consisting of Co, Ni, and Mn},

the negative electrode precursor comprises a negative electrode power collector, and a negative electrode active material layer provided on one or both sides of the negative electrode power collector, and

when the charge capacity per unit area of the positive electrode precursor is defined as A2 ($mAh/cm^2$), the discharge capacity per unit area of the positive electrode precursor is defined as A3 ($mAh/cm^2$), and the charge capacity per unit area of the negative electrode precursor is defined as B2 ($mAh/cm^2$), $0.65 \leq A3/A2 \leq 0.93$ and $1.03 \leq B2/A3 \leq 1.26$ are satisfied.

## INTERNATIONAL SEARCH REPORT

| International application No. |
| --- |
| **PCT/JP2024/005542** |

**A. CLASSIFICATION OF SUBJECT MATTER**

*H01M 10/052*(2010.01)i; *H01G 11/06*(2013.01)i; *H01G 11/08*(2013.01)i; *H01G 11/22*(2013.01)i; *H01G 11/24*(2013.01)i; *H01G 11/26*(2013.01)i; *H01G 11/30*(2013.01)i; *H01G 11/32*(2013.01)i; *H01G 11/42*(2013.01)i; *H01G 11/46*(2013.01)i; *H01G 11/50*(2013.01)i; *H01G 11/68*(2013.01)i; *H01M 4/133*(2010.01)i; *H01M 4/136*(2010.01)i; *H01M 4/36*(2006.01)i; *H01M 4/38*(2006.01)i; *H01M 4/58*(2010.01)i; *H01M 4/62*(2006.01)i; *H01M 10/0566*(2010.01)i; *H01M 10/058*(2010.01)i

FI: H01M10/052; H01G11/06; H01G11/08; H01G11/22; H01G11/24; H01G11/26; H01G11/30; H01G11/32; H01G11/42; H01G11/46; H01G11/50; H01G11/68; H01M4/133; H01M4/136; H01M4/36 E; H01M4/38 Z; H01M4/58; H01M4/62 Z; H01M10/0566; H01M10/058

According to International Patent Classification (IPC) or to both national classification and IPC

**B. FIELDS SEARCHED**

Minimum documentation searched (classification system followed by classification symbols)

H01M10/052; H01G11/06; H01G11/08; H01G11/22; H01G11/24; H01G11/26; H01G11/30; H01G11/32; H01G11/42; H01G11/46; H01G11/50; H01G11/68; H01M4/133; H01M4/136; H01M4/36; H01M4/38; H01M4/58; H01M4/62; H01M10/0566; H01M10/058

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2011/089701 A1 (TOYOTA JIDOSHA KABUSHIKI KAISHA) 28 July 2011 (2011-07-28)<br>claims | 1-22 |
| A | JP 2022-057034 A (SUMITOMO OSAKA CEMENT CO., LTD.) 11 April 2022 (2022-04-11)<br>claims | 1-22 |
| A | JP 2020-031028 A (TAIHEIYO CEMENT CORPORATION) 27 February 2020 (2020-02-27)<br>claims | 1-22 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 April 2024** | **14 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2024/005542** |

**C.    DOCUMENTS CONSIDERED TO BE RELEVANT**

| Category* | Citation of document, with indication, where appropriate, of the relevant passages | Relevant to claim No. |
|---|---|---|
| A | JP 2022-052579 A (GS YUASA INTERNATIONAL LTD.) 04 April 2022 (2022-04-04) paragraph [0026] | 1-22 |

Form PCT/ISA/210 (second sheet) (July 2022)

## INTERNATIONAL SEARCH REPORT
### Information on patent family members

| International application No. |
|---|
| **PCT/JP2024/005542** |

| Patent document cited in search report | | | Publication date (day/month/year) | Patent family member(s) | | | Publication date (day/month/year) |
|---|---|---|---|---|---|---|---|
| WO | 2011/089701 | A1 | 28 July 2011 | US claims | 2012/0288759 | A1 | |
| | | | | CN | 102763244 | A | |
| | | | | KR | 10-2012-0109636 | A | |
| JP | 2022-057034 | A | 11 April 2022 | US claims | 2022/0102706 | A1 | |
| | | | | EP | 3978441 | A1 | |
| | | | | CN | 113764663 | A | |
| | | | | KR | 10-2361359 | B | |
| | | | | CA | 3113265 | A1 | |
| JP | 2020-031028 | A | 27 February 2020 | (Family: none) | | | |
| JP | 2022-052579 | A | 04 April 2022 | (Family: none) | | | |

Form PCT/ISA/210 (patent family annex) (July 2022)

## REFERENCES CITED IN THE DESCRIPTION

**Patent documents cited in the description**

- JP 2023023607 A
- JP 2023039941 A
- JP 2023023750 A
- JP 2023024515 A
- JP 2023022538 A
- WO 2019098197 A
- JP 2009141181 A
- JP 2012089825 A
- JP 2007335318 A
- JP S5784120 A
- JP H11283871 A
- WO 2021066174 A
- JP 2012104571 A
- JP 2020140889 A
- WO 2017126693 A
- JP 2020167343 A
- WO 2011096469 A
- JP 2008243662 A
- WO 2017126682 A
- JP 2009170106 A

**Non-patent literature cited in the description**

- **E.P. BARRETT** ; **L.G. JOYNER** ; **P. HALENDA**. The Determination of Pore Volume and Area Distributions in Porous Substances. *J. Am. Chem. Soc.*, 1951, vol. 73, 373-380
- **B.C. LIPPENS** ; **J.H. DE BOER**. Studies on pore Systems in Catalysis V. The t Method. *J. Catalysis*, 1965, vol. 4, 319-323
- **R.S. MIKHAIL** ; **S. BRUNAUER** ; **E.E. BODOR**. Investigations of a Complete Pore Structure Analysis. *J. Colloid Interface Sci.*, 1968, vol. 26, 45-53